# EUROPÄISCHE PATENTSCHRIFT

(11) **EP 4 370 388 B1**
(45) Veröffentlichungstag und Bekanntmachung des Hinweises auf die Patenterteilung: **20.08.2025**
(21) Anmeldenummer: 22743708.4
(22) Anmeldetag: 14.07.2022
(51) Int. Cl.: B60T 8/17

(54) **VERFAHREN ZUR BREMSUNG EINES FAHRZEUGS**
METHOD FOR BRAKING A VEHICLE
PROCÉDÉ DE FREINAGE DE VÉHICULE

(30) Priorität: 14.07.2021 AT 601922021; 17.01.2022 AT 600122022
(43) Veröffentlichungstag der Anmeldung: 22.05.2024
(73) Patentinhaber: Stop-in-Time GmbH, 8272 Bad Waltersdorf (AT)
(72) Erfinder: PUTZ, Michael, 8272 Sebersdorf (AT); ZIPPER, Thomas, 1210 Wien (AT)
(74) Vertreter: Puchberger & Partner Patentanwälte
(86) Internationale Anmeldenummer: PCT/AT2022/060249
(87) Internationale Veröffentlichungsnummer: WO 2023/283667

(56) Entgegenhaltungen:
- EP-A1- 2 570 312
- DE-A1- 10 341 677
- JP-A- H1 044 976
- US-A1- 2011 010 048
- US-A1- 2020 156 602

## Beschreibung

Die Erfindung betrifft ein Verfahren, eine Bremssteuerungsvorrichtung und ein Fahrzeug gemäß den Oberbegriffen der unabhängigen Patentansprüche.

Aus dem Stand der Technik sind unterschiedliche Verfahren zur Bremsung eines Fahrzeugs bekannt. US 2020/156602 A1 offenbart ein Verfahren zur Bremssteuerung, welches eine Verzögerung durch ein Raddrehzahlsensor ermittelt.

Beispielsweise sind Verfahren bekannt, bei denen die Bremsvorrichtung des Anhängers durch eine Auflaufbremse gesteuert, insbesondere aktuiert, wird. Nachteilig an diesen Verfahren ist aber, dass durch eine derartige Steuerung die Bremsvorrichtung des Anhängers nur dann aktuiert, insbesondere angezogen, wird, wenn das gezogene Objekt, insbesondere der Anhänger, aufläuft. Der Anhänger kann bei derartigen Verfahren daher keine Zugkraft erzeugen. Dies reduziert die erzielbare Bremswirkung und die Fahrzeugstabilität.

Beispielsweise sind Verfahren bekannt, bei denen von der Steuervorrichtung des Zugfahrzeugs Bremsaktuierungssignale an die Bremsvorrichtung des Anhängers übermittelt werden. Bei solchen Verfahren werden die Bremsvorrichtungen des Fahrzeugs durch die Steuervorrichtung des Zugfahrzeugs gesteuert, insbesondere aktuiert. Nachteilig an derartigen Verfahren ist aber, dass die Bremsvorrichtungen bei einer Unterbrechung der Verbindung zwischen dem Zugfahrzug und dem Anhänger, insbesondere bei einem sogenannten Abreißen, nicht steuerbar, insbesondere nicht aktuierbar, sind.

Aufgabe der Erfindung ist es, die Nachteile des Standes der Technik zu überwinden. Insbesondere ist es Aufgabe der Erfindung ein Verfahren, eine Bremssteuerungsvorrichtung und ein Fahrzeug zu schaffen, mit welchen die jeweiligen Bremsvorrichtungen vorausschauend und/oder angepasst steuerbar sind.

Die erfindungsgemäße Aufgabe wird insbesondere durch die Merkmale der unabhängigen Patentansprüche gelöst.

Die Erfindung betrifft ein Verfahren zur Bremsung eines Fahrzeugs insbesondere eines Zugfahrzeugs und/oder eines Anhängers.

Bevorzugt ist vorgesehen, dass das Fahrzeug mindestens ein Rad, eine erste Bremsvorrichtung zur Bremsung des mindestens einen Rads, insbesondere eine nichtlineare elektro-mechanische Reibungsbremse, eine Bremserkennungsvorrichtung zur Detektion einer Bremsung des Fahrzeugs, insbesondere zur Detektion eines Bremswunsches und/oder zur Detektion einer Verzögerung des Fahrzeugs, und/oder eine, insbesondere elektronische, Bremssteuerungsvorrichtung zur Steuerung der ersten Bremsvorrichtung umfasst.

Bevorzugt ist vorgesehen, dass die Bremserkennungsvorrichtung aus einer Geschwindigkeitsmessvorrichtung insbesondere zur Berechnung einer Verzögerung aus der sich ändernden Momentangeschwindigkeit des Fahrzeugs, bevorzugt aus einem Raddrehzahlsensor zur Messung der Drehzahl des mindestens einen Rades, gebildet ist.

Gegebenenfalls kann die Bremserkennungsvorrichtung eine Geschwindigkeitsmessvorrichtung, insbesondere einen Raddrehzahlsensor, umfassen. Bevorzugt ist vorgesehen, dass die Bremserkennungsvorrichtung aus einem Verzögerungssensor zur Messung einer Verzögerung, insbesondere zur Messung einer Verzögerungswirkung in mindestens eine Richtung, bevorzugt in Fahrtrichtung, bevorzugt aus einem mehrachsigen, mikro-elektro-mechanischen System, gebildet ist. Gegebenenfalls kann die Bremserkennungsvorrichtung einen Verzögerungssensor umfassen.

Bevorzugt ist vorgesehen, dass die Bremserkennungsvorrichtung aus einer Betätigungsmessvorrichtung zur Messung einer Betätigung einer Betätigungsvorrichtung, insbesondere der Bremsvorrichtung, zur Bremsung des Fahrzeugs, insbesondere der ersten Bremsvorrichtung, bevorzugt eines Bremshebels oder eines Bremspedals des Fahrzeugs, gebildet ist.

Gegebenenfalls kann die Bremserkennungsvorrichtung eine Betätigungsmessvorrichtung umfassen.

Die Betätigungsmessvorrichtung kann dazu eingerichtet sein, dass das Ausmaß der Betätigung der Betätigungsvorrichtung gemessen wird. Insbesondere kann dadurch ein Bremswunsch und/oder der Fahrerverzögerungswunsch bestimmt werden.

Bevorzugt ist vorgesehen, dass von der Bremserkennungsvorrichtung die detektierte Bremsung, insbesondere der detektierte Bremswunsch und/oder die detektierte Verzögerung, in ein Bremserkennung-Signal, insbesondere ein elektrisches Signal, umgesetzt wird.

Bevorzugt ist vorgesehen, dass das Bremserkennung-Signal an die Bremssteuerungsvorrichtung übermittelt wird.

Insbesondere kann die Bremssteuerungsvorrichtung mit den Vorrichtungen des Fahrzeugs, insbesondere mit den Sensoren, bevorzugt der Bremserkennungsvorrichtung, der ersten Bremsvorrichtung, der zweiten Bremsvorrichtung, der weiteren Bremserkennungsvorrichtung, dem RaddrehzahlSensor, dem Schwingungssensor, dem Winkelsensor, dem Lagesensor, dem Sperrsensor, dem Standortsensor und/oder dem Tretschwingungssensor, über eine Verbindungsvorrichtung, insbesondere kabelgebunden oder drahtlos, verbunden sein.

Die Signale, insbesondere das Bremserkennung-Signal, das Bremsaktuierungssignal, das weitere Bremserkennung-Signal, das Raddrehzahl-Sensorsignal, das Verzögerungssensor-Signal, das Schwingungssensor-Signal, das Winkelsensor-Signal, das Lagesensor-Signal, das Sperrsignal und/oder das Tretschwingungssensor-Signal, können gegebenenfalls über eine Verbindungsvorrichtung, insbesondere über eine Kabelverbindung oder drahtlos, übermittelt werden.

Die Verbindungsvorrichtung kann gegebenenfalls die Bremssteuerungsvorrichtung mit den anderen Komponenten des Fahrzeugs verbinden.

Bevorzugt ist vorgesehen, dass von der Bremssteuerungsvorrichtung auf Basis des Bremserkennung-Signals ein Bremsaktuierungssignal erzeugt wird.

Bevorzugt ist vorgesehen, dass von der Bremssteuerungsvorrichtung auf Basis des Bremserkennung-Signals ein Bremsaktuierungssignal erzeugt wird, indem gegebenenfalls von der Bremssteuerungsvorrichtung auf Basis des Bremserkennung-Signals mittels Interpolationstabellen, mittels Umrechnungsfunktionen, mittels eines Simulationsmodells und/oder mittels Simulationsmodellen ein Bremsaktuierungssignal zur Aktuierung der ersten Bremsvorrichtung bestimmt und/oder berechnet wird.

Gegebenenfalls kann das Bremsaktuierungssignal zur Aktuierung der mindestens einen ersten Bremsvorrichtung mittels Interpolationstabellen, mittels Umrechnungsfunktionen und/oder mittels eines Simulationsmodells auf Basis des Bremserkennung-Signals bestimmt werden.

Bevorzugt ist vorgesehen, dass von der Bremssteuerungsvorrichtung zur Steuerung der ersten Bremsvorrichtung das Bremsaktuierungssignal an die erste Bremsvorrichtung übermittelt wird.

Bevorzugt ist vorgesehen, dass durch das, insbesondere an die Bremsvorrichtung übermittelte, Bremsaktuierungssignal eine Steuerung, insbesondere eine Aktuierung, bevorzugt ein Anziehen und/oder ein Lösen, der ersten Bremsvorrichtung, insbesondere eines Aktuators der ersten Bremsvorrichtung, erwirkt und dadurch insbesondere eine Bremsung des mindestens einen Rads, insbesondere eine Bremsung oder eine Beschleunigung des Fahrzeugs, erzielt wird.

Gegebenenfalls kann die Bremssteuerungsvorrichtung aus einer oder mehreren Komponenten bestehen oder eine oder mehrere Komponenten umfassen.

Im Rahmen der vorliegenden Erfindung können die Signale der Sensoren, insbesondere alle Signale aller Sensoren, insbesondere das Bremserkennung-Signal, das Verzögerungssensor-Signal, das Schwingungssensor-Signal, das Winkelsensor-Signal, das Lagesensor-Signal, das Tretschwingungssensor-Signal, das Sperrsignal und/oder das Auflaufkraftsignal direkt an die Bremssteuerungsvorrichtung, insbesondere kabelgebunden oder drahtlos, übermittelt werden

Im Rahmen der vorliegenden Erfindung kann unter Signale der Sensoren, insbesondere alle Signale aller Sensoren, insbesondere dem Bremserkennung-Signal dem Verzögerungssensor-Signal, dem Schwingungssensor-Signal, dem Winkelsensor-Signal, dem Lagesensor-Signal, dem Tretschwingungssensor-Signal, dem Sperrsignal und/oder dem Auflaufkraftsignal das elektrische Ausgangssignal des jeweiligen Sensors verstanden werden.

Im Rahmen der vorliegenden Erfindung kann unter Messung auch die Bestimmung einer gewissen Größe, wie insbesondere der Drehzahl, der Verzögerung, der Betätigung und/oder der Temperatur verstanden werden.

Gegebenenfalls kann die Bremserkennungsvorrichtung auch in der Bremssteuerungsvorrichtung enthalten und/oder integriert sein.

Im Rahmen der vorliegenden Erfindung kann unter Bremserkennungsvorrichtung eine Vorrichtung verstanden werden, welche dazu eingerichtet ist, die Bremsung des Fahrzeugs, die Verzögerung des Fahrzeugs, den Bremswunsch des Fahrers und/oder den Bremswunsch eines Autopiloten zu erkennen und/oder zu detektieren. Gegebenenfalls kann das Verfahren zur Steuerung einer Bremsvorrichtung, insbesondere zur Bremsensteuerung, eingerichtet sein.

Gegebenenfalls kann das Verfahren zur Bremsung eines Fahrzeugverbunds und/oder Gespanns eingerichtet sein, insbesondere zur Bremsung eines Verbundfahrzeugs, welches ein nicht selbst angetriebenes Landfahrzeug, insbesondere einen Anhänger, und ein vorgespanntes Zugelement, insbesondere ein Zugfahrzeug, umfasst.

Gegebenenfalls kann durch das übermittelte Bremsaktuierungssignal an die erste Bremsvorrichtung, die erste Bremsvorrichtung derart gesteuert, insbesondere aktuiert, werden, dass, gegebenenfalls während des Betriebs, insbesondere während des Normalbetriebs, des Gespanns, und/oder während das Gespann fährt, der Anhänger das Zugfahrzeug bremst und/oder dass der Anhänger stärker als das Zugfahrzeug verzögert, sodass der Anhänger gegebenenfalls an dem Zugfahrzeug zieht.

Insbesondere wird von der Bremssteuerungsvorrichtung ein Bremsaktuierungssignal erzeugt, welches die erste Bremsvorrichtung derart steuert, insbesondere aktuiert, dass, gegebenenfalls während des Betriebs, insbesondere während des Normalbetriebs, des Gespanns, und/oder während das Gespann fährt, der Anhänger das Zugfahrzeug bremst und/oder dass der Anhänger stärker als das Zugfahrzeug verzögert, sodass der Anhänger gegebenenfalls an dem Zugfahrzeug zieht.

Insbesondere kann die mindestens eine erste Bremsvorrichtung am Anhänger angeordnet sein.

Gegebenenfalls kann eine weitere Bremsvorrichtung am Zugfahrzeug angeordnet sein. Insbesondere kann diese weitere Bremsvorrichtung von der Bremssteuerungsvorrichtung, einer weiteren Bremssteuerungsvorrichtung und/oder der Fahrzeugsteuerungsvorrichtung gesteuert und/oder geregelt werden.

Gegebenenfalls kann durch das übermittelte Bremsaktuierungssignal an die erste Bremsvorrichtung, die erste Bremsvorrichtung derart gesteuert, insbesondere aktuiert, werden, dass, gegebenenfalls während des Betriebs, insbesondere während des Normalbetriebs, des Fahrzeugs und/oder während das Fahrzeug fährt, der hintere Fahrzeugteil den vorderen Fahrzeugteil bremst und/oder dass der hintere Fahrzeugteil stärker als das Zugfahrzeug verzögert, sodass der hintere Fahrzeugteil gegebenenfalls an dem vorderen Fahrzeugteil zieht.

Insbesondere wird von der Bremssteuerungsvorrichtung ein Bremsaktuierungssignal erzeugt, welches die erste Bremsvorrichtung derart steuert, insbesondere aktuiert, dass, gegebenenfalls während des Betriebs, insbesondere während des Normalbetriebs, des Fahrzeugs und/oder während das Fahrzeug fährt, der hintere Fahrzeugteil den vorderen Fahrzeugteil bremst und/oder dass der hintere Fahrzeugteil stärker als das Zugfahrzeug verzögert, sodass der hintere Fahrzeugteil gegebenenfalls an dem vorderen Fahrzeugteil zieht.

Insbesondere kann die mindestens eine erste Bremsvorrichtung am hinteren Fahrzeugteil des Fahrzeugs angeordnet sein.

Gegebenenfalls kann eine weitere Bremsvorrichtung am vorderen Fahrzeugteil des Fahrzeugs angeordnet sein. Insbesondere kann diese weitere Bremsvorrichtung von der Bremssteuerungsvorrichtung, einer weiteren Bremssteuerungsvorrichtung und/oder der Fahrzeugsteuerungsvorrichtung gesteuert und/oder geregelt werden.

Im Rahmen der vorliegenden Erfindung kann unter Normalbetrieb ein Betrieb des Fahrzeugs, insbesondere des Gespanns, verstanden werden, bei welchem das Fahrzeug, insbesondere das Gespann, betrieben wird und/oder auf einer Straße fährt.

Gegebenenfalls kann vorgesehen sein, dass am Fahrzeug, insbesondere am Zugfahrzeug, eine Betätigungsvorrichtung zur Betätigung einer Bremsvorrichtung, insbesondere der ersten Bremsvorrichtung, bevorzugt ein Bremshebel oder ein Bremspedal, angeordnet sein.

Gegebenenfalls kann die Betätigungsmessvorrichtung zur Messung einer Betätigung der Betätigungsvorrichtung eingerichtet sein.

Gegebenenfalls können die Bremssteuerungsvorrichtung und das mindestens eine Rad, welches insbesondere von der Bremssteuerungsvorrichtung und/oder der ersten Bremsvorrichtung bremsbar ist, am Fahrzeug, insbesondere am Anhänger, angeordnet sein.

Gegebenenfalls können der Verzögerungssensor und das mindestens eine Rad, welches insbesondere von der Bremssteuerungsvorrichtung und/oder der ersten Bremsvorrichtung bremsbar ist, am Fahrzeug, insbesondere am Anhänger, angeordnet sein.

Gegebenenfalls können der Raddrehzahlsensor und das mindestens eine Rad, welches insbesondere von der Bremssteuerungsvorrichtung und/oder der ersten Bremsvorrichtung bremsbar ist, am Fahrzeug, insbesondere am Anhänger, angeordnet sein.

Gegebenenfalls können die Bremserkennungsvorrichtung und das mindestens eine Rad, welches insbesondere von der Bremssteuerungsvorrichtung und/oder der ersten Bremsvorrichtung bremsbar ist, am Fahrzeug, insbesondere am Anhänger, angeordnet sein.

Gegebenenfalls kann die Bremssteuerungsvorrichtung am selben Verbundfahrzeugteil, insbesondere an dem Anhänger, angeordnet sein, wie das von der ersten Bremsvorrichtung und/oder der Bremssteuerungsvorrichtung gebremste Rad.

Insbesondere sind gegebenenfalls der Verzögerungssensor und/oder die Geschwindigkeitsmessung am selben Verbundfahrzeugteil, insbesondere an dem Anhänger, angeordnet wie das von der ersten Bremsvorrichtung gebremste Rad.

Dadurch, dass die Bremssteuerungsvorrichtung und das von der Bremssteuerungsvorrichtung bremsbare Rad am Fahrzeug, insbesondere am Anhänger, angeordnet sind, kann das Fahrzeug, insbesondere der Anhänger, auch alleine, insbesondere entkoppelt vom Zugfahrzeug, selbsttätig bremsen.

Gegebenenfalls kann vorgesehen sein, dass am Fahrzeug mindestens eine zweite Bremsvorrichtung, insbesondere eine nichtlineare elektro-mechanische Reibungsbremse, zur Bremsung des Fahrzeugs, insbesondere des mindestens einen Rads, vorgesehen ist.

Gegebenenfalls kann vorgesehen sein, dass die mindesten eine zweite Bremsvorrichtung insbesondere unabhängig, bevorzugt unabhängig betätigbar, von der ersten Bremsvorrichtung ist.

Gegebenenfalls kann vorgesehen sein, dass am Fahrzeug mindestens eine weitere Bremserkennungsvorrichtung zur Detektion einer Bremsung des Fahrzeugs, , insbesondere zur Detektion eines Bremswunsches und/oder zur Detektion einer Verzögerung des Fahrzeugs, insbesondere eine weitere Geschwindigkeitsmessvorrichtung, ein weiterer Verzögerungssensor und/oder eine weitere Betätigungsmessvorrichtung, vorgesehen ist.

Gegebenenfalls kann vorgesehen sein, dass die mindestens eine weitere Bremserkennungsvorrichtung gegebenenfalls unabhängig von der, insbesondere ersten, Bremserkennungsvorrichtung ist.

Gegebenenfalls kann vorgesehen sein, dass von der weiteren Bremserkennungsvorrichtung die detektierte Bremsung in ein weiteres Bremserkennung-Signal umgesetzt und das weitere Bremserkennung-Signal an die Bremssteuerungsvorrichtung übermittelt wird.

Gegebenenfalls kann vorgesehen sein, dass von der Bremssteuerungsvorrichtung, insbesondere automatisch, erkannt wird, welche Bremserkennungsvorrichtungen am Fahrzeug vorhanden sind.

Gegebenenfalls kann vorgesehen sein, dass bei der Erzeugung des Bremsaktuierungssignals von der Bremssteuerungsvorrichtung die übermittelten Bremserkennung-Signale berücksichtigt werden, indem gegebenenfalls die Bremserkennung-Signale nach vorab definierten Parametern, insbesondere dem Vorhandensein, der Zuverlässigkeit der Detektion und/oder der Aussagekraft der Daten, gewichtet werden.

Gegebenenfalls ist die mindestens eine zweite Bremsvorrichtung derart ausgestaltet, dass diese auch beim Ausfall der mindestens einen ersten Bremsvorrichtung funktionstüchtig und/oder betätigbar ist, sodass insbesondere auch bei einem Ausfall der mindestens einen ersten Bremsvorrichtung das Fahrzeug bremsbar ist.

Gegebenenfalls ist die weitere Bremserkennungsvorrichtung derart ausgestaltet, dass diese auch beim Ausfall der, insbesondere ersten, Bremserkennungsvorrichtung funktionstüchtig und/oder betätigbar ist, sodass insbesondere auch bei einem Ausfall der, insbesondere ersten, Bremserkennungsvorrichtung die Bremsung des Fahrzeugs, insbesondere der Bremswunsch, detektierbar ist.

Im Rahmen der vorliegenden Erfindung kann unter Bremswunsch eine gewünschte Bremsung, insbesondere die sogenannte Bremswunscherkennung, und/oder Verzögerung des Fahrers, insbesondere der sogenannte Fahrerverzögerungswunsch, gegebenenfalls eines Autopiloten des Fahrzeugs, verstanden werden.

Insbesondere können am Fahrzeug eine erste Bremsvorrichtung und mindestens eine zweite Bremsvorrichtung zur Bremsung des Fahrzeugs vorgesehen sein.

Bevorzugt ist die erste Bremsvorrichtung unabhängig, bevorzugt unabhängig betätigbar, von der mindestens einen zweiten Bremsvorrichtung. Bevorzugt sind die am Fahrzeug angeordneten Bremsvorrichtungen unabhängig, bevorzugt unabhängig betätigbar, voneinander.

Das Fahrzeug kann dadurch gegebenenfalls einfehler-sicher sein, da mindestens zwei Bremsvorrichtungen und/oder Teile von Bremsvorrichtungen am Fahrzeug vorhanden sind, sodass das Fahrzeug auch bei Ausfall einer Bremsvorrichtung oder eines Teils bremsbar ist.

Insbesondere können am Fahrzeug eine Bremserkennungsvorrichtung und mindestens eine weitere Bremserkennungsvorrichtung zur Detektion einer Bremsung des Fahrzeugs, insbesondere zur Detektion eines Bremswunsches und/oder zur Detektion einer Verzögerung des Fahrzeugs, vorgesehen sein.

Bevorzugt ist die Bremserkennungsvorrichtung unabhängig, bevorzugt unabhängig betätigbar, von der mindestens einen weiteren Bremserkennungsvorrichtung. Bevorzugt sind die am Fahrzeug angeordneten Bremserkennungsvorrichtungen unabhängig, bevorzugt unabhängig betätigbar, voneinander.

Das Fahrzeug kann dadurch gegebenenfalls einfehler-sicher sein, da mindestens zwei Bremserkennungsvorrichtungen am Fahrzeug vorhanden sind, sodass das Fahrzeug auch bei Ausfall einer Bremserkennungsvorrichtung bremsbar ist.

Im Rahmen der vorliegenden Erfindung kann unter Einfehlersicherheit und/oder einfehler-sicher verstanden werden, dass trotz des Auftretens eines einzelnen Fehlers am Fahrzeug, insbesondere dem Ausfall einer Bremsvorrichtung und/oder einer Bremserkennungsvorrichtung, eine Bremsung des Fahrzeugs möglich ist.

Gegebenenfalls kann vorgesehen sein, dass die Messungen der mindestens einen ersten und/oder der mindestens einen zweiten Bremserkennungsvorrichtung, insbesondere aller am Fahrzeug angeordneten Bremserkennungsvorrichtungen, an die Bremssteuerungsvorrichtung übermittelt werden.

Gegebenenfalls kann das Verfahren und/oder Fahrzeug einfehler-sicher ausgeführt ist, indem das Fahrzeug, welches insbesondere aus einem Zugfahrzeug oder einem Zugfahrzeug und Anhänger gebildet ist, mindestens eine zweite unabhängige Bremsvorrichtung und mindestens eine zweite Bremserkennungsvorrichtung, insbesondere eine Geschwindigkeitsmessvorrichtung, einen Verzögerungssensor und/oder eine Betätigungsmessvorrichtung, vorhanden sind.

Im Rahmen der vorliegenden Erfindung kann unter "auf Basis" und/oder "berücksichtigt werden" verstanden werden, dass ein Signal, eine Veränderung und/oder ein Wert bei Erzeugung des Bremsaktuierungssignals von der Bremssteuerungsvorrichtung einberechnet und/oder einbezogen wird. Mit anderen Worten kann in die Funktion und/oder Formel zur Bestimmung des Bremsaktuierungssignals das berücksichtigte Signal, die berücksichtigte Veränderung und/oder der berücksichtigte Wert eingehen.

Insbesondere kann das Bremsaktuierungssignal eine Funktion der verschiedenen Signale, Veränderungen und/oder Werte sein, durch die eine Funktion der verschiedenen Signale, Veränderungen und/oder Werte erzeugt wird.

Gegebenenfalls kann die erste Bremsvorrichtung mehrere erste Bremsvorrichtungen umfassen. Gegebenenfalls kann die zweite Bremsvorrichtung mehrere zweite Bremsvorrichtungen umfassen.

Gegebenenfalls kann vorgesehen sein, dass das Fahrzeug einen vorderen und einen hinteren Fahrzeugteil umfasst.

Gegebenenfalls kann vorgesehen sein, dass das Fahrzeug ein Zugfahrzeug oder ein Anhänger ist.

Gegebenenfalls kann vorgesehen sein, dass das Fahrzeug ein Zugfahrzeug und einen Anhänger umfasst.

Gegebenenfalls kann vorgesehen sein, dass durch die Bremssteuerungsvorrichtung ein Bremsaktuierungssignal erzeugt wird, durch welches ein vorab definiertes Verhalten des Zugfahrzeugs und des Anhängers zueinander eingestellt wird, sodass gegebenenfalls der Anhänger an dem Zugfahrzeug zieht oder schiebt, insbesondere eine schiebende oder ziehende Kraft erzeugt.

Gegebenenfalls kann vorgesehen sein, dass durch die Bremssteuerungsvorrichtung eine andere, insbesondere eine höhere oder niedrigere, Bremsung und/oder Bremswirkung der am Anhänger angeordneten Bremsvorrichtung eingestellt wird als am Zugfahrzeug, insbesondere bei der am Zugfahrzeug angeordneten Bremsvorrichtung.

Gegebenenfalls kann vorgesehen sein, dass durch die Bremssteuerungsvorrichtung ein Bremsaktuierungssignal erzeugt wird, durch welches ein vorab definiertes Verhalten der Fahrzeugteile zueinander eingestellt wird, sodass gegebenenfalls der hintere Fahrzeugteil an dem vorderen Fahrzeugteil zieht oder schiebt, insbesondere eine schiebende oder ziehende Kraft erzeugt.

Gegebenenfalls kann vorgesehen sein, dass durch die Bremssteuerungsvorrichtung eine andere, insbesondere eine höhere oder niedrigere, Bremsung und/oder Bremsung und/oder Bremswirkung der am hinteren Fahrzeugteil angeordneten Bremsvorrichtung eingestellt wird als am vorderen Fahrzeugteil, insbesondere bei der am vorderen Fahrzeugteil angeordneten Bremsvorrichtung.

Gegebenenfalls kann vorgesehen sein, dass durch einen Sensor, insbesondere ein Auflaufsensor oder Auflaufkraftsensor, die Kraft zwischen den Fahrzeugteilen und/oder dem Zugfahrzeug und dem Anhänger gemessen wird, wobei die gemessene Kraft von der Bremssteuerungsvorrichtung bei der Erzeugung des Bremsaktuierungssignals berücksichtigt wird.

Gegebenenfalls kann vorgesehen sein, dass das Fahrzeug aus einem Zugfahrzeug und einem Anhänger besteht und der Anhänger mit dem einen Zugfahrzeug verbunden ist.

Gegebenenfalls kann vorgesehen sein, dass das Fahrzeug für den lokalen bis regionalen Verkehr mit einem geplanten Aktionsradius von maximal 100 Kilometer ausgebildet ist.

Insbesondere kann das Fahrzeug als elektrisch angetriebenes Fahrzeug mit einem geplanten Aktionsradius von maximal 100 km und/oder als Fahrzeug, das dem Bereich "Mikromobilität" zuzuordnen ist, ausgebildet sein, wie beispielsweise Elektropersonen- oder Lastenfahrräder, elektrische Klein- oder Logistikfahrzeuge.

Gegebenenfalls kann vorgesehen sein, dass das Fahrzeug ein Elektropersonenfahrrad, ein Lastenfahrrad, ein elektrisches Kleinfahrzeug oder Logistikfahrzeug ist.

Gegebenenfalls kann vorgesehen sein, dass die Bremssteuerungsvorrichtung dazu eingerichtet ist, das Fahrzeug, insbesondere normgemäß, vorschriftsgemäß und/oder bestimmungsgemäß, zu betreiben und insbesondere einen Antriebsmotor des Fahrzeugs und/oder die Bremsvorrichtung zu steuern, sodass eine vorab definierte Geschwindigkeit, insbesondere eine maximale Momentangeschwindigkeit, eingehalten wird.

Gegebenenfalls kann das Fahrzeug, insbesondere die Steuervorrichtung des Fahrzeugs, bevorzugt die Bremssteuerungsvorrichtung, dazu ausgebildet sein, das Fahrzeug norm-, vorschrifts- oder bestimmungsgemäß zu betreiben. Insbesondere kann die Bremssteuerungsvorrichtung Fahreingriffe ausführen, wie z.B. eine Geschwindigkeitseinhaltung durch Steuerung des Antriebs und/oder der Bremsvorrichtung.

Gegebenenfalls kann vorgesehen sein, dass das Fahrzeug ein Mehrnormenfahrzeug und/oder ein Mehrnormenverbundfahrzeug ist, wodurch das Fahrzeug gegebenenfalls in der Stadt als Fahrrad und/oder E-Bike und außerhalb der Stadt als schnelleres Fahrzeug, insbesondere Kraftfahrzeug, Motorrad, Personenkraftwagen und/oder Lastkraftwagen betreibbar ist.

Gegebenenfalls kann vorgesehen sein, dass das Fahrzeug dazu ausgebildet ist, im Wesentlichen die Sicherheitsnormen, wie insbesondere ISO26262 und/oder IEC61508, bezüglich Ausrüstung von Fahrzeugen, Sicherheitszielen zu erfüllen.

Insbesondere kann durch die Ausgestaltung des Fahrzeugs ein einfehler-sicherer Betrieb des Fahrzeugs möglich sein. Das heißt, dass gegebenenfalls ein einzelner Fehler immer noch den sicheren Betrieb und/oder die sichere Beendigung des Betriebs entsprechend der Vorschriften und/oder Vorgaben erlaubt.

Insbesondere können Fehler in Anlehnung an Normen, Vorschriften und/oder andere Überlegungen angenommen oder ausgeschlossen werden, wobei etwaige von einem Fehler ausgelöste Folgefehler insgesamt immer noch als Einzelfehler gelten.

Insbesondere sind am Fahrzeug sicherheitsrelevante Bauteile, wie insbesondere die Bremsvorrichtung und/oder die Bremserkennungsvorrichtung, mehrfach, insbesondere mindestens zweifach, vorhanden. Das heißt, dass sie gegebenenfalls mindestens zweimal am Fahrzeug, insbesondere am Zugfahrzeug und/oder Anhänger, angeordnet sind.

Insbesondere können am Fahrzeug mindestens zwei Stromerzeugungsvorrichtungen vorgesehen sein, wobei bevorzugt eine Stromerzeugungsvorrichtung Energie in Form von elektrischer Energie und eine andere Stromerzeugungsvorrichtung Energie in Form von nichtelektrischer, insbesondere mechanischer, bevorzugt in Federwirkung, speichert.

Gegebenenfalls können am Fahrzeug mindestens zwei Bremsvorrichtungen und/oder mindestens eine elektrische und mindestens eine nichtelektrische Betätigungsvorrichtung und/oder mindestens zwei elektrische/elektronische Baugruppen, insbesondere Steuerungen, Aktuatoren und/oder Verkabelungen, vorgesehen sein.

Gegebenenfalls sind die Bauteile des Fahrzeugs, insbesondere die Bremsvorrichtung, die Bremserkennungsvorrichtung, die Stromerzeugungsvorrichtung und/oder der Antriebsmotor, mit einem größeren Sicherheitsfaktor, insbesondere mit höherer Sicherheit gegen Fehler, dimensioniert als herkömmliche Bauteile.

Gegebenenfalls sind die Bauteile des Fahrzeugs, insbesondere die Bremsvorrichtung, die Bremserkennungsvorrichtung, die Stromerzeugungsvorrichtung und/oder der Antriebsmotor, so dimensioniert, dass deren Ausfallwahrscheinlichkeit, insbesondere unter Berücksichtigung der entsprechenden Vorschriften, im Vergleich zu herkömmlichen Bauteilen gering und/oder unwahrscheinlich ist, insbesondere so gering und/oder unwahrscheinlich, dass andere Risiken, wie sie insbesondere bei der durchschnittlichen Benutzung des Bauteils auftreten, bevorzugt mindestens zehnmal höher sind als Risiken infolge eines Bauteilausfalls.

Gegebenenfalls sind die Bauteile des Fahrzeugs, insbesondere die Bremsvorrichtung, die Bremserkennungsvorrichtung, die Stromerzeugungsvorrichtung und/oder der Antriebsmotor, so dimensioniert, dass die Folgewirkungen eines Fehlers, insbesondere unter Berücksichtigung der entsprechenden Vorschriften, unbedenklich sind und insbesondere keine überdurchschnittlichen Risiken verursachen.

Gegebenenfalls ist das Fahrzeug dazu ausgebildet, dass bei Geschwindigkeiten über 5 km/h eine Bremswirkung von mindestens einem Fünftel der Erdbeschleunigung g, also der durchschnittlichen Fallbeschleunigung auf der Erde, insbesondere ein sogenanntes g/5, erzeugt wird, insbesondere ohne Batteriepufferung, indem gegebenenfalls gespeicherte Energie, insbesondere mechanisch, bevorzugt in Federwirkung gespeicherte Energie, zur Bremsung des Fahrzeugs verwendet wird.

Gegebenenfalls ist das Fahrzeug dazu ausgebildet, dass bei Geschwindigkeiten über 5 km/h eine Bremswirkung von mindestens einem Fünftel der Erdbeschleunigung, insbesondere ein sogenanntes g/5, erzeugt wird, insbesondere ohne Batteriepufferung, indem gegebenenfalls aus der Fahrgeschwindigkeit des Fahrzeugs resultierende, insbesondere elektrisch und/oder selbstverstärkend wirkende Energie und/oder vom Fahrer zugeführte Energie, zur Bremsung des Fahrzeugs verwendet wird.

Im Rahmen der vorliegenden Erfindung kann unter Bremsung eine Bremswirkung oder dergleichen verstanden werden.

Gegebenenfalls kann vorgesehen sein, dass mit dem Verzögerungssensor eine Geschwindigkeitsänderung des Fahrzeugs, insbesondere eine positive oder negative Beschleunigung des Fahrzeugs, gemessen wird.

Gegebenenfalls kann vorgesehen sein, dass der Verzögerungssensor und/oder die Verzögerungssensoren am Zugfahrzeug angeordnet ist oder sind.

Gegebenenfalls kann vorgesehen sein, dass der Verzögerungssensor und/oder die Verzögerungssensoren am Anhänger angeordnet ist oder sind.

Gegebenenfalls kann vorgesehen sein, dass die Raddrehzahl des mindestens einen Rads, insbesondere aller Räder, des Fahrzeugs mit mindestens einem Raddrehzahlsensor gemessen wird.

Gegebenenfalls kann vorgesehen sein, dass die gemessene Raddrehzahl in ein Raddrehzahl-Sensorsignal umgesetzt wird.

Gegebenenfalls kann vorgesehen sein, dass das Raddrehzahl-Sensorsignal an die Bremssteuerungsvorrichtung übermittelt wird.

Gegebenenfalls kann vorgesehen sein, dass der Radschlupf auf Basis des Raddrehzahl-Sensorsignals und der Geschwindigkeit des Fahrzeugs in der Bremssteuerungsvorrichtung bestimmt wird.

Gegebenenfalls kann vorgesehen sein, dass die Geschwindigkeit, insbesondere die Momentangeschwindigkeit, des Fahrzeugs von der Bremssteuerungsvorrichtung aus einem Verzögerungssensor-Signal durch Integration von positiven und negativen Beschleunigungen errechnet wird.

Gegebenenfalls kann vorgesehen sein, dass die Geschwindigkeit, insbesondere die Momentangeschwindigkeit, des Fahrzeugs von der Bremssteuerungsvorrichtung mit einem Beschleunigungssensor gemessen und an die Bremssteuerungsvorrichtung übermittelt wird.

Insbesondere kann die die Geschwindigkeit, bevorzugt die Momentangeschwindigkeit, des Fahrzeugs von der Bremssteuerungsvorrichtung über aus dem Stand der Technik bekannte physikalische Zusammenhänge berechnet werden, die gegebenenfalls auch Masse und eine Anfangsgeschwindigkeit einbeziehen können.

Gegebenenfalls kann der Verzögerungssensor die gemessene Verzögerung, in ein Verzögerungssensor-Signal umsetzen.

Gegebenenfalls kann vorgesehen sein, dass die Geschwindigkeit, insbesondere die Momentangeschwindigkeit, des Fahrzeugs gegebenenfalls mit einem Geschwindigkeitssensor und/oder einer Geschwindigkeitsmessvorrichtung gemessen und an die Bremssteuerungsvorrichtung übermittelt wird.

Gegebenenfalls kann vorgesehen sein, dass die Geschwindigkeit, insbesondere die Momentangeschwindigkeit, des Fahrzeugs gegebenenfalls vom Zugfahrzeug, insbesondere der Steuervorrichtung des Zugfahrzeugs, an die Bremssteuerungsvorrichtung übermittelt wird.

Gegebenenfalls kann vorgesehen sein, dass, wenn der bestimmte Radschlupf größer als 5% ist und/oder wenn die Abnahme der Raddrehzahl eine Verzögerung des Fahrzeugs von mehr als 8 m/s² zur Folge hat und/oder wenn ein Rad eine um mehr als 50% höhere Drehzahlabnahme aufweist als das Rad mit der geringsten Raddrehzahlabnahme, das Bremsaktuierungssignal von der Bremssteuerungsvorrichtung angepasst, insbesondere reduziert, wird.

Gegebenenfalls kann vorgesehen sein, dass das Bremsaktuierungssignal von der Bremssteuerungsvorrichtung angepasst, insbesondere reduziert, wird, wenn von der Bremssteuerungsvorrichtung die Gefahr des Blockierens des Rades erkannt wird.

Gegebenenfalls kann vorgesehen sein, dass das Bremsaktuierungssignal von der Bremssteuerungsvorrichtung in den genannten Fällen derart angepasst, insbesondere reduziert, wird, dass ein Blockieren des mindestens einen Rads des Fahrzeugs und/oder ein Radschlupf von mehr als 5% und/oder eine Raddrehzahlabnahmedifferenz von mehr als 50% des mindestens einen Rads des Fahrzeugs minimiert oder verhindert wird.

Gegebenenfalls kann vorgesehen sein, dass das Bremsaktuierungssignal, insbesondere die Einstellposition der Bremsvorrichtung, bevorzugt des Bremsaktuators der Bremsvorrichtung, von der Bremssteuerungsvorrichtung, in den genannten Fällen bevorzugt die eingestellte Bremswirkung, auf einen Wert verändert, insbesondere reduziert, wird, bei dem von der Bremssteuerungsvorrichtung ein Radschlupf kleiner als 5% und/oder eine Abnahme der Raddrehzahl eine Verzögerung von unter als 8 m/s² und/oder kein Rad eine um mehr als 50% höhere Drehzahlabnahme aufweist als das Rad mit der geringsten Raddrehzahlabnahme, insbesondere als noch keine Blockiergefahr detektiert und/oder bestimmt wurde.

Gegebenenfalls kann das Bremsaktuierungssignal, insbesondere die Bremswirkung, die Position der Bremsvorrichtung, bevorzugt des Bremsaktuators der Bremsvorrichtung, von der Bremssteuerungsvorrichtung unter Berücksichtigung der, insbesondere aktuellen, Bedingungen und/oder des Standorts, wie insbesondere der Fahrbahneigenschaften, erzeugt werden, sodass gegebenenfalls eine bessere Bremswirkung erzielt wird als ohne Berücksichtigung der Bedingungen.

Gegebenenfalls können von der Bremssteuerungsvorrichtung Veränderungen des Bremsaktuierungssignals, des Rads, insbesondere der Räder, bevorzugt gleichzeitig oder ungleichzeitig, vorgenommen werden.

Insbesondere können durch Veränderung des Bremsaktuierungssignals verursachte Veränderungen der Radmesswerte, wie beispielweise der Radschlupf und/oder die Veränderung der ermittelten Überschlagsgefahr, festgestellt und bei der Erzeugung eines Bremsaktuierungssignals berücksichtigt werden.

Gegebenenfalls kann vorgesehen sein, dass zwischen der Bremssteuerungsvorrichtung und einer weiteren Steuerungsvorrichtung, insbesondere einer Steuerungsvorrichtung des Zugfahrzeugs, eine Verbindung, insbesondere eine Datenverbindung, besteht.

Die Verbindung zwischen der Bremssteuerungsvorrichtung und einer weiteren Steuerungsvorrichtung kann kabelgebunden oder drahtlos sein.

Gegebenenfalls kann vorgesehen sein, dass über diese Datenverbindung Fahrzeugdaten, insbesondere die Geschwindigkeit, die Temperatur, der Niederschlag, das Betätigungssignal der Bremsvorrichtung und/oder weitere Bremsensteuerungsdaten, wie insbesondere die Bremswirkung, die Temperatur der Bremsvorrichtung, die Energieversorgung und/oder eine detektierte Blockade, von der weiteren Steuerungsvorrichtung an die Bremssteuerungsvorrichtung oder umgekehrt übermittelt werden.

Gegebenenfalls kann vorgesehen sein, dass die übermittelten Fahrzeugdaten von der Bremssteuerungsvorrichtung bei der Erzeugung des Bremsaktuierungssignals berücksichtigt werden.

Gegebenenfalls kann vorgesehen sein, dass die übermittelten Fahrzeugdaten von der Bremssteuerungsvorrichtung, qualitativ und/oder quantitativ, reaktionsgeschwindigkeits- und/oder genauigkeitsfördernd, in den in der Bremssteuerungsvorrichtung hinterlegten Algorithmen berücksichtigt werden.

Dadurch kann gegebenenfalls ein einfehler-sicherer Betrieb des Fahrzeugs, insbesondere der Bremsensteuerung, bevorzugt bei Ausfall einer Vorrichtung, insbesondere eines Sensors, ermöglicht und/oder das Blockieren von Rädern verhindert werden.

Gegebenenfalls kann vorgesehen sein, dass die Betätigungsmessvorrichtung an der Betätigungsvorrichtung, insbesondere dem mindestens einen Bremshebel und/oder dem mindestens einen Bremspedal, der Bremsvorrichtung angeordnet ist.

Gegebenenfalls kann vorgesehen sein, dass durch die Betätigungsmessvorrichtung, insbesondere direkt oder indirekt, die Betätigung der Betätigungsvorrichtung, insbesondere des Bremshebels und/oder des Bremspedals, gemessen wird.

Gegebenenfalls kann vorgesehen sein, dass die von der Betätigungsmessvorrichtung gemessene Betätigung in ein Bremserkennung-Signal umgesetzt wird.

Gegebenenfalls kann vorgesehen sein, dass das Bremserkennung-Signal an die Bremssteuerungsvorrichtung übermittelt wird.

Gegebenenfalls kann vorgesehen sein, dass von der Bremssteuerungsvorrichtung das Bremserkennung-Signal bei der Erzeugung des Bremsaktuierungssignals berücksichtigt wird, sodass insbesondere ein nullpunktstabiles Verhalten resultiert und/oder keine Bremswirkung entsteht, wenn keine Betätigung der Betätigungsvorrichtung erfolgt.

Gegebenenfalls kann vorgesehen sein, dass die mindestens eine weitere Betätigungsmessvorrichtung an der Betätigungsvorrichtung, insbesondere dem mindestens einen Bremshebel und/oder dem mindestens einen Bremspedal, der Bremsvorrichtung angeordnet ist.

Gegebenenfalls kann vorgesehen sein, dass durch die weitere Betätigungsmessvorrichtung, insbesondere direkt oder indirekt, die Betätigung der Betätigungsvorrichtung, insbesondere des Bremshebels und/oder des Bremspedals, gemessen wird.

Gegebenenfalls kann vorgesehen sein, dass die von der weiteren Betätigungsmessvorrichtung gemessene Betätigung in ein Bremserkennung-Signal umgesetzt wird.

Gegebenenfalls kann vorgesehen sein, dass das Bremserkennung-Signal an die Bremssteuerungsvorrichtung übermittelt wird.

Gegebenenfalls kann vorgesehen sein, dass von der Bremssteuerungsvorrichtung das Bremserkennung-Signal bei der Erzeugung des Bremsaktuierungssignals berücksichtigt wird, sodass insbesondere ein nullpunktstabiles Verhalten resultiert und/oder keine Bremswirkung entsteht, wenn keine Betätigung der Betätigungsvorrichtung erfolgt.

Gegebenenfalls kann die Betätigung der Betätigungsvorrichtung als Kraft oder Druck, insbesondere deren Wirkung oder Veränderung, und/oder als Stellung oder Position, insbesondere deren Veränderung stufig oder proportional, von der Betätigungsmessvorrichtung erfasst werden.

Insbesondere kann eine Feststellung der Bremshebelstellung und/oder Bremshebelkraft oder damit in Zusammenhang stehenden Werten bevorzugt so erfolgen, dass ein nullpunktstabiles Verhalten, insbesondere der Bremsvorrichtung, resultiert.

Im Rahmen der vorliegenden Erfindung kann unter einem nullpunktstabilen Verhalten verstanden werden, dass keine Bremswirkung durch eine Betätigungsmessung entstehen kann, wenn keine, insbesondere aktive, Betätigung durch den Fahrer vorliegt. Mit anderen Worten kann die Bremsvorrichtung derart gesteuert, geregelt und/oder eingestellt sein, dass keine Bremswirkung erzielt wird und/oder vorliegt, wenn keine Betätigung der Betätigungsvorrichtung erfolgt, insbesondere wenn die Betätigungsvorrichtung unbetätigt ist.

Zur Steuerung, Regelung und/oder Einstellung der Bremsvorrichtung können Eigenschaften der Betätigungsmessvorrichtung und/oder Teile einer entsprechenden Sensorkennlinie verwendet werden, bei denen ein Bremswunsch auch unter realistisch anzunehmenden Einflüssen, wie z.B. Temperatur von -20° bis +50° und/oder Sensoralterung, erkennbar ist.

Gegebenenfalls kann die Betätigungsvorrichtung eine Handkraft, eine Fußkraft und/oder eine Bewegung übertragen und insbesondere als Seil, Gestänge oder Druckmessvorrichtung ausgebildet sein.

Gegebenenfalls kann die Betätigungsvorrichtung und/oder Betätigungsmessvorrichtung nachrüstbar sein, indem eine Kraft, Druck und/oder Position aufnehmende Vorrichtung an dem Fahrzeug nachträglich eingefügt und/oder angeordnet wird.

Gegebenenfalls kann die Bremssteuerungsvorrichtung das Bremsaktuierungssignal derart erzeugen und/oder einstellen, dass die von der Bremssteuerungsvorrichtung gesteuerte Bremsvorrichtung derart gesteuert wird, dass ein Fahrzeugteil, insbesondere der Anhänger, an dem anderen Fahrzeugteil, insbesondere an dem Zugfahrzeug, zieht oder schiebt.

Gegebenenfalls kann bei der Erzeugung des Bremsaktuierungssignals durch die Bremssteuerungsvorrichtung die gemessene Kraft zwischen den Fahrzeugteilen berücksichtigt werden.

Gegebenenfalls können bei der Erzeugung des Bremsaktuierungssignals durch die Bremssteuerungsvorrichtung Umweltbedingungen, insbesondere solche mit einem Einfluss auf den Reibungskoeffizienten des Fahrbahnbelags, wie bevorzugt das Unterschreiten einer vorab definierten Lufttemperatur oder Nässe aus Witterungsdaten, berücksichtigt werden.

Gegebenenfalls kann vorgesehen sein, dass ein Schwingungssensor am Fahrzeug, insbesondere im Bereich einer Radaufhängung des Fahrzeugs, vorgesehen ist.

Gegebenenfalls kann vorgesehen sein, dass Schwingungen, insbesondere Schwingungen des Fahrzeugs, mit dem Schwingungssensor gemessen werden.

Gegebenenfalls kann vorgesehen sein, dass die von dem Schwingungssensor gemessenen Schwingungen in ein Schwingungssensor-Signal umgesetzt werden.

Gegebenenfalls kann vorgesehen sein, dass das Schwingungssensor-Signal an die Bremssteuerungsvorrichtung übermittelt wird, wodurch gegebenenfalls von der Bremssteuerungsvorrichtung auf Basis des Schwingungssensor-Signals die Masse des Fahrzeugs berechnet wird.

Gegebenenfalls kann vorgesehen sein, dass von der Bremssteuerungsvorrichtung das Bremsaktuierungssignal unter Berücksichtigung des Schwingungssensor-Signals, insbesondere der berechneten Masse des Fahrzeugs, erzeugt wird.

Insbesondere kann die Masse eines Feder-Masse Systems, insbesondere des Fahrzeugs, mit der Schwingungsfrequenz in aus dem Stand der Technik bekanntem Zusammenhang stehen und daraus ableitbar sein.

Gegebenenfalls kann vorgesehen sein, dass ein Winkelsensor am Fahrzeug, insbesondere im Bereich einer, insbesondere gefederten, Radaufhängung des Fahrzeugs, vorgesehen ist.

Gegebenenfalls kann vorgesehen sein, dass mit dem Winkelsensor eine Winkeländerung eines Teils der Radaufhängung des Fahrzeugs gemessen wird.

Gegebenenfalls kann vorgesehen sein, dass die von dem Winkelsensor gemessene Winkeländerung in ein Winkelsensor-Signal umgesetzt wird.

Gegebenenfalls kann vorgesehen sein, dass das Winkelsensor-Signal an die Bremssteuerungsvorrichtung übermittelt wird, wodurch gegebenenfalls von der Bremssteuerungsvorrichtung auf Basis des Winkelsensor-Signals die Masse des Fahrzeugs berechnet wird.

Gegebenenfalls kann vorgesehen sein, dass von der Bremssteuerungsvorrichtung das Bremsaktuierungssignal unter Berücksichtigung des Winkelsensor-Signals, insbesondere der auf Basis des Winkelsensor-Signals berechneten Masse des Fahrzeugs, erzeugt wird.

Gegebenenfalls kann vorgesehen sein, dass ein Lagesensor am Fahrzeug, insbesondere im Bereich einer, insbesondere gefederten, Radaufhängung des Fahrzeugs, vorgesehen ist.

Gegebenenfalls kann vorgesehen sein, dass mit dem Lagesensor die Winkeländerung oder Lageänderung eines Teils der Radaufhängung gemessen wird.

Gegebenenfalls kann vorgesehen sein, dass die von dem Lagesensor gemessene Winkeländerung oder Lageänderung in ein Lagesensor-Signal umgesetzt wird.

Gegebenenfalls kann vorgesehen sein, dass das Lagesensor-Signal an die Bremssteuerungsvorrichtung übermittelt wird, wodurch gegebenenfalls von der Bremssteuerungsvorrichtung auf Basis des Lagesensor-Signals die Masse des Fahrzeugs berechnet wird.

Gegebenenfalls kann vorgesehen sein, dass von der Bremssteuerungsvorrichtung das Bremsaktuierungssignal unter Berücksichtigung des Lagesensor-Signals, insbesondere der auf Basis des Lagesensor-Signals berechneten Masse des Fahrzeugs, erzeugt wird.

Insbesondere kann von der Bremssteuerungsvorrichtung die, insbesondere maximal mögliche, bevorzugt maximal mögliche blockierfreie, Bremswirkung über die Federeigenschaft und/oder die Größe des Signals, insbesondere dessen Änderung sich die Kraft auf die Feder oder sich damit aus einer entsprechenden Lageveränderung von Bauteilen die Rad-, Achs- oder Fahrzeuglast ergibt, bestimmt und/oder berechnet werden.

Gegebenenfalls kann vorgesehen sein, dass ein mechanisch und/oder elektronisch betätigbarer Sperrsensor am Fahrzeug vorgesehen ist.

Gegebenenfalls kann vorgesehen sein, dass der Sperrsensor bei Betätigung ein Sperrsignal an die Bremssteuerungsvorrichtung übermittelt.

Gegebenenfalls kann vorgesehen sein, dass von der Bremssteuerungsvorrichtung ein Bremsaktuierungssignal, welches insbesondere die Bremsvorrichtung anzieht, erzeugt wird, wenn der Sperrsensor mechanisch und/oder elektronisch betätigt wird und/oder das Sperrsignal an die Bremssteuerungsvorrichtung übermittelt.

Dadurch kann gegebenenfalls ein unautorisiertes oder ungewolltes Verlassen des aktuellen Standortes des Fahrzeugs und/oder eine Demontage von Fahrzeugteilen, insbesondere eine Demontage von Laufrädern und/oder -teilen, durch die, insbesondere dauerhafte, Betätigung und/oder Anziehen der Bremsvorrichtung erschwert und/oder verhindert wird.

Insbesondere kann durch die dauerhaft betätigte, insbesondere angezogene, Bremsvorrichtung die Demontage erschwert werden, da eine betätigte Bremsvorrichtung das Abziehen einer Bremstrommel, von Bremsteilen und/oder eines Rades, insbesondere wiederkehrend, wiederholt, nachhaltig und/oder wertmindernd, erschwert.

Insbesondere bei einem Fahrrad kann durch die Betätigung, insbesondere das Anziehen, der Bremsvorrichtung ein Diebstahl der Räder, insbesondere des Vorderrads und/oder des Hinterrads verhindert und/oder vermindert werden.

Gegebenenfalls kann vorgesehen sein, dass ein Standortsensor am Fahrzeug vorgesehen ist.

Gegebenenfalls kann vorgesehen sein, dass der Standort des Fahrzeugs mit dem Standortsensor ermittelt und an die Bremssteuerungsvorrichtung übermittelt wird.

Gegebenenfalls kann vorgesehen sein, dass von der Bremssteuerungsvorrichtung das Bremsaktuierungssignal unter Berücksichtigung des Standorts erzeugt wird, sodass insbesondere die durch das Bremsaktuierungssignal erzielte Bremswirkung auf Basis des Standorts, insbesondere an das Gefälle der Straße und/oder den Verlauf der Straße des ermittelten Standorts, angepasst wird.

Gegebenenfalls kann vorgesehen sein, dass die Bremssteuerungsvorrichtung den Standort bei der Umsetzung des Sperrsignals berücksichtigt, insbesondere so, dass von der Bremssteuerungsvorrichtung kein Bremsaktuierungssignal in einem vorab definierten Gebiet erzeugt wird, sodass eine Bewegung in diesem vorab definierten Gebiet möglich ist.

Gegebenenfalls gibt die Bremssteuerungsvorrichtung auf Basis des Standorts verschiedene Fahrzeugeinstellungen, bevorzugt durch Einstellung der Bremswirkung, frei oder schränkt diese ein.

Gegebenenfalls kann vorgesehen sein, dass ein Tretschwingungssensor am Fahrzeug vorgesehen ist.

Gegebenenfalls kann vorgesehen sein, dass der Tretschwingungssensor als Beschleunigungs-, Kraft- oder Geschwindigkeitssensor ausgebildet ist.

Gegebenenfalls kann vorgesehen sein, dass mit dem Tretschwingungssensor die durch das Treten von Pedalen, insbesondere durch das Treten von Fahrradpedalen, verursachten Tretschwingungen, insbesondere die schwankende positive und/oder negative Beschleunigung erzeugenden Tretschwingungen, detektiert werden.

Gegebenenfalls kann vorgesehen sein, dass die von dem Tretschwingungssensor gemessenen Tretschwingungen in ein Tretschwingungssensor-Signal umgesetzt werden.

Gegebenenfalls kann vorgesehen sein, dass das Tretschwingungssensor-Signal an die Bremssteuerungsvorrichtung übermittelt wird.

Gegebenenfalls kann vorgesehen sein, dass von der Bremssteuerungsvorrichtung das Bremsaktuierungssignal unter Berücksichtigung des Tretschwingungssensor-Signals erzeugt wird, wodurch gegebenenfalls ein Bremsaktuierungssignal nur dann erzeugt wird, wenn keine Tretschwingungen detektiert werden.

Gegebenenfalls kann ein verzögernder Anteil der Tretschwingung von der Bremssteuerungsvorrichtung bei der Erzeugung des Bremsaktuierungssignals unberücksichtigt werden.

Gegebenenfalls kann ein unter der bei der Tretschwingung, gegebenenfalls beobachtbaren Verzögerung, liegender Wert von der Bremssteuerungsvorrichtung bei der Erzeugung des Bremsaktuierungssignals als, insbesondere echte, Bremsung eingestuft werden.

Gegebenenfalls können die Tretschwingungen von der Bremssteuerungsvorrichtung aus dem Bremsaktuierungssignal, insbesondere aus einem gemessenen Verzögerungssignal, über ihr periodisches Auftreten und der Stärke des Auftretens herausgerechnet werden.

Gegebenenfalls kann vorgesehen sein, dass von dem Fahrzeug, insbesondere der Fahrzeugsteuerungsvorrichtung, bevorzugt der Fahrzeugsteuerungsvorrichtung des Zugfahrzeugs, mindestens ein, insbesondere ein qualitatives, Fahrzeugsignal, insbesondere ein Bremssignal, eine Betätigung des Bremspedals, ein Antriebssignal, eine Betätigung eines Blinkers und/oder ein Status, insbesondere eine Aktivierung, des Bremslichtes, an die Bremssteuerungsvorrichtung übermittelt wird.

Insbesondere kann unter Bremssignal ein Signal verstanden werden, welches von der Fahrzeugsteuerungsvorrichtung an die Bremssteuerungsvorrichtung zur Bremsung des mindestens einen Rades übermittelt wird.

Die Übermittlung des Fahrzeugsignals von der Fahrzeugsteuerungsvorrichtung an die Bremssteuerungsvorrichtung kann gegebenenfalls kabelgebunden oder drahtlos, insbesondere über eine Verbindungsvorrichtung, erfolgen.

Gegebenenfalls kann vorgesehen sein, dass von der Bremssteuerungsvorrichtung gegebenenfalls das mindestens eine Fahrzeugsignal bei der Erzeugung des Bremsaktuierungssignals berücksichtigt wird.

Gegebenenfalls kann vorgesehen sein, dass von der Bremssteuerungsvorrichtung dann kein Bremsaktuierungssignal erzeugt wird,
- wenn ein Antriebssignal von dem Fahrzeug, insbesondere der Fahrzeugsteuerungsvorrichtung, an die Bremssteuerungsvorrichtung übermittelt wird.
- und/oder wenn kein Bremssignal vom Fahrzeug, insbesondere der Fahrzeugsteuerungsvorrichtung, an die Bremssteuerungsvorrichtung übermittelt wird, insbesondere keine Betätigung des Bremspedals und/oder keine Aktivierung des Bremslichtes erfolgt.

Insbesondere kann, wenn die Bremssteuerungsvorrichtung erkennt, dass regeneratives Bremsen oder absichtliches Rollen des Fahrzeugs gewollt ist, insbesondere bei einer Aktivierung des Bremslichts,
- eine Bremsung mit einer vorab definierten Stärke, insbesondere ein Viertel der Erdbeschleunigung, insbesondere mit sogenanntem g/4, erfolgen,
- und/oder die Bremsung abhängig von der gemessenen Verzögerung gesteuert werden,
- und/oder von einem übertragenen Bremswunsch des Fahrers gesteuert werden.

Gegebenenfalls kann vorgesehen sein, dass von der Bremssteuerungsvorrichtung eine Unterbrechung der Verbindung zwischen dem Fahrzeug, insbesondere dem Zugfahrzeug und dem Anhänger, bevorzugt der Fahrzeugsteuerungsvorrichtung des Zugfahrzeugs, und der Bremssteuerungsvorrichtung erkannt wird.

Gegebenenfalls kann vorgesehen sein, dass, wenn eine Unterbrechung erkannt wird, die Unterbrechung von der Bremssteuerungsvorrichtung bei der Erzeugung des Bremsaktuierungssignals berücksichtigt wird, insbesondere indem das Bremsaktuierungssignal, insbesondere ausschließlich, auf Basis der mit dem Verzögerungssensor gemessenen Verzögerung oder der mit dem Raddrehzahlsensor gemessenen Raddrehzahl erzeugt wird.

Gegebenenfalls kann vorgesehen sein, dass, wenn eine Unterbrechung erkannt wird, von der Bremssteuerungsvorrichtung zur Steuerung der Bremsvorrichtung ein vordefiniertes und/oder situationsbedingtes, wie insbesondere ein geschwindigkeitsabhängiges oder lastabhängiges, Bremsaktuierungssignal zur Aktuierung der ersten Bremsvorrichtung verwendet wird.

Gegebenenfalls kann vorgesehen sein, dass, wenn eine Unterbrechung, insbesondere ein sogenannter abgerissener Anhänger, erkannt wird, von der Bremssteuerungsvorrichtung eine Bremsung über einem Drittel der Erdbeschleunigung, insbesondere einem sogenannten g/3, eingeleitet wird.

Gegebenenfalls kann vorgesehen sein, dass das Bremserkennung-Signal, das weitere Bremserkennung-Signal, das Schwingungssensor-Signal, das Winkelsensor-Signal, das Lagesensor-Signal, das Sperrsignal, der Standort, das Tretschwingungssensor-Signal und/oder ein Auflaufkraftsignal vor der Erzeugung oder bei der Erzeugung des Bremsaktuierungssignals in der Bremssteuerungsvorrichtung, insbesondere durch eine Filterung, insbesondere Tiefpassfilterung, bevorzugt digitale Tiefpassfilterung höherer Ordnung und/oder Polzahlen, gefiltert wird.

Gegebenenfalls kann vorgesehen sein, dass das Bremserkennung-Signal, das weitere Bremserkennung-Signal, das Schwingungssensor-Signal, das Winkelsensor-Signal, das Lagesensor-Signal, das Sperrsignal, der Standort, das Tretschwingungssensor-Signal und/oder ein Auflaufkraftsignal vor der Erzeugung oder bei der Erzeugung des Bremsaktuierungssignals in der Bremssteuerungsvorrichtung, insbesondere durch eine Filterung, insbesondere Tiefpassfilterung, bevorzugt digitale Tiefpassfilterung höherer Ordnung und/oder Polzahlen, derart gefiltert wird, dass gegebenenfalls die Ansprechzeit der Bremsvorrichtung und/oder die Glättung der Filterung zu einem schnelleren und/oder stabileren Bremsaktuierungssignal führen als mit einem einstufigen Tiefpass.

Im Rahmen der vorliegenden Erfindung kann unter dem Auslaufkraftsignal die positive oder negative Kraft zwischen den verschiedenen Fahrzeugteilen, insbesondere dem Zugfahrzeug und dem Anhänger, verstanden werden.

Gegebenenfalls kann vorgesehen sein, dass zur Filterung Filter höherer Ordnung und/oder höherer Polzahlen verwendet werden.

Diese Filter können gegebenenfalls mit den aus dem Stand der Technik bekannten Formeln so ausgelegt werden, dass durch die Filterung die, insbesondere mechanische, Betätigungszeit der Bremsvorrichtung, insbesondere im Wesentlichen, nicht verlängert, bevorzugt weniger als verdoppelt wird.

Diese Filter können gegebenenfalls mit den aus dem Stand der Technik bekannten Formeln so ausgelegt werden, dass durch die Filterung eine Glättung der Signale erreicht wird, wodurch sich bevorzugt eine Sollbremsmomentschwankung über der Hälfte bis unter dem Doppelten des Sollbremsmomentmittelwertes ergibt.

Gegebenenfalls kann vorgesehen sein, dass das Bremserkennung-Signal, das weitere Bremserkennung-Signal, das Schwingungssensor-Signal, das Winkelsensor-Signal, das Lagesensor-Signal, das Sperrsignal, der Standort, das Tretschwingungssensor-Signal und/oder ein Auflaufkraftsignal eine Eingangsgröße eines oder des Simulationsmodells ist.

Gegebenenfalls kann vorgesehen sein, dass als Ausgangsgröße des Simulationsmodells das Bremsaktuierungssignal und/oder mindestens eine Einstellgröße für die Bremsvorrichtung ausgegeben wird.

Gegebenenfalls kann vorgesehen sein, dass das Simulationsmodell, insbesondere die Simulationsrechnungen des Simulationsmodells, in der Bremssteuerungsvorrichtung durchgeführt wird.

Gegebenenfalls kann vorgesehen sein, dass auf Basis des Bremserkennung-Signals, des weiteren Bremserkennung-Signals, des Schwingungssensor-Signals, des Winkelsensor-Signals, des Lagesensor-Signals, des Sperrsignals, des Standorts, des Tretschwingungssensor-Signals und/oder eines Auflaufkraftsignals Simulationsrechnungen in der Bremssteuerungsvorrichtung und/oder vorab außerhalb des Fahrzeugs durchgeführt werden.

Gegebenenfalls kann vorgesehen sein, dass die Ergebnisse des Simulationsmodells, insbesondere der Simulationsrechnung/en, bei der Erzeugung des Bremsaktuierungssignals von der Bremssteuerungsvorrichtung berücksichtigt werden, sodass ein vorab definierter Zustand des Fahrzeugs, insbesondere eine sogenannte sich selbst steigernde, "eskalierende" Bremsung, reduziert und/oder vermieden wird.

Im Rahmen der vorliegenden Erfindung kann unter "eskalierende" Bremsung, ein unkontrollierbarer und/oder als unkontrollierbar empfundener Zustand des Fahrzeugs verstanden werden.

Gegebenenfalls kann vorgesehen sein, dass die Ergebnisse des Simulationsmodells, insbesondere der Simulationsrechnung/en, bei der Erzeugung des Bremsaktuierungssignals von der Bremssteuerungsvorrichtung berücksichtigt werden, sodass die Wahrscheinlichkeit des Auftretens eines vorab definierten Zustandes des Fahrzeugs, insbesondere eine sogenannte sich selbst steigernde, "eskalierende" Bremsung, reduziert und/oder eliminiert wird.

Gegebenenfalls kann vorgesehen sein, dass vorab und/oder im Betrieb des Fahrzeugs festgestellt wird, wie sich eine eingeleitete, insbesondere eine vom Fahrer eingeleitete, Bremsung auf die zur Bremssteuerung gemessene Verzögerung auswirkt und welche zusätzliche Bremsung daraus ableitbar ist, ohne eine insgesamt zu stark verstärkte Bremsung, insbesondere eine eskalierende Bremsung, bei der ein reduzierter Fahrerbremswunsch zu keiner Reduktion der Gesamtbremswirkung mehr führt, zu erzeugen.

Insbesondere kann dadurch vermieden werden, dass die Stärke der durch Verzögerungsmessung gesteuerten Bremsung vorab oder beim Betrieb begrenzt oder als nicht-eskalierend berechnet wird, wobei die aus dem Stand der Technik bekannten Formeln für Verzögerung, Kraft, Masse verwendet werden.

Gegebenenfalls kann das Simulationsmodell, insbesondere die Simulationsrechnung des Simulationsmodells, Eigenschaften der mindestens einen Bremsvorrichtung, wie insbesondere den Reibbeiwert, den Reibradius, die mechanische Steifigkeit und gegebenenfalls deren temperaturbedingte Änderungen, berücksichtigen, sodass daraus insbesondere das Bremsaktuierungssignal und/oder mindestens eine Einstellgröße für die mindestens eine Bremsvorrichtung gebildet und/oder vorgegeben wird.

Gegebenenfalls kann das Simulationsmodell, insbesondere die Simulationsrechnung des Simulationsmodells, die Aktuatorposition und/oder Aktuatorkraft, insbesondere das Aktuatormoment, und/oder eine interne Kontrollrechnung berücksichtigen, welche prüft, ob diese Vorgabewert unter den gemessenen Bedingungen, wie insbesondere der Außentemperatur, der Temperatur der Bremsvorrichtung, der Einstellung einer etwaigen Verschleißnachstellung, Belagsverschleiß zur gewünschten Bremswirkung, also insbesondere dem gewünschten Bremsmoment, führt.

Gegebenenfalls kann die Bremssteuerungsvorrichtung auf Basis der Ergebnisse des Simulationsmodells Maßnahmen zur genaueren Erreichung der Sollbremswirkung einleiten,
- insbesondere indem eine Verschleißnachstellung der Bremsvorrichtung ausgelöst wird,
- und/oder indem insbesondere die Aktuatorvorgabe der Bremsvorrichtung wie Position, Kraft oder Moment verändert wird,
- und/oder indem insbesondere der ermittelte, geschätzte oder gemessene Werte im Sinne eines geschlossenen Regelkreises, insbesondere zur Anpassung der Aktuatorvorgabe, verwendet wird und die ermittelte, geschätzte oder gemessene Bremswirkung an die Sollbremswirkung herangeführt wird.

Gegebenenfalls kann vorgesehen sein, dass von der Bremssteuerungsvorrichtung zur Überschlagsabwendung des Fahrzeugs Simulationsrechnungen zur Berechnung der Überschlagswahrscheinlichkeit des Fahrzeugs durchgeführt werden.

Gegebenenfalls kann vorgesehen sein, dass bei diesen Simulationsrechnungen die Fahrzeugbeschleunigung, bevorzugt die Bremsverzögerung und/oder Kurvenbeschleunigung des Fahrzeugs, berechnet werden.

Gegebenenfalls kann vorgesehen sein, dass von der Bremssteuerungsvorrichtung bei diesen Simulationsrechnungen gegebenenfalls mindestens eine direkt oder indirekt, insbesondere über Einfederung und/oder Ausfederung, ermittelte Radauflagekraft des Fahrzeugs berücksichtigt wird.

Gegebenenfalls kann vorgesehen sein, dass von der Bremssteuerungsvorrichtung gegebenenfalls eine Bewegung, Drehung oder Veränderung der ermittelten Radauflagekraft als bereits beginnender oder in Gang befindlicher Überschlag erkannt und zur Überschlagsabwendung verwendet wird.

Gegebenenfalls kann vorgesehen sein, dass auf Basis der Simulationsrechnungen zur Überschlagsabwendung die Bremsvorrichtung des Fahrzeugs, der Antrieb des Fahrzeugs, die Lenkung des Fahrzeugs und/oder die Steuerung des Fahrzeugs so betrieben werden, dass ein Überschlag des Fahrzeugs vermindert und/oder verhindert wird, insbesondere indem von der Bremssteuerungsvorrichtung das Bremsaktuierungssignal zum Anziehen der Bremsvorrichtung des mindestens einen Rads mit steigender Überschlagswahrscheinlichkeit reduziert wird, sodass sich insbesondere mit steigender Überschlagswahrscheinlichkeit die Bremswirkung der Bremsvorrichtung langsamer steigern lässt.

Gegebenenfalls kann vorgesehen sein, dass ohne Überschlagsgefahr, insbesondere bevor eine Überschlagsgefahr und/oder Überschlagswahrscheinlichkeit durch die Bremsensteuerungsvorrichtung erkannt wird, eine schnelle Bremsaktuierung auch in Richtung steigender Überschlagsgefahr, insbesondere Überschlagswahrscheinlichkeit, möglich ist, aber mit zunehmender Überschlagsgefahr, insbesondere Überschlagswahrscheinlichkeit, in Richtung weiter steigender Überschlagsgefahr, insbesondere Überschlagswahrscheinlichkeit, nur eine langsamere Aktuierung erfolgt als in Richtung wieder sinkender Überschlagsgefahr, insbesondere Überschlagswahrscheinlichkeit.

Insbesondere ist die Bremsvorrichtung derart ausgelegt, dass sie sich im Bereich hoher Überschlagsgefahr und/oder hoher Überschlagswahrscheinlichkeit langsamer in der Bremswirkung steigern als in Richtung geringerer Überschlagsgefahr und/oder geringerer Überschlagswahrscheinlichkeit lösen lässt, insbesondere indem eine Abnahme der Bremswirkung um mindestens 10% schneller erfolgt als eine Zunahme.

Gegebenenfalls kann vorgesehen sein, dass laufend oder fallweise eine Überschlagsabwendung mittels Eingriffes in die Fahrzeugbeschleunigung, bevorzugt Bremsverzögerung und/oder Kurvenbeschleunigung, von der Bremssteuerungsvorrichtung berechnet und/oder von der Bremssteuerungsvorrichtung durchgeführt wird.

Insbesondere können diese Berechnungen von der Bremssteuerungsvorrichtung verwendet werden, wenn ein Überschlag erfolgt, wenn insbesondere das Lot durch den Schwerpunkt einer Kraft aus Gewicht und Beschleunigung außerhalb der Standfläche gerät und daher jene Komponente oder Größe dieses Lots oder eine dieselbe Wirkung ausdrückende Größe verwendet, um durch Reduzierung der Komponente oder Messgröße, also im Wesentlichen der entsprechenden Beschleunigung, den Überschlag durch Vergleich mit einem Grenzwert oder Regelung bzw. Begrenzung auf einen Grenzwert abzuwenden, wobei eine fest vorgegebene Komponente oder Größe als Grenzwert dient oder eine situationsbezogene und/oder deren zeitliche oder ortsbedingte, z.B. der Fahrbahn folgende Änderung,
- und/oder dass mindestens eine direkt oder indirekt, z.B. über Ein- bzw. Ausfederung, ermittelte Radauflagekraft oder eine Ähnliches ausdrückende Größe zur Überschlagsabwendung verwendet oder mit einbezogen wird, und/oder deren zeitliche oder ortsbedingte, z.B. der Fahrbahn folgende, Änderung,
- und/oder dass eine Bewegung, Drehung oder Veränderung dieser Werte als bereits beginnender oder in Gang befindlicher Überschlag erkannt und zur Überschlagsabwendung verwendet wird,
- und/oder dass Bremsvorrichtung und/oder Antrieb und/oder Lenkung oder deren Steuerung so betrieben werden, dass ohne Überschlagsgefahr eine schnelle Reaktion auch in Richtung steigender Überschlagsgefahr möglich ist, aber mit zunehmender Überschlagsgefahr in Richtung steigender Überschlagsgefahr eine langsamere Reaktion erfolgt als in Richtung sinkender Überschlagsgefahr, dass also bevorzugt die Bremsvorrichtung so ausgelegt ist, dass sie sich im Bereich von Überschlagsgefahr langsamer in der Bremswirkung steigern lässt als sie sich in Richtung geringerer Überschlagsgefahr lösen lässt, insbesondere indem eine Abnahme der Bremswirkung bevorzugt um mindestens 10% schneller erfolgt als eine Zunahme.

Gegebenenfalls kann vorgesehen sein, dass bei der Erzeugung des Bremsaktuierungssignals von der Bremssteuerungsvorrichtung weitere Bremswirkungen, wie insbesondere der Fahrwiderstand, der Strömungswiderstand und/oder die Bremswirkung anderer Bremsvorrichtungen, insbesondere eine regenerative Bremswirkung eines gegebenenfalls vorhandenen Elektroantriebs, des Fahrzeugs berücksichtigt werden.

Gegebenenfalls kann vorgesehen sein, dass diese weiteren Bremswirkungen von dem Bremsaktuierungssignal, bevorzugt von dem Bremserkennung-Signal, abgezogen werden, sodass das Bremsaktuierungssignal reduziert wird.

Gegebenenfalls kann vorgesehen sein, dass das Fahrzeug zur Messung der Temperatur, insbesondere der Temperatur der Bremsvorrichtung, mindestens einen Temperatursensor umfasst, wobei die gemessene Temperatur an die Bremssteuerungsvorrichtung übermittelt wird.

Gegebenenfalls kann vorgesehen sein, dass von der Bremssteuerungsvorrichtung zur Simulation der Temperatur der Bremsvorrichtung in einem Wärme-Simulationsmodell ein Tiefpassfilter, der Wärmewiderstand, die Wärmekapazität und/oder ein kaskadierter Tiefpassfilter verwendet werden.

Gegebenenfalls kann vorgesehen sein, dass die simulierte Temperatur an die Bremssteuerungsvorrichtung übermittelt wird.

Gegebenenfalls kann vorgesehen sein, dass in das Wärme-Simulationsmodell die Bremsleistung, also die Wärmeleistung, unter den jeweilig aktuellen Bedingungen, die Kühlung durch Fahrtwind, Drehzahl und/oder die temperaturabhängige Schwarzkörperstrahlung als Eingangsgröße eingeht.

Gegebenenfalls kann vorgesehen sein, dass von der Bremssteuerungsvorrichtung die, insbesondere gemessene oder simulierte, Temperatur der Bremsvorrichtung, insbesondere der Reibpaarung der Bremsscheibe und/oder der Trommel mit dem jeweiligen Bremsbelag, bei der Erzeugung des Bremsaktuierungssignals berücksichtigt wird, sodass insbesondere die temperaturabhängige Änderung der Bremsleistung der Bremsvorrichtung kompensierbar und/oder eine Überhitzung der Bremsvorrichtung verhindert oder verringert wird.

Gegebenenfalls kann vorgesehen sein, dass das Bremsaktuierungssignal bei gleichem Bremserkennung-Signal derart angepasst wird, dass die Bremsung des mindestens einen Rads, insbesondere eine Bremsung des Fahrzeugs, bei einer Bremsvorrichtung, welche eine erste Temperatur aufweist, im Wesentlichen gleich ist wie die Bremsung des mindestens einen Rads, insbesondere eine Bremsung des Fahrzeugs, bei einer Bremsvorrichtung, welche eine zweite Temperatur aufweist.

Gegebenenfalls kann vorgesehen sein, dass das Bremsaktuierungssignal bei gleichem Bremserkennung-Signal derart angepasst wird, dass die Bremsung des mindestens einen Rads, insbesondere eine Bremsung des Fahrzeugs, bei einer Bremsvorrichtung, welche eine erste Temperatur aufweist, sich um weniger als 15% verändert, wie die Bremsung des mindestens einen Rads, insbesondere eine Bremsung des Fahrzeugs, bei einer Bremsvorrichtung, welche eine zweite Temperatur aufweist.

Gegebenenfalls kann vorgesehen sein, dass zur Simulation der Temperatur der Bremsvorrichtung Tiefpassfilter, der Wärmewiderstand, die Wärmekapazität und/oder kaskadierte Tiefpassfilter verwendet werden.

Insbesondere kann das Wärme-Simulationsmodell bevorzugt nicht aus vorab gespeicherten Werten bestehen, sondern laufend die wechselnden Einflüsse zu neuen Temperaturdaten verarbeiten, also insbesondere ausgehend von der Bremsleistung, also Wärmeleistung, unter den jeweilig aktuellen Bedingungen wie Kühlung durch Fahrtwind, Drehzahl, temperaturabhängiger Schwarzkörperstrahlung für die jeweiligen Stufen des mehrstufigen Tiefpasses laufend neue aktuelle Temperaturen simulieren.

Die jeweils aktuelle simulierte Temperatur kann am Ausgang einer Stufe in den Eingang einer folgenden Stufe eingehen, sodass damit eine genauere Berechnung des Bremsaktuierungssignals, insbesondere der dadurch möglichen Bremswirkung, erfolgen kann.

Insbesondere kann das Wärme-Simulationsmodell die Wärmedehnung/en, insbesondere die dadurch veränderten Anpressbedingungen, die Belagstemperatur, insbesondere die damit verbundene Änderung des Reibbeiwertes und/oder den Wärmefluss von der Bremsleistung weiter entfernten Teilen zu der Bremsleistung näheren Teilen berücksichtigen.

Gegebenenfalls kann das Wärme-Simulationsmodell, dadurch und durch seine Mehrstufigkeit nicht nur eine erste Bremsung mit erforderlicher Genauigkeit simulieren bzw. bestimmen, sondern weitere Bremsungen, und die zwischen den Bremsungen stattfindenden Abkühlphasen.

Das Wärme-Simulationsmodell kann Bremsungen simulieren bzw. bestimmen, wobei sich der Reibbeiwert durch die jeweilige Belagstemperatur ändert, also insbesondere von ca. 10°C bis einschließlich 250°C, insbesondere 10°C bis einschließlich 100°C, insbesondere 10°C bis einschließlich 150°C, insbesondere 10°C bis einschließlich 250°C.

Gegebenenfalls kann vorgesehen sein, dass das Fahrzeug mindestens eine, insbesondere autonome, Stromerzeugungsvorrichtung umfasst.

Gegebenenfalls kann vorgesehen sein, dass die Stromerzeugungsvorrichtung gegebenenfalls einen Akku, eine Batterie, ein Photovoltaik-Modul und/oder einen Radnabendynamo umfasst.

Gegebenenfalls kann vorgesehen sein, dass durch die mindestens eine Stromerzeugungsvorrichtung das Bremssystem des Fahrzeugs, insbesondere die erste Bremsvorrichtung, die Bremserkennungsvorrichtung und die Bremssteuerungsvorrichtung, betreibbar ist, insbesondere mit Energie versorgt wird, wodurch insbesondere eine durch das Bremsaktuierungssignal der Bremssteuerungsvorrichtung vorgegebene Aktuierung, bevorzugt ein Anziehen und/oder ein Lösen, der ersten Bremsvorrichtung, insbesondere eine Bremsung des Fahrzeugs, erwirkt wird, insbesondere auch, wenn die Energieversorgung durch andere Fahrzeugteile, insbesondere durch ein Zugfahrzeug, ausfällt und/oder unterbrochen ist.

Gegebenenfalls kann vorgesehen sein, dass das Verhalten der Stromverbraucher, der Stromerzeugungsvorrichtung, der Stromspeicher und/oder der Benutzer aufeinander abgestimmt werden, sodass insbesondere bestimmte in der untenstehenden "Maßnahmenliste" genannte Zustände abgedeckt werden können.

Insbesondere kann die Nichtlinearität der Bremsbetätigung sowie der Energiespeicher wie insbesondere Federn, Batterien, Akkus und/oder die Gewinnung elektrischer Energie durch entsprechende Auslegung gemäß dem Stand der Technik bekannter Physik aneinander angepasst werden.

Gegebenenfalls kann vorgesehen sein, dass ein "einfehler-sicheres" Stromnetz gebildet wird.

Insbesondere kann durch das "einfehler-sichere" Stromnetz bei einem Ausfall einer der vorhandenen Stromversorgungen noch Strom für die Erzeugung einer Bremswirkung der Bremsvorrichtung, von insbesondere mindestens einem Viertel der Erdbeschleunigung, insbesondere dem sogenannten g/4, an das Fahrzeug, wie insbesondere den Aktuator, die Elektronik und/oder die Sensoren des Fahrzeugs, abgegeben werden.

Insbesondere kann "einfehler-sicher" in Bezug auf den betrachtenden Fehler verstanden werden.

Gegebenenfalls kann vorgesehen sein, dass das Fahrzeug mindestens einen Antriebsmotor, insbesondere einen Elektromotor, umfasst.

Gegebenenfalls kann vorgesehen sein, dass der mindestens eine Antriebsmotor von der Bremssteuerungsvorrichtung geregelt und gesteuert wird.

Gegebenenfalls kann vorgesehen sein, dass von der Bremssteuerungsvorrichtung der Antriebsmotor unter Berücksichtigung des Bremsaktuierungssignals gesteuert und/oder geregelt wird.

Gegebenenfalls kann vorgesehen sein, dass von der Bremssteuerungsvorrichtung das Bremsaktuierungssignal an die Fahrbedingungen, wie insbesondere eine Steigung der Straße, eine Beladung des Fahrzeugs, eine Geschwindigkeit des Fahrzeugs und/oder den Energieverbrauch des Bremssystems, angepasst wird.

Gegebenenfalls ist vorgesehen, dass von der Bremssteuerungsvorrichtung das Bremsaktuierungssignal derart angepasst wird, dass eine Bremswirkung, insbesondere ausschließlich, durch regeneratives Bremsen mit der Antriebsvorrichtung erzeugt wird, sodass insbesondere die Bremsenergie gespeichert und/oder eine Umwandlung von Energie in Wärme, insbesondere durch die Bremsvorrichtung, vermieden und/oder verhindert wird.

Gegebenenfalls ist vorgesehen, dass von der Bremssteuerungsvorrichtung das Bremsaktuierungssignal derart angepasst wird, dass Zustände der Bremsvorrichtung vermieden und/oder verhindert werden, bei denen gleichzeitig elektrische Antriebsenergie zugeführt und Reibungswärme durch Bremsung erzeugt wird.

Gegebenenfalls kann vorgesehen sein, dass das Sensorsignal digital von dem mindestens einen Sensor an die Bremssteuerungsvorrichtung übermittelt wird.

Gegebenenfalls kann vorgesehen sein, dass das Bremsaktuierungssignal digital von der Bremssteuerungsvorrichtung an die Bremsvorrichtung übermittelt wird.

Gegebenenfalls kann vorgesehen sein, dass die Signale der Sensoren, insbesondere alle Signale aller Sensoren, digital an die Bremssteuerungsvorrichtung übermittelt werden.

Gegebenenfalls kann vorgesehen sein, dass von der Bremssteuerungsvorrichtung, insbesondere beim Einschalten der Bremssteuerungsvorrichtung, ein Testsignal an die Bremsvorrichtung und/oder den mindestens einen Sensor, insbesondere an alle mit der Bremssteuerungsvorrichtung verbundenen Sensoren, zur Überprüfung der Funktionsfähigkeit der Bremsvorrichtung und/oder des mindestens einen Sensors, insbesondere aller mit der Bremssteuerungsvorrichtung verbundenen Sensoren, übermittelt wird, wodurch deren Funktionsfähigkeit festgestellt wird.

Gegebenenfalls kann vorgesehen sein, dass ein analoges Signal von der Bremssteuerungsvorrichtung in ein digitales Signal umgewandelt wird.

Gegebenenfalls kann vorgesehen sein, dass ein Signal, dass bereits zur Übertragung von analogen Signalen genutzt wird, insbesondere ein pulsweitenmoduliertes Signal, von der Bremssteuerungsvorrichtung so verändert wird, dass es, zusätzlich oder ausschließlich, zur digitalen Kommunikation genutzt wird.

Gegebenenfalls kann beim Verfahren ein, insbesondere in derartigen Systemen bereits genutztes, Signal, bevorzugt eine Pulsweitenmodulation, das gegebenenfalls auch grundsätzlich analoge Werte darstellen kann, bei Erkennung einer digitalen Kommunikationsmöglichkeit in eine digitale Kommunikation wechseln.

Bevorzugt kann beim Verfahren mit der bereits vom System genutzten Methode gestartet und dann mindestens ein digitaler Übertragungsversuch gestartet und bei Erfolg digital, gegebenenfalls auch bidirektional, gegebenenfalls auch an mehrere Teilnehmer adressierbar, weiterkommuniziert werden.

Gegebenenfalls kann beim Verfahren wieder auf analoge Signalübertragung umgestellt und/oder zurückgefallen werden.

Gegebenenfalls kann beim Verfahren ein in derartigen Systemen bereits genutztes Signal, bevorzugt eine Pulsweitenmodulation, das gegebenenfalls auch grundsätzlich analoge Werte darstellen kann, so genutzt werden, dass es die bereits genutzten Möglichkeiten erfüllt, aber auch digitale Information übertragen kann, also insbesondere bei einem bereits als Information genutzten Mittelwert einer Pulsweitenmodulation der Mittelwert im Wesentlichen aufrecht erhalten wird, aber in gegebenenfalls anderen Verhalten der Pulsweitenmodulation, bevorzugt im Zeit- oder Amplitudenverhalten, eine zusätzliche, gegebenenfalls auch bidirektionale, gegebenenfalls auch an mehrere Teilnehmer adressierbare digitale Kommunikation untergebracht wird.

Gegebenenfalls können bei dem Verfahren beide Möglichkeiten im Wesentlichen gleichzeitig laufen, aber auch eine Auswahl- und/oder Umschaltmöglichkeit vorhanden sein.

Gegebenenfalls kann vorgesehen sein, dass die erste Bremsvorrichtung und/oder zweite Bremsvorrichtung als Trommelbremse, insbesondere als elektromechanische Trommelbremse, ausgebildet ist.

Gegebenenfalls kann vorgesehen sein, dass die erste Bremsvorrichtung, die zweite Bremsvorrichtung, das Radlager des Rades, ein in der Trommelbremse integrierter Antriebsmotor und/oder ein Dynamo, von einem Achszapfen des Rades abziehbar ist, wobei beim Abziehen gegebenenfalls auch die elektrischen Kontakte lösbar sind.

Gegebenenfalls kann vorgesehen sein, dass die erste Bremsvorrichtung und/oder zweite Bremsvorrichtung eine, insbesondere achszentrische, Aktuierungsvorrichtung und mindestens eine, insbesondere nichtlineare, Betätigungsnocke umfasst.

Gegebenenfalls kann vorgesehen sein, dass das mindestens eine Rad, die erste Bremsvorrichtung, die zweite Bremsvorrichtung, die Bremserkennungsvorrichtung, die weitere Bremserkennungsvorrichtung und/oder die Bremssteuerungsvorrichtung am Fahrzeug, insbesondere am Anhänger, angeordnet ist.

Gegebenenfalls kann vorgesehen sein, dass die Bremserkennungsvorrichtung und/oder die weitere Bremserkennungsvorrichtung als Gyroskop ausgebildet ist und/oder die Bremssteuerungsvorrichtung, am Fahrzeug, insbesondere am Anhänger, angeordnet ist.

Gegebenenfalls kann vorgesehen sein, dass an dem Fahrzeug mindestens eine ausschließlich mechanisch betätigbare Bremsvorrichtung zur Erzielung einer vorab definierten Mindestbremswirkung vorgesehen ist.

Im Rahmen der vorliegenden Erfindung kann unter Fahrzeug ein Kraftfahrzeug, ein mehrspuriges Zugfahrzeug, einspurige Zugfahrzeuge, insbesondere ein Fahrrad und/oder ein E-Bike, und/oder ein Micromobility-Fahrzeug verstanden werden.

Im Rahmen der vorliegenden Erfindung kann unter Anhänger ein Anhänger für mehrspurige Zugfahrzeuge, insbesondere ein Kraftfahrzeuganhänger, ein Anhänger für einspurige Zugfahrzeuge, insbesondere Fahrräder und/oder E-Bikes, und/oder ein Anhänger für ein Micromobility-Fahrzeug verstanden werde.

Insbesondere kann die Erfindung ein Verfahren zur Ermittlung einer Sollbremswirkung eines Fahrzeugs, insbesondere eines Anhängers, aus einer, insbesondere bestimmten, Verzögerung betrifft.

Das Verfahren kann einen oder alle folgenden Schritte umfassen:
- Festlegung des Bremswirkungsbereichs, des Verfahrens,
   ∘ wobei der Bremswirkungsbereich für einen Anhänger für mehrspurige Zugfahrzeuge, insbesondere einen Kraftfahrzeuganhänger, ca. die 0,2-fache Erdbeschleunigung, insbesondere sogenannte 0,2g, bis einschließlich die 0,9-fache Erdbeschleunigung, insbesondere sogenannte 0,9g, beträgt,
   ∘ oder wobei der Bremswirkungsbereich für Anhänger einspuriger Zugfahrzeuge, insbesondere Fahrräder und/oder E-Bike, ca. die 0.1-fache Erdbeschleunigung, insbesondere sogenannte 0,1g, bis einschließlich, 0,6-fache Erdbeschleunigung, insbesondere sogenannte 0,6g, beträgt,
- Festlegung einer tolerierbaren Abweichung vom Bremswunsch: da dieses Verfahren zu dem vom Fahrer oder einem Automaten eingeleiteten Bremswunsch über die Ermittlung der dadurch verursachten Verzögerung eine zusätzliche Bremswirkung entfaltet, wird festgelegt, um wieviel höher oder auch niedriger die insgesamt entstehende Bremswirkung ausfällt als vom Fahrer oder Automaten geplant, indem z.B. festgestellt wird, ob ein Fahrer oder Automat eine Bremsaufgabe unter Einbeziehung dieses Verfahrens zufriedenstellend lösen kann, also z.B. an einer Ampel anhalten kann und z.B. bewertet wird, ob die Aufgabenlösung zufriedenstellend gelöst werden kann oder nicht, oder zahlenmäßige Bewertungen erfolgen, also z.B. ob zwischen einem derart gebremsten unbeladenen Anhänger, einem derart gebremsten voll beladenen Anhänger bzw. z.B. dem anhängerlos gebremsten Zugfahrzeug ein Unterschied in z.B. der durchschnittlichen Verzögerung z.B. unter ± 0,2 g liegt.
- Festlegung der aus der ermittelten Verzögerung abgeleiteten zusätzlichen Bremswirkung, also insbesondere einer die zusätzliche Bremswirkung bestimmenden Zahl, z.B. eines Faktors, der z.B. angibt, wie viel zusätzliche Bremswirkung aus welcher ermittelten Verzögerung angewendet wird bzw. wie sich die Anwendung verhält, insbesondere bei unterschiedlich starken Bremsungen und/oder unterschiedlichen Massen oder Radlasten und/oder bei bestimmten Bremsbetätigungen auftretende Radschlupfwerte, insbesondere solche, die auf Blockieren hinweisen.
- Kontrolle dieser abgeleiteten zusätzlichen Bremswirkung auf ein eskalierendes Verhalten, also insbesondere darauf, ob die zusätzliche Bremswirkung unter zu untersuchenden Bedingungen so stark wird, dass die wiederum stärkere Verzögerung zu einer derartigen weiteren Zunahme der Bremswirkung führt, dass das Verfahren nicht mehr dem Wunsch des Fahrers oder Automaten folgen kann und/oder erst nach Stillstand wieder ein ungebremster oder weniger gebremster Zustand hergestellt werden kann, indem abzudeckende Bereiche mit den bekannten physikalischen Formeln untersucht werden, also ob z.B. ein besonders schwerer aber stark verzögerbarer Anhänger in Zusammenhang mit einem besonders leichtem Zugfahrzeug kommen kann und gegebenenfalls Wahl der abgeleiteten zusätzlichen Bremswirkung, so dass dieser Zustand nicht eintritt und/oder Einbeziehung solcher Größen, die diesen Zustand vermeiden, also z.B. Einbeziehung von Masse(n) bzw. Radlast(en), Achslast(en).
- Angabe von zulässigen Betriebsgrenzen, insbesondere von erlaubten Massen von Zugfahrzeug und Anhänger bzw. deren erlaubten Verhältnissen]

Die Erfindung betrifft insbesondere eine Bremssteuerungsvorrichtung, wobei die Bremssteuerungsvorrichtung zur Ausführung des Verfahrens zur Bremsung eines Fahrzeugs eingerichtet und/oder ausgebildet ist.

Die Erfindung betrifft insbesondere ein Fahrzeug, insbesondere ein Zugfahrzeug und/oder einen Anhänger.

Gegebenenfalls kann das Fahrzeug mindestens ein Rad, eine erste Bremsvorrichtung zur Bremsung des mindestens einen Rads, insbesondere eine nichtlineare elektromechanische Reibungsbremse, eine Bremserkennungsvorrichtung zur Detektion einer Bremsung des Fahrzeugs, insbesondere zur Detektion eines Bremswunsches und/oder zur Detektion einer Verzögerung des Fahrzeugs, und/oder eine, insbesondere elektronische, Bremssteuerungsvorrichtung zur Steuerung der ersten Bremsvorrichtung umfassen.

Gegebenenfalls kann die Bremserkennungsvorrichtung aus einer Geschwindigkeitsmessvorrichtung zur Berechnung einer Verzögerung aus der sich ändernden Momentangeschwindigkeit des Fahrzeugs, bevorzugt einen Raddrehzahlsensor zur Messung der Drehzahl des mindestens einen Rades, gebildet sein.

Gegebenenfalls kann die Bremserkennungsvorrichtung aus einem Verzögerungssensor zur Messung einer Verzögerung, insbesondere zur Messung einer Verzögerungswirkung in mindestens eine Richtung, bevorzugt in Fahrtrichtung, bevorzugt aus einem mehrachsigen, mikro-elektro-mechanischen System, gebildet sein.

Gegebenenfalls kann die Bremserkennungsvorrichtung aus einer Betätigungsmessvorrichtung zur Messung einer Betätigung einer Betätigungsvorrichtung einer Bremsvorrichtung zur Bremsung des Fahrzeugs, insbesondere der ersten Bremsvorrichtung, bevorzugt eines Bremshebels oder eines Bremspedals des Fahrzeugs, gebildet sein.

Gegebenenfalls kann vorgesehen sein, dass die Bremssteuerungsvorrichtung des Fahrzeugs zur Ausführung des Verfahrens zur Bremsung eines Fahrzeugs eingerichtet und/oder ausgebildet ist.

Gegebenenfalls kann vorgesehen sein, dass das Fahrzeug zur Ausführung des erfindungsgemäßen Verfahrens eingerichtet und/oder ausgebildet ist.

Gegebenenfalls kann vorgesehen sein, dass das Fahrzeug die in der Beschreibung und/oder in den Patentansprüchen genannten Merkmale einzeln oder kombiniert aufweist.

Gegebenenfalls kann vorgesehen sein, dass die Bremserkennungsvorrichtung die detektierte Bremsung, insbesondere den detektierten Bremswunsch, in ein Bremserkennung-Signal umsetzt und an die Bremssteuerungsvorrichtung, insbesondere über eine Verbindungsvorrichtung, bevorzugt kabelgebunden oder drahtlos, übermittelt.

Gegebenenfalls kann vorgesehen sein, dass die Bremssteuerungsvorrichtung auf Basis des Bremserkennung-Signals ein Bremsaktuierungssignal erzeugt, insbesondere indem von der Bremssteuerungsvorrichtung auf Basis des Bremserkennung-Signals mittels Interpolationstabellen, mittels Umrechnungsfunktionen, mittels eines Simulationsmodells und/oder mittels Simulationsmodellen ein Bremsaktuierungssignal zur Aktuierung der mindestens einen ersten Bremsvorrichtung bestimmbar oder berechenbar ist.

Gegebenenfalls kann vorgesehen sein, dass die Bremssteuerungsvorrichtung zur Steuerung der mindestens einen ersten Bremsvorrichtung das Bremsaktuierungssignal, insbesondere über eine Verbindungsvorrichtung, bevorzugt kabelgebunden oder drahtlos, an die mindestens eine Bremsvorrichtung übermittelt, wodurch gegebenenfalls eine Steuerung, insbesondere eine Aktuierung, bevorzugt ein Anziehen und/oder ein Lösen, der mindestens einen ersten Bremsvorrichtung erwirkt und dadurch insbesondere eine Bremsung des mindestens einen Rads, insbesondere eine Bremsung des Fahrzeugs, erzielbar oder erwirkbar ist.

Weitere erfindungsgemäße Merkmale ergeben sich gegebenenfalls aus den Ansprüchen, der Beschreibung der Ausführungsbeispiele und den Figuren.

Die Erfindung wird nun am Beispiel exemplarischer, nicht ausschließlicher und/oder nicht einschränkender Ausführungsbeispiele weiter erläutert.

Es sei festgehalten, dass in den unterschiedlichen Figuren und/oder Ausführungsformen gegebenenfalls gleiche Teile mit gleichen Bezugszeichen und/oder gleichen Bezeichnungen versehen werden. Die in der gesamten Beschreibung enthaltenen Offenbarungen können sinngemäß auf gleiche Teile mit gleichen Bezugszeichen und/oder gleichen Bezeichnungen übertragen werden. Auch können die in der Beschreibung gewählten Lageangaben, wie z.B. oben, unten, von rechts, von links, seitlich und dergleichen auf die unmittelbar beschriebene und dargestellte Figur bezogen werden.
Fig. 1 zeigt schematisch Bremsverzögerungen über die Zeit,
Fig. 2 zeigt schematisch Geschwindigkeitsabnahmen über die Zeit,
Fig.3 zeigt ein sogenanntes rohes, aus der Realität mit allen Messwerten aufgenommenes, Sensorsignal mit Beschleunigungen über die Zeit, um mit den vielen schwarzen Messpunkten realitätserhaltend zu zeigen, dass solche Signale sehr starken Anteil an Verfälschungen haben,
Fig.4 zeigt schematisch die mit einem Digitalfilter höherer Ordnung und Polzahl geglätteten Signale,
Fig.5 zeigt schematisch eine schematische grafische Darstellung einer vorteilhaften Ausführung einer Bremse (hier Duplexbremse) mit Betätigungsnocken,
Fig.6 zeigt schematisch eine besonders vorteilhafte Nachstellung mit Verschleißnachstellhebel,
Fig.7 zeigt schematisch eine vorteilhafte Ausführung von Verschleißnachstellern für Trommelbremse (links) bzw. Scheibenbremse (rechts),
Fig.8 zeigt schematisch einen Anordnungsvorschlag, der neben der Betätigung der hier vorgestellten Bremsen auch die Betätigung anderer Bremsen übernehmen kann,
Fig.9 zeigt schematisch eine mögliche Ausführung eines Bremshebels oder eines Bremspedals für z.B. Hand- oder Fußbetätigung,
Fig.10 zeigt schematisch eine mögliche Ausführungsform einer Betätigungsmessung mit Kraftsensor,
Fig.11 zeigt schematisch eine Umsetzungsmöglichkeit von Komponenten an einem Fahrzeug,
Fig.12 zeigt schematisch eine mögliche Steuerung bzw. Regelung,
Fig.13 zeigt schematisch einen leicht nachrüstbaren Sensor zur Betätigungsmessung,
Fig.14 zeigt schematisch Spannungsabfälle und unvermeidbare Widerstände,
Fig.15 zeigt schematisch wie sich Analogspannungen (links) und Impulsdauersteuerung verhalten,
Fig.16 zeigt schematisch eine vorteilhafte Ausführung einer Trommelbremse mit Komponenten,
Fig.17 zeigt schematisch mögliche Betätigungsgeschwindigkeiten der Bremse(n) als Verzögerung über der Zeit.,
Fig.18 zeigt schematisch wie die Signale zur Steuerung bzw. Regelung der Bremse(n) gemäß einer Ausführungsform des Verfahrens zusammenwirken.

Wenn nicht anders angegeben, so entsprechen die Bezugszeichen folgenden Komponenten:
Bremse 01, Bremsscheibe 011, Bremstrommel 012, Bremsbetätigung 017, Betätigungsübertragung 018, Ausgleichsteil 019
Feder für Verschleißnachstellung 021
Betätigungsnocke 032, Rolle dazu 033, Rückstellung 039
Betätigungsfeder 042, Parkbremsantrieb 047
Betätigungsweiterleitung 058
Bremsbelag 063, Bremsschuh 067
Verschleißnachstellnocke 083, Verschleißnachstellhebel 084, wegdefinierende Bewegung 085, Weiterdrehvorrichtung 086, Anpressauflage 087
Steuerung 10, Eingangsdaten 101, Fahrzustände 103, Ausgaben 102, elektrische Bremssteuerungen 105, andere Steuerungen 106, Fahrzeugeigenschaften 106, nichtelektrische Betätigung 107
Bremsverzögerung 17, Automat 1701, Fahrer 1702, schnellstmöglicher Verzögerungsaufbau des Fahrzeugs 1703, Verzögerungsmessung 1704, günstiger Verzögerungsaufbau des Anhängers 1705,
Überschneller Verzögerungsaubau des Anhängers 1706, Totzeit im Verzögerungsaufbau des Anhängers 1707
Geschwindigkeitsabnahmen 18, schwache Bremsung unverzögerter Wunsch 1801, schwache Bremsung 1802, etwas zu stark 1803, eskalierende Bremsung 1804, starke Bremsung unverzögerter Wunsch 1805, starke Bremsung 1806
Betätigungsgeschwindigkeit der EMB 1901, langsameres Zeitverhalten 1902, Geschwindigkeit beim Lösen 1903, Verhalten eines einfachen Tiefpassfilters 1904, schnelle Filterreaktion bei guter Glättung 1905, Sensorsignale 1906
Bremspedal 20, Betätigungskraft 2001, Hebel 2002, Lagerstelle 2003, Begrenzungen 2004, Hebelspielfeder 2005, Andrücker 2006 (für Aufnehmer 2007), Sensor für Aufnehmer 2008, Aufnehmeranschlag 2009, erste Betätigungskraftfederwirkung 2010, weitere Betätigungskraftfederwirkung 2011, elastisches Teil 2012, Hebelkraftmessung 2013, Reaktionskraftmessung 2014, Weiterleitungskraftmessung 2015, Seilanschluss 2016, Zwischenhebel 2017, Bolzen mit Durchführungsspiel 2018, festes Teil 2019
Kraftverteiler 2101, Kraftsensor 2102, Feder 2103, Betätigungsseil 2104, Bremskabel 2105, inneres Zugseil 2106
Steuerbares Moment 2201, Sensor 2202, Fahrereingabe 2203, Ausgabe 2204 Widerstand in Versorgungsspannung 2301, Widerstand in Masseverbindung 2302, innerer EMB gnd 2303, innere Steuergröße (z.B. Spannung) 2304, Steuereingang 2305, innere Versorgungsspannung 2306, äußere Steuergröße (z.B. Spannung) 2307, äußere Versorgungsspannung 2308
Lösevorrichtung 2501, elektrische Maschine 2502, Aktuator (z.B. Elektromotor mit oder ohne Getriebe) 2503, Achse 2504, Ankerbaugruppe 2505
Bremserkennungsvorrichtung 2601, Verzögerungssensor 2602, Verzögerungsberechnung 2603, Geschwindigkeitsmessung 2604, Betätigungsmessvorrichtung 2605, Betätigungsvorrichtung 2606, Bremserkennung-Signal 2607, Bremssteuerungsvorrichtung 2608, Verzögerungswunsch 2609, Bremssignal 2610, Bremsaktuierungssignal 2611, Bremsvorrichtung 2612
Bei Bremsen von Kraftfahrzeugen mit Straßenzulassung sind die Sicherheitsauflagen in der Regel streng und klar geregelt. Es gibt aber auch Fahrzeuge und Fahrzeugkombinationen, wo dies nicht bzw. nicht überall im gleichen Ausmaß der Fall ist, wie z.B. im Bereich von manchen Anhängern oder bei Fahrrädern, E-Bikes, elektrischen Kleinfahrzeuge, Fahrzeugen die nur auf privaten Flächen genutzt werden ("Micromobility") und andere. Viele dieser Bereiche boomen und durch technische Entwicklungen, z.B. elektrische Antriebe, verschieben sich Geschwindigkeits- und Belastungsgrenzen häufig deutlich. Es erscheint daher sinnvoll, auch in solchen Fällen Konzepte anzubieten, die mehr Sicherheit bieten, als gesetzlich mindestens vorgeschrieben ist.

Diese Konzepte basieren auf einer grundsätzlichen Struktur von Vorrichtungen und Verfahren, deren spezielle Kombinationen neue Möglichkeiten bieten. Insbesondere können diese mit dem erfindungsgemäßen Verfahren und/oder mit der erfindungsgemäßen Vorrichtung verwirklicht werden.

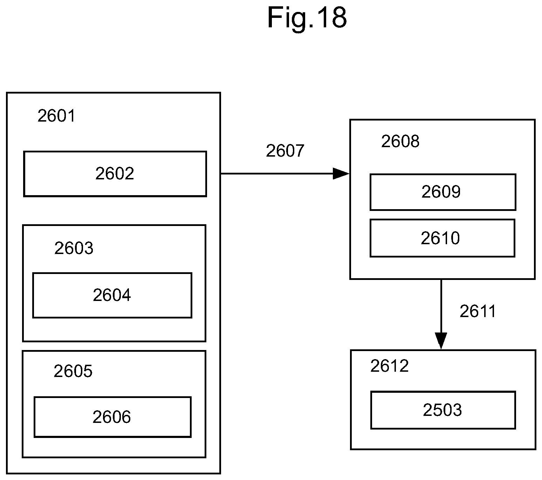

Wesentliche Komponenten und ihr Zusammenwirken sind in Fig. 18 dargestellt. Bezeichnungen und Bedeutungen der Komponenten lt. Fig.18 sind nachstehenden beschrieben.

Gemäß der in Figur 18 dargestellten Ausführungsform umfasst die Bremserkennungsvorrichtung 2601 einen Verzögerungssensor 2602, eine Geschwindigkeitsmessvorrichtung und eine Betätigungsmessvorrichtung 2605.

Die Geschwindigkeitsmessung 2604 kann in allen Ausführungsformen gegebenenfalls aus der Geschwindigkeitsmessvorrichtung gebildet sein.

Die Betätigungsmessvorrichtung 2605 misst die Betätigung einer Betätigungsvorrichtung 2606 der Bremsvorrichtung 2612, bevorzugt eines Bremshebels oder eines Bremspedals.

Gemäß dieser Ausführungsform werden auf Basis der aufgenommenen Signale des Verzögerungssensors 2602 gegebenenfalls Verzögerungsberechnung 2603 durchgeführt.

Die von der Bremserkennungsvorrichtung 2601 detektierte Bremsung, insbesondere des Bremswunsch und/oder Verzögerungswunsches 2609, wird in ein Bremserkennung-Signal 2607 umgesetzt und an die Bremssteuerungsvorrichtung 2608 übermittelt.

Gemäß dieser Ausführungsform kann auch ein Fahrzeugsignal, insbesondere das Bremssignal 2610, von der Fahrzeugsteuerungsvorrichtung an die Bremssteuerungsvorrichtung 2601 übermittelt werden.

Von der Bremssteuerungsvorrichtung 2608 wird auf Basis des Bremserkennung-Signals 2607 und gegebenenfalls des Bremssignals 2610 ein Bremsaktuierungssignal 2611 erzeugt, indem auf Basis des Bremserkennung-Signals 2607 mittels Interpolationstabellen, mittels Umrechnungsfunktionen und/oder mittels eines Simulationsmodells ein Bremsaktuierungssignal 2611 zur Aktuierung der Bremsvorrichtung 2612 bestimmt wird.

Anschließend wird von der Bremssteuerungsvorrichtung 2608 zur Steuerung der Bremsvorrichtung 2612 das bestimmte Bremsaktuierungssignal 2611 an die Bremsvorrichtung 2612 übermittelt, wodurch eine Steuerung, insbesondere eine Aktuierung, bevorzugt ein Anziehen und/oder ein Lösen, der Bremsvorrichtung 2611 erwirkt und dadurch insbesondere eine Bremsung des mindestens einen Rades, insbesondere eine Bremsung des Fahrzeugs, erzielt wird.

Im Rahmen der vorliegenden Erfindung kann unter der Bremserkennungsvorrichtung 2601 eine Vorrichtung zum indirekten Erkennen einer Bremsung aus Betätigungsmessung, Verzögerungsmessung oder Verzögerungsberechnung verstanden werden.

Im Rahmen der vorliegenden Erfindung kann unter der Betätigungsvorrichtung 2606 eine Vorrichtung zum Betätigen, bevorzugt eine Betätigungsvorrichtung, einer Bremsvorrichtung durch den Fahrer, insbesondere ein Bremshebel und/oder ein Bremspedal, verstanden werden.

Im Rahmen der vorliegenden Erfindung kann unter der Betätigungsmessvorrichtung 2605 ein oder mehrere Sensoren in oder an einer Betätigungsvorrichtung, insbesondere für Kraft und/oder Weg, zur Messung einer Betätigung einer Betätigungsvorrichtung, insbesondere des Betätigungsausmaßes, verstanden werden, insbesondere in beliebigen Größen bzw. Einheiten, z.B. 0 - 100%.

Im Rahmen der vorliegenden Erfindung kann unter dem Verzögerungssensor 2602 ein Sensor verstanden werden, welcher eine Verzögerung misst und/oder Aufschluss über Änderungen der Momentangeschwindigkeit eines Fahrzeugs gibt, insbesondere ein mikro-elektro-mechanisches System und/oder der Auflaufkraft.

Im Rahmen der vorliegenden Erfindung kann unter der Auflaufkraft, die positive oder negative Kraft zwischen Fahrzeugteilen, insbesondere dem Zugfahrzeug und dem Anhänger, verstanden werden, welche insbesondere aus Verzögerungskräften und/oder Beschleunigungskräften auf Grund der Massen, z.B. zwischen einem Zugfahrzeug und einem Anhänger oder in einer Federgabel, bestimmt wird.

Im Rahmen der vorliegenden Erfindung kann unter der Verzögerungsberechnung 2603 eine Berechnung von Beschleunigung und/oder Verzögerung auf Grund der Veränderung der Momentangeschwindigkeit verstanden werden.

Im Rahmen der vorliegenden Erfindung kann unter der Geschwindigkeitsmessung 2604 eine Messung der Momentangeschwindigkeit eines Fahrzeugs gegenüber seiner Umgebung, insbesondere der Fahrbahnoberfläche, bevorzugt als sogenannter "Ground Speed" bezeichnet, oder der Umgebungsluft, zu einem bestimmten Zeitpunkt verstanden werden. Insbesondere kann die Geschwindigkeitsmessung 2604 mittels beliebiger Technologie, insbesondere mittel der Drehzahl, eines Lasers, eines GPS, eines Staurohrs und/oder einer Temperatur erfolgen.

Im Rahmen der vorliegenden Erfindung kann unter dem Bremserkennung-Signal 2607 das Signal verstanden werden, welches von der Bremserkennungsvorrichtung an die Bremssteuerungsvorrichtung übermittelt wird.

Im Rahmen der vorliegenden Erfindung kann unter der Bremssteuerungsvorrichtung 2608 ein, insbesondere gesamtes oder modulares, Steuergerät verstanden werden, welches für eine oder mehrere Bremsen, zum Aktuieren von Bremsvorrichtungen auf Basis von Bremserkennung-Signalen ausgebildet ist.

Im Rahmen der vorliegenden Erfindung kann unter der Bremsvorrichtung 2612 eine Vorrichtung zum Erzielen einer Verzögerung, wie insbesondere eine Reibungsbremse und/oder ein Generator verstanden werden.

Im Rahmen der vorliegenden Erfindung kann unter der Aktuierung die gezielte Veränderung eines Zustandes einer Bremsvorrichtung zum Erzielen einer Bremswirkung, insbesondere die eines Motors, einer Spannung eines Elektromagneten und/oder der Belastung eines Dynamos verstanden werden.

Im Rahmen der vorliegenden Erfindung kann unter dem Aktuator 2503 ein Teil/e einer Bremsvorrichtung verstanden werden, welcher eine gezielte Änderung der erzielten Bremswirkung bewirken, insbesondere ein Elektromotor.

Im Rahmen der vorliegenden Erfindung kann unter dem Verzögerungswunsch 2609, Fahrerverzögerungswunsch bzw. Bremswunsch ein aus den Messungen der Bremserkennungsvorrichtung abgeleiteter Erwartungswert für die insgesamt zu erzielende Verzögerung eines Fahrzeugs verstanden werden.

Im Rahmen der vorliegenden Erfindung kann unter dem Bremssignal 2610 die Repräsentation einer Bremswirkung verstanden werden, welches für eine Bremse an einem Fahrzeug, insbesondere des Gewichtes, der Radanzahl und/oder des Bremsendurchmessers des Fahrzeugs zum Erzielen einer bestimmten Verzögerung erforderlich ist, insbesondere das Bremsmoment, bevorzugt in Nm.

Im Rahmen der vorliegenden Erfindung kann unter dem Bremsaktuierungssignal 2611 ein Signal zur Vorgabe des Ausmaßes einer Aktuierung verstanden werden, das sich in Einheit, Wert und/oder Dynamik vom Bremssignal unterscheiden kann.

### Micromobility

In Anlehnung an Wikipedia könnte man "Micromobility" auf kleine, leichte Fahrzeuge bis typisch 25 km/h beziehen (z.B. Fahrräder, eBikes, pedelec), mit z.B. bis 500 kg, gegebenenfalls ohne Verbrennungsmotor und z.B. unter 45 km/h beziehen. Im gegenständlichen werden auch noch mehrspurige Fahrzeuge (z.B. Trikes) sowie Anhänger zu Micromobility (z.B. für Fahrrad bzw. Pedelec) verstanden und obige Limits auf Sinnhaftigkeit erweitert. So spräche z.B. bei gut gebremsten Fahrzeugen nichts dagegen, dass ein z.B. 120 kg eBike z.B. einen Lastenänhänger mit z.B. 500 kg bei entsprechender Geschwindigkeit ziehen darf und z.B. ein Moped-ähnliches Fahrzeug mit entsprechender Fahrsicherheit auch z.B. über 45 km/h fahren darf oder z.B. ein Sight-Seeing Fahrzeug mit z.B. 2-3 Passagieren und zusätzlichem Fahrer mit angepasster Geschwindigkeit durch eine z.B. Fußgängerzone fährt. Bei mehrspurigen Fahrzeugen können die genannten Grenzen im Güter- oder Personentransport noch deutlich überschritten werden. Natürlich kann die Möglichkeit bestehen, für so ein "Micromobility-Fahrzeug" auch z.B. eine PKW- bzw. LKW-Zulassung zu bekommen, auf solche und ähnliche Fälle wird hier im "Mehrnormenfahrzeug" noch eingegangen. Angesichts dessen können die Bremsen z.B. durchaus Bremsmomente im groben PKW-Hinterradbereich benötigen (z.B. durch große Laufraddurchmesser). Die Bremsleistung liegt aber durch Geschwindigkeit und Gewicht deutlich unter (üblicher Weise unter der Hälfte) eines üblichen PKWs.

Leider hat es sich aber herausgestellt, dass die üblichen Kombinationsmöglichkeiten (Fahrrad alleine, ABS, e-Bike, mit oder ohne gebremsten oder ungebremst erlaubtem Anhänger, Zulassungsauflagen, Geschwindigkeits- und Gewichtsbereiche) auch zu Kombinationsmöglichkeiten der Lösungen führen und daher auch zu Kombinationen in den Patenformulierungen: So könnte z.B. ein elektrischer Handbremshebel zur Sicherheit auch eine mechanische Seilzugbetätigung erlauben, deren Seilzug aber z.B. nicht praktisch an den etwaigen Anhänger geleitet werden kann und daher am Anhänger z.B. eine eigenständige Ermittlung der Bremswirkung vorteilhaft macht, die aber wiederum z.B. durch Handbetätigung am elektrischen Bremshebel besonders dynamisch und gut steuerbar von einer elektrisch betätigten Anhängerbremse unterstützt werden kann.

Die folgenden Ausführungen sind in diesen Kombinationsmöglichkeiten ("Micromobility") günstige technische Lösungsvorschläge für das Sicherheitsziel, können aber natürlich auch für andere Gewichtsklassen verwendet werden. Sie müssen auch berücksichtigen, dass derartige Zugfahrzeuge üblicher Weise mit oder ohne Anhänger in wechselnder Kombination betrieben werden (z.B. welche Anhänger an welchem Zugfahrzeug), weil es z.B. unpraktisch erschiene, dass ein bestimmter gebremster Anhänger nur an einem definierten Zugfahrzeug bremst. Es muss für Praxistauglichkeit auch berücksichtigt sein, dass man aus Energiegründen auch regenerativ bremsen will bzw. gemischt mit Reibungsbremsung. Es ist auch klar, dass eine Verzögerungssteuerung auch mit anderem Vorzeichen als Antriebssteuerung wirken kann und z.B. bei erkannter Verzögerung die Bremsen steuert (z.B. regenerativ bzw. Reibung) und dieselbe Steuerung bei erkannter Beschleunigung auch z.B. das Treten elektromotorisch unterstützen kann. Je mehr diese an sich nicht mehr wirklich gut trennbaren Vorgänge gemeinsam betrachtet werden, desto wirksamer ist der praktische Nutzen. Für den Benutzer stellt sich nur die einzige Frage des angenehmen Fahrens. Wie gebremst bzw. wie der Antrieb unterstützt wird, ist aus Benutzersicht kaum aufschlüsselbar und daher muss der technische Lösungsweg die benötigten Komponenten umfassen.

### Einfehlersicherheit

Als "Einfehlersicher" wird allgemein verstanden, dass ein System durch einen (1 Stück) zu betrachtenden Fehler durch die Gestaltung des Systems (z.B. Redundanzen) in keine sicherheitsrelevante Fehlfunktion kommt (aber z.B. eingeschränkte Qualität oder Nutzbarkeit eintreten kann), wobei auch durch diesen Fehler möglicherweise ausgelöste Folgefehler diesem Einfehlerfall zugeordnet werden. Als zu "betrachtend" vorgesehene Fehler können z.B. als Definition, Norm, Liste etc. vorliegen oder auch "sinnvoll" (z.B. dass 1 explodierender Akku z.B. als Einfehlerfall gültig definiert wird, aber z.B. 1 Meteoriteneinschlag nicht als behandlungswert erwähnt wird). Da hier auch Fahrzeuge ohne Sicherheitsauflage behandelt werden (z.B. leichte Fahrradanhänger, bei denen keine Bremse vorgeschrieben ist), wird hier unter "Einfehlersicher" auch die Qualität verstanden, so dass z.B. ein Anhänger ohne vorgeschriebene Bremse mit einem Bremssignal aus dem Zugfahrzeug "besser" (z.B. stärker, genauer, schneller usw.) bremsen kann und ohne dieses Signal immer noch bremsen kann, also z.B. schwächer oder mit längerer Reaktionszeit. Ein derartiger Betrieb (z.B. ohne ein qualitäts- oder sicherheitsförderndes Signal) kann hier auch nicht verhindert werden, es kann also so eine Nutzung auch häufig bzw. vom Nutzer bewusst herbeigeführt werden (also z.B. der Anhänger bewusst an ein Fahrrad ohne Bremssignalgebung angehängt werden). Dabei können natürlich (wie es in anderen einfehler-sicheren Systemen auch sein könnte) weitere Redundanzen vorhanden sein, wie z.B. 2 EMBs, 2 Stromversorgungen, 2 Verzögerungssensoren etc., wobei man natürlich wiederum eine Einfehlersicherheit anwenden könnte, so wie z.B. ein Flugmotor eine Doppelzündung haben kann, auch wenn das Flugzeug 2 Motoren hat.

### Verbundfahrzeug

Unter einem Verbundfahrzeug wird hier verstanden, dass Teile eines beweglichen Gesamten bevorzugt relativ starr miteinander verbunden sind und sehr ähnliche Geschwindigkeitsvektoren haben bzw. solche, die zueinander in mathematischer Beziehung stehen, wie z.B. ein Zugfahrzeug und ein hinterer Wagen in einer Kurve. Dargestelltes dient als bevorzugt für z.B. Bremsung von Rädern an einem Fahrzeug, knickbaren Fahrzeug (z.B. Bus), Sattelzug, Straßen- oder Eisenbahnzug, aber grundsätzlich auch, wenn die Verbindung durch eine Steuerung hergestellt wird, wie z.B. Platooning von Straßenfahrzeugen (elektronisch gesteuerter Fahrzeugzug ohne mechanische Verbindung), Flugzeugschwarm, aber, da die mathematischen Zusammenhänge bekannt sind, grundsätzlich auch für z.B. mit Seilen verbundene Gegenstände wie Schiffe oder Segelflugschlepp. Verbundfahrzeug und Anhänger werden im folgenden Text als gleichwertig gesehen, auch Begriffe wie Fahrradanhänger (auch einrädrige bzw. einspurige), Sattelaufleger, Zug werden im Sinne von Verbundfahrzeug (als Oberbegriff) gesehen.

### Bremse

Hier wird vereinfacht von der Bremsung eines Rades gesprochen, womit aber die Steuerung (bzw. Regelung, was hier gleichwertig verwendet wird) aller in den Verbund eingebundenen Gegenstände durch Einführen von Kräften gleichwertig verstanden wird, weil in der allgemeinen Formulierung der Aufgabe ebenfalls umsetzbar. Ein Antrieb kann oft auch bremsen (z.B. Motorbremse, regeneratives Bremsen) und es kann verschiedene Bremsen bzw. Bremsarten (z.B. Reibungsbremsen, Retarder etc.) geben. Hier werden grundsätzlich alle verstanden, weil es grundsätzlich für die hier genannte Bremswirkung unerheblich ist, wie sie zustande kommt. Voraussetzung für gewisse hier gemachte Vorschläge ist nur eine entsprechende Genauigkeit der Wirkung (um die Vorschläge sinnvoll realisieren zu können). Antrieb und Bremsung unterscheiden sich in gewissem Sinn nur durch das Vorzeichen, also wird auch Antrieb hier darunter verstanden, falls nur Bremsung erwähnt ist. Auch Mischformen wie z.B. Antriebe(e) und Bremsung(en) fallen darunter, weil sie vorzeichenrichtig kombinierbar sind. Wenngleich das hier Genannte allgemein auf jede Form von Bremse und Antrieb bezogen ist, wird als besonders vorteilhaft empfohlen, dass, wenn mindestens eine Reibungsbremse verwendet wird, es mindestens eine sogenannte Elektro-Mechanische Bremse (EMB) ist, am besten eine sogenannte "nichtlineare", die auch noch besonders energiesparend ausgelegt sein kann bzw. soll und auch im Verlauf der Nichtlinearität so ausgelegt sein kann bzw. soll, dass sie die Art des Bremsens berücksichtigt, also z.B. bei längerem Bremsen weniger Strom verbraucht (z.B. auch nur so wenig Strom wie z.B. erzeugt werden kann, z.B. aus Dynamo(s)) bzw. bei kurzem Bremsen dann gegebenenfalls mehr Strom. Das kann z.B. durch den Verlauf der Nichtlinearität erreicht werden bzw. auch durch Federn, die bei der Bremsbetätigung mithelfen können.

### Bremswunsch

Als die qualitativ höchstwertige Lösung wird hier vorgeschlagen, dass man einen Brems- bzw. Verzögerungswunsch eines Fahrers oder selbsttätigen Fahrens (hier wird immer beides verstanden) möglichst direkt am Fahrer abgreift, wobei auch ein Antriebswunsch eines Fahrers möglichst direkt abgegriffen werden soll. Möglichst direkte Abgriffstellen wären z.B. Bremshebel bzw. Pedal und Gasgriff bzw. Pedal oder Tretvorgang (z.B. Drehung, Kettenbewegung, Moment, Kettenkraft, Stützkraft usw.), wobei hiermit als bester Wert die Kombination von Fahrerwünschen wäre, also z.B. die Bremswunschrepräsentierende Kombination aus z.B. beiden Bremshebeln bzw. einen Rücktritt (z.B. für Vorderrad, Hinterrad). Als gleichwertig sind auch Steuerungsbefehle eines entsprechenden Automaten anzusehen.

Für die Nachrüstung der Bremswunscherkennung(en) kann z.B. ein flacher Teil eingefügt im Bereich der Ruhelage bzw. Ruheanschlags eines Bremshebels dienen, der z.B. durch Widerstandsänderung (z.B. gegen Masse) die Ruhestellung von der Nicht-Ruhestellung unterscheidet (z.B. ein gegen Masse isoliert eingebrachtes Blech, das in der Ruhestellung vom Bremshebel eine Masseverbindung bekommt) oder es kann z.B. ein Potentiometer mit einen z.B. dünnen Drahtfühler zwischen Bremshebel und dessen Ruhelage die Hebelbewegung abnehmen, oder ein den Abstand zwischen metallischen Teilen aufnehmender Sensor eingefügt werden. Alle genannten und ähnlichen (worauf auch immer beruhenden aufnehmenden Teile) können z.B. aufgeklebt werden, durch Spannung (z.B. elastische Bänder, Klammern usw.) festgehalten werden. Bei einem Wegaufnehmer (z.B. Potentiometer) kann sich die Aufgabe stellen, dass einerseits ein Betätigungsweg gemessen wird, aber andererseits der Bereich ab beginnender Bremsung durch Handkraft (z.B. durch Seilzug, Hydraulik) je nach Bremseinstellung in verschiedenen Betätigungswegen liegen kann. Zur Lösung wird auch vorgeschlagen, dass zur Bremserkennung einerseits die Bremswirkung gemessen wird (z. Verzögerung, Raddrehzahlabfall usw.) und andererseits der dazu führende Hebelweg oder Wegbereich bzw. in welchem Hebelwegbereich noch keine Bremswirkung auftritt und ab welchem schon. Das kann auch mathematisch bzw. statistisch erfolgen, indem z.B. korreliert wird, mit welchem Weg welche Bremswirkung eintritt, indem z.B. der Beitrag der elektrischen Bremsung herausgerechnet wird und somit z.B. auch eine Anpassung auf unterschiedliche Lufstspalteinstellungen der nichtelektrischen Bremse möglich ist. Das kann auch bei zwei Bremshebeln erfolgen, z.B. indem auch das Verhalten des (jeweiligen) Fahrers korreliert oder ermittelt wird (z.B. mit welcher Verteilung die beiden Bremshebel betätigt werden). Unabhängig von diesen Genauigkeitssteigerungen kann die elektrische Bremse natürlich immer mit ausreichender Bremswirkung bzw. günstiger Bremswirkung mitwirken bzw. verzögerungsgesteuert mitwirken.

### Datenübertragung

Diese Ideallösung der möglichst direkten Fahrerwünsche kann z.B. beim unten dargestellten "All-Electric-Bike" gleich werksseitig hiermit empfohlen werden, indem die Bremshebel z.B. nur elektrische Bremssteuersignale abgeben und ein elektrischer Antriebsmotor ein Antriebssignal an die Verbundfahrzeugsteuerung ausgibt, wobei die Übertragung an z.B. einen Fahrradanhänger zum leichten Abkuppeln z.B. drahtlos, z.B. über Infrarot, Magnetfelder, Schall, Funk stattfinden kann.

Alternativ kann es aber auch als vorteilhaft empfohlen werden, dass Zugfahrzeugwerte wie Bremsbetätigungseingaben leitend (z.B. elektrisch auch. über z.B. Kontakt(e) an der Anhängerkupplung, Licht) an die Anhängersteuerung (auch Bremssteuerung) gehen und auch eine unterbrochene Verbindung Zugfahrzeug-Anhänger erkannt werden kann (kann natürlich auch anders bzw. zusätzlich erkannt werden, wie z.B. Seil mit Schalter) bzw. auch Folgerungen daraus abgeleitet bzw. durchgeführt werden wie z.B. Anhängerbremsung, Aktionen am Zugfahrzeug.

Bevorzugt wird hiermit empfohlen, dass nicht ein "Brems- oder Bremssteuersignal" übertragen wird, sondern gegebenenfalls ein Gesamtsignal, welches Teilwerte enthält wie Antriebssignal, Bremswunsch, Zusatzinformationen wie Bremslicht, Kurvenwunsch (z.B. Blinkerbetätigung), eventuell Zeitstempel, Ort, wobei diese Werte als Augenblickswerte und/oder Betätigungsgeschwindigkeit übertragen werden. Es wird hiermit empfohlen, dieses Gesamtsignal gepulst zu übertragen, um einerseits elektrische Energie zu sparen und andererseits ein gutes Signal/Rauschverhältnis zu erhalten. Natürlich sind auch andere Varianten (z.B. über Draht, nicht gepulst) möglich und ein Schutz gegen Auswertung falscher bzw. fremder, nicht für die Steuerung vorgesehener Signale wird empfohlen, was natürlich auch wiederum kurze Pulse mit höherer Leistung zur Störunterdrückung beinhalten kann. Die bevorzugte Übertragung des Gesamtsignals wird hier deshalb empfohlen, weil unlogische Eingaben vorliegen können wie z.B. gleichzeitiges Bremsbetätigen und Pedaltreten und weil auch der Antrieb eines z.B. Anhängers oder einer Achse mit gesteuert werden soll und weil z.B. Blinkerbetätigung oder Ort (z.B. GPS) zur hier vorgeschlagenen Verbundfahrzeugsteuerung einen nützlichen Beitrag leisten können, ebenso wie z.B. Geschwindigkeit der Eingabebetätigung (z.B. wird vorgeschlagen, bei überdurchschnittlich schneller oder erkennbar anderer Bremsbetätigung oder Wechsel von Antriebswunsch auf Bremswunsch die Bremsung anders zu gestalten, z.B. schneller und/oder stärker durchzuführen).

Diese Betätigungsgeschwindigkeitsauswertung wird hier besonders vorteilhaft, wenn sich der Gesamtwunsch als schwer interpretierbar erweist: Ein möglicher Zustand wäre z.B. dass der Fahrer von z.B. Fahrrad mit Anhänger langsam tretend (auch ohne Antriebswirkung) mit ganz leicht betätigter Bremse mit relativ konstanter Geschwindigkeit bergab rollt. Die Gesamtauswertung (wie hier später beschrieben) würde z.B. durchaus sinnvoll zum Ergebnis kommen, dass "keine Anhängerbremsung" diesem Fahrerverhalten am besten entgegenkommt. Deswegen wird hier vorgeschlagen, dass auch eine schnelle Veränderung (z.B. des Bremswunsches) übertragen oder hergestellt werden kann, so dass z.B. die schnelle Erhöhung nun doch von der Verbundfahrzeugsteuerung zur Anhängerbremsung interpretiert wird bzw. auch andere Fahrerwünsche übertragen werden wie z.B. ein aktivierter oder deaktivierter Bremslichtschalter oder Geber.

### Bremskrafteinstellung im Verbundfahrzeug

Als eine mögliche Teilaufgabe der Verbundfahrzeugsteuerung wird hier beschrieben, wie man eine Bremskraft an mindestens einem Rad in einem fast unelastisch verbundenem Verbund aus Zugfahrzeug und angekoppeltem Fahrzeug einstellen kann, was natürlich auch mit anderem Vorzeichen die Antriebskrafteinstellung beinhaltet: Als ein mögliches Beispiel wird hier ein Anhänger an einem Fahrrad bzw. Elektrofahrrad gezeigt, bei dem möglichst einfach benutzbar die Bremskraft gesteuert werden soll, was einfache Signalverbindung erfordert (wie z.B. nicht-elektrisch, also über Verzögerungsmessung oder Auflaufkrafterfassung bzw. drahtlos wie Infrarot, Magnetfeld, Schall, Funk) aber auch unpraktischer über z.B. Stecker. Auflaufsensoren müssen in die Deichsel eingebaut werden, erfordern also neben dem Sensor noch Zusatzteile um Kraft oder Weg für Messung zugänglich zu bekommen. Um wenigstens den Kraft- oder Wegsensor einzusparen, wird vorgeschlagen, dass man auch einen Schalter verwenden kann, z.B. mit 3 Stellungen: "ziehend", "neutral", "schiebend", aber auch, zur weiten Vereinfachung z.B. nur "schiebend" und "ziehend", wobei hier der Schalter recht einfach aus 2 Anschlägen (z.B. gegen die elektrische Masse) bestehen kann, je nachdem ob der ziehende oder schiebende anschlägt (was sogar die Erkennung der Stellung dazwischen erlaubt). Natürlich können dabei Federn, Dämpfer usw. mitwirken. Mit Auflaufsensoren wird auch eine sogenannte Nullkraftregelung vorgeschlagen, mit der die Auflaufkraft gegen 0 geregelt wird und der Anhänger damit für das Zugfahrzeug oder den Fahrer in gewissem Sinne "verschwindet", jedenfalls nicht mehr besonders zieht oder schiebt. Unter Nullkraft sei hier auch verstanden, dass ein gewisses Auflaufen oder Zurückziehen gewollt bzw. angenehm sein kann. Das ist mit dem Schalter auch möglich, wenn man, allerdings mit einer Regelung, die das schaltende Verhalten berücksichtigt (z.B. durch Zeitverhalten), hauptsächlich die "Neutralstellung" einregelt und z.B. "ziehend" und "schiebend" auf etwa (z.B. zeitlich) gleich bis ähnlich.

In allem hier Vorgestellten geht es auch sehr stark um das Benutzerempfinden (z.B. Insassen), was natürlich sehr stark eine wie auch immer vorgenommene "Einstellung" (z.B. Modellparameter, Training usw.) hin zu einer als "gut" empfundenen einbezieht, also scheinbar viel mit Psychologie und weniger mit Grundlagen der Physik zu tun hat.

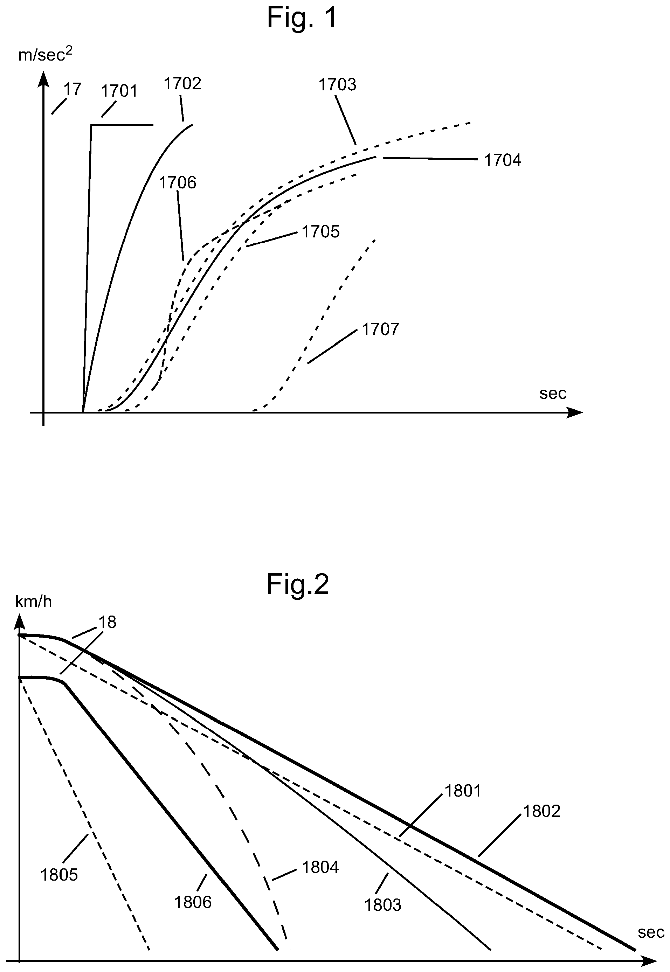

Trotzdem wird hiermit ausdrücklich empfohlen, die physikalischen Zusammenhänge auch sehr stark bestimmend in diese Steuerung einzubeziehen, vor allem, wenn sie Eindeutigkeit in ungewisse Zustände bringen, z.B. wenn eine Situation "physikalisch gesehen nicht anders sein kann als ...". Was natürlich immer noch offenlässt, dass die Einschätzung auf einer Fehlannahme beruht: z.B. kann eine Kurvenbeschleunigung von 10 g physikalisch als unmöglich herausgearbeitet werden, aber z.B. tatsächlich z.B. als Schlag eintreten, wenn z.B. ein Randstein angefahren wird, oder wenn z.B. ein seitlicher Anprallunfall eines anderen Fahrzeuges einwirkt. Es ist also auch grundlegende Physik hier auf Annahmen angewiesen. Hier sei ein Beispiel vorgeschlagen, bei dem grundlegende Physik viel (auch zu insgesamt angenehmem Empfinden der Steuerung) beitragen kann: Ein Bremswunschsignal aus einem autonomen Fahren oder Assistenten kann z.B. tatsächlich schlagartig einsetzen (wie z.B. 1701 in Fig.1), wenn z.B. eine plötzliche Notbremsung angefordert wird. Ein Bremswunsch aus einem Hebel oder Pedal kann sich aber nur mit der schnellstmöglichen Betätigungszeit (wie z.B. 1702 in Fig.1) ändern und wird im Normalfall in einem üblichen Zeitverhaltensbereich liegen, womit man z.B. u.U. auch einen Notbremswunsch eines Fahrers von seinen üblichen Bremsungen unterscheiden kann. Ein Auflaufbremssignal eines Schalters kann z.B. schlagartig oder gar nicht kommen (wenn z.B. davor schon für Schalten ausreichendes Auflaufen vorhanden war). "Gar nicht" wäre natürlich ein schlechtes Bremssignal und daher würde ein Algorithmus vorgeschlagen, der z.B. durch weniger Antrieb oder mehr Bremsen vermeidet, dass ein ständig auflaufender Zustand die echte Bremsung verschleiert. Ein Auflaufsensor oder Verzögerungssensor kann gegensätzlich zum Schalter nie eine übermäßig schnelle Bremswunschsteigerung ausgeben: Wie schlagartig auch immer das Zugfahrzeug einen Bremswunsch erhält, es kann seine Verzögerung (und die des Anhängers, da dieser ja in feiner Zeitauflösung immer erst später zur Bremssteigerung gebracht werden kann) nur mit einer gewissen Bremswirkungsaufbaugeschwindigkeit aufbauen, die z.B. durch Einfedern der Radaufhängung, Verformungen (auch des Reifens), Gewichtsverlagerungen oder verspäteten Verzögerung von Massen (auch Insassen) o.ä. stammt. In modernen PKW wird z.B. aus obigen Gründen 1 g Verzögerung erst in grob 0,5 sec aufgebaut, auch bei deutlich kürzerer "time to lock" (TTL, Zeit, in der man ein Radbremsmoment bis an die Blockiergrenze gesteigert hat).

Es wird also vorgeschlagen, erstens obige Tatsachen hilfreich (unter anderem z.B. zur Signalplausibilisierung bzw. Filterung) zu nutzen aber auch zweitens, auf die auf ein Signal folgende Reaktion zu beziehen.

In Fig.1 ist mit der Bremsverzögerung 17 über der Zeit gezeigt, dass z.B. eine automatische Vollbremsung (Automat 1701) in kurzer Zeit von Null auf Vollbremsbefehl umschlagen kann (Linien sind Verzögerungsbefehle, strichliert sind tatsächlich aufgebaute Verzögerungen). Ein Fahrer kann, z.B. in Notbremssituation auch schnell einen Verzögerungsbefehl 1702 am Pedal oder Hebel einstellen (z.B. in unter 200 ms). Ob eine resultierende möglichst schlagartige Anhängerbremsung angenehm ist, muss für die Steuerung berücksichtig und eventuell verlangsamt werden. Strichliert 1703 würde der "schnellst möglichste Verzögerungsaufbau des Fahrzeugs" folgen, der z.B. durch Totzeiten der Elektronik und Luftspaltüberwindung erst leicht verspätet zu einsetzender Verzögerung führt, dann mit der Betätigungsgeschwindigkeit der Bremse ansteigen kann, aber z.B. grob in der Nähe einer halben Vollbremsung erst die "dynamische Radlastverlagerung" braucht ("bis das Gewicht auf die Vorderräder drückt") und erst langsamer ansteigt, ja selbst bei einem bereits zu blockieren beginnenden Vorderrad im Wesentlichen nicht schneller als die "dynamische Radlastverlagerung" steigen kann. Ein Anhängersensor 1704 (Auflaufsensor, Verzögerungssensor, Verzögerungsmessung) kann also nicht schneller einen Bremswunsch ausgeben, als durch die Fahrzeugverzögerung bewirkt wird, woraus natürlich folgt, dass proportional zu diesem Anhängersensorwunsch kein schnellerer Verzögerungsaufbau am Anhänger möglich scheint, denn die Wirkung kann ja erst nach dem Befehl kommen. Das entspräche einem günstigen Verzögerungsaufbau des Anhängers (strichlierte Kurve 1705), die immer hinter dem Anhängersensor läuft. Wenn in der Anhängerbremse weitere nennenswerte Totzeiten sind, verschiebt sich die Anhängerbremswirkung entsprechend zeitlich.

Daraus seien hier folgende Empfehlungen für die Anhängerbremse vorgeschlagen: sollte ein sehr schnell ansteigendes Bremsbefehlssignal verfügbar sein, kann man dem schnellstmöglich folgen, u.U. auch schneller, als das Zugfahrzeug Verzögerung aufbauen kann. Wenn (nur) ein Anhängersensorsignal verfügbar ist, braucht die Anhängerbremse nur so schnell betätigt werden, wie das Sensorsignal (gegebenenfalls inkl. Filterung) ansteigen kann, um ihm folgen zu können. Eine schneller betätigbare Anhängerbremse würde bis hier nichts bringen, weil ja das Anhängersensorsignal aufgrund Ursache-Wirkung nur leicht hinter dem Fahrzeugverzögerungszeitverhalten liegen kann, es sei denn, es wäre ein Blick in die Zukunft möglich. Man könnte aber einen "Trick" anwenden und mit dem Anhänger überbremsend 1706 reagieren, also überproportional schnell die Anhängerbremswirkung steigern. Das kann hier u.U. insofern auch empfohlen werden, als es eine schnelle Wirkung vermitteln könnte, eventuell verbunden mit möglicherweise angenehm empfundenem "Ziehen" des Anhängers. Selbst das Gegenteil könnte als angenehm empfunden werden, dass nämlich in einem gewissen Zeitverhalten ein Unterbremsen stattfindet, um einem Fahrer zu vermitteln, dass er einen Anhänger spürt. Das könnte wie auch immer mit obigem Überbremsen kombiniert werden, so dass z.B. zuerst ein leichtes Schieben die Anwesenheit des Anhängers gefühlsmäßig unterstützt und z.B. dann durch "Ziehen" ein stabiles Fahrverhalten zu vermitteln. Jedenfalls ist hier Raum für als angenehm empfundene Einstellungen, wie auch immer diese genau sein werden. Man sollte auch davon ausgehen, dass solche Empfindungen sich in erstaunlich kurzer Zeit abspielen können, auch unterhalb von Zeit- und bewusster Wahrnehmungsauflösung und die vermittelten Eindrücke nicht unbedingt rational oder physikalisch verständlich sind. Man wird wohl auch hier, wie auch in anderen Einstellungen, vorsehen können, dass sich Fahrerwünsche wie auch immer einbringen lassen, sei es über (auch fahrerspezifische) Parameter, Lernen (z.B. auch mit Betätigung, was als "gut" empfunden wird), usw. Demgegenüber kann auch eine Regelung sehr attraktiv sein, mit der man z.B. "von Anfang an" gut zurechtkommt, was natürlich Fahrerwünsche nicht ausschließt, sondern nur einen guten default-Zustand empfiehlt. Attraktiv kann es für alles hier Gezeigte auch sein, Witterungseinflüsse (aus z.B. Temperatur, Datenverbindung etc.) mit einzubeziehen, so dass z.B. auf Schnee und Eis anders, z.B. schwächer, gebremst bzw. angetrieben wird.

Totzeiten in der Anhängerbremsbetätigung wie z.B. in 1707 werden hier als zu vermeiden empfohlen, weil sie nur (auch sinnlose) Verzögerung bringen, dem auch kein erkennbarer Nutzen gegenüberstehen muss, ja eigentlich die Ursache z.B. in einer falschen Bremse liegen kann und daher hiermit eine günstige Bremse vorgeschlagen wird: bei einer Elektro-Hydraulischen Bremse können z.B. über 70 ms vergehen, bis überhaupt nennenswert Druck aufgebaut wird. Bei einer sogenannten nichtlinearen **EMB** ist die Belagsbetätigungsgeschwindigkeit im Luftspalt und bei schwacher Bremsung möglichst schnell, daher ist sehr schnell einsetzende Bremswirkung vorhanden. Ein physikalischer Vorteil (wie z.B. weniger Stromverbrauch) im langsamen Verhalten einer hydraulischen Bremse steht dem jedoch nicht gegenüber.

Hier muss festgehalten werden, dass es mindestens 2 verschiedene "optimale" Anhängerbremsungen gibt: Erstens, der Nullkraftanhänger, der sich im Auflaufsinne für den Fahrer bzw. das Zugfahrzeug angenehm als nichtexistierend auswirkt und zweitens der absichtlich schiebende Anhänger um mit Motorbremswirkung zu bremsen oder sogar regenerativ zur Batterieladung zu bremsen. Beides wird hier empfohlen und beides kann hier erreicht werden, indem man Zusatzinformation einbezieht wie z.B. das Bremslicht oder entsprechend steigende Bremsung, die vom Anhänger mit unterstützt wird. Wenn der Anhänger selbst regenerativ bremsen kann, können die Optima, als einfache Lösung, zu einem zusammenfallen. Wenn regeneratives Bremsen nur am Zugfahrzeug möglich ist oder dessen Motorbremsen erwünscht ist, braucht es am Anhänger natürlich eine Entscheidungsgrundlage (wie z.B. das Bremslicht) um diese Wünsche zu erfüllen.

Eine Mischung einer Gesamtbremsung aus mehreren (z.B. regenerativ und Reibungsbremse) ist als "blending" bekannt und die hier genannten Verfahren können natürlich auch auf eine Gesamtbremsung oder Summenwirkungen mehrerer, wie auch immer erzielten, Bremswirkungen verstanden werden. Damit wird in diese Verfahren mit aufgenommen: Es können bevorzugt bestimmte Bremsungen eingestellt werden, wie z.B. bevorzugtes regeneratives Bremsen auf bestimmten Rädern. Damit ist hier geklärt, dass die anderen Bremsen den Rest der Bremsung übernehmen. In diesem Sinne werden die hier genannten Verfahren gesehen: Es kann auch Vorgaben bestimmter Brems- bzw. Antriebswirkungen geben und die hier gezeigten Verfahren werden dann auf den verbleibenden Rest angewendet.

Als solche Vorgaben werden auch andere Eingriffe gesehen: So kann z.B. eine Stabilitätskontrolle mehr Anhängerbremswirkung fordern (z.B. sway-control, um z.B. einen schlingernden Anhänger zurückzuziehen) oder auch mehr an bestimmten Rädern fordern, auch gemeinsam mit z.B. Antrieb an bestimmten Rädern oder auch z.B. gemeinsam mit Lenkungseingriff oder z.B. Federungs- bzw. Stoßdämpferverstellung. Solche Eingriffe sind hier möglich und können die gezeigten Verfahren z.B. ganz oder teilweise überlagern, beeinflussen bzw. außer Funktion setzen oder auch kooperativ mit den gezeigten Verfahren funktionieren, so dass die gezeigten Verfahren z.B. weiterhin einen verbleibenden Rest beitragen.

Mathematisch kann für eine Auflaufbremse auch auf einen Auflaufsensor völlig verzichtet werden (was hier ebenfalls als besonders vorteilhaft empfohlen wird): Da eine Kraft aus Beschleunigung oder Verzögerung gleich Masse mal Beschleunigung ist, ist die beim Verzögern schiebende Kraft des ungebremsten Anhängers gleich seiner Masse mal Verzögerung, wobei die Verzögerung auch aus einer Komponente der Erdbeschleunigung stammen kann (z.B. beim Bergabfahren). Wenn man die gesamte gerade eingestellte Bremskraft abzieht, bleibt die Auflaufkraft übrig. Genau dieser Ansatz wird hier auch als eine gute Möglichkeit vorgeschlagen, die im Folgenden noch weiter ausgebaut und verbessert wird. Natürlich gilt immer selbiges vorzeichenrichtig auch für Antrieb. Dazu braucht man also Bremsen (wobei hier neben regenerativem Bremsen besonders auch eine EMB vorgeschlagen wird) oder Antrieb, bei denen die Bremskraft oder Antriebskraft zumindest brauchbar abschätzbar ist und eine Schätzung der Anhängermasse.

Ein mit konstanter Geschwindigkeit abwärts rollendes Gespann würde eine Kraft- bzw. Verzögerungsskomponente in Fahrtrichtung sehen, die zu ständigem Bremsen führen könnte, was z.B. bei Auflaufbremsen ein bekanntes Problem ist (auch wenn Motorbremswirkung ausreichend wäre und vom Fahrer sogar bevorzugt würde, bremsen dann Auflaufbremsen und verschleißen auch entsprechend). Das kann auch bei Fahrrädern sehr ungewollt sein, wenn man das ungebremste Bergabrollen vorteilhaft nützen will. Dazu wird hier erstens eine lokaler, z.B. im Anhänger oder an einem Rad eigenständig wirkender Lösungsalgorithmus vorgeschlagen: aus der Änderung der Geschwindigkeit über Grund (hier ground speed, GS genannt) und der Beschleunigung (z.B. in Fahrtrichtung, und/oder in mehreren Achsen dazu bzw. aus der Auflaufkraft) lässt sich, wie hier gezeigt, einiges berechnen, insbesondere, wenn man sinnvolle Annahmen mitverwendet, wie z.B. dass sich eine Straßensteigung nur selten schlagartig ändert. Es wird also z.B. empfohlen, bei etwa gleichbleibender GS über die Beschleunigungs- oder Auflaufkraft auf die Lage der tatsächlichen horizontalen (zur Erde) zu schließen. Es wird aber auch ein besseres Modell vorgeschlagen, dass auch Änderungen der GS zulässt und Störungen unterdrückt, wie Schwingungen in GS bzw. Beschleunigungs- oder Auflaufkraft bzw. auch Vibrationen durch z.B. gepflasterte Fahrbahn.

Das hier vorgeschlagene Verfahren kann auch berücksichtigen, ob lieber Optimum 1 (Nullkraftanhänger) oder Optimum 2 (gewisse Schiebewirkung für z.B. regeneratives Bremsen oder Motorbremsen am Zugfahrzeug) angestrebt wird, wozu z.B. der Bremslichtschalter verwendet werden kann oder z.B. der motorische oder generatorische Zustand des Elektromotors (des Fahrzeugantriebs) und auch berücksichtigt werden kann bzw. soll, dass unterhalb einer bestimmten Geschwindigkeit der Elektromotor keine zur Batterieladung ausreichende Spannung mehr abgibt und daher in diesem Bereich sogar die Reibungsbremswirkung gesteigert werden sollte, insbesondere wenn z.B. der Ladestrom abnimmt oder sogar in Gegenstrombremsung umschlägt.

Da vom Fahrer grundsätzlich ein Nullkraftzustand "kein Anhänger schiebend oder ziehend spürbar" als ein vorteilhafter (oder jedenfalls kein offensichtlich nachteiliger bis auf Motorbremsen) empfunden wird, wird vorgeschlagen, dass die hier genannten Algorithmen z.B. diesen Nullkraftzustand annehmen, wenn keine bessere Entscheidung zustande kommt, wenn also z.B. kein Bremslicht- oder Bremswunschsignal vorhanden ist. Es wird auch empfohlen, dass diese Annahme auch von Daten abhängen kann (wie z.B. über die Straße, ob z.B. eine Kurve erwartbar ist) oder von Statistiken (z.B. bei welchem Gefälle und welcher Geschwindigkeit solche Fahrzeuge im Regelfall wie betrieben werden, z.B. ungebremst rollend oder mehr oder weniger stark gebremst). Ein Anhängerbremssystem der vorgeschlagenen Art kann also auch ohne wie auch immer gearteten Datenbezug vom Zugfahrzeug eine angenehme (bzw. auch im Rahmen des Möglichen sichere) Brems- bzw. Antriebseinstellung finden.

Ein weiteres, besonders vorteilhaftes Verfahren ist, die Anhängerbremsung (Reibungsbremse und/oderandere Bremse wie z.B. über elektrische Maschine) absichtlich teilweise, ganz oder vorwiegend im Bereich ziehender Deichselkraft einzustellen, wobei auch der Fahrerwunsch in die Stärke der Anhängerbremswirkung einbezogen werden kann (z.B. über Bremshebel, Pedal, Bremslichtschalter, Ermittlung von Verzögerung bzw. Kraft oder Kräften) und/oder auch eine Stabilitätskontrolle bzw. ein ABS. Ein ziehendes Anhängerbremsen (auch unter Einbeziehung des Fahrerbremswunsches) kann stabilitätsfördernd sein, insbesondere bei z.B. einspurigen, leichten oder zu Stabilitätsproblemen neigenden Zugfahrzeugen. Da nun ein ziehendes Anhängerbremsen vorzeitig die Stabilität des Anhängers überfordern kann, insbesondere blockieren von Anhängerrad (Anhängerrädern) hervorrufen kann, ist es günstig, dies durch ABS und/oder ESC zu verhindern. Damit kann gesamtstabilitätsfördernd einfach herbeigeführt werden, dass zumindest der Anhänger im Gesamtverbund stark bis hin zu optimal an der Stabilitäts- bzw. Blockiergrenze bremst.

Es wird also für Bremszwecke (für Antriebszwecke kann das selbe mit den richtigen Vorzeichen ebenfalls verwendet werden) vorgeschlagen, wie bei Anhängerbremsungen bekannt, zumindest eine in Fahrtrichtung zeigende Kraft, also z.B. eine Auflaufkraft oder Verzögerungskraft, zu ermitteln oder Verzögerung zu messen, hier wird nun nur noch gleichwertig für alle "Verzögerung" verwendet. Da sich Fahrzeugverzögerung und Erdbeschleunigung bis hier nicht unterscheiden lassen, wird hier zusätzlich die GS (z.B. über Raddrehzahl) gemessen. Damit lässt sich eine Verzögerung, die aus einer Steigung oder einem Gefälle resultiert von einer durch Bremsung erreichten Verzögerung unterscheiden, allerdings wird hier zusätzlich die Annahme getroffen, dass sich die Steigung oder das Gefälle nicht schnell ändert. Es gibt viele Möglichkeiten, wie diese Berechnung genau ausgeführt wird, z.B. kann man ein Steigungsmodell bilden, das die gemessene Verzögerung und etwa gleichbleibende Geschwindigkeit erklärt. Wenn nun eine Bremsung dazu kommt, ist das an diesem Modell erkennbar, aber nur als Veränderung bezogen auf die etwa gleiche Geschwindigkeit und Steigung. Daraus und aus dem Gefällemodell wird nun Folgendes abgeleitet: Es wird ein Gefälle erkannt: Damit kann z.B. eine bestimmte Anhängerbremswirkung aktiviert werden, die von Einflüssen abhängig sein kann wie z.B. Anhängermasse (z.B. über Rad- oder Achslasten oder Einfederung ermittelt) und z.B. kann das Bremslicht diese Bremsung erst freigeben, wenn damit signalisiert wird, dass man das Gefälle gezielt mit betätigter Bremswirkung fahren will und nicht z.B. mit Motorbremswirkung oder Luftwiderstand. Dieses Modell lässt sich natürlich beliebig verfeinern, z.B. dass es auch veränderliche Geschwindigkeiten und Steigungen zulässt, u.U. müssen dazu Annahmen getroffen werden. Die Zusammenhänge zwischen z.B. Weg, Geschwindigkeit, Beschleunigung, Zeit, Kraft usw. sind ja alle bekannt. Zur Gefälleermittlung kann natürlich grundsätzlich alles beitragen, wie z.B. Daten (auch mit GPS) und/oder z.B. Magnetfeldsensoren, die über den Winkel der Erdmagnetfeldlinien zur Senkrechten zu einer Auswertung kommen.

Die Ermittlung einer Einfederung ist z.B. bei gebremsten Anhängern natürlich üblich, um die Bremswirkung auf das Gewicht abzustimmen. Hier wird natürlich die elektrische Ausgabe bevorzugt. Um Störanfälligkeit, Komplexität und Kosten weiterer Sensoren zu reduzieren, wird hier vorgeschlagen, dass ein bereits für dieses System eingeplanter Mehrachsensor (wie z.B. in Mobiltelefonen verwendet) oder natürlich auch ein zusätzlicher auch an der Radaufhängung montiert werden kann: Bei Beladung (z.B. Einsteigen) könnte damit festgestellt werden, dass sich die Winkel eines Radaufhängungsteils etwas ändern und bei Fahrt könnte er auch auf das Schwingungsverhalten dieses Teils reagieren. Trotzdem können Verzögerungs- oder Beschleunigungskomponenten weiterhin in der für diese Steuerung nötigen Qualität zur Verfügung gestellt werden, z.B. durch Ausfiltern von Schwingungen bzw. Berechnen einer bestimmten Komponente, z.B. in Fahrtrichtung bzw. kann der Sensor auch so angebracht sein, dass die gewünschte Komponente (z.B. in Fahrtrichtung) auch einfach oder ohne Berechnung mit genügender Genauigkeit verfügbar ist. Als eine interessante Möglichkeit wird auch vorgeschlagen, dass das Schwingverhalten des Anhängers (oder Fahrzeuges) ausgewertet wird: Es muss sich wohl um ein gedämpftes Feder-Masse System handeln, das ein entsprechendes, bekanntes Schwingverhalten hat, wobei natürlich grundsätzlich in bekannten Zusammenhängen mit mehr Masse eine niedrigere Schwingfrequenz entsteht. Eine Analyse der Schwingungen (z.B. beim Einstiegen, bei Unebenheiten usw.) lässt also auf die Masse schließen. Diese Analyse muss nicht unbedingt eine aufwendige z.B. Fourieranalyse sein, es kann z.B. auch ein einfaches Modell solange verstellt werden, bis man deckungsähnliches Verhalten erzielt, z.B. in dem ein einfacher Tiefpass im Zeitverhalten verstellt wird. Natürlich lässt sich ähnliches auch in anderer Komponente machen, also z.B. Antriebskraft (Bremskraft) und Fahrzeugreaktion zur Masseschätzung verwenden oder Schwingungen oder Transienten in dieser oder anderer Richtung.

Zur Verfeinerung der Bremssteuerung könnte auch der Antrieb signalisieren, dass kein Antrieb vorliegt und daher z.B. die Bremse freigegeben werden kann. Wenn nun, wie vorgeschlagen, die GS mit verwendet wird, kann vorteilhaft eine zusätzlich eintretende Bremswirkung erkannt werden, und durch Anhängerbremsbetätigung unterstützt werden. Die sich nun durch eine echte geschwindigkeitsmäßige Verzögerung reduzierende GS kann wiederum im Modell so beitragen, dass man daraus den Zustand aus Verzögerung, Gefälle und Fahrzeuggeschwindigkeitsreduktion in ein richtiges Modell überführt. Damit lässt sich nun aufgrund der Verzögerungsbeobachtung auch eine zusätzlich ermittelbare Verzögerung in die Steuerung einer Anhängerbremsung überführen und z.B. eine starke oder gar eine Notbremsung herbeiführen. Nun würde die zusätzlich herbeigeführte Bremswirkung das Gesamtverhalten destabilisieren, weil dadurch mehr Gesamtverzögerung entsteht und noch mehr zusätzliche Anhängerbremsung eingestellt würde. Es wird vorgeschlagen, das zu stabilisieren, indem der Anteil der zusätzlichen Anhängerbremsung herausgerechnet oder kompensiert wird. Mit dieser Methode kann man also eine Anhängerbremsung ohne Bremsstärkenerfassung des Fahrers (z.B. durch Pedalkraft, Hebelkraft, Stellung) steuern bzw. auch regeln, was den Vorteil hat, ohne Eingriffe bzw. Abfrage bzw. Übertragung des Bremswunsches auszukommen. Da die Bedingungen im Verbundfahrzeug überall gleich oder ähnlich genug sind, bezieht sich obiger Begriff "Anhänger" auf jede Stelle im Verbundfahrzeug, also auch z.B. eine bisher nicht gebremste Zugfahrzeugachse. Natürlich kann man den Wunsch eines Fahrers oder autonomen Fahrens mit einbeziehen oder die Veränderung oder Veränderungsgeschwindigkeit oder Stärke, um das hier gezeigte Verfahren zu verbessern.

Bei einem Fahrradverbundfahrzeug (z.B. Anhänger) wir hier noch die Lösung des Problems der durch Treten verursachten Beschleunigung, Verzögerung und Änderung der GS vorgeschlagen: Diese Schwingungen könnten periodisches, ungewolltes Bremsen des Anhängers verursachen. Es werden daher zur Vermeidung folgende Methoden vorgeschlagen: Erstens lässt sich die periodische Beschleunigung-Verzögerung ermitteln und daher wird vorgeschlagen, sie durch Rechnung zu kompensieren. Zweitens wird vorgeschlagen, dass auch die Annahme verwendet wird, dass Treten zwar beschleunigt, aber nicht verzögert, bzw. die Verzögerung nur aus gesamtem Fahrtwiderstand und Steigung stammt. Aus diesem Wissen wird vorgeschlagen, jede Abweichung von diesem Wissen zur Anhängerbremsbetätigung zu verwenden: Wenn plötzlich keine Antriebsschwingung mehr kommt, muss das z.B. noch keinen Bremswunsch des Fahrers bedeuten. Wenn jedoch unter Berücksichtigung des Steigungs- und gegebenenfalls Tretschwingungsmodells mehr erkannt wird als der Wegfall der Antriebsschwingung, lässt sich dies vorschlaggemäß als Bremswunsch herausarbeiten. Demnach wir auch vorgeschlagen, dass man (u.U. beruhend auf zusätzlichen Annahmen) auch mit einer Minimum- bzw. Maximum-Findung eine zusätzlich eingeleitete Bremsung erkennen kann, z.B. unter der Annahme, dass jede größere Verzögerung als in der nicht-tretenden Phase von einer zusätzlichen Bremsung stammen wird. Damit kann man sofort eine beabsichtigte Bremsung erkennen und muss nicht auf den Ablauf einer Periode einer Tretschwingung warten, um die Tretschwingung kompensierend herauszurechnen.

Zusätzlich oder alternativ zu obiger Steuerung wird empfohlen, auf signifikante Ereignisse möglichst zeitnah zu reagieren, also z.B. bei starker bzw. schlagartig einsetzender Verzögerung auch entsprechend die Anhängerbremse zu betätigen, weil es z.B. als Notbremsung interpretierbar wäre. Ebenso kann eine ähnliche zurückgehende Verzögerung z.B. als allgemeines Bremsenlösen interpretiert werden und auch auf die Anhängerbremse geleitet werden. Es gibt viele Bewertungs- oder Kategorisierungsmaßnahmen, um derartiges einzustufen. Eine attraktive Möglichkeit wäre z.B. das Verzögerungsintegral (oder ähnlicher Werte): damit würde eine kurze starke Verzögerung eine hohe Bewertung bekommen, ebenso eine längere aber schwächere. Auch hier wird die Verwendung von Zusatzinformationen vorgeschlagen, wie z.B. das Bremslicht oder die Betätigungsgeschwindigkeit oder Stärke des Bremshebels oder z.B. schlagartiges Wegfallen des Antriebs, das ähnlich zur Verzögerung wie oben beschrieben kategorisiert werden kann.

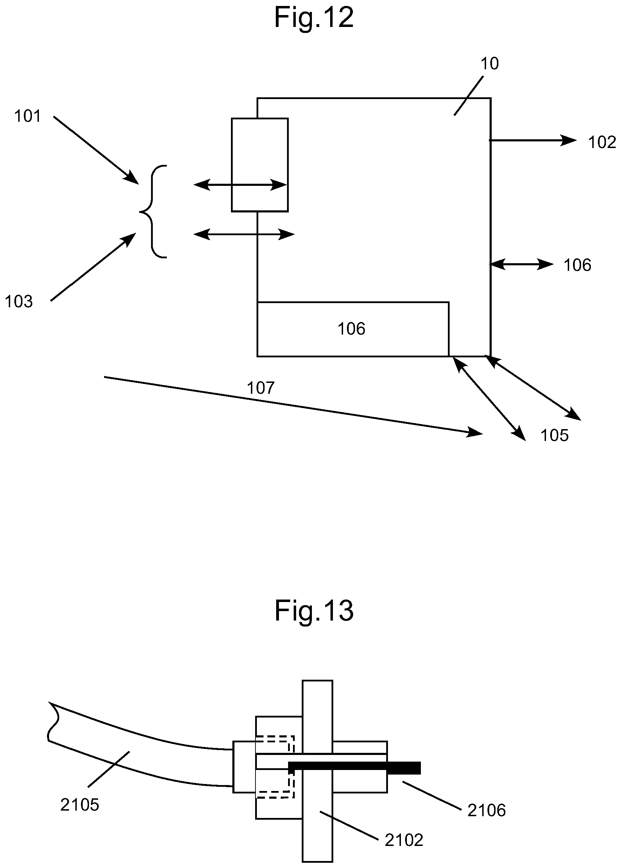

Bis hier sind die naturwissenschaftlichen Grundlagen angewandt, man wird für die Akzeptanz aber stark das Empfinden von Kunden und Fahrern einbeziehen müssen. Daher wird vorgeschlagen, dass man obige Lösung auch anders als über Modellbildung oder Berechnung lösen kann oder sogar soll: man kann z.B. eine Art fuzzy-logic verwenden, die auf unscharfen Werten wie "stark", "schwach" usw. aufbaut oder es wir hier sogar eine Methode empfohlen, die scheinbar ohne Grundlage funktioniert: es kann z.B. ein neuronales Netz oder "Deep Learning" trainiert werden, um obige Aufgabe zu lösen. Obige Aufgabe ist dabei aber trotzdem in physikalischer Wirkung gelöst worden, es ist nur nicht erkennbar, wie die Funktionen verteilt sind. (Im Übrigen ist auch bei einem komplexeren Maschinencode die tatsächliche Funktionsweise schwer bis nicht mehr vernünftig ergründbar.) Diese Methode wird aber auch vorgeschlagen, um z.B. zu vermeiden, dass man ständige Verbesserungen und Veränderungen an der Modelldarstellung oder Berechnung bei Fahrzeugen installieren muss. Stattdessen kann man mit lernfähigen Umsetzungen z.B. durch Training immer mehr Fälle so lösen, dass sie von Kunden und Fahrern als angenehm empfunden werden, ohne ständig verbesserte Modelle zu entwickeln. Diese Lernfähigkeit kann ja auch in gewissem Umfang aufrecht erhalten werden, damit weitere Anpassung, z.B. beim Kunden möglich bleibt. Auch hier kann als günstig vorgeschlagen werden, dass zusätzliche Information einfließt, wie Bremslicht, Antriebskraft, Bremswunsch etc. Im Sinne eines Neuronalen Netzes kann natürlich alles verstanden werden, was durch setzen interner Parameter oder Gewichte von den Eingangsdaten zum Ausgangsergebnis kommt, also auch die Simulation eines neuronalen Netzes mit Software auf einem Prozessor oder ein Programm, das diese Funktion erfüllt. In Fig.12 ist eine derartige Steuerung 10 bzw. Regelung dargestellt, wobei Eingangsdaten 101 (wie z.B. Bremswunsch, Antriebswunsch, Blinker, Beleuchtung, Bremslicht) und Fahrzustände 103 (z.B. Groundspeed, Auflaufkraft, Verzögerung (z.B. in Fahrtrichtung)) z.B. analog, digital, über Bus(e) in die Steuerung 10 gehen, die auch Ausgaben 102 wie z.B. Lichter (z.B. Beleuchtung, Bremslicht, Blinker), Töne, Bilder ausgeben kann und mit anderen Steuerungen 106 wie z.B. Antrieb, Federung kommunizieren kann und auch elektrische Bremssteuerungen 105 durchführen kann und auch Fahrzeugeigenschaften 106 berücksichtigen bzw. ermitteln kann. Eine nichtelektrische Betätigung 107 kann vorhanden sein, die z.B. bei Ausfall der elektrischen wirkt, oder zur Unterstützung z.B. aus einem Handhebel, einem Fußpedal bzw. Auflaufkraft.

Da die Benutzerakzeptanz (der mindestens einen Person im Zugfahrzeug bzw. gezogenem Fahrzeug) hier eine ganz wesentliche Rolle spielt, wird auch vorgeschlagen, dass für die Benutzerakzeptanz wichtige Einflussgrößen in diesem Verfahren mit verwendet werden können bzw. auch von Benutzern einstellbar bzw. veränderbar sind und/oder (auch automatisch) dem Verfahren gelernt werden können. Dazu zählt hier z.B. ob der Anhänger einen leicht zurückziehenden Eindruck vermitteln soll oder einen leicht aufschiebenden oder völlig neutralen oder ob sich dieses Verhalten ändern soll, z.B. mit der Geschwindigkeit oder ob z.B. ein für den Fahrer ein eher gleichbleibendes Bremsen vermittelt werden soll, obwohl die Steuerung eigentlich zu einem anderen Ergebnis kommen könnte: Hier wird z.B. vorgeschlagen, dass ein fast zum Stillstand gebremstes Fahrrad eventuell entlastet werden könnte (indem man z.B. Füße auf den Boden gibt oder gar absteigt) und bei entlastetem Fahrrad viel weniger auflaufende Kraft eines Anhängers aufgenommen werden kann und somit auflauf- oder verzögerungsorientierte Steuerungen (oder Regelungen) zum Schluss kämen, es würde weniger Bremsung angefordert. Nun könnte z.B. das entlastete Fahrrad, wenn auch bei u.U. sehr kleiner Restgeschwindigkeit geradezu unter dem Fahrer weggeschoben werden. Es wird also vorgeschlagen, dieses in sich zwar physikalisch schlüssige Verhalten so zu beeinflussen, dass z.B. Bremsung bis zum Stillstand aufrecht erhalten wird und u.U. auch nach Stillstand, so dass es nicht zur Überraschung kommen kann, dass nun plötzlich durch Bremsenlösen wieder Schub oder Zug auftritt. Ein anderer Vorschlag zur Beeinflussung sei z.B. auch, dass witterungsbedingt mehr Anhängerbremswirkung eingestellt wird: bei rutschigem Laub, nasser, rutschiger Fahrbahn (eventuell sogar auf Bodenmarkierungen) kann z.B. mehr Anhängerbremswirkung auf einem z.B. zweispurigen Anhänger insgesamt ein stabileres Verhalten des Gesamtverbundes erzeugen, wenn dabei z.B. mit dem einspurigen Fahrrad weniger Bremsung und Blockierneigung entsteht.

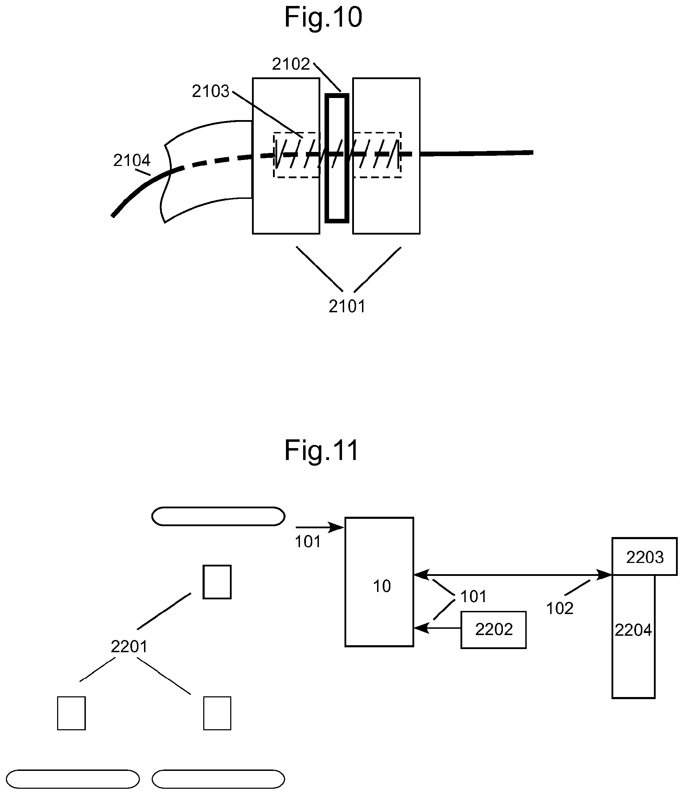

Eine Fahrerbremswunscherfassung, z.B. in Form einer Betätigungsmessvorrichtung 2605 wie in Fig.18, an Pedal oder Hebel kann entweder bereits vorhanden sein, wie z.B. der Hydraulikdruck einer Bremse oder der Pedalweg. Eine leichte Nachrüstbarkeit könnte z.B. wie in Fig.13 mit einem kleinen geschlitzten Teil sein, der sich über ein inneres Bremskabel 2105 schieben lässt und auf einer Seite den Nippel eines Seilzuges (auf z.B. einem inneren Zugseil 2106) aufnehmen kann und auf der anderen wieder eine Nippelform anbietet, die z.B. in einen Bremshebel oder z.B. eine Bremse passen kann:
Dieser Teil gemäß Fig.13 kann einen Kraftsensor 2102 wie in Fig.10 enthalten, der die Kraft misst, die der Nippel an der Außenhülle des Bremsseils (links) erzeugt, wenn der Bremshebel am Innereren Seil zieht. Natürlich könnte man auch andere Teile einfach umrüsten, wie z.B. ein Bremsseil verwenden, dass sich auf Zugkraft elektrisch messbar verändert. Auch ein U-förmig hohler und am U offener zweiter Bremshebel könnte über den Handbremshebel gegeben werden, so dass z.B. dazwischen ein kraftabhängiger Körper ist, der sich elektrisch messbar ändert.

Hier wird festgehalten, dass die mindestens eine EMB sowohl ohne nichtelektrische Betätigung hier verwendet werden kann als auch mit nichtelektrischer Betätigung: Eine EMB kann demnach rein elektrisch gesteuert werden oder auch (z.B. aus Sicherheitsgründen) zusätzlich eine mechanische oder Druckbetätigung haben. Dabei kann die nichtelektrische Betätigung z.B. erst wirken, wenn es die elektrische nicht oder nicht ausreichend betätigt, also kann z.B. ein Seilzug oder Druckzylinder erst dann zur Bremsbetätigung kommen, wenn z.B. am Hebel oder Pedal mehr Weg zurückgelegt wird als bei funktionierender elektrischer Betätigung. Dabei wird man einen Kraftsimulator bevorzugen, der auch bei elektrischer Betätigung eine gewöhnte Betätigungskraft bildet. Sowohl der Kraftsimulator als auch der Aufnehmer für die elektrische Betätigung können grundsätzlich überall sein, z.B. bei/im Hebel, bei/in Bremse. Als andere Variante wird vorgeschlagen, dass die elektrische Betätigung unterstützend zur anderen (mechanisch, Druck) wirkt, also ähnlich wie eine heutige Servobremse mit Vakuum eine aus dem Druckunterschied resultierende Unterstützungskraft zur Fahrerkraft hinzufügt. Hier wird die Unterstützungskraft natürlich elektrisch mit der EMB erzeugt und eine Regelung bzw. Steuerung ermittelt, wie viel Unterstützung der Fahrer bekommt. Dabei kann u.U. der Kraftsimulator gespart werden, weil der Fahrer immer etwas Kraft selbst einbringen muss. Natürlich kann auch mindestens eine rein elektrisch betätigte Bremse (EMB) verwendet werden, die keine andere Betätigung zulässt oder es können zusätzlich nichtelektrisch betätigte Bremsen vorhanden sein. Die nichtelektrische Betätigung muss auch nicht vom Fahrer stammen, sie kann z.B. auch aus einer Auflauf- oder Verzögerungskraft oder Bewegung stammen. Vorteilhaft wird die hier beschriebene Steuerung bzw. Regelung auch so ausgelegt, dass sie auch mit ausgefallenen oder als "seltsam" eingestuften Eingängen bzw. Sensoren zurechtkommt, indem sie z.B. dann Default-Werte, Mittelwerte, Ersatzwerte oder Werte, die aus anderen Daten als günstig ermittelbar sind, verwendet.

Die hier beschriebene Steuerung bzw. Regelung verwendet natürlich vorteilhaft auch die "Fahrzeugmasse" (z.B. zur Bremswirkungssteuerung), was hier genauer als "Fahrzeugeigenschaft" bezeichnet wird, denn es kann auch besser aufgelöst als z.B. Achslast, Radlast, Schwerpunktlage usw. verwendet werden. Deren Ermittlung kann z.B. wie beschrieben erfolgen oder aus anderen Quellen wie z.B. Radschlupf, vorzeitiges Blockieren bzw. Durchdrehen (auch bezogen auf die eingestellte Brems- oder Antriebswirkung), Fahrzeugverhalten unter Kräften bzw. Beschleunigungen, also z.B. Schräglagen, Beschleunigung unter Antriebskraft bzw. Verzögerung unter Bremskraft.

Bei den hier verwendeten Eingangsgrößen wird auch sogenannte "sensor-fusion" empfohlen, also die Verbesserung von Werten durch die Verwendung mehrerer Eingangsgrößen bzw. das derartige Erzeugen von Werten. Auch das kann auch über fuzzy-logic oder neuronale Netze oder Deep Learning o.ä. erfolgen, weil diese Verfahren gut dazu geeignet sind, verschiedene Größen zu Verarbeiten bzw. zu Verknüpfen. Alle Werte können sich natürlich sowohl auf das ganze Verbundfahrzeug beziehen als auch auf Teile davon, also z.B. den Anhänger, unabhängig wie sie gewonnen wurden oder woher sie stammen.

Es wird hier auch die Unterscheidung zwischen Bremswirkung und Bremslicht empfohlen: Ein Bremslichtschalter kann z.B. im Hydraulikkreis der Bremse sein und bei gewissem Druck ansprechen und damit mit einer Bremswirkung zusammenhängen. Gerade bei mech. betätigten Bremsen wird der Schalter aber meist sehr früh bei Hebel- oder Pedalbewegung ausgelöst, damit er auch bei Toleranzen sicher auslöst und damit gibt der Schalter oft ein Bremslichtsignal bevor die Bremse wirksam wird und hat damit nichts mit der Stärke der Bremswirkung zu tun, ja genaugenommen nicht einmal damit, dass eine Bremsung folgen wird, denn der Fahrer könnte ja auch wieder loslassen. Trotzdem wird hier empfohlen, jede nutzbare Art von Bremslichtschalter für die Anhängerbremssteuerung zu verwenden, ebenso wenn möglich ein aussagekräftiges Signal über Antrieb.

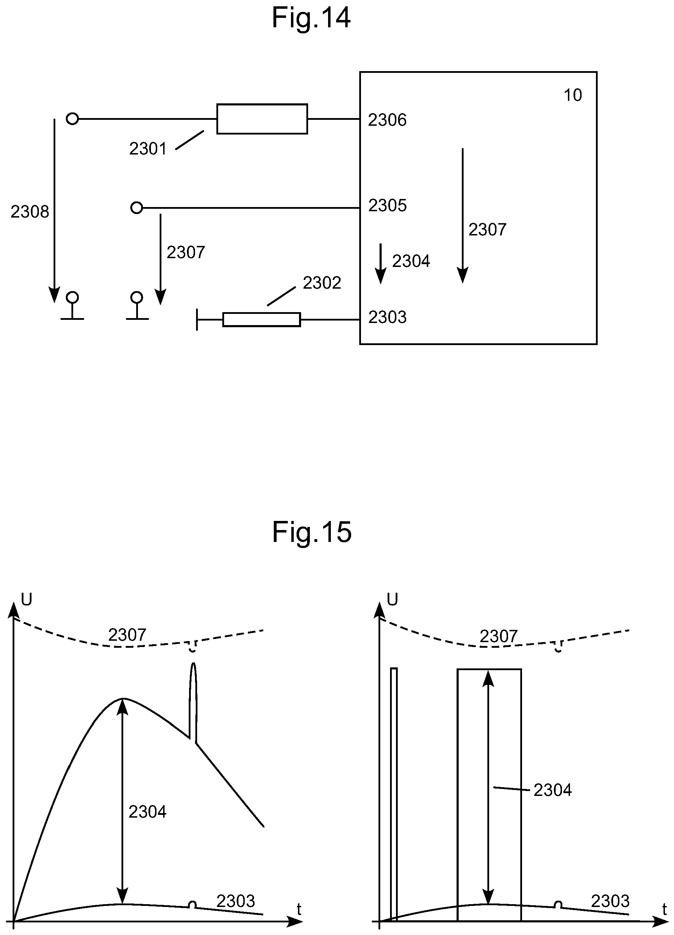

Aus allen die Bremswirkung bestimmenden Eingangsgrößen wird schlussendlich ein bremsbestimmender Wert, z.B. das Bremsaktuierungssignal 2611 wie in Fig.18, an die Bremse (bzw. deren Steuerung oder Regelung) angelegt, der digital oder analog sein kann und natürlich auch drahtlose Strecken inkludieren kann. Analog wäre z.B. als Amplitude oder Impulsdauer einer PWM. Es wird hier empfohlen, digitale Signale abzusichern, z.B. über Prüfsummen bzw. alive-counter. Analoge Signale können z.B. durch gültige Wertebereiche abgesichert werden. In Fig.14 wird auch empfohlen, folgende Störmöglichkeiten bei Analogsignalen zu verringern:
In Fig.14 ist gezeigt, dass in der EMB-Versorgungsspannung (äußere Versorgungsspannung 2308, innerer Versorgungsspannungsanschluss 2306, innere Versorgungsspannung 2307) unvermeidliche Widerstände sind, die hier zu einem (2301) vereint sind. Ebenfalls sind in der Masseleitung bzw. Verbindung unvermeidliche Widerstände (hier zu einem 2302 vereint), die z.B. bei Nutzung der Fahrzeugmasse kleiner sein können als jene in der Versorgung. Wenn nun die EMB durch Betätigung mehr Strom braucht, wandert aufgrund des steigenden Spannungsabfalls an 2302 der innere EMB-gnd 2303 zu leicht angehobener Spannung und aus Sicht der EMB wäre die am Steuereingang 2305 im Inneren erkennbare Steuergröße 2304, z.B. Analogspannung nun geringer, obwohl die äußere Steuergröße (z.B. Spannung) 2307 gleich geblieben ist. Das kann zu Instabilitäten und Schwingungen führen, weil die EMB die Bremsung nun (aus Sicht der äußeren Steuergröße) vermindern würde, und, wenn nun der Stromverbrauch der EMB sinken sollte, durch mehr innere Steuerspannung wieder mehr Ansteuerung bekommen kann. Hier wird vorgeschlagen, die Stromabhängigkeit der inneren Steuerspannung in der EMB-Elektronik zu modellieren (und bei Ansteuerung der EMB die Modellparameter zu finden) und eine möglichst gute aufhebende Kompensation anzuwenden. Dazu kann auch die Reaktion der inneren Versorgungsspannung 2307 mit einbezogen werden und es werden Tests vorgeschlagen, wie z.B. kurzzeitige Veränderung des EMB Versorgungsstroms um die dadurch bewirkte Veränderung der inneren Steuerspannung zu beobachten, zu modellieren bzw. eine günstige Kompensation abzuleiten. Die kurzzeitige Stromveränderung könnte z.B. mit dem Motor der EMB verursacht werden, in dem z.B. im Bereich von Sekundenbruchteilen oder kürzer die EMB (wenn günstig minimalst) gelöst und dann wieder schnell (wenn nötig auch minimalst) betätigt wird oder z.B. ein anderer kurzer Stromimpuls ausgelöst wird. Es kann natürlich auch eine während der Bremsbetätigung (oder dem Lösen) entstehende Stromänderung verwendet werden, z.B. durch leicht sprunghafte Motorpositionsänderung. Kurze Impulse werden empfohlen, weil in dieser Zeit die Bremswirkungsvorgabe als recht konstant angenommen werden kann. Ein über die Bremsbetätigung möglichst wenig veränderlicher Strom hilft wiederum, den dadurch verursachten Spannungsabfall und damit das unerwünschte Verhalten zu verringern - womit hier der Einsatz eines über die Betätigung veränderlichen Übersetzungsverhältnisses empfohlen wird. Es wird für besonders gute Kompensation des Effektes der Anhebung des EMB-grounds vorgeschlagen, dass dieser Wiederstand natürlich einerseits gering gehalten wird aber andererseits die EMB Elektronik auch über den Strom in die EMB Bescheid weiß, diesen messen kann oder diesen aus inneren Stromwerten (z.B. Phasenströmen, Iq) ableiten kann (auch über Einbeziehung der Versorgungsspannung) und aus der Strommessung und dem modellierten oder sonst wie berücksichtigten Rgnd die in der EMB messbare innere Steuergröße so korrigieren kann, dass damit auf die äußere Steuergröße geschlossen werden kann und Instabilitäten kompensiert bzw. hintangehalten werden. Es gibt natürlich noch andere Möglichkeiten den Effekt von Rgnd zu erkennen und zu verringern, z.B. könnte ein Modell-Rgnd solange im Model (für die Kompensation) verändert werden, bis das instabile Verhalten verschwindet bzw. erscheint. Es geht hauptsächlich darum, die Zusammenhänge in diesem Verhalten richtig zu verstehen bzw. abzubilden und dann die physikalischen Gegenmaßnahmen zu setzten.

Dabei wird empfohlen, dass auch der Effekt mehrerer EMBs basierend auf Obigem berücksichtigt und kompensiert wird. Dazu können z.B. mehrere EMBs aus einer EMB-Elektronik versorgt werden, wodurch obige Effekte wie oben beschrieben auch für mehrerer angeschlossene EMBs behandelt werden, oder es funktioniert und kompensiert eine EMB Elektronik wie oben beschrieben und leitet das Steuersignal digital weiter (womit die digital angesteuerten von diesem Problem befreit sind), oder es beziehen die EMB-Elektroniken den Effekt der anderen EMBs mit ein, z.B. indem sie einander Daten austauschen wie z.B. den augenblicklichen Strom. Es wird auch empfohlen, eine Hysteresis im Eingang der Spannungsmessung der EMB-Elektronik vorzusehen: damit wird, vereinfacht ausgedrückt, eine Spannung (oder Größe) nur dann als sinkend erkannt, wenn sie nach dem Ansteigen den Hysteresiswert für "fallend" unterschreitet und nur dann als steigend, wenn sie nach Sinken den Hysteresiswert für "steigend" überschreitet. Damit werden Störungen unterdrückt, die innerhalb der Hysteresis bleiben, also auch jene vom Effekt des Rgnd. Wenn die Hysteresis klein oder null sein soll, wird obige Kompensation natürlich wichtig.

Alternativ oder ergänzend zu Obigem kann auch die Bremssteuerung über Steuerung des Stromes erfolgen und in der EMB der Steuerstrom gemessen werden, welcher günstiger Weise wenig oder nicht von der Anhebung der EMB internen Bezugsmasse betroffen sein soll.

Wenn als analoge Steuergröße eine Impulsdauer verwendet wird, entsteht obiges Problem der Spannungsmessung nicht. Dabei kann es aber sein, dass durch z.B. Überschwingen oder von einer Impulsform abweichende Kurvenverläufe die Bedingungen zur Zeitmessung unklar bzw. störungs-verursachend sein können. Insbesondere können Steuergeräte eine vermeintliche PWM zur Steuerung von z.B. Magneten in Bremsen erzeugen, die zwar einen im Mittel veränderlichen Strom bewirkt, aber nicht gut als PWM auswertbar ist. In diesem Fall wird hier vorgeschlagen, zur EMB Steuerung auch wieder diese Verläufe zu Mitteln, um Fehlinterpretation durch Impulszeitmessungen zu vermeiden. Besonders empfohlen werden z.B. Tiefpassfilter höherer Ordnung bzw. Polpaarzahl, weil man damit gute Glättung bei geringer Durchlaufzeit durch den Filter verbinden kann.

Nun würde aber durch dieses mittelwertveränderliche Signal und die Mittelwertbildung der Vorteil der Spannungsunabhängigkeit der Impulsdauer verloren gehen. Deswegen wird die Einbeziehung des obigen Verfahrens empfohlen, aber auch zusätzlich die Nutzung folgender Information: Solche mittelwertveränderlichen Spannungsverläufe werden meistens doch aus einer Versorgungsspannung erzeugt, so dass eine Spitzenwertfindung Rückschluss auf die Versorgungsspannung zulässt. Wenn nun durch den Widerstand vor dem EMB-internen Massebezugspunkt sich das in der EMB gemessene Steuersignal ändert, kann das Wissen, dass der Spitzenwert bei der Produktion des Signals schon eine Rolle spielte, eine Korrektur gebildet werden, indem in der **EMB** auch der Spitzenwert des Signals verwendet wird, z.B. durch eine Spitzenwertgleichrichtung oder abtastende Verfahren. Die Verstärkung eines Tiefpassfilters zur Mittelung wird man natürlich beim Vergleich mit dem Spitzenwert berücksichtigen oder z.B. so gestalten, dass sie für niedriger Frequenzen bzw. Gleichspannung den gleichen Wert liefert wie der Spitzenwert.

In Fig.15 links ist anhand von Spannung (y-Achse) über der Zeit (x-Achse) gezeigt, wie bei analoger Bremsensteuerspannung die in der Bremse erkennbare Steuerspannung 2204 (Doppelpfeil) scheinbar sinkt, weil die Masse der Bremse (innerer EMB gnd 2303) durch Strom angehoben wird. Dem kann entgegengewirkt werden, da der Spannungsabfall am Rgnd Strom mal Widerstand ist und der Strom gemessen, geschätzt oder bekannt sein kann und ständig die kurzfristige Änderung einer als kurzfristig konstant angenommenen Steuerspannung auf Stromänderung beobachtet werden kann. Damit läßt sich Rgnd ermitteln oder schätzen und kompensieren. Natürlich kann die Berechnung oder Schätzung auch im Sinne der bekannten physikalischen Zusammenhänge anders erfolgen.

In Fig.15 rechts ist gezeigt, dass bei Bremswirkungssteuerung durch Impulsdauersteuerung dieses Problem nicht auftritt, weil ja die Zeitdauer und nicht die Spannung verwendet wird. Es kann aber sehr vorteilhaft sein, die Impulsdauern (wie auch immer) zu mitteln bzw. integrieren o.ä. um auch mit Verläufen der Kurvenform zurechtzukommen. Dann tritt in der Mittelung das Spannungsproblem wieder auf und kann natürlich wie oben beschrieben kompensiert werden. Zusätzlich kann die Annahme verwendet werden, dass die Spitzenwerte der Impulse ja eigentlich immer gleich sein könnten und es kann die scheinbar kleinere Impulsspitze (durch Rgnd) bezüglich der eigentlich gleichbleibenden als Kompensation verwendet werden.

Auch das Verhalten der Versorgungsspannung (hier innere Versorgungsspannung 2307) kann bei obigen Verfahren einbezogen werden. Es kann z.B. in der Gesamtversorgung der Bremsen eine Strommessung sein, die die dargestellten Verfahren und Kompensationen durchführt und das Bremssignal auch digital weitergeben könnte. Es könnten die Bremsen aber auch untereinander kommunizieren und Werte wie z.B. Ströme mitteilen, so dass jede selbst (oder in Gruppen oder insgesamt) diese Kompensationen und Verfahren anwenden kann. Die Annahme, dass die Impulse bei Erzeugung gleiche oder ähnliche Spitzenwerte hatten, kann natürlich auch aufgegeben, abgelehnt oder verbessert werden, z.B. in Zusammenhang mit der beschriebenen Ermittlung des Rgnd aus dem Strom oder aus anderen Beobachtungen wie z.B. der Versorgungsspannung. Auch wird die Verwendung von Hysterese empfohlen, was bedeutet, dass Änderungen unterhalb dieser keine Wirkung entfalten. Auch andere Verbraucher (z.B. Blinker, Bremslichter, Beleuchtungen usw.) verursachen Spannungsabfälle an z.B. in der Masseverbindung befindlichen Widerständen. Es wird empfohlen, dass diese Einflüsse ebenfalls ermittelt werden (soweit möglich), z.B. unter der Annahme, dass plötzliche Änderungen der im Steuergerät erkennbaren Versorgungsspannung auf Verbraucherströme zurückzuführen sind, die z.B. durch Wissen des eigenen Stroms unterscheidbar sind. So kann z.B. zuerst der Strom der Bremslichter eine Veränderung der Versorgungsspannung bewirken und dann der von der Bremse (den Bremsen) verursachte. Somit kann auch eine Empfehlung sein sämtliche (oder sämtliche relevanten) Ströme in einem Gerät zu erfassen bzw. alternativ oder auch den Massestrom. Erleichternd können Verbraucher mit wenig Stromverbrauch verwendet werden wie z.B. LED.

Es kann auch noch damit gerechnet werden, dass ein Bremsensteuergerät kurze Testimpulse sendet, um damit die Leitung zur Bremse bzw. EMB-Elektronik auf Unterbrechungsfreiheit oder sogar Kurzschluss bzw. Störung zu testen. Diese Testimpulse können so kurz sein, dass sie keine besondere Bremswirkung entfalten, aber sie können z.B. Geräusche verursachen, wie z.B. periodisches Ticken. Als Gegenmaßnahme wird hier empfohlen, so einen Impuls von der Bremssteuerung fernzuhalten. Zusätzlich kann z.B. eine Erwartungszeit verwendet werden, in welcher kein Testimpuls mehr erwartet wird. Damit würde nach Ablauf dieser Zeit wieder ein kurzer Impuls als Testimpuls eingestuft werden und von der Bremssteuerung ferngehalten werden und während dem Zeitablauf würden alle Verläufe immer als Steuerung wirken. Zusätzlich oder alternativ wird auch die Möglichkeit vorgeschlagen, bestimmte Zeit- bzw. Amplitudenverläufe nicht als absichtliche Bremsung einzustufen und fernzuhalten. So kann z.B. angenommen werden, dass eine echte Bremsung einen Zeitverlauf der Steigerung hat und ein Testimpuls z.B. steilflankiger ist. Diese Verlaufserkennung kann natürlich auch mit obigem zeitgesteuerten Fernhalten kombiniert werden. Auch eine (eventuell veränderliche) Hysterese kann zusätzlich oder alternativ empfohlen werden, um diese oben beschriebene Instabilität zu vermeiden oder zu verringern.

Wenn oben beschriebene Mittelwertbildung (z.B. Tiefpassfilter) verwendet wird, wird hiermit empfohlen, dann, wenn ein Testimpuls erkannt wird, die Mittelwertbildung oder den Filter zurückzusetzen, um den durch den Testimpuls verursachten Wert zu löschen. Es gibt (z.B. bei US Anhängern) eine genormte bzw. etablierte Steuerverbindung vom Zugfahrzeug zum Anhänger, die eigentlich einen steuerbaren Strom für magnetbetätigte Bremsen als Anhängerbremssteuerung verwendet, der heute meist als 12V Pulsdauermodulation übertragen wird. Nun wird vorgeschlagen, dass in solchen oder ähnlichen Fällen oder wenn andere analoge Signale verwendet werden, diese etablierte Steuerverbindung auch für digitale Signale verwendet werden kann: Sobald zwischen Bremsensteuergerät und Elektronik der EMB eine digitale Verbindung möglich wird, kann diese verwendet werden, sonst wird das bisher übliche Signal verwendet. Dazu kann z.B. zwischen Bremsensteuergerät und Elektronik der EMB ein digitaler Kommunikationsversuch (z.B. auch beim Einschalten oder zu sonstigen Zeiten) erfolgen oder es kann ein digitales Kommunikationssignal z.B. auf ein analoges aufmoduliert werden oder es kann z.B. eine Pulsweitenmodulation so gestaltet werden, dass darin auch digitale Kommunikationsdaten untergebracht werden können, z.B. durch erkennbare Pulslängen. Auch könnte z.B. die Elektronik der EMB ein digitales Kommunikationssignal senden und damit das Bremsensteuergerät einladen, auf digitale Kommunikation zu schalten oder diese zusätzlich zu verwenden. Auch oben beschriebener Testimpuls kann als digitale Kommunikation ausgebildet werden, um die Kommunikationsfähigkeit der Bremsen zu ermitteln. Es müssen auch nicht alle Bremsen mit digitaler Kommunikation betrieben werden, es können auch welche weiterhin wie etabliert betrieben werden. Es kann auch nur eine Bremsensteuerung mit dem Zugfahrzeug analog oder digital kommunizieren aber jedenfalls ein digitaler Austausch und Abgleich zwischen mehreren Bremsen stattfinden (entweder alle gleichberechtigt oder Master-Slave). Mit digitaler Kommunikation kann natürlich die Elektronik der EMB auch Zustände in der EMB melden (z.B. Temperaturen, Bremsmoment, Fehler, Diagnosen usw.) und es kann z.B. ein Bremsensteuergerät Bremsen gezielt, einzeln oder in Gruppen ansprechen, um z.B. radindividuelles Bremsen wie z.B. für ABS durchzuführen. Natürlich kann das bei allen Fahrzeugen durchgeführt werden, nicht nur bei US Anhängern und wie digitale und analoge Kommunikation nebeneinander verlaufen können lässt viele Möglichkeiten zu. Vorteilhaft können auch bereits während dem Betrieb der EMB bekannt gewordene Werte (z.B. Strom, Drehzahl bei z.B. Betätigung) verwendet werden um zukünftig geänderte Einstellungen oder Parameter zu verwenden (also z.B. die Bremse langsamer zu lösen, um z.B. die Lösebewegung leichter stoppen zu können). Bei schlecht auflösenden Messwerten (z.B. wenn nur bestimmte HAL Sensor Positionen gemessen werden können) können Rechenmethoden bessere Werte bilden (z.B. "Observer"), insbesondere kann aber auch bei schlecht daraus ableitbaren Größen (z.B. langsame Geschwindigkeit aus springenden HAL Sensor Positionen) auch die Aktuatormotorsteuerung in einen anderen, dafür geeigneten Betrieb gebracht werden, der z.B. nur das Drehfeld weiterdreht, ohne z.B. dafür eine ermittelte Geschwindigkeit zu verwenden. Es kann dabei auch z.B. der Strom gesteigert werden, bis eine Mitdrehung des Rotors erfolgt.

### "All-Electric-Bike"

Zur Verwendung der EMBs auf z.B. Fahrrädern, Fahrradanhängern o.ä. wird hier vorgeschlagen, ein stabiles Bordspannungsnetz einzurichten, ähnlich von Motorfahrzeugen, nur mit dem Unterschied, dass es bevorzugt von mindestens einer elektrochemischen Spannungsquelle (z.B. Akku, Batterie) und bevorzugt auch von Generatoren gespeist wird, die verfügbare Energiequellen verwenden wie z.B. fahrtbetriebene Generatoren (z.B. Radnabendynamo), Photovoltaik, elektrische, magnetische oder elektromagnetische Felder (z.B. wird durch magnetische Streufelder aus Stromleitungen in Spulen z.B. den Radnabendynamospulen, eine kleine Spannung induziert, die man hochohmig abgreifen kann). Eine vorteilhafte Ausführung ist z.B. mit kleiner Photovoltaik, z.B. an einer fahrtwindgünstigen Verkleidung, zwei Radnabendynamos und zwei Lithiumakkus, wobei die doppelte Ausführung Sicherheit gegen Stromausfall bietet (es können auch andere Kombinationen verwendet werden oder einfache Ausführung) und die Photovoltaik z.B. beide speist. Eine vorteilhafte Schaltung ist z.B. so, dass ein unverwendbarer Akku (Ausfall, Kurzschluss, Sicherheitsabschaltung) nicht das Gesamtbordnetz sicherheits- oder funktionsrelevant hindert, also z.B. noch andere elektrische Quellen die als wichtig eingestuften Funktionen betreiben können. Gegebenenfalls werden auch die Verbraucher so auf die Bordnetze aufgeteilt, dass nicht alle Bordnetze bei Problemen in Verbrauchern (z.B. Kurzschluss, Überlast usw.) gleichzeitig beeinträchtigt werden und zumindest noch ein gefordertes Minimum an Sicherheitsfunktionen (z.B. Bremswirkung) aufrecht bleibt. Verbraucher, die an allen Bordnetzen angeschlossen sind, sollen vorteilhaft so intern ausgelegt sein, dass sie bei internem Fehlverhalten (z.B. Kurzschluss) nicht all diese Bordnetze beeinträchtigen. Verbraucher können möglichst an die Leistungsfähigkeit des mindestens einen Bordnetzes angepasst werden, wie z.B. nichtlineare EMB, eventuell Selbstverstärkung (auch Trommelbremsen, Servo-Trommelbremsen), auch mit mindestens einer Feder, die mit dem elektrischen Aktuator zusammenwirkt. Die Nichtlinearität kann so gestaltet werden, dass die elektrische Leistungsaufnahme bei langen Dauerbremsungen gering ist, auch so gering, dass diese durch die laufende Stromerzeugung versorgt werden können, wie z.B. aus dem mindestens einen Radnabendynamo. Dafür können kurze heftige Bremsungen durch die Auslegung der Nichtlinearität aus einem Stromspeicher erfolgen, z.B. einem Akku, der dann wieder geladen wird. Bevorzugt wird neben diesem mindestens einem Stromversorgungs-Bordnetz auch ein Datenbordnetz verwendet, das die einzelnen Funktionen miteinander verbindet, z.B. mindestens ein CAN oder anderer Bus oder eine drahtlose Übertragung.

### Auch hier kann aus Sicherheitsgründen mehr als ein Bus oder

Datenübertragungssystem verwendet werden, es kann auch ein Bus offen zugänglich für andere Geräte sein und ein weiterer Bus ausschließlich für sicherheitsrelevante Funktionen.

Dieses Bordnetz wird möglichst elektrifizierte Betätigungsorgane versorgen wie z.B. elektrische Reibungsbremsen (z.B. elektromechanisch, elektrohydraulisch), elektrische Gangschaltung, die Steuerung davon (z.B. ABS, Parkbremse, Zusammenwirken mehrerer Bremsen, automatisches Gangschalten oder automatische Übersetzungsanpassung, "blending" - also Zusammenwirken von regenerativem Bremsen und anderen Bremsen wie Reibungsbremsen, gegebenenfalls Antriebssteuerung (z.B. Elektromotor) sowie Lichter wie z.B. Scheinwerfer, Begrenzungslicht, Rücklicht, Bremslicht, Blinker usw. und Zusatzverbraucher wie z.B. Ladeanschluss eines Mobiltelefons.

Es wird hier einerseits eine Anzeige ähnlich einem mehr oder weniger kleinen Armaturenbrett vorgeschlagen, andererseits aber dass die Anzeigen über ein Mobiltelefon oder Tablett-Computer erfolgen, weil die Werte hier auch gespeichert und später ausgewertet werden können und andererseits weil z.B. GPS und Routenplanung mit einbezogen werden kann und Berechnungen erfolgen können wie z.B. einer "optimalen" Geschwindigkeit, z.B. basierend auf optimalem Betrieb der Antriebsmaschine (wozu grundsätzlich auch der Mensch zählt), der augenblicklichen Übersetzungswahl und eventuell automatischen Einstellung davon und z.B. unter augenblicklichen Umweltdaten wie Gegenwind, Temperaturen und Vorgaben wie z.B. max. Reisedauer. Das Mobiltelefon wird auch vorgeschlagen, um die diebstahlgefährdeten Werte am Rad gering zu halten.

Es wird auch vorgeschlagen, das Mobiltelefon mechanisch stabil unterzubringen, z.B. durch eine Halterung z.B. bei oder unter einer möglichen fahrtwindgünstigen Verkleidung. Das Mobiltelefon kann vorteilhaft auch zur Datenkommunikation dienen wie z.B. auch als "Zündschlüssel" (z.B. für Fahrbereitschaft wenn die korrekte App, gepaart mit dem korrekten Gesamtfahrzeug (oder Teilfahrzeug (en), wie z.B. Rad, Radanhänger) den legalen Fahrer ausweist, wozu z.B. auch Verschlüsselung und/oder Eintrag in Datenbank empfohlen wird), Anzeige von Fahrraddaten, Navigation, Kommunikation mit Infrastruktur, Personen oder anderen Fahrzeugen, auch mit einem Anhänger, usw.

Besonders vorteilhaft werden kostengünstig und leicht zugängliche Messwerte empfohlen, wie z.B. Groundspeed aus z.B. Frequenz des mindestens einen Radnabendynamos und/oder aus GPS, der "air speed" (Fahrtwindgeschwindigkeit), bevorzugt aus Geräten ohne bewegliche Teile, also z.B. aus der über z.B. eine Kennlinie ermittelten Luftgeschwindigkeit aus der Heizleistung eines temperaturabhängigen Widerstandes (und gegebenenfalls der Luftdaten wie Temperatur und Druck), der auch strömungsgünstig untergebracht sein kann, z.B. in einer Luftführung, die bevorzugt die Fahrtrichtungkomponente zulässt, an einer Stelle, welche wenig vom Fahrzeug und dessen Personen beeinflusst wird, wie z.B. in einem Scheinwerfergehäuse. Die Erfassung und wenn gewünscht Anzeige dieser air speed wird insofern empfohlen, als dass die Antriebskraft eines im Luftwiderstand bewegten Körpers quadratisch mit der Geschwindigkeit steigt und die Antriebsleistung sogar mit der dritten Potenz. Es bewirkt also z.B. einen großen Unterschied, ob man mit sonst kaum merklichem Wind von z.B. 10 km/h als Gegenwind oder Rückenwind (mit z.B. einem Fahrrad) mit einer GS von 20 km/h fährt. Man kann (ähnlich Flugzeugen) eine "indicated air speed" und/oder eine "calibrated air speed" verwenden, wobei die "indicated" z.B. noch keine Kompensation für den Luftdruck (oder Luftdichte) haben kann, die "calibrated" aber schon diesbezüglich kompensiert sein kann. Die "indicated" hätten den Vorteil, dass sie subjektiv richtiger sein kann, wenn z.B. durch geringeren Luftdruck (oder Luftdichte) weniger air speed angezeigt wird und gleichzeitig der Fahrer weniger von Luftdruck (oder Luftdichte) bewirkten Widerstand empfindet.

Es wird auch vorgeschlagen, dass man dem Fahrer neben üblichem (z.B. GS) auch die doch aussagekräftige air speed zur Anzeige (oder Speicherung bzw. Weiterverarbeitung) anbietet bzw. auch daraus ableitbare Werte wie Antriebsmoment bzw. Antriebsleistung. Diese beiden wären sonst nur aufwendiger messbar (z.B. durch Momentmessung im Antrieb), sind aber bei bekanntem Anteil des augenblicklichen Luftwiderstandes (über air speed) ohne zusätzliche Meßeinrichtung ermittelbar, insbesondere wenn man dem Fahrer eine Kalibrierung anbietet, wie z.B. dass er an einer bekannten Steigung die ohne Treten erreichte Geschwindigkeit einbezieht oder z.B. Tabellenwerte (z.B. Größe, Gewicht).

Mit diesem Bordnetz können auch sicherheitsfördernde Funktionen realisiert werden wie z.B. günstige Bremswirkungsverteilung auf die Räder (auch auf Anhänger), vermeiden von Überschlag, von blockierenden Rädern, energiegünstigem regenerativen Bremsen ("Blending"). Diese sicherheitsfördernden Funktionen können auch aus Sicherheitsgründen sowohl von einer geeigneten am Fahrzeug verbleibenden Elektronik (HW, SW) durchgeführt werden, möglich wäre aber auch ein Betrieb am z.B. Mobiltelefon, wenn ein entsprechend sicherheitstauglicher Ablauf (z.B. mittels App) möglich ist. "Sicherheitstauglich" kann z.B. sein, dass ein Fahrzeug ohne diese Sicherheitsfunktion betrieben werden darf (z.B. ein Fahrrad ohne Überschlagschutz bei zu starkem Vorderradbremsen oder ABS) und auch mit dieser Funktion zusätzlich, wobei z.B. diese Funktion in entsprechendem Ausmaß keine zusätzlichen Sicherheitsprobleme hervorrufen (können) darf.

Ein "all electric bike" muss nicht zwei Räder haben (es kann jede Form und Radzahl haben), es zeichnet sich vor allem dadurch aus, dass eine sinnvolle Ergänzung oder Kombination von Muskelkraft durch andere, bevorzugt elektrische Energie erfolgt, die entweder den Antrieb unterstützt oder übernimmt oder nur andere Funktionen versorgt, wie z.B. Bremsen. Auch die reine Möglichkeit des Fahrens mit Muskelkraft zählt dazu, auch wenn sie nicht genutzt wird. Viele der hier gemachten Vorschläge können auch ohne Muskelkraftmöglichkeit genutzt werden.

Die Muskelkraft muss auch nicht direkt auf den Antrieb wirken, sie kann auch zur Stromerzeugung dienen und sie kann auch von mehreren Personen erfolgen. Damit kann man z.B. die mech. Kraftübertragung einsparen und z.B. durch Steuerung bzw. Regelung von Stromerzeugung und el. Antrieb dem Fahrer eine optimale bzw. angenehme Treteinstellung bieten, ähnlich einem Automatikgetriebe. Durch Batterieladen kann das auch gespeichert und jederzeit, auch später genutzt werden. Sowohl Stromerzeugung als auch Stromspeicherung können z.B. auch als Stromversorgung für andere Zwecke z.B. über Stecker zur Verfügung gestellt werden, z.B. als 12V Campingversorgung, USB-Versorgung, aber auch alle anderen Versorgungen, die auch umschaltbar oder einstellbar sein können, incl. Netzspannung (hier werden die nötigen Sicherheitseinrichtungen empfohlen), auch als Notstromversorgung. Auch Einbeziehen zusätzlicher Quellen wird hier als möglich empfohlen, wie z.B. Photovoltaik (am Fahrzeug oder auch zusätzlich) oder andere wie z.B. Brennstoffzelle mit z.B. Campinggas oder Ladevorrichtungen der Fahrzeugbatterie (z.B. vom Netz oder 12V). Auch bidirektionale Wandler werden empfohlen, wie z.B. für Netz und Fahrzeugbatterie, wobei z.B. sowohl Batterieladung erfolgen kann als auch (gewandelt) Batteriestromabgabe an ein Netz oder Verbraucher.

Mit dieser elektrischen Nutzung der menschlichen Kraft werden natürlich auch noch andere Möglichkeiten geöffnet, wie z.B. dass hier vorgeschlagen wird, das Fahrzeug gegebenenfalls auch als z.B. Fitnessgerät, Heimtrainer o.ä. zu nutzen und die erzeugte Elektrizität z.B. zu speichern oder einzuspeisen und gegebenenfalls Anzeigen am Fahrzeug darstellt wie Leistung, Arbeit, Geschwindigkeit bzw. auch z.B. die Animation einer Landschaft vor dem trainierenden auf einem Bildschirm.

Fahrräder haben heute meist neben der Beleuchtung keine Lichter. Hier wird vorgeschlagen, dass Fahrräder, deren Anhänger u.ä. neben einer stabileren Beleuchtung (durch Bordnetz und feste Montage am Fahrzeug) auch die üblichen Funktionen wie Bremslicht und Blinker bekommen, eventuell auch Warnblinkanlage oder Licht hinten (ähnlich Rückfahrlicht). Dem können Normen und Gesetzte entgegenstehen, wenn z.B. zwar kein Bremslicht vorgeschrieben ist, das aber auch bedeutet, dass damit kein eigenes Bremslicht vorhanden sein darf. In derartigen Fällen wird vorgeschlagen, dass man die Wirkung solcher durchaus sicherheitsfördernden Lichter gesetzeskonform herbeiführt und z.B. bei gewisser Bremswirkung oder Betätigung das rote Rücklicht in der Helligkeit vergrößert oder z.B. bei Blinken einen Teil des roten Rücklichts soweit helligkeitsverändert, als dies zulässig und förderlich ist. Eine Lichtsteuerung über Funk (Bremslicht, Blinker, usw) ist z.B. bereits in US4859982 für Anhänger und in DE000002726322A1 für Fahrradkopfbedeckungen vorgeschlagen. Damit wird hier vorgeschlagen, dass sowohl fix am Fahrzeug montierte als auch als nicht zum Fahrzeug zählende lichtabgebende Teile beliebig, also auch drahtlos gesteuert werden können, z.B. um die Sicherheit bzw. Aufmerksamkeit zu fördern und gegebenenfalls, um die Aufgabe der Gesetzeskonformität zu lösen, also ob es z.B. Teil des Fahrzeuges sein muss bzw. nicht sein darf (und z.B. als beförderter Gegenstand nicht fix mit dem Fahrzeug vereint sein darf), womit z.B. Personen (Fahrer, Beifahrer, Passagiere) oder Gegenstände, selbst Tiere mit Lichteinrichtungen versehen werden wie z.B. Jacken, Helme, Halsbänder, Armreifen, elastische Bänder (der Anbringung sind keine Grenzen gesetzt) oder Lichteinrichtungen eingearbeitet werden bzw. die Lichteinrichtungen gesetzeskonform zum Fahrzeugteil werden. Auch wie auch immer Bildschirmähnliche Anzeigen werden empfohlen, um z.B. Sicherheit, Aufmerksamkeit bzw. Gesetzeskonformität zu erzielen, so könnte z.B. eine OLed Folie z.B. ein Firmenlogo zeigen, das dann in einen Blinken bzw. Bremsen andeutenden Bildschirminhalt zu wechselt, um z.B. nicht als gesetzlich nicht möglicher Blinker eingestuft zu werden.

Auch andere übliche Einrichtungen können ersetzt werden: wenn z.B. keine Hupe erlaubt ist, könnte ein anderer Signalton auf Knopfdruck möglich sein, wie z.B. ein klingelähnlicher oder sogar ein vom Fahrer auswählbarer. Als Diebstahlschutz könnte man die Funktionen bei illegalem Betrieb entweder verhindern oder auch sogar zur Aufmerksamkeitswirkung nutzen, indem z.B. besondere, auffällige Signale abgegeben werden. Natürlich können auch andere Meldungen abgesetzt werden wie z.B. Position über Telefonnetz oder WIFI. Auch Infrastruktur kann gesteuert werden wie z.B. Ampeln (u.U. unter Bedingungen) schalten oder Eingänge öffnen.

### Mehrnormen(verbund)fahrzeug

Ein Zukunftstrend ist sowohl die Mischung von Fußgängern und langsamen, auch angetriebenen Fahrzeugen (z.B. Elektroroller und Fahrräder in Fußgängerzonen) als auch das Zurücklegen größerer Distanzen auf z.B. Radwegen oder auch mit größerer Geschwindigkeit (z.B. im Straßenverkehr mit Autos). Letzteres würde z.B. für ein Elektromotorrad oder einen Elektrolieferwagen mit z.B. PKW-Zulassung sprechen und damit könnte z.B. die Einfahrt in eine Fußgängerzone verboten sein. Für ein E-Lieferbike könnte aber durch eine auf z.B. 25 km/h beschränkte Betriebserlaubnis die Einfahrt erlaubt sein. Damit wäre ein "umschaltbares" Fahrzeug wünschenswert, dass z.B. mehrere Zulassungen bzw. Typisierungen (all diese Bezeichnungen werden hier als Fahrzeugkategorien zusammengefasst) hat und eine davon gesetzeskonform auswählt. Hier wird eine gesetzeskonforme "Umschaltung" der Fahrzeugkategorien vorgeschlagen, die technische Eingriffe durchführen kann, also z.B. die augenblickliche Höchstgeschwindigkeitsbeschränkung aktivieren bzw. andere Gesetzeskonformitäten technisch herstellen wie z.B. das Gewicht oder die Achs- oder Radlasten erfassen und den Betrieb in der gewählten Kategorie nur ermöglichen, wenn alle gesetzlich vorgeschriebenen Bedingungen erfüllt sind bzw. diese geforderten Bedingungen umsetzen: so kann z.B. ein Blinker an einem Fahrrad nicht gesetzlich erlaubt sein, in einer anderen Fahrzeugkategorie aber vorgeschrieben sein und damit wird er je nach augenblicklicher Kategorie von der Fahrzeugsteuerung verwendet oder nicht. Allgemein besteht hier ein Mehrnormen(verbund)fahrzeug aus mindestens einem beweglichen Gegenstand, bei dem auch mindestens ein weiterer mechanisch oder durch Steuerung mit bewegt werden kann (z.B. Fahrrad mit Anhänger, Lieferwagen, Boot, Flugzeug), wobei ein Vorteil entsteht oder entstehen wird, wenn die Betriebsbedingungen geändert werden können (z.B. Einfahrt in Fußgängerzone, Umweltschutzgebiet) wie z.B. durch ab- oder umschalten von Antrieben, Geschwindigkeitskontrolle durch Bremsungen etc.

Der Fahrzeugkategorienwechsel kann z.B. durch Kenntlichmachung erfolgen, so dass z.B. ein PKW oder Moped KFZ-Kennzeichen umgeklappt werden muss, um diese Fahrzeugkategorie vorübergehend aufzugeben und auf eine z.B. E-Bike Fahrzeugkategorie eingeschränkt zu sein. Dazu kann z.B. ein Stehenbleiben nötig sein, damit das Fahrzeug in der neuen Fahrzeugkategorie nur dann wieder in Betrieb genommen werden kann, wenn z.B. die Gewichtsbedingungen erfüllt sind und ab dann auch z.B. die Geschwindigkeit technisch begrenzt wird, auf z.B. 25 km/h. Der Kategorienwechsel kann natürlich beliebig bzw. sinnvoll erfolgen.

In Fig.11 ist anhand von einer Steuerung 10 oder Regelung (bevorzugt elektrisch oder Elektronisch) und Eingangsdaten 101 (z.B. Messwerte, z.B. Geschwindigkeit, Fahrzeuggewicht, Achs- oder Radlasten o.ä.) Antrieb bzw. Bremse 2201 und Ausgaben 2204 (z.B. Blinker, Bremslicht) sowie Ein- und Ausgaben an/von Fahrer 2202 dazu führen können, dass z.B. mindestens ein Kennzeichen z.B. umgeklappt wird, Überschreitungswarnungen ausgegeben werden bzw. Ein- und Ausgaben an / von anderen, z.B. Infrastruktur 2203 gemacht werden.

Fig.11 zeigt damit, wie ein Mehrnormen(verbund)fahrzeug im nötigen Ausmaß mindestens einen Antrieb und/oder mindestens eine Bremse (bevorzugt eine indirekt oder direkt elektrisch betätigte wie z.B. elektromechanisch, auch nichtlinear betätigte) so steuert, dass mindesten eine Fahrzeugkategorie eingehalten wird (z.B. durch Freigabe oder Abschalten bzw. Steuern des Antriebs), auch Betätigen mindestens einer Bremse, Nutzung (oder nicht) von Fahrzeugfunktionen wie Blinker, Bremslicht, Licht. Wechsel einer Fahrzeugkategorie kann durch Ein- bzw. Ausgaben vom Fahrer erfolgen, z.B. Kennzeichen umklappen (z.B. händisches Umklappen, aktuatorbetätigtes Umklappen, bildschirmartiges Kennzeichen) bzw. durch z.B.

Überschreitungswarnungen bzw. Verhindern eines unzulässigen Betriebs. Auch ohne Änderung am Fahrzeug kann ein Fahrzeugkategoriewechsel erfolgen, indem z.B. Überschreitungswarnungen ausgegeben werden. Eine Überwachung kann auch von außen erfolgen, z.B. durch drahtlose Signale (z.B. Geschwindigkeit, Ort, Identifikation) an eine Infrastruktur oder Überwachungspersonen. Diese Funktion kann auch getrennt von der Steuerung erfolgen, z.B. von einem Mobiltelefon (z.B. GPS Meldungen über WIFI, Bluetooth o.ä.) des Fahrers aus oder z.B. durch Radar und Ausgabe der Infrastruktur, z.B. Warnsignale. Als Eingänge an die Steuerung können z.B. mindestens eine Geschwindigkeitsmessung, Kraftmessung, Lastmessung, Einfederwegmessung dienen, aber auch die Infrastruktur. So kann z.B. durch GPS, Tafeln, drahtlos ein Fahrzeugkategoriewechsel an Steuerungseingänge gelangen und auch selbsttätig wirken. Auch Änderungen im Verbund wie an- oder abkuppeln von Anhängern kann als Steuerungseingang einen Fahrzeugkategoriewechsel durchführen oder verfügbar machen. So kann z.B. die Antriebssteuerung oder Bremsung eines Zugfahrzeuges bei ankoppeln eines Anhängers beeinflusst werden oder ein Anhänger z.B. eine Freigabe für höhere Geschwindigkeiten erlangen, wenn das Zugfahrzeug geeignet ist, dies aber z.B. nur wenn keine Geschwindigkeitsbegrenzung von außen erfolgt (z.B. außerhalb Fußgängerzone). Auch willkürliche Betätigung zum Fahrzeugkategoriewechsel ist möglich, um das Mehrnormen(verbund)fahrzeug z.B. schiebend betreiben zu dürfen (z.B. mit oder ohne Antriebskraftunterstützung).

### Bremskonzepte

Die hier vorgestellten Vorschläge, Beschreibungen usw. beziehen sich auf zu bremsende Gegenstände im Allgemeinen (wie z.B. Hebevorrichtungen, Maschinenteile, Propellerwellen, Flugzeuge usw.), aber insbesondere auf Fahrzeuge aller Art, wie z.B. PKW, LKW, ein- und mehrspurige, wie z.B. Motorräder, Moped, Fahrräder, aber auch Anhänger für alle Fahrzeuge und auch auf die Kombination, also z.B. Zugfahrzeug kombiniert mit z.B. Anhänger, wobei kombiniert meist mechanisch ist (z.B. Deichsel, Sattel usw.), aber grundsätzlich auch anders sein kann, wie z.B. durch Steuerung sich gemeinsam verhaltend. Diese Fahrzeuge oder verbundenen Fahrzeuge werden hier als Verbundfahrzeuge bezeichnet, also z.B. Zugfahrzeug oder z.B. Anhänger oder z.B. beide zusammen. Insbesondere wird auch eine Palette an Lösungen vorgeschlagen: Es kann z.B. sinnvoll sein, einen Anhänger anzubieten, der von sich aus mit einer (wie hier dargestellten) verzögerungsgesteuerten Bremse gut bremsen kann, ohne dass er Einrichtungen außerhalb des Anhängers (wie z.B. Geber, Erfassung der Fahrerbremsbetätigung usw.) benötigt. Ein zusätzliches Angebot an den Nutzer kann z.B. zusätzliche Stabilität (wie z.B. ABS, ESC, Schlingerkontrolle) sein und eine weitere Angebotsstufe kann z.B. zusätzliche Bremswunscherfassung des Fahrers sein, um z.B. Bremsungen schneller einzuleiten bzw. z.B. genauer dem Fahrerwunsch zu folgen. Weiters in der Angebotspalette kann z.B. eine elektromechanisch betätigte Zugfahrzeugbremse sein, z.B. eine Vorderradbremse eines z.B. Fahrrades, die als weitere Angebote z.B. auch mit z.B. ABS bzw. z.B. Überschlagsverhinderung weiter versehen werden kann. Eine weitere Ausbaumöglichkeit kann z.B. sein, dass mindestens eine Elektromechanische Bremse (EMB) auch nichtelektrisch betätigt werden kann, z.B. auch über Seilzug. Hier werden bevorzugt nichtlineare EMBs vorgeschlagen, also solche, bei denen Belagsbewegung und Aktuatorbewegung nicht linear zusammenhängen, weil sie für die gezeigten Verfahren Vorteile haben. Wenn die Nichtlinearität an verschiedenen Stellen der Betätigung für verschiedene Aufgaben optimiert ist, statt nur einer Optimierung (z.B. Betrieb des Aktuators in maximaler Leistung), können die folgenden Empfehlungen besonders gut erreicht werden. Eine Kombination aus regenerativem Bremsen und Bremsen mit der EMB ist hier natürlich möglich, z.B. in dem das regenerative Bremsen bevorzugt wird und nur der noch zusätzlich nötige Verzögerungseffekt durch die EMB erzeugt wird.

### Bremsung aus Verzögerungsmessung

In Fig.2 ist mit Geschwindigkeitsabnahmen 18 dargestellt, wie aus einer ermittelten (z.B. gemessenen) Verzögerung eine Bremsung eines Teils eines Verbundfahrzeugs (z.B. eines Anhängers) abgeleitet werden kann: Ein Fahrer (oder auch automatisches Fahren) stellt einen Bremswunsch (z.B. "schwache Bremsung unverzögerter Wunsch 1801" in Fig.2) ein, z.B. durch bestimmte Pedal- oder Hebelstellung. Die Betätigungsgeschwindigeit und andere Zeitverzögerungen würden für das Verbundfahrzeug z.B. den Verlauf "schwache Bremsung 1802" ergeben. Der Verlauf "etwas zu stark 1803" wäre weniger wünschenswert, aber z.B. aus Regelungsgründen nicht besser erreichbar.

Wenn der "Bremswunsch" nicht direkt erfassbar ist (wenn z.B. keine Werte der Pedal- oder Hebelstellung aus einer Betätigungsmessvorrichtung 2605 in Fig.18 vorhanden sind), wird vorgeschlagen, dass die Bremserkennnungsvorrichtung 2601 in Fig.18 eine Verzögerungsmessung in Form eines Verzögerungssensors 2602 oder eine Verzögerungsberechnung 2603 am Verbundfahrzeug erfolgen kann, die zuerst jene Verzögerung misst, die von einem Teil des Verbundfahrzeugs (z.B. dem Zugfahrzeug) erzeugt wurde. Nun würde in einem einfachen Verfahren z.B. ein zweiter Fahrzeugteil (z.B. Anhänger, im Folgenden "Anhänger") schließen, dass die zusätzlich erforderliche eigene Bremskraft z.B. "eigene Masse mal gemessene Verzögerung" sein könnte, diesen Wert noch mit einer Korrektur k behandeln (z.B. multipliziert) und so insgesamt, d.h. für das gesamte Verbundfahrzeug, eine Verzögerung entsprechend der günstigen Kurve "schwache Bremsung 1802" bzw. möglichst entsprechend des Bremswunsches erreichen.

Da aber nach dem vorgeschlagenen Verfahren zu der anfangs gemessenen Verzögerung jene der sich aufbauenden Bremsung des Anhängers hinzukommt, kann sich bei mangelhafter Abschätzung der erforderlichen Anhängerbremswirkung auch z.B. der Zustand "etwas zu stark 1803" einstellen. Das kann tolerierbar sein, auch indem z.B. der Fahrer (oder Automat) den Bremswunsch zusätzlich etwas reduzieren kann. Es könnte aber auch der Zustand ", eskalierende Bremsung 1804" eintreten, wenn die durch die Verzögerungsmessung ausgelöste Bremsung des Anhängers so viel zusätzliche Verzögerung ergibt, dass sie nicht durch eine Reduktion des Bremswunsches kompensiert werden kann. Das zusätzliche Mehr-Bremsen des Anhängers würde sich dann bis zu einer Grenze (z.B. Blockieren von Rädern) aufschaukeln, also jedes Mehr-Bremsen so viel mehr Verzögerung verursachen, dass eine davonlaufende Erhöhung (in Fig.2 ", eskalierende Bremsung 1804") eintritt.

Ein gegenteiliger Effekt ist bei "starke Bremsung unverzögerter Wunsch 1805" angedeutet. Wie dargestellt könnte z.B. die durch Verzögerungsmessung eingestellte Bremsung "starke Bremsung 1806" dem unverzögertem Wunsch nicht folgen. Gründe dafür könnten Grenzen wie z.B. Blockieren sein oder ein Korrekturwert k, der z.B. für schwache Bremsungen günstig ist, aber weniger geeignet für starke.

Daher werden hier bereits Verbesserungen vorgeschlagen. Erstens kann der Korrekturwert k von Einflüssen abhängig gemacht werden, wie z.B. Höhe der gemessenen Verzögerung, d.h. es kann z.B. bei starker Verzögerung ein höherer Korrekturwert verwendet werden, was unterschiedlich realisierbar ist, z.B. über Kennlinien oder über Gleichungen wie a+bx+cx. D.h. es kann auch für besondere (z.B. schwache) Bremsungen besonders wenig oder gar nicht mit dem Anhänger gebremst werden, auch um z.B. ein absichtliches ungebremstes Bergabrollen zu erlauben. Die erreichte Verzögerung bzw. damit zusammenhängende Werte wie z.B. zeitlicher Aufbauablauf der Verzögerung kann als Maß des Beitrages der Anhängerbremswirkung verwendet werden und daraus Schlüsse, Annahmen bzw. Verbesserungsmaßnahmen abgeleitet werden, wie z.B. dass eine Abweichung zum erwarteten z.B. einer verbesserten Annahme des Anhängergewichts bedarf oder z.B. die EMBs anders reagieren als erwartet. Daraus kann natürlich wieder ein verbesserter Korrekturwert k gewonnen werden.

Zweitens wird hier vorgeschlagen, dass für eine vorgesehene Ermittlung der Korrektur k die Stabilität gegen Eskalation untersucht wird. Dies kann mit Modellberechnungen, welche zumindest die wichtigsten Einflüsse, wie z.B. Massen, Kräfte, Verzögerungen, beinhalten und/oder mit Versuchen unter unterschiedlichen Bedingungen, wobei bevorzugt auch verschiedenen Einflüsse wie Zugfahrzeugmasse, Anhängermasse, Blockiergrenze (eventuell Radlasten) usw. einbezogen werden sollen. Für die obige Abschätzung der erforderlichen Anhängerbremswirkung ist bisher die Kenntnis der Anhängermasse notwendig. Diese kann z.B. relativ konstant und bekannt sein, wie z.B. bei Wohnanhängern, sie kann einstellbar sein (auch z.B. über Mobiltelefon oder z.B. in Stufen wie voll-leer) oder sie kann aus beobachtbarem Verhalten, wie z.B. Einfederung, Bauteillagen, Schwingungen, Beschleunigungs- oder Bremsverhalten, Fahrerverhalten etc.,) abgeleitet und/oder auch gelernt oder geschätzt werden, z.B. mittels Machine Learning, Fuzzy Logic o.ä. Für Fälle, bei denen die Masse nicht gut bekannt bis unbekannt ist, wird vorgeschlagen, dass sie z.B. mit in den Korrekturwert k einbezogen werden kann (der z.B. vom Fahrer vorgegeben oder angepasst werden kann).

Eine Alternative für den Umgang mit der Ungenauigkeit der Anhängermassenermittlung wird im Folgenden dargestellt. Es wird vorgeschlagen, mittels Modellrechnung zu untersuchen, wie die verzögerungsgesteuerte Bremsung auf verschiedene Kombinationen von tatsächlicher Anhängermasse, der der Bremsung zugrunde gelegte Anhängermasse, Fahrzeugmasse und anderen Einflussfaktoren, wie z.B. Bremswunsch, Radhaftung usw., reagiert. Daraus kann eine Einstellung von z.B. Korrektur k und/oder zugrunde gelegter Masse usw. ermittelt werden, die wesentliche Betriebsbereiche gut abdeckt. So kann z.B. eine "starke Bremsung 1806" (Fig.2) mit der dieser Verzögerung zugeordneten Korrektur k dem Bremswunsch und sonstigen Anforderungen entsprechen, also z.B. grob g/2 bei einem voll beladenen Anhänger erreichen. Eine übliche Bremsung könnte in diesem Fall (voller Anhänger) mit aus der Verzögerung abgeleiteter Korrektur k wie "schwache Bremsung 1802" verlaufen. Bei leerem Anhänger könnte dasselbe k aber z.B. eine deutliche Überbremsung bewirken. Entscheidend ist dann die Analyse, ob eine "Eskalation", d.h. eine nicht durch Anpassen des Bremswunsches kontrollierbare Zunahme der Bremswirkung, stattfinden kann. Sollte sich zeigen, dass selbst unter ungünstigsten Verhältnissen, z.B. schwerer Anhänger und minimales Zugfahrzeuggesamtgewicht, keine Eskalation eintreten kann, könnte man verfahrensgemäß das angewandte Korrekturverfahren, d.h. die Ableitung des Faktors k bzw. die eventuelle Berücksichtigung einer Anhängermasseschätzung, akzeptieren und in die Anhängerbremsung implementieren, gegebenenfalls mit zusätzlicher Eingabe- oder Einstellmöglichkeit für Korrektur k bzw. Anhängermasse bzw. auch zusätzlichen Verbesserungen und Ergänzungen. Bevorzugt würde diese Implementierung auch verhindern, dass Eingaben gemacht werden können, die eine Eskalation zur Folge hätten, bzw. solche Eingaben, die z.B. zu wenig Vollbremswirkung entfalten, oder solche mit anderen unerwünschten Wirkungen.

Als hilfreich kann weiters die Tatsache verwendet werden, dass z.B. bei wenig beladenem Anhänger recht schnell eine Überbremsung des Anhängers bis an die Blockiergrenze eintritt, was aufgrund der bei leerem Anhänger geringen erreichbaren Bremskraft vom Fahrer als unauffällig empfunden werden kann. Den real verursachten Schlupf (oder ein anderes Maß für Blockierneigung) kann man auch verwenden, um daraus z.B. eine kleinere Anhängermasse oder eine anderer Korrektur k abzuleiten und in der Folge in der Anhängerbremsung zu berücksichtigen. Es können neben der Anhängermasse- oder Radlastermittlung auch zusätzliche hilfreiche Signale in die Steuerung der Anhängerbremse einbezogen werden, wie z.B. ob der Bremslichtschalter angesprochen hat und/oder ob der Antrieb antreibt bzw. ob die Bremsung nicht von dem Anhänger unterstützt werden soll, wenn z.B. das Zugfahrzeug alleine (z.B. zum Batterieladen) bremsen möchte.

Natürlich kann dieses Verfahren verbessert werden, in dem z.B. Fahrereingaben in der Bremserkennungsvorrichtung 2601 in Fig.18 mit verwendet werden oder daraus resultierende Effekte. So kann z.B. eine Betätigungskraft (oder Position oder beides) ermittelt werden, an die Bremssteuerung wie auch immer weitergeleitet werden und in der Bremssteuerung mit verwendet werden, um z.B. rasch auf eine Betätigungskraft zu reagieren. Hilfreich kann z.B. auch eine Auflaufkraft verwendet oder einbezogen werden bzw. eine durch die Auflaufkraft verursachte Erkennung wie z.B. Schalterstellung.

Da eine mit diesem Verfahren ausgelegte Steuerung bzw. Regelung bevorzugt auf die Kräfte in den Teilen (z.B. Bremskraft im Zugfahrzeug und Anhänger) Rücksicht nimmt, kann es auch bei Auflaufbremsen verwendet werden, um z.B. die Deichselkräfte unter verschiedenen Bedingungen zu ermitteln bzw. um unübliche Auflaufbremsungen zu gestalten: normalerweise regelt eine Auflaufbremse so, dass im Vergleich zu den Fahrzeuggewichten eine nur kleine Auflaufkraft übrig bleibt. Es kann aber z.B. (auch situationsabhängig) wünschenswert sein, mit einem ziehenden statt einem schiebenden Anhänger zu bremsen. Mit dem oben gezeigten Verfahren lassen sich natürlich auch "ziehende" Anhängerbremsungen einstellen (in dem z.B. der Sollwert nicht wie bei üblichen Auflaufbremsen klein bis Null ist, sondern jeden anderen Wert haben kann, z.B. einen bestimmten ziehenden) und vor allem auch handhaben. Würde nur die Deichselkraft als Regelgröße zur Verfügung stehen, könnte eine ziehende Anhängerbremsung nicht mehr gelöst werden, denn ein Ende der Zugfahrzeugbremsung würde in bestimmten Fällen nach wie vor eine ziehende Anhängerbremsung beibehalten bzw. u.U. sogar auf noch mehr Ziehen trotz Bremsbeendigung regeln. Mit obigem Verfahren auf Basis der beobachteten Verzögerung wäre eine Bremsung jedoch immer kontrollierbar. Natürlich kann es für das Verfahren hilfreich sein, auch andere Eingangsgrößen einzubeziehen, wie z.B. den Fahrerbremswunsch laut Bremspedal- oder Hebelstellung bzw. die entsprechende Betätigungskraft. So könnte z.B. abhängig vom Fahrerwunsch (bzw. einem Bremsassistenten bzw. automatischen Fahren usw.) ein schiebender, kraftloser oder ziehender Anhänger eingeregelt werden, auch (z.B. zeitlich) veränderlich oder Bremswunschabhängig wobei empfohlen wird, ABS mit einzubeziehen, da z.B. ein zeihender Anhänger leichter ins blockieren käme als ein nicht-ziehender. Als einfache Lösung oder Teil einer komplexeren wird auch vorgeschlagen, dass z.B. ein ziehender Anhänger (z.B. durch Fahrerwunsch, Verzögerungsermittlung, Auflaufkraftermittlung usw.) eingeregelt wird, der insbesondere bei deutlich bis stark ziehend früh in die ABS Blockiervermeidung kommt (z.B. in dem die EMB Ansteuerung auf einen als noch nicht blockierend angenommenen oder ermittelten Wert zurückgenommen wird). Damit könnte man dem Fahrer eine relativ starke aber stabile Bremswirkung vermitteln. Das kann auch ergänzend oder an Stelle einer Anhängermasse-, Achslast-, Radlast- usw. Ermittlung verwendet werden, in dem genutzt wird, dass ein leichter Anhänger bei geringerer Bremsbetätigung an die Blockiergrenze kommt, aber ein schwerer erst bei mehr Bremsbetätigung und somit über die Blockiervermeidung ungefähr Anhängermasse-, Achslast-, Radlast- usw. richtig gebremst wird, auch ohne dass eine eigene Erfassung dazu nötig ist (aber natürlich hilfreich einbezogen werden kann). Natürlich wird auch empfohlen, das Blockier- bzw. Schlupfverhalten (z.B. ab wie viel Bremsansteuerung wie viel Schlupf eintritt) zu verwenden, z.B. als Anhängermasse-, Achslast-, Radlast- usw. Schätzung.

Neben Unterdrücken von häufigem Ändern der in die EMB gelangenden Sollbremsvorgabe (welches zu keinen besonderen Verbesserungen des Gesamtbremsverhaltens beiträgt) wird empfohlen, auch andere sich unangenehm äußernden Sollbremsvorgaben zu unterdrücken, so z.B. kleine Verzögerungs- oder Auflaufkraftwerte bzw. Änderungen nicht zu Bremsung zu verwenden, da dies z.B. Nullpunkttoleranzen, Tretschwingungen, Störungen aus z.B. Fahrbahn sein können bzw. nicht einem Bremswunsch zugeordnet. Auch z.B. ein gewisses Gefälle kann ohne Bremswirkung versehen werden, wenn es z.B. rollend wirken ablaufen soll.

Es wird auch eine Erweiterung bzw. Abänderung des oben gezeigten Verfahrens vorgeschlagen, dass obige Verzögerungsmessung wie auch immer anders gewinnen kann, z.B. aus Auflaufkraftermittlung bzw. Wirkungsermittlung wie z.B. Schalterstellung, aber auch z.B. aus Raddrehzahlveränderung. Auch hier ist es vorteilhaft, direkte Fahrereingaben mit zu verwenden wie z.B. Betätigungskraft bzw. Position. Während eine übliche Auflaufbremse einen (oft proportionalen) Regelkreis darstellt, der versucht, eine gewisse (meist kleine Auflaufkraft) mit (oft nur geringer) Regelverstärkung konstant zu halten, wird hier empfohlen für die Auflaufkraftermittlung mindestens einen Sensor bzw. Schalter zu nutzen, das Signal so zu filtern, dass sich einerseits eine kurze Verzögerungszeit ergibt aber andererseits eine gute Störungsunterdrückung (z.B. mit Analog- oder Digitalfilter auch höherer Ordnung). Bevorzugt wird diese elektronische Regelung so ausgelegt, dass einerseits ein gewünschtes Verhalten entsteht, aber andererseits jene kurzeitigen Änderungen an der Bremseinstellung unterdrückt werden, die für ein normales Bremsverhalten keinen besonderen guten Beitrag leisten, aber ständige Aktuatorenergie verwenden würden. Das kann mit üblichen Mitteln wie z.B. Hysterese erfolgen. Es wird auch empfohlen, den durch die elektronische Auflaufregelung Soll-Ist-Vergleich günstig zu gestalten (was bei üblichen Auflaufbremsen wenig möglich ist): Die Auflaufkraft kann elektronisch zu einer kleinen ausgeregelt werden und es wird auch ein besseres Regelverhalten empfohlen, also z.B. proportional-integral-differential (PID). Es wird empfohlen, die damit üblicherweise erreichbare Verbesserung anzuwenden, so dass z.B. die PID Parameter so gesetzt werden, dass sich z.B. eine gute Impulsantwort ergibt, also die EMB z.B. zwar schnell betätigt, aber auch gut an den Zielwert annähert, also z.B. nicht oder nicht unangenehm überschwingt. Es wird empfohlen, hier das Betätigungszeitverhalten des Aktuators für die PID Parameterermittlung mit einzubeziehen bzw. zu berücksichtigen. Weiters wird auch empfohlen, dass der Soll-Ist-Vergleich bei der elektronischen Auflaufregelung gar nicht notwendigerweise auf null oder wenig Auflaufkraft einregeln muss, sondern auch auf andere Sollwerte, z.B. auf ziehenden Anhänger einregelt, was z.B. ein gutes Bremsgefühl ergeben kann. Besonders bei solchen Sollvorgaben wird empfohlen, dass Zusatzinformationen verwendet werden, wie z.B. Fahrereingabe, um den ziehenden Zustand bei Beendigung des Bremswunsches abzustellen. Auch z.B. eine Verzögerungsmessung kann verwendet werden, um z.B. einen ziehenden Zustand bei Rücknahme des Bremswunsches zurückzunehmen, wenn z.B. der Fahrer durch weniger Bremsen weniger Verzögerung verursacht und damit die Anhängerbremsung vermindert wird. Man sieht also, dass obige Verzögerungsgesteuerte Bremsung und diese elektronische Auflaufbremsung auch als gemeinsame Aufgabe behandelt werden können bzw. sollen. Die Sollvorgabe kann sich auch ändern, z.B. über die Zeit, über die Beladung, über ABS Verhalten usw. Bei jeder Art von Sensorsignalverwendung (z.B. aus Handkraft, Pedalkraft, Seilzugkraft, Auflaufkraft) wird auch empfohlen, dass gegebenenfalls eine Nullpunktstabilisierung vorgesehen wird, die einen verstellten Nullpunkt oder Ausgangswert (z.B. jenen, der ohne Betätigung entsteht und sich z.B. über Temperatur bzw. Zeit ändert) stabilisiert, z.B. dass der Minimalwert dieses Signals als Ausgangsbasis dient, worauf sich das Nutzsignal bezieht. Dazu werden auch ausschließende, beruhigende, mittelnde usw. Verfahren empfohlen, dass z.B. nicht eine kurze Störung als neuer Bezugswert gilt und z.B. eine z.B. beim Einschalten der Bremselektronik etwa vorliegende echte Betätigung nicht zum Bezugswert wird. D.h. es wird empfohlen, z.B. nur längere Minimalwerte anzunehmen bzw. z.B. unplausible auszuschließen, aber insgesamt zu berücksichtigen, dass z.B. nach längerem Stillstand in einem für den Betrieb der Bremse nicht bis kaum störendem Ausmaß wieder ein Bezugswert zur Verfügung steht, sei es ein früher, der neue oder eine Verknüpfung der beteiligten Bezugswerte. Um z.B. bei einer Hydraulikbremse ein Betätigungssignal zu erhalten, wird empfohlen, u.a. einen Drucksensor in die Hydraulikleitung einzufügen bzw. anzufügen, z.B. abzweigend. Für Krafterfassung werden die üblichen Aufnehmer, die z.B. auf Dehnung beruhen (z.B. Dehnmessstreifen) empfohlen oder z.B. "Force Sensing Resistors" (FSR). Das dargestellte Bremssystem besteht natürlich aus Teilen wie z.B. Stromversorgung, Prozessorschaltung, Sensor, Aktuator. Aus z.B. Sicherheits- und/oder Verfügbarkeitsgründen können Teile oder das Gesamtsystem doppelt oder mehrfach vorhanden sein. Eine mögliche Lösung wären z.B. zwei EMBs, wobei z.B. jede ihren eigenen Generator (für z.B. Stromversorgung, Raddrehzahlermittlung für z.B. ABS) und ihren eigenen Aktuator hat, so angeordnet bzw. betrieben, dass bestimmte Ausfälle unwahrscheinlich werden, also z.B. längeres Blockieren oder Nicht-Bremsen z.B. beider Räder. Auch eine zusätzliche nichtelektrische Betätigungskraftübertragung an zumindest eine EMB kann z.B. vorgesehen werden, auch so gestaltet, dass sie z.B. erst ab einem bestimmten Betätigungsausmaß z.B. nur "notfalls" zur Wirkung kommt. Die Bremssteuerung kann Temperaturen (z.B. der Reibpaarung wie Bremsscheibe, Trommel usw. mit z.B. Belägen) aus z.B. Messung bzw. z.B. Modellierung verwenden. Eine Abspeicherung wäre auch möglich, kann aber aufgrund der sehr vielen verschiedenen Entwicklungen der Zustände (z.B. über Zeit, Geschwindigkeit, Bremswirkung) sehr umfangreich werden, weshalb eine sich mit dem Betrieb der Bremse mitentwickelnde Simulation empfohlen wird. Als Modellierung wird vorgeschlagen, dass die Bremsleistung (z.B. Bremsmoment mal Winkelgeschwindigkeit) als Eingang in die modellierte Reibpaarung mit Wärmewiderständen (z.B. Luftkühlung bei Stillstand bzw., geschwindigkeitsabhängig, Wärmestrahlung usw.) und Wärmekapazität(en) geht und weiters an Teile wie z.B. Bremsbeläge, Sattel, Ankerplatte einer Trommelbremse, Gehäuse, Aktuator. Diese Teile können auch mehrfach bzw. doppelt simuliert werden, wie z.B. Außenbordbelag, Innenbordbelag bzw. Bremsschuhe unterschiedlicher Selbstverstärkung und die Bremsleistung kann entsprechend auf die Teile aufgeteilt werden. Dabei können für die Simulation z.B. Tiefpassfilter (Wärmewiderstand, Wärmekapazität) bzw. kaskadierte Tiefpassfilter empfohlen werden. Es kann auch vorgesehen werden, dass der Wärmefluss nicht nur in der Richtung weg von der Bremsleistung (z.B. an Reibpaarung(en)) fließt, sondern fallweise auch umgekehrt, so dass z.B. eine sich abkühlende Bremstrommel von den Teilen an der Ankerplatte (und z.B. auch Bremsschuhen) aufgeheizt bzw. wärmer gehalten wird bzw. dass z.B. ein elektrischer Aktuator durch den Stromfluss wärmer wird und dies z.B. an ein Gehäuse einer Bremse ableitet.

Bevorzugt wird das Temperaturmodell in einer langsameren Schleife des Prozessors der Bremsensteuerung gerechnet (um z.B. Prozessorlast zu verringern) also z.B. nur mit Wiederholraten ab z.B. einigen Millisekunden bis über einigen 100 Millisekunden bzw. auch gegebenenfalls pro Durchlauf nicht alle Werte bzw. Temperaturen gemeinsam, sondern z.B. nacheinander. Bevorzugt werden situationsbedingte Wärmewiderstände verwendet, also z.B. aktuell (über z.B. Faktoren für Fahrtwind, Raddrehzahl), Temperatur bei Strahlungskühlung. Um auch bei niedriger Wiederholrate der Berechnungen auf mögliche schnelle Änderungen zu reagieren (z.B. kann eine PKW Autobahn Vollbremsung in wenigen Sekunden bis zu glühender Bremsscheibe führen und gleichzeitig den Fahrtwind zur Kühlung bis gegen Null reduzieren) wird empfohlen, die Temperaturentwicklung(en) über die Zeit gegebenenfalls über die bekannte e-Funktion(en) zu berechnen bzw. wird empfohlen, die e-Funktion(en) zur Reduzierung der Prozessorlast durch Näherungen zu ersetzen, also z.B. Taylor- oder andere Reihen bzw. sogar durch sehr kurze Reihen, die sogar auch nur aus einer Konstanten und einem x-proportionalem Glied als Ersatz für e hoch x bestehen können. Diese modellierten Werte können auch, davon ausgehend dass eine Abspeicherung der Werte aufgrund der sehr vielen verschiedenen Entwicklungen der Zustände (z.B. über Zeit, Geschwindigkeit, Bremswirkung) zu umfangreich wäre, mit gemessenen (z.B. am Belagsträger, an z.B. einer bevorzugt gut vom Bremsen erwärmter Gehäusestelle usw.) in Beziehung gebracht werden (oder auch die Messwerte untereinander in Beziehung gebracht werden und z.B. auch das Ergebnis mit Modellwerten in Beziehung gebracht werden) und für Verbesserungen genutzt werden also z.B. um gleichmäßigere bzw. besser dem Soll entsprechende Wirkung der Bremsen einzustellen.

Es kann auch mit einer Temperaturmessung (z.B. an einem gut von der Bremsleistung erwärmten Teil wie z.B. Bremsbelagsträger, aber z.B. auch an einem leichter mit einer gegen die in der Bremse auftretenden Belastungen geschützten Teil wie z.B. dem Aktuator bzw. dessen Motor) und der Temperatur aus dem Modell (bzw. den Temperaturen aus den modellierten Teilen) in der Bremssteuerung eine Erklärungsfindung abgebildet werden, dass z.B. angenommen wird, eine von der Modellierung abweichende (z.B. zu hohe) gemessene Temperatur kann mit einem anderen (z.B. höheren) Bremsmoment als von der Bremssteuerung/Regelung erwartbaren erklärt werden und diese Erklärungsfindung kann zur Anpassung der Bremssteuerung/Regelung verwendet werden, um z.B. die Genauigkeit der Bremssteuerung/Regelung zu verbessern. Selbstverständlich können auch andere Erklärungsfindungen einbezogen werden wie z.B. Spritz- bzw. Regenwasser, Wind usw. und auch zeitliche Unterschiede der Erklärungsfindungen einbezogen werden, wie z.B., dass einseitiges Spritzwasser kurzfristiger im Vergleich zu länger beobachtbaren Temperaturunterschieden aus z.B. ungenauem Bremsmoment sein kann. Insbesondere können natürlich Bremsen untereinander vergleichend zur Erklärungsfindungen verwendet werden, wie z.B. dass linke und rechte hauptsächlich sehr ähnliches Bremsmoment produzieren sollen.

Weiters kann zur Genauigkeitssteigerung der Bremswirkung auch eine Erkennung und Speicherung von Bremsenveränderungen (z.B. Ermittlung bzw. Schätzung von tangential bzw. radial ungleichem Verschleiß , z.B. Scheibenbremsbeläge, die durch A-förmige Sattelaufweitung unter Klemmkraft weiter außen mehr abgenutzt wurden) und Anwendung von Kompensationsmaßnahmen (z.B. wo der mittlere Reibradius bezüglich augenblicklicher Anpresskraft und geschätzter Abfahrvergangenheit liegt) durchgeführt bzw. gegebenenfalls Werte dazu gespeichert werden.

Vorteilhaft können auch bereits während dem Betrieb der EMB bekannt gewordene Werte (z.B. Strom, Drehzahl bei z.B. Betätigung) verwendet werden um zukünftig geänderte Einstellungen oder Parameter zu verwenden (also z.B. die Bremse langsamer zu lösen, um z.B. die Lösebewegung leichter stoppen zu können). Bei schlecht auflösenden Messwerten (z.B. wenn nur bestimmte HAL Sensor Positionen gemessen werden können) können Rechenmethoden bessere Werte bilden (z.B. "Observer"), insbesondere kann aber auch bei schlecht daraus ableitbaren Größen (z.B. langsame Geschwindigkeit aus springenden HAL Sensor Positionen) auch die Aktuatormotorsteuerung in einen anderen, dafür geeigneten Betrieb gebracht werden, der z.B. nur das Drehfeld weiterdreht, ohne z.B. dafür eine ermittelte Geschwindigkeit zu verwenden. Es kann dabei auch z.B. der Strom gesteigert werden, bis eine Mitdrehung des Rotors erfolgt.

Vorteilhaft kann auch das in der Bremse wirkende Moment aus elastischen Teilen (die beim Betätigen gespannt werden sich beim Lösen entspannen), auch mit zusätzlichen Momenten (wie z.B. aus Feder(n), Betätigungsreibungsverlusten, bzw. z.B. aus Massenträgheit) in Berechnungen einbezogen werden. Also können z.B. auch diese Momente mit dem Moment des Aktuatormotors vorzeichenrichtige verrechnet werden (dass z.B. die Bremse beim Betätigen ein Moment gegen die Betätigungsrichtung erzeugt und beim Lösen in Löserichtung) um Verbesserungen z.B. der Aktuatormotorregelung zu bewirken, in dem z.B. dadurch Beschleunigung und/oder Geschwindigkeit und/oder Position besser ermittelt werden können, z.B. wenn keine neue Positionsmessung vorliegt bzw. diese z.B. problematisch ist (z.B. zeitlich versetzt). Bei allen Verbesserungsmaßnahmen, die eine Steuerung/Regelung einer Bremse oder mehrerer Bremsen gewinnen kann (z.B. obige Erklärungsfindung, Ermittlung des aktuellen Luftspaltes, der aktuellen Belagsstärke, der Steifigkeit der Bremse usw.), wird auch empfohlen, in die (auch verbessernde) Einflussnahme, die sich in der Steuerung/Regelung bilden kann bzw. soll, eine Gewichtung einer Entscheidung vorzunehmen: Eine Entscheidung könnte z.B. bewirken, dass eine Ermittlung nicht verwendet wird (weil z.B. die Grundlage der Erkenntnis als unzureichend eingestuft wird, z.B. die Messung als zu fehlerhaft eingestuft wird), was auch dazu führen könnte, dass unter bestimmten Betriebsbedingungen (wenn z.B. auf länger vorliegenden Schneefahrbahnen häufig nur schwach gebremst wird) solche Erkenntnisse nie verbessernd einfließen. Daher wird auch vorgeschlagen, dass auch den jeweiligen Erkenntnissen Gewichte gegeben werden können, dass sie z.B. nur mit einem bestimmten Anteil eingehen, je nachdem wie gut sie bewertet werden, aber damit nicht unbedingt ein völliger Ausschluss stattfinden kann.

Natürlich können mit diesem Verzögerungs- bzw., allgemein, Beschleunigungsmessverfahren auch andere Verfahren, wie z.B. ESC (Electronic Stability Control), implementiert werden.

### Überschlagabwendung

Insbesondere wird hiermit auch ein Verfahren zur Abwendung des Überschlagens in Fahrtrichtung empfohlen, das gemeinsam mit obigem Verfahren arbeiten kann oder allein bzw. auch mit anderen Verfahren. Fahrzeuge bestimmter Schwerpunktlagen (das gesamte Verbundfahrzeug oder nur eines davon, z.B. das Zugfahrzeug) können sich bei starken Bremsungen nach vorne (z.B. Fahrräder, Motorräder, Sattelzugfahrzeuge usw.), nach hinten (z.B. Motorräder bei zu großer Beschleunigung) und natürlich auch seitwärts überschlagen. Dabei wird hier zur Abwendung eines solchen Überschlags ein geeignetes Zeitfenster genutzt. Ein Überschlag nach vorne wäre z.B. solange noch abwendbar, als dass bei teilweisem bis völligem Vermeiden der Bremsverzögerung die Richtung der resultierenden Kraft (aus Gewichtskraft im Schwerpunkt und verbleibenden Beschleunigungskräften) wieder innerhalb der Aufstandsfläche (die z.B. von den Bodenberührungen der Räder aufgespannt wird) zu liegen kommt. Womit bei korrekter räumlicher, vektorieller und vorzeichenrichtiger Anwendung ein Überschlagen in alle Richtungen vermieden werden kann, also z.B. nach vorne, hinten, seitwärts. Das hier zugrunde gelegte Zeitfenster bzw. Zeitverhalten kann z.B. bei Überschlagsabwendung nach vorne wie folgt (oder ähnlich) ermittelt werden. Wenn z.B. eine Überschlagsabwendung an z.B. einem Fahrrad bis z.B. 36 km/h (10 m/sec) stattfinden soll und z.B. der Schwerpunkt 1 m hinter der Vorderradstraßenauflage liegt, hätte man 1/10 sec (für einen Meter bei 10 m/sec) Zeit, durch lösen der Vorderradbremse den Überschlag abzuwenden. Das kann natürlich auch genauer bzw. beliebig anders ermittelt werden, z.B. auch modelliert. Eine Überschlagbewegung bzw. Gefahr dazu kann z.B. mit Beschleunigungs-, Gierraten- und/oder Magnetfeldsensoren bzw. mit Sensoren ermittelt werden, die mehrere Funktionen vereinen. So könnte z.B. die Gierrate nach vorne (also Nickwinkelgeschwindigkeit) bzw. Änderung dieser ermittelt werden oder z.B. die Winkellage oder Änderung des Erdmagnetfeldes.

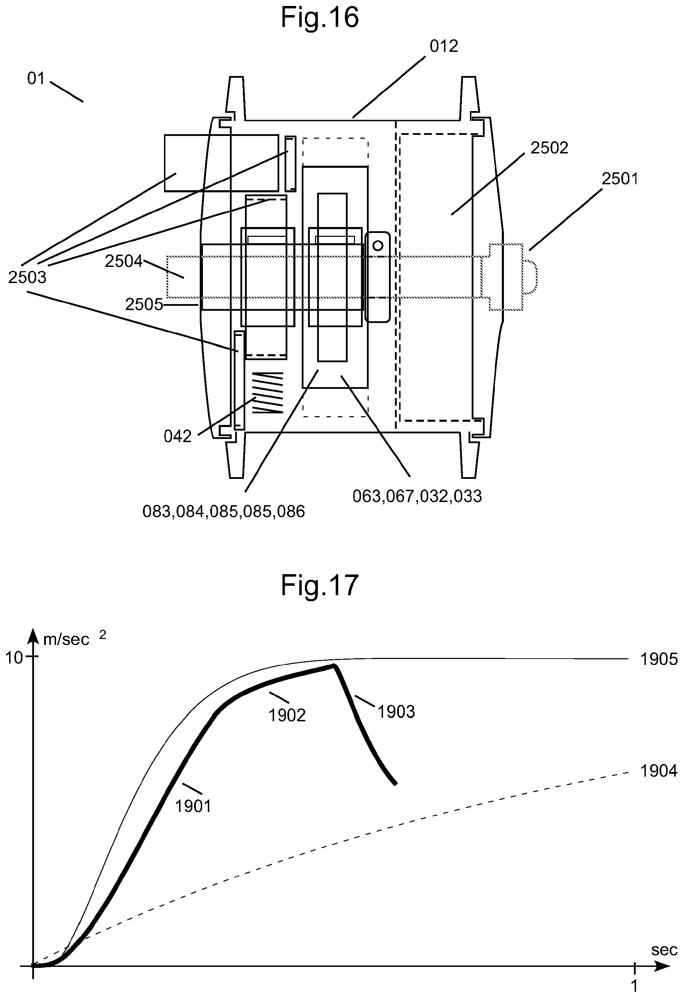

Bei den hier beschriebenen Verfahren (z.B. verzögerungsgesteuerte Bremsung, Auflaufsensor, Überschlagsabwendung) gibt es mehrere wichtige Zeitverhalten und es wird empfohlen, diese vorteilhaft zu gestalten bzw. zu nutzen. In Fig.17 ist mit 1901 die Betätigungsgeschwindigkeit der EMB gezeigt.

Die Betätigungsgeschwindigkeit kann bei stärkerer Bremsung langsamer gestaltet werden oder ein langsameres Verhalten vorteilhaft genutzt werden, wie z.B. 1902. Die Geschwindigkeit beim Lösen kann wie z.B. 1903 schneller gestaltet werden bzw. ein schnelleres Verhalten vorteilhaft genutzt werden. Damit könnte vorteilhaft genutzt werden, dass die EMB, wie 1901 schnell gute Bremswirkung aufbaut, aber dann in Bereichen von Blockier- und/oder Überschlagsneigung langsamer werden kann, um Sensormessungen bzw. Auswertungen mehr Zeit für eine etwaige Reaktion zu geben, also z.B. zu erkennen, ob ein Lösen zur z.B. Überschlagsabwendung nötig wird. Sehr vorteilhaft kann dann eine mögliche schnellere Lösegeschwindigkeit 1903 schnell genug ein z.B. Blockieren oder Überschlagen (oder sonstiges ungünstiges Verhalten) abwenden. Hier kann man sich z.B. bei 1903 vorstellen, dass inklusive und trotz Zeit einer Sensorauswertung ein Abwenden des Überschlags innerhalb von 1/10 sec möglich wäre, also eine empfohlene vorteilhafte Auslegung der Geschwindigkeiten 1902 und 1903 inklusive Sensorauswertung gelungen ist.

Eine Überschlagsmöglichkeit ist durch die Schwerpunktlage und resultierende Gesamtkraft in Bezug auf die Aufstandsfläche bestimmt. Damit wird vorgeschlagen, dieses Verfahren auch bezüglich Änderung der Schwerpunktlage zu verwenden. Ein kleiner und leichter Fahrer hätte z.B. eine deutlich niedrigere Schwerpunktlage als ein großer schwerer. Auch durch z.B. Bergabfahren oder Vorbeugen kann der Schwerpunkt (auch ungünstig bezüglich Überschlag) verändert sein. Es soll daher auch die Eigenschaft dieses Verfahrens so gestaltet bzw. genutzt werden, dass es gegebenenfalls auch eine zeitliche Veränderung der resultierenden Kraft rechtzeitig als gefährlich einstuft. Bei z.B. steigender Bremswirkung ist mit Wissen von Schwerpunktlage und Lage der Aufstandsfläche (die z.B. beim Bergabfahren bezüglich Schwerpunkt an anderer Stelle sein kann als in der Ebene) jene Verzögerung (oder Beschleunigung für Rückwärts- bzw. Seitwärtsüberschlag) berechenbar, die eine Resultierende außerhalb der Aufstandsfläche bewirkt, also Überschlag. Es ist aber noch eher denkbar, die Fahrzeuglage trotz einwirkender Kräfte abzuschätzen als die Schwerpunktlage, da sie auch vom Fahrer beeinflussbar ist. Da sich die zeitliche Veränderung der resultierenden Kraft (oder einer Größe, die ähnliches aussagt) nicht eindeutig als Aussage zur Überschlagsmöglichkeit nutzen lässt, werden hier zwei Maßnahmen vorgeschlagen. Erstens kann eine Sicherheit vorgesehen werden, so dass z.B. Bremsungen mit einer Verzögerung von maximal 0.8 g als unbedenklich eingestuft werden, womit z.B. gute bzw. gesetzeskonforme Bremswirkung bei geringem Überschlagsrisiko erreicht werden kann. Es wird auch vorgeschlagen, dass sich bei Verwendung einer elektrisch betätigten Bremse die Bremswirkung derart begrenzen ließe, dass ebenfalls Überschlagsvermeidung zusammen mit gewünschter Maximalbremswirkung erzielbar wäre.

Zweitens wird vorgeschlagen, dass ein zeitlich stark veränderlicher Effekt genutzt wird. Es tritt z.B. ab Abheben des Hinterrades (oder des zu betrachtenden Rades bei anderen Überschlagsrichtungen) plötzlich eine Drehbewegung in Überschlagsrichtung auf, die im stabilen Zustand "nicht" vorhanden war. Es wird also empfohlen, diese "plötzliche" Bewegung (z.B. Winkelgeschwindigkeit, Winkelbeschleunigung, Komponente einer Kraft, Änderung des Winkels des Erdmagnetfeldes usw.) allein oder zusätzlich zur Überschlagsabwendung zu verwenden. Auch diese "plötzliche" Bewegung tritt zwar physikalisch idealer Weise spontan beim Abheben ein, ist in Wirklichkeit aber wieder ein Sensorsignal, dass gemäß obigen Ausführungen geglättet werden muss und damit ein Zeitverhalten bekommt (das gemäß obigen günstig gestaltet wird). Hier kann auch das Zeitverhalten 1902 angewendet werden, wobei zeitlich langsamer in den Überschlagsverdachtsbereich gebremst wird, um dann rechtzeitig dagegen die Beschleunigungs- oder Verzögerungswirkung zu reduzieren, nicht weiter zu steigern oder nur derart weiter zu steigern, wie es als sicher bzw. vorteilhaft erachtet wird. Insbesondere kann bzw. soll auch das Zeitverhalten der elektrischen Bremse so gestaltet werden bzw. genutzt werden, dass der Lösevorgang 1903 günstig schnell verläuft, also z.B. schneller als der Betätigungsvorgang.

Zur Überschlagsvermeidung wird auch vorgeschlagen, dass verschiedene Vermeidungsstrategien zusammenwirken. So kann z.B. bei kleiner Geschwindigkeit, also z.B. Radfahrergeschwindigkeit, die Zeit bis zum Stillstand bei einer Vollbremsung sehr kurz sein, z.B. unter einer Sekunde. Damit bliebe, wenn man z.B. auch noch die Zeit der Bremsbetätigung berücksichtigt, nur wenig Zeit für Überschlagsvermeidungsvorgänge im überschlagsgefährdeten, starken Bremsbereich. Daher wird auch eine Vorgangsweise empfohlen, die eine so starke Bremsung (auch abhängig von Einflussgrößen wie z.B. Geschwindigkeit, Zeit usw.) vermeidet, dass sie in den Bereich der Überschlagsgefahr kommt. Dazu kann z.B. auch aus mindestens einer Bremsung eine Masseabschätzung gemacht werden und/oder andere Parameter ermittelt werden, wie z.B. Gefälle, jedenfalls können allgemein Parameter, die das Überschlagsverhalten beeinflussen, in der Begrenzung der Bremswirkung zur Überschlagsvermeidung verwendet werden. So kann z.B. auch die Geschwindigkeit mit verwendet werden und das Überschlagsvermeidungsverhalten beeinflussen, so dass z.B. bei höheren Geschwindigkeiten z.B. das Erkennen einsetzender Überschlagsbewegung zur Vermeidung verwendet wird und bei niedriger Geschwindigkeit eine überschlagsgefährdende Bremswirkung gar nicht erreicht wird. Diese Bereiche können natürlich auch nicht-schlagartig ineinander übergehen und auch beeinflusst werden, wie z.B. von Masseschätzungen oder z.B. von vorangegangenem Verhalten, wie z.B. Einfederung, Überschlagsneigung.

### Masseschätzung

Für alle hier gezeigten Verfahren kann eine Masseschätzung vorteilhaft sein, daher wird empfohlen, dass die Masse bzw. Rad- oder Achslasten auch wie folgt geschätzt werden kann. Aus einer Beschleunigungs- bzw. Verzögerungskraft kann über die Beschleunigung oder Verzögerung die Fahrzeugmasse ermittelt werden, wenn z.B. die Brems- oder Antriebskraft bekannt ist. Das wird auch bei Veränderung empfohlen, um z.B. zu beobachten, wie sich während z.B. einem Bremskraftaufbau die Verzögerung ändert. Achslasten können natürlich auch wie üblich über Einfederung erfasst werden, aber auch z.B. anhand einer Winkeländerung eines Sensors auf z.B. einer Schwinge oder Radaufhängung. Wenn ein (vorteilhaft: Mehrachsen-) Beschleunigungssensor vorhanden ist, wird auch das Folgende empfohlen. Die Schwingungsfrequenz eines Fahrzeuges oder eines Teiles (z.B. eines Radanhängers) hängt von der Masse und Federwirkung ab, das kann z.B. die Federwirkung der Rad- bzw. Achsaufhängung in Auf-Ab-Richtung sein oder z.B. auch eine Federwirkung in Fahrtrichtung, wie z.B. der Deichsel. Mit einem Beschleunigungssensor kann (auch laufend) die Beschleunigung über die Zeit gemessen werden und daraus eine Frequenz (am besten eine Resonanzfrequenz) ermittelt werden, oder mehrere Frequenzen, wie z.B. mit einer Fouriertransformation oder Fast-Fourier-Transform (FFT) bzw. auch einfacher, in dem z.B. ein die Zeit repräsentierende Zahl erhöht wird, solange sich das auf Schwingung zu untersuchende Signal nicht verändert und eine Auflistung geführt wird, welche Schwingungsdauer-repräsentierende Zahl wie oft vorkommt und daraus auf durch Masse verändertes Schwingverhalten geschlossen wird, also im wesentliche eine Auflistung vorkommender Periodendauern. Dabei kann eine oder viele Anregungen zur Schwingung (z.B. holprige Straße, Einsteigen) in Frequenzen (z.B. von der Beschleunigungsmessung des Sensors oder einer verwandten Größe) umgewandelt werden und mit Hilfe der Frequenzen (bzw. Periodendauern) die Masse geschätzt werden, weil bekannte Federkraft und ermittelte Frequenz(en) mit einer bestimmten Masse verbunden sind. Die Masseschätzungen können natürlich kombiniert werden, wie z.B. jene aus der Gesamtfahrzeugverzögerung oder -beschleunigung und jene aus dem Anhängerverhalten, wie z.B. Schwingungsverhalten, und es können auch plausible Annahmen mitverwendet werden, wie z.B., dass die Zugfahrzeugmasse relativ unveränderlich ist und daher die Schätzungen hauptsächlich verschiedene Anhängermassen betreffen.

### Abtrennung Beschleunigung

Gemäß bekannter Physik ist grundsätzlich nicht unterscheidbar, ob eine Kraft aufgrund von Gravitation oder von Beschleunigung auftritt, d.h. es wären demnach grundsätzlich aus einem Gefälle resultierende Messungen und Wirkungen vom Fahrzeug aus nicht eindeutig zuordenbar (z.B. ob eine Kraft in Fahrtrichtung eine Komponente der Schwerkraft ist oder eine Auflaufkraft bei Bremsung), so wie z.B. in einem Flugzeug nicht einfach erkennbar ist, ob eine Kraft aufgrund Gravitation oder Kurvenbahn auftritt. Hier wird allgemein (z.B. auch für ABS, ESC, Überschlagsvermeidung usw.) eine Lösung zur Trennung dieser Effekte unter Verwendung von Annahmen vorgeschlagen. Es wird angenommen, dass man mindestens eine Beschleunigung direkt oder an Wirkungen erkennen kann (bzw. dieser Wert implizit in anderen vorhanden ist), also z.B. am besten in drei Raumrichtungen, aber z.B. auch nur in der einen Fahrtrichtung bezüglich Fahrbahn. Als einfachste Lösung wird vorgeschlagen, einen Bezug zu außerhalb des Fahrzeugs, also z.B. zur räumlichen Lage des Erdmagnetfeldes (z.B. mit einem Mehrfachsensor wie in Mobiltelefonen, die z.B. Beschleunigung, Drehbeschleunigung, Magnetfeld in mehreren Achsen messen) zu ermitteln, aber auch z.B. zu GPS-Geodaten. Auch der Vergleich Raddrehzahl zu "ermittelter Beschleunigung" kann so ausgewertet werden, dass die Lage zur Senkrechten (oder ein ähnlich aussagekräftiger Wert) ermittelt wird. So würde z.B. eine Kraft in Fahrtrichtung verbunden mit gleichbleibender Raddrehzahl keine Beschleunigung im Sinne von Geschwindigkeitszunahme, sondern nur eine Komponente der Erdbeschleunigung bedeuten. Aber auch Verfahren ohne Werte von außen werden empfohlen (ähnlich wie z.B. bei einem künstlichen Horizont). So kann z.B. über Drehwerte (z.B. Drehrate bzw. Drehbeschleunigung) ermittelt werden, ob sich das Fahrzeug in ein Gefälle oder eine Steigung begibt ("dreht") und Steigungswerte können ermittelt werden. Man kann die Ermittlungen auch gewichten (z.B. zeitlich, z.B. bezüglich ihrer Lang- oder Kurzzeitstabilität) und kombinieren, z.B. die Drehrate der Bahnkrümmung oder Krümmungsveränderung mit der Lage des Erdmagnetfeldes bzw. der Raddrehzahl oder Änderung.

Die Kurve 1904 in Fig.17 zeigt, wie schnell eine Sensorauswertung einem Sprung von 0 auf eine Verzögerung von g folgen kann. Es wird davon ausgegangen, dass das rohe Sensorsignal eine Mittelwertbildung bzw. wie auch immer erreichte Glättung braucht und auch weitere Zeitverzüge oder Totzeiten auftreten können. 1904 wäre z.B. das Verhalten eines einfachen Tiefpassfilters (z.B. Widerstand und Kondensator oder entsprechendes IIR Digitalfilter) oder das Verhalten einer Mittelung, hier moving average, wobei für 1904 die Wirkungen so gestaltet sind, dass gute Glättung des Sensorsignals entsteht, wie später gezeigt. 1904 hat hier ein ungünstiges Zeitverhalten, weil in 1 sec erst grob 0.6 g gemessen werden können. Interessanterweise kann mit komplexeren Filtern, wie z.B. höherer Ordnung als 1 bzw. anderen Eigenschaften, bei geeigneter Wahl der Filterdaten (wie z.B. Filtertyp, Grenzfrequenz, Flankensteilheit, Polzahl usw.) einerseits eine schnelle Reaktion wie 1905 erreicht werden und gleichzeitig eine gute Glättung der Ausgangswerte des Filters. Das hier gezeigte Verfahren besteht also daraus, dass das Zeitverhalten der EMB durch Gestaltung der Nichtlinearität und Steuerung der EMB so gestaltet wird, dass die EMB sehr wenig zusätzlichen Zeitbedarf verursacht, wenn sie so betrieben wird, dass sie im Wesentlichen dem Steuersignal folgen kann und die Glättung bzw. Filterung des Steuersignals so erfolgt, dass selbst ein schnelleres Verhalten des Steuersignals keine besondere Steigerung der Gesamtbetätigungsgeschwindigkeit (aus Filterung und EMB Betätigung) bewirkt, indem Filterdaten und Parametrierung dafür zielführend ausgelegt sind. Aus dem gewähltem Verhalten (z.B. 1905) werden also Glättungs- oder Filterwerte wie z.B. Typ und Parameter einer z.B. IIR oder FIR z.B. Digitalfilterung von z.B. zweiter Ordnung ermittelt. Es ist hier also wichtig, das Zusammenwirken des Zeitverhaltens der Glättung und der EMB richtig zu gestalten um eine gute (also z.B. rechtzeitige) Reaktion des Gesamtsystems zu ermöglichen.

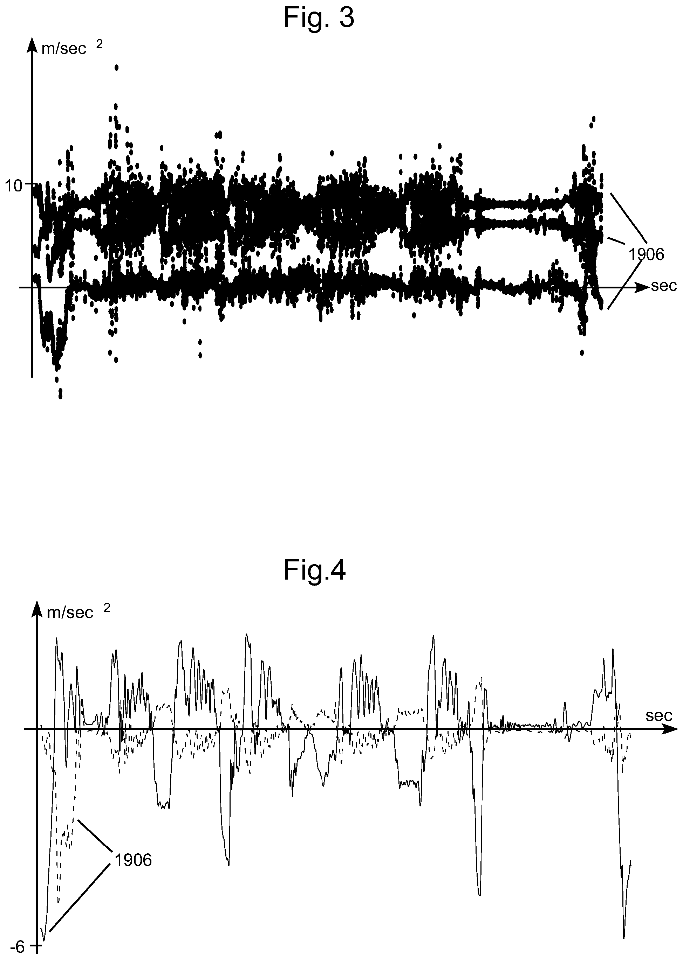

In Fig.3 ist ein rohes, aus der Realität mit allen Messwerten aufgenommenes 3-Achs-Sensorsignal mit 10ms Abtastrate gezeigt, dass die rohen Sensorsignale 1906 der Beschleunigungen in hauptsächlich y-Richtung (Fahrtrichtung, 1906 oben), hauptsächlich z-Richtung (hinunter, 1906 Mitte) und x-Richtung (seitwärts, 1906 unten) als Punkte über die Zeit (in ca. 80 sec) zeigt. Die vielen schwarzen Punkte sollen realitätserhaltend zeigen, dass solche Signale sehr starken Anteil an Verfälschungen haben.

Damit ist gezeigt, dass der z.B. 3-Achssensor anders eingebaut sein kann als mit der z-Achse genau senkrecht und es hiermit empfohlen wird, gegebenenfalls die Einbaulage zu korrigieren, was z.B. auch aus den Sensordaten erfolgen kann (z.B. unter der Annahme, dass längerfristig immer ein senkrecht-Vektor entstehen muss, also längerfristig ein Pendel gemittelt hinunter zeigt). Auch die Erdbeschleunigung ist in y und z noch anteilsmäßig enthalten und es wird hiermit empfohlen, diese Anteilsrichtig herauszurechnen, wenn z.B. Verzögerungen in Fahrtrichtung ermittelt werden sollen.

In Fig.4 sind die nun mit einem Digitalfilter höherer Ordnung und Polzahl geglätteten Signale 1906 gezeigt, wobei 1906 nun so in die richtige Lage zeigend behandelt wurden, dass 1906 (strichliert) oben die nun senkrecht ausgerichtete z-Achse zeigt (die z.B. durch Störungen wie Einfedern von der Fahrt beeinflusst ist) und 1906 unten die nun in Fahrtrichtung zeigende y-Achse und demnach gegen die Fahrtrichtung mit bis zu -6 m/sec2 gebremst gezeigt ist.

Es wird also als Verfahren bzw. in einer Vorrichtung empfohlen, die Ordnung und Polzahl so zu wählen, dass die Forderung aus Zeitverhalten (z.B. Verzögerung, Gruppenlaufzeiten usw.) und die Forderung der Signalqualität (z.B. Unterdrücken nicht bremsrelevanter Anteile) erfüllt wird, was z.B. auch bedeuten kann, dass, z.B. auch umschaltbar, veränderliche oder z.B. mehrfach parallel verschiedene Filter mit verschiedenen Parametern verwendet werden können, um z.B. eine schnelle Reaktion bei starker Bremsung (z.B. Notbremsung) zu ermöglichen, aber auch ein soweit ruhiges Bremssignal zu bekommen, dass z.B. nicht ständig Aktuatorverstellungen erforderlich werden, z.B. bei längerem bzw. schwächerem Bremsen. Die "Zielwerte" sind einerseits definierbar, können aber praktisch leider auch unscharf sein, wenn sie Fahrempfinden, Kompromisse usw. inkludieren. So ist z.B. ein praktisches Ziel, dass ein akzeptabler Kompromiss aus Verzögerungszeit und der Unterdrückung von unnützem Aktuatorverstellen erreicht wird, was sich im Nachhinein in Zahlen ausdrücken lässt, aber hier nicht vorweg als z.B. 73 ms Verzögerungszeit definiert wird. Wenn die hier dargestellte Optimierung der Filterparameter (z.B. Filtertyp, Grenzfrequenz, Ordnung, Polzahl) zu einem für Benutzer annehmbaren Gesamtverhalten führt wird, ist ja der Sinn erfüllt.

Das Zeitverhalten der Glättung der Signale 1906 in Fig.4 würde gut geglättete Verzögerungssignale abgeben, die allerdings ein längeres Zeitverhalten als Fig.3 haben und damit spätere Bremswirkung erreichen. Der Unterschied kann doch immerhin ein Erreichen der z.B. halben Vollbremswirkung in grob 1 sec oder in unter 0.2 sec bei Dimensionierung wie vorgeschlagen sein. Es wird hiermit empfohlen, Schwingungen der Beschleunigung in Fahrtrichtung, die z.B. vom Treten stammen, von einer Bremssteuerung fernzuhalten, vor allem wenn sie teilweise in die negative Beschleunigung reichen, also bremsend, was z.B. durch Gewichtsverlagerung beim Treten eintreten kann. Da selbst bei guter Glättung kein völlig ruhiges Signal entstehen muss, werden gegebenenfalls auch noch weitere Maßnahmen vorgeschlagen, damit nicht jede kleine und u.U. unbedeutende Signaländerung eine Aktuatorbewegung hervorruft. So kann z.B. noch ein Schmitt-Trigger oder eine Hysterese kleines Nachregeln vermeiden oder es könnte z.B. erst ab einer gewissen kumulierten Änderung eine Aktuatorpositionierung erfolgen oder es könnten weitere Zeitabhängigkeiten eingebaut werden, wie z.B. dass starke Änderungen schnell weitergegeben werden und z.B. schwache vorerst beruhigt werden.

Natürlich muss nicht genau das Verzögerungssignal in Fahrtrichtung (Fig.4) herausgerechnet werden, es kann auch jedes andere mit der hier vorgeschlagenen Filterung oder Glättung verwendet werden, so könnte man z.B. auch aus y und z den Winkel ermitteln, den ein Pendel anzeigen würde oder die resultierende Kraft am Pendel und dies als Wert für Bremsung bzw. Überschlagabwendung verwenden. Hier wird als geeignete Filterung verstanden, dass die Verzögerung durch das Filtern die gesamte Ansprechzeit bis zur Bremswirkung nicht wesentlich verzögert (also die Aktuatorgeschwindigkeit gut genutzt werden kann) und dass Fluktuationen bzw. Störungen in den Einzelmessungen soweit unterdrückt werden, dass nicht störender Weise unnötige Bremsungen ausgelöst werden und es wird offen gelassen, mit welcher Methode genau das erreicht wird. Das gleiche Prinzip (der Wahl des geeigneten Filters) kann natürlich auch auf andere Messsignale, z.B. eines Deichselkraftsensors oder Gier- oder Nickratensensors oder einer Rad- oder Achslastermittlung, angewendet werden, um die hier dargestellten und eventuell darauf aufbauende Verfahren mit einem schnellen und gut gefiltertem Signal zu versorgen.

Für das hier gezeigte Verfahren ist eine Verzögerungserkennung vorteilhaft, was z.B. u.a. aus Radrehzahlrückgang und/oder Verzögerungssensor (auch in mehreren Achsen) ermittelbar wäre.

Zusammenfassend kann man dieses hiermit vorgeschlagene Verfahren so darstellen:
- Festlegung eines Bereichs von erforderlichen Bremswirkungen (von z.B. leichten Bremsungen bis z.B. gesetzlich vorgeschriebenen oder bis zu z.B. Notbremsungen);
- Festlegung jeweils tolerierbarer Abweichungen der Bremswirkung vom Bremswunsch;
- Festlegung der als tolerierbar angenommenen Abweichungen des Anhängergewichts von Rechengrößen (bzw. Ähnliches, das recht genau bekannt bis hin zu geschätzt bzw. auch unbekannt und daher angenommen sein kann, wie z.B. Radlasten);
- Bestimmung des Verhaltens der Korrektur k (wie stark sie sein soll bzw. wie abhängig von welchen Größen, also z.B. steigend bei starker Bremsung, z.B. schwächend bei schwacher Bremsung);
- Untersuchung der Stabilität (z.B. Eskalationsverhalten);
- Gestaltung der die Korrektur K bzw. Festlegung des zulässigen Betriebsbereichs so, dass geforderte Kriterien wie z.B. abweichende Ist-Bremswirkung oder Eskalationsbedingungen im geforderten Bereich liegen;
- Ergänzende Angabe von Betriebsgrenzen, wie z.B. Minimalgewicht von Zugfahrzeug bzw. Anhänger, Maximalgewichte usw.;
- Vorteilhafte Nutzung von ABS, indem z.B. bei einem leichten Anhänger ein deutlich zu starkes Anhängerbremsen erlaubt wird und ABS das Blockieren vermeidet.
- Es wird auch als hilfreich empfohlen, dass z.B. Simulationen oder Ergebnisse aus der Praxis verwendet werden, und daraus das gewünschte Maß und Verhalten der Korrektur K und/oder Eskalation z.B. im Mittel oder z.B. für als wichtig erachtete Bereiche bzw. Punkte festgelegt wird, auch unter Einbeziehung von vermiedenem Blockieren bzw. zu hohem Schlupf.
- Einbeziehung einer Auflaufbremsfunktion: mit diesem Verfahren könnte z.B. (auch situationsabhängig) eine besondere Auflaufkraft eingestellt werden, z.B. "ziehend" in dem der Anhänger stärker bremst als für eine schiebende Auflaufkraft.

### Fahrzeugstabilität

Hier wird unter Fahrzeugstabilität u.a. Vermeidung von Radblockieren, Halten der gewünschten Spur, Vermeidung von Überschlag, Schlingervermeidung (z.B. bei Anhänger, "Sway-Control") verstanden. Hier wird besonders die Möglichkeit der EMB empfohlen, eine noch als "gut" eingestufte Aktuatorposition erneut einzunehmen. Es ist dabei wichtig, zwischen kraft- bzw. druckgesteuerten Bremsen und der Möglichkeit der Positionssteuerung (z.B. Bremsbelagsposition relativ zur Reibfläche, Aktuatorwinkel usw.) der EMB hinzuweisen. Üblich sind kraft- bzw. druckgesteuerte Systeme, bei denen Druck abgesenkt wird, wenn eine Grenze für einen Radmesswert (z.B. Drehzahlabfall) über- oder unterschritten wird. Die sich ergebende Position (z.B. des Belages) bzw. die nötige Fluidmenge wird dabei aber nicht gesondert erfasst. Theoretisch könnte man den bestmöglichen Druck (und damit die Anpresskraft) stabil einstellen, in der Praxis werden aber die bekannten Schwingungen aus Druckaufbau und Druckabbau gemacht, u.a. weil Ventile auf und zu geschaltet werden. Hier werden EMBs vorgeschlagen, bei denen die Bremswirkung durch die Position (z.B. Bremsbelagsposition relativ zur Reibfläche, Aktuatorwinkel usw.) bestimmt wird. Dabei können auch andere Werte wie Bremsmoment, Anpresskraft usw. als gleichwertig betrachtet werden, weil deren Änderung bei diesen EMBs mit der Positionsänderung verbunden ist. Auch wenn andere Werte als die Position verwendet werden, gibt es also im Unterschied zu fluidbasierten Lösungen einen verwendbaren Zusammenhang zwischen z.B. Bremsmoment oder z.B. Anpresskraft und Position, z.B. Aktuatorposition, so dass diese Werte ineinander überführbar sind (gegebenenfalls auch z.B. nur kurzzeitig, z.B. während des Bremsvorgangs). Bei fluidbasierten Systemen gäbe es natürlich auch Zusammenhänge wie z.B., dass bei Druckänderung ein Volumen fließt, es wird aber das Positionsäquivalent (z.B. Volumen) normalerweise weder gemessen noch direkt gesteuert, noch wie die Position in diesem Verfahren verwendet. Hier wird bei Über- oder Unterschreiten der Grenze eines Radmesswertes die Position (im Folgenden sind auch positionsäquivalente Werte gemeint, wie z.B. Bremsmoment) gemerkt und zur Herstellung eines wieder als "gut" befundenen Radmesswertes wieder diese Position oder eine als besser erachtete angefahren. Gleichwertig könnte man das noch als gut befundene Bremsmoment, die dabei ermittelte Anpresskraft oder eine sonstige die Bremswirkung beschreibende Größe verwenden, vorausgesetzt die Aktuatorposition wird dabei ebenfalls in einen wieder als gut befundenen Zustand gebracht. Da eine gute Position stabil angefahren werden kann, wird vorgeschlagen, dass vorteilhaft der Wechsel zwischen "mehr" und "weniger" bremsen gegebenenfalls vermieden werden kann und damit ein besseres Bremsen möglich wird (weil Über- und Unterbremsen nicht optimal sein müssen). Allerdings kann die die Bremswirkung beschreibende Größe (z.B. Position) auch verändert werden, um z.B. herauszufinden, ob sich Rahmenbedingungen, z.B. Fahrbahneigenschaften, verändert haben. Es wir hier empfohlen, für das Über- oder Unterschreiten eines Radmessgrenzwerts für ABS z.B. die Radgeschwindigkeit gegenüber einer geschätzten Ground-Speed zu verwenden, wobei die Ground-Speed-Schätzung z.B. aus einem schneller drehenden Rad bezogen werden kann oder z.B. durch das Integral der Verzögerung, also z.B. Summenbildung der Verzögerungsmessung (auch mit entsprechender Behandlung wie Filterung bzw. mit Faktoren). Für Überschlagsverhinderung würde man z.B. jene Radgeschwindigkeit, Radverzögerung bzw. Fahrzeugverzögerung verwenden, die gemäß obigen Ausführungen bezüglich Überschlagsverhinderung als noch gut einstuft wird und für z.B. ESC könnte man jene Größe verwenden, bei der sich am Rad z.B. ein gewünschter Kraftvektor (z.B. bezüglich der Fahrbahnoberfläche) ergibt. Natürlich kann sich die gewählte Einstellung ändern, auch z.B. versuchsweise (z.B. um die Bodenhaftung zu ermitteln), aber die üblichen ABS-Schwingungen wird man bevorzugt vermeiden. Was bis jetzt als ein einzelner Radmesswert und eine daraus gewonnene Einstellung erklärt wurde, lässt sich natürlich auf mehrere, viele oder auf Auswertungen aus vielen ausdehnen, so dass z.B. aus mehreren Ground-Speed Ermittlungen (z.B. Schätzungen) und mehreren Radrehzahlermittlungen eine Bremseneinstellung abgeleitet wird (z.B. Position) bzw. mehrere Bremseneinstellung abgeleitet werden, um daraus z.B. eine optimale (z.B. die beste Verzögerung liefernde, auch z.B. mit einer Zusatzbewertung, wie z.B. dass dabei keine Überschlagstendenz erkannt wurde) abzuleiten, zu ermitteln, auszuwählen usw.. Diese Bewertungen können natürlich auch während der Veränderung der EMB-Einstellung gemacht werden, also z.B. während die EMB immer mehr betätigt wird, kann die Verzögerung ermittelt werden und z.B. auch durch Korrektur der Zeitverzögerung in Messung bzw. Auswertung zeitrichtig ermittelt werden, wann z.B. die tatsächliche Verzögerung einen als "günstig" (z.B. maximal oder sicher, auch überschlagssicher) erachteten Wert gehabt hat und damit zur Auswahl einer günstigen EMB-Einstellung (z.B. Position) verwendet werden. Auch wenn dabei zur weiteren Optimierung Veränderungen (z.B. der Position) vorgenommen werden, ist das nicht mit dem das bekannte ABS und ESC beherrschenden Ventilschalten vergleichbar, da bei den bekannten Verfahren ja nicht gezielt eine bestimmte Position angefahren wird und der hier bei der EMB vorgeschlagene eindeutige Zusammenhang zwischen Position und anderen bremswirkungsbestimmenden Größen bei bekannten Verfahren nicht verwendet wird. Es wird also z.B. als Unterschied zur hier vorgestellten Lösung bei anderen Verfahren nicht definitiv eine Bremsbelagsposition ermittelt (was im hier vorgestellten Verfahren mit der Aktuatorposition und gegebenenfalls weiteren Daten wie z.B. Verschleißnachstellung der Fall ist) und auch nicht definitiv z.B. eine genau definierte Flüssigkeitsmenge abgelassen oder zugeführt, sondern verständlicher Weise der Druck beeinflusst. Die Änderung des Radmesswerts kann hier auch verwendet werden, um die Bremswirkung zu steigern, also z.B. bei einem Radmesswert, der auf eine Verbesserung der Fahrbahnhaftung hindeutet (z.B. Raddrehzahl erhöht bzw. nicht so schnell abfallend) die Bremswirkung zu steigern. Die Verwendung einer geschätzten Ground-Speed und eines Radmesswertes (z.B. Raddrehzahl) wurde oben als einfache Erklärung gewählt, natürlich können auch komplexere Berechnungen als vorteilhaft empfohlen werden, wie z.B., dass ein Radschlupf ermittelt und mit einem (auch situationsbedingt) als gut eingestuften verglichen wird.

Für Maßnahmen zur Verbesserung der Fahrzeugstabilität (z.B. ABS, ESC, Sway-Control, Überschlagsverhinderung) ist es vorteilhaft, auch den gerade herrschenden Stabilitätszustand (z.B. Radschlupf, wie nahe man an der Überschlagsgefahr ist usw.) zu kennen bzw. zu ermitteln. Dazu wird vorgeschlagen, gezielt kleine Veränderungen am Rad (bzw. an den Rädern, gleichzeitig oder nicht gleichzeitig) vorzunehmen, also z.B. kleine Rad-Brems- bzw. Antriebsmomentänderungen, was z.B. eine kleine Veränderung des EMB-Bremsmoments sein kann, z.B. über kleine Aktuatorpositionsänderungen (oder Gleichwertigem) und dabei die Veränderung des Radmesswertes (z.B. Schlupf, Veränderung der ermittelten Überschlagsgefahr usw.) festzustellen, z.B. mit Raddrehzahlgeber. Im Gegensatz zu bekanntem ABS, das in deutliches Über- bzw. Unterbremsen geht, wird hier empfohlen, nur eine so kleine Änderung anzuwenden, dass davon ausgegangen wird, dass sie eine erkennbare Veränderung des Radmesswertes ergeben wird, insbesondere wenn dies an der Grenze des als gut befundenen Radmesswertes liegt, also z.B. nahe einem Blockieren.

So könnte z.B. auf Asphalt die kleine Änderung zu erkennbar raschem Absinken der Raddrehzahl führen (beruhend auf den bekannten Schlupfkurven), aber z.B. auf Glatteis zu einem fast sofortigen Blockieren führen (dessen Zeitverlauf z.B. wesentlich durch die Massenträgheit des Rades bestimmt wird), d.h. die kleine Änderung wird vorteilhaft erstens so klein sein, dass das Ergebnis auswertbar ist, aber auch nur so groß, dass möglichst schnell wieder ein als gut befundener Zustand eingestellt werden kann, wobei sich der Wert insbesondere an "gerade noch erkennbar unter den geforderten Bedingungen" (z.B. Asphalt, Beton, Pflaster, Schotter, Schnee, Eis usw.) orientieren wird. Insbesondere wird empfohlen, dass die kleine Veränderung nicht ausschließlich mit der Reibungsbremse gemacht wird, sondern auch z.B. mit einer am Rad befindlichen anderen momentbestimmenden Einrichtung, wie z.B. einem Motor, Generator, Dynamo usw. Wenn z.B. ein Fahrrad grob 100 W Antriebsleistung benötigt, kann z.B. mit einigen W Radbremsleistung schon die "kleine Änderung" erwirkt werden, was z.B. sogar mit einem Raddynamo möglich ist, also z.B. durch Änderung der elektrischen Belastung bis hin zum kurzzeitigen Kurzschließen. Natürlich könnte auch ein kleiner Antrieb hinzugefügt werden, wenn sich daraus die Nähe zum unerwünschten Radmesswert erkennen lässt, also z.B. wie weit das Rad von der Blockiergrenze entfernt ist.

Obiges "Hinzufügen einer kleinen Änderung" ließe sich natürlich auch als ABS, ESC usw. nutzen, in dem die schnelle Änderung mit einer schnell steuerbaren Vorrichtung gemacht wird (z.B. Elektromotor, Generator), auch um schnell einen unerwünschten Zustand verlassen zu können. Hier wird aber auch der fast gegenteilige Effekt empfohlen, dass es nämlich nicht bis zu Schwellüberschreitungen für ABS, ESC usw. kommt, sondern dass die kleine Änderung vergleichsweise unauffällig die Grenze ermittelt und dann mit einer EMB oder einem regenerativen Bremsen eine bessere Einstellung angefahren wir. Das hier gezeigte Verfahren kann also insbesondere auch die heutigen ABS Schwingungen vermeiden, in dem es z.B. einen Generator nur dazu nutzt, die Nähe zur Grenze des unerwünschten Zustandes zu ermitteln, was auch gänzlich ohne ABS-Schwingungen verlaufen kann, indem ein als gut befundenem Zustand angefahren wird und bleiben kann bzw. auch weitere Schritte zum weiteren Lösen gemacht werden können. Das gezeigte Verfahren kann also auch ganz im Gegenteil zu ABS-Schwingungen genutzt werden, um diese zu vermeiden, z.B. durch Einstellen einer vermeidenden Aktuatorposition. Insbesondere soll dieses Verfahren auch in Gegenrichtung betrieben werden. Wenn z.B. auf schlechter Fahrbahn (z.B. Eis) wenig Bremswirkung erzielbar war, kann sich die Fahrbahn verbessern (z.B. auf Asphalt) und es ist der Erkenntnisgewinn nötig, dass besseres Bremsen möglich ist. Dazu ist Vieles geeignet, z.B. kann die Raddrehzahl plötzlich wieder ansteigen oder die Absinkgeschwindigkeit verlangsamen. Aber auch obige "kleinen Änderungen" können (auch sehr rasch) so oft durchlaufen werde, bis wieder fahrbahngemäß gutes Bremsen eingestellt wurde. Dazu können die "kleinen Änderungen" jedes Mal zu einer Erhöhung der Bremswirkungseinstellung der EMB führen, was aber auch gleichzeitig ablaufen kann, indem während die EMB die Bremswirkungseinstellung erhöht, wiederholt "kleine Änderungen" hinzugefügt werden. Die "kleine Änderung" kann auch als Abhilfemaßnahme gegen zu starkes (z.B. blockierendes) Bremsen genutzt werden, indem z.B. rasch wieder Antriebsmoment hinzugefügt wird, um einen unerwünschten Zustand rasch zu bekämpfen.

Insbesondere kann obiges Verfahren der "kleinen Änderungen" auch für kleine Geschwindigkeiten genutzt werden, bei denen nicht leicht erkennbar ist, ob das Fahrzeug noch fährt oder bereits steht. Obiges Verfahren mit wechselweisen (oder auch gleichzeitigen) EMB-Einstellungen und "kleinen Änderungen" würde bei günstiger Auslegung auch erkennen, dass die "kleinen Änderungen" bei Stillstand keine Radmesswertänderungen bringen (z.B. Drehzahländerung) bzw. ob bei "kleinen Änderungen" noch ein bestimmter Radmesswert (z.B. Drehzahl) eintritt. Das kann auch an einzelnen Rädern ungleichzeitig durchgeführt werden, um z.B. ein Wegrollen zu verhindern.

### Bremsenausführung

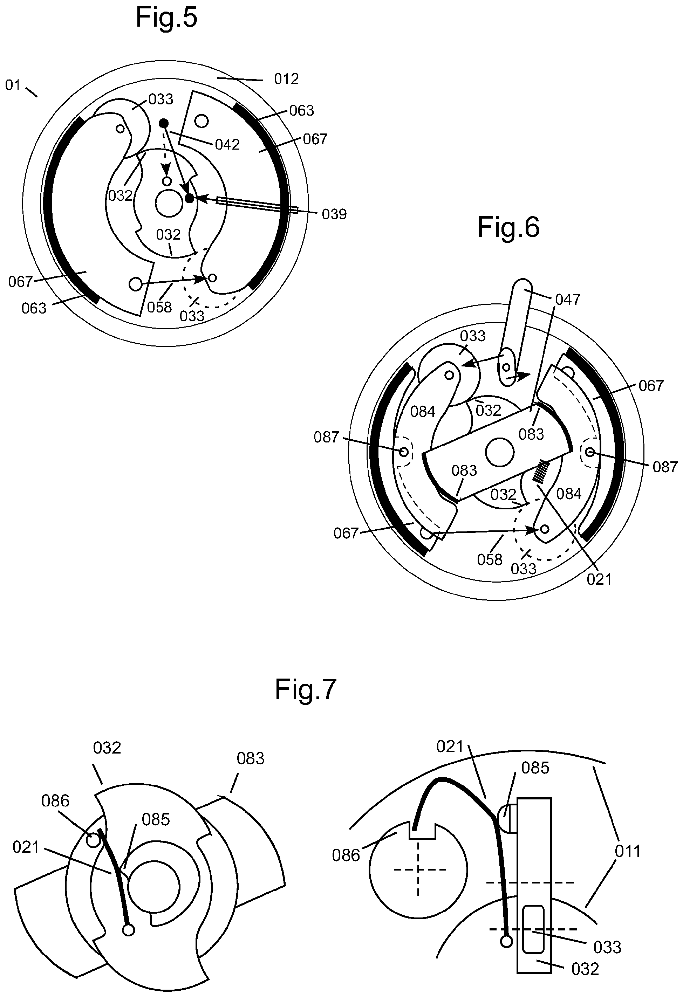

Fig.5 zeigt eine vorteilhafte Ausführung einer Bremse 01 (hier Duplexbremse) mit Bremstrommel 012, Bremsbelägen 063 und Bremsschuhen 067. Zwei Betätigungsnocken 032 (die in einem Teil vereint sein können) pressen über Rollen 033 dazu die Bremsbacken gegen die Trommel, hier in voll gebremster Stellung. Die Fig.5 und Fig.7 können auch als Wirkprinzip gesehen werden und sind dann natürlich nur eine von vielen möglichen Ausführungen, es kann z.B. auch nur ein Belag angepresst werden und der zweite vom ersten angepresst ("Servo"), es kann auch eine Simplexbremse sein, es können viele Bremsschuhe radial oder axial wirken, die Bremsschuhe müssen nicht unbedingt rund sein, ebenso kann die Reibfläche eine andere Form als eine Trommel bzw. eine Innenbackenbremse haben.

Es sind auch andere Ausführungen möglich, auch als Servobremsen, bei denen die Bremskraft des primären Schuhes als Betätigungskraft an den sekundären Bremsschuh weitergeleitet wird, hier als Betätigungsweiterleitung 058 als Pfeil gezeichnet. Die untere Betätigungsnocken 032 und die untere Rolle dazu 033 würden bei der Servobremse (hier eine unidirektionale, weil nur in einer Trommeldrehrichtung mit Servoeffekt) nicht benötigt. In der Bremse kann eine Betätigungsfeder 042 sein, um eine bestimmte Verdrehung der Betätigungsnocke 032 und damit eine bestimmte Bremswirkung zu erreichen. Damit kann z.B. eine Vollbremsung oder eine angestrebte Bremsung mit z.B. g/3 auch ohne elektrische Aktuatorbetätigung erreicht werden. Die Wirkung der Betätigungsfeder 042 kann beliebig auf die Betätigungsnocken 032 erfolgen, also wie gezeigt kurbelartig oder z.B. mit einer zusätzlichen Nocke. Wie in Fig.5 gezeigt, wirkt die Betätigungsfeder 042 kurbelartig, d.h. mit sich über die Betätigung veränderlichem Federmoment. Zusammen mit dem Moment, das aus Bremsbetätigung und Verlauf der Betätigungsnocken 032 entsteht, kann die Bremswirkung bestimmt werden, d.h. der Verdrehwinkel der Betätigungsnocke 032. Im voll gelösten Zustand der Bremse kann z.B. die Betätigungsfeder 042 die strichlierte Lage einnehmen, was hier z.B. eine Totpunktlage oder totpunktnahe Lage sein kann, in der zum Halten der gelöst-Stellung keine oder wenig elektrische Energie für den Bremsaktuator nötig ist, was z.B. bei längerem Fahren, insbesondere mit geringer Geschwindigkeit und damit möglicherweise wenig elektrischer Dynamoleistung günstig ist, also auch z.B. bei Schrittgeschwindigkeit angewendet werden kann.

Größere Trommelbremsen haben oft grob tangentiale Belagsanpressung über z.B. Hydraulikzylinder oder Spreizteil (z.B. zwischen den Bremsschuhen). Bei kleineren (z.B. Fahrrad) kann die Anpresskraft auch grob radial wirken. Es liegt aber ein ganz wesentlicher Unterschied zwischen EMB und direkter menschlicher Bremsbetätigung: Die Belagsanpresskraft kann auch bei z.B. Fahrradbremsen von 0 bis grob 10 kN erreichen und dabei z.B. eine Handkraft am Bremshebel von 0 bis grob 200 N erfordern. Dieser große Kraftbereich ist auf menschliches Verhalten abgestimmt, so dass z.B. Fahrräder aufgrund des Handkraftbedarfs auch bei "Notbremsung" nicht leicht überschlagen. Bei Auslegung der Anpressübersetzung wie bei handbetätigten Bremsen würde der elektrische Aktuator einer EMB durch das für Vollbremsung nötige Übersetzungsverhältnis über weite (die meisten) Betätigungsbereiche mit viel zu langsamer Übersetzung laufen. Daher wird vorgeschlagen, dass die Übersetzung in einer EMB den Aktuator (wenn er ohne Zusatzunterstützung wie z.B. Feder betrieben wird) in einem günstigen Lastbereich betreibt, also z.B. in einem Änderungsverhältnis ("Nichtlinearität") des Aktuatormoments von leichter Bremsung bis Vollbremsung, das z.B. unter 1:10 liegen soll und natürlich berücksichtigt, wie hoch es durch geometrische, materialbelastende und sonstige Einschränkungen sein kann. Als physikalisches Ideal wäre eine völlig gleichbleibende Motorlast (am besten im Leistungsmaximum) anzustreben, was hier aber als u.a. unrealistisch angesehen wird. Eine Bremse, die bei menschlicher Betätigung kaum oder gar nicht steigende Betätigungskraft vor allem gegen starke Bremsung erzeugt, wäre aber völlig gegen menschliche Gewohnheit, nahezu nicht dosierbar (weil fast gleiche Betätigungskraft für sehr verschiedene Bremswirkung) und auch gefährlich, weil leicht zu Blockieren oder Überschlag führend. Daher ist bei hier empfohlenen EMBs der Verlauf des Übersetzungsverhältnisses (durch z.B. die Betätigungsnocke 032 bzw. deren Erhebungsverlauf) ganz wesentlich und völlig anders als bei Hand- oder Fußbetätigten. Es wird vorgeschlagen, das diese hier ganz wesentliche Nichtlinearität einerseits davon abhängt, ob eine Unterstützungswirkung wie z.B. Feder vorhanden ist oder nicht und wie die Unterstützung über die Betätigung verläuft (kann z.B. eine kurbelartig angelenkte Feder sein, die sich z.B. von einem Totpunktbereich aus entspannt). D.h. die Nichtlinearität (z.B. Erhebungsverlauf) kann so ausgelegt sein, dass sich die EMB ohne Betätigungsenergie löst oder in einen gebremsten Zustand geht (z.B. für Parkbremse ausreichende Wirkung, Vollbremsung, usw.) und/oder z.B. in häufigen Betätigungsbereichen wenig Strom braucht und/oder gegen starke Bremsung dafür mehr. Die Nocke 032 ist hier also weniger ein Bauteil, sondern hat einen ganz gezielten Verlauf, der bei anderen Bremsen bisher geradezu gegenteilig war. Der Verlauf der Nichtlinearität (z.B. Nockenerhebung über Verdrehwinkel) wird auch so gestaltet, dass die "Maßnahmenliste" (siehe weiter unten) für hier wichtige EMB Eigenschaften erreicht wird. Die "Maßnahmenliste" kann derart erfüllt werden, dass einerseits die Federwirkung (wenn vorhanden) z.B. als Moment über die Betätigung (z.B. gemessen als Aktuatorwinkel) einbezogen wird, andererseits z.B. der Verlauf der Belagsanpresskraft (auch z.B. über den Aktuatorwinkel) und daraus das jeweilige Nichtlineare Übersetzungsverhältnis (auch z.B. auf die Aktuatorwinkelposition bezogen) folgt, wenn sich z.B. ein bestimmtes Aktuatormoment einstellen soll. Vereinfachend wird z.B. die lokale Steigung z.B. der Nocke 032 so gewählt, dass Feder (wenn vorhanden) und Betätigungsmotor die gewollte Anpresskraft ergeben, natürlich nicht nur an einem Punkt, sondern über die Betätigung oder wesentliche Bereiche davon. Vorteilhaft werde wie oben dargestellt noch andere Einflüsse einbezogen wie mech. Verluste, verschiedene Luftspaltgrößen, Selbstverstärkung usw.

Eine Rückstellung 039 (der Pfeil kann z.B. eine Stange repräsentieren) wird bei all solchen und ähnlichen EMBs dann empfohlen, wenn die von der Feder selbsttätig eingenommene Lage (oder Lagen) z.B. von außen (als z.B. leicht zugängliche Bedienung wie Knopf oder auch z.B. schwer zugänglich bzw. nur mit bestimmten Rückstellteil bedienbar) z.B. vom Fahrer geändert werden sollen: wenn z.B. die Feder in der Parkbremsstellung ist und die Aktuatorbetätigung nicht erfolgt (z.B. kein Strom vorhanden ist), kann z.B. über einen Druckknopf eine als günstiger erachtete Stellung (z.B. in der eine gelöste Stellung verbleibt, z.B. nach dem gelösten Totpunkt) erreicht werden. Wenn die Parkbremse einen weiteren Zweck hat (z.B. Diebstahlschutz) kann die EMB, z.B. sobald sie wieder normal funktioniert, aus der mit der Rückstellung 039 vorgenommenen Lage herauskommen und z.B. wieder eine Diebstahlschutzfunktion bzw. Normalbetrieb aufnehmen.

Belagsverschleiß könnte z.B. über den Hub der Betätigungsnocken 032 abgedeckt werden.

Verschleißnachstellung kann wie üblich auch am der Rolle 033 entgegengesetzten Belagsende (z.B. durch Nachstellschraube) erfolgen. In Fig.6 ist eine besonders vorteilhafte Nachstellung empfohlen, bei der mindestens eine Verschleißnachstellnocke 083 auf mindestens einen Verschleißnachstellhebel 084 drückt, um an mindestens einer Anpressauflage 087 (hier z.B. ein Stift, der durch Bremsschuhe 067 und Verschleißnachstellhebel 084 geht) eine in Richtung Belagsanpressung gehende Bewegung mindestens eines Bremsschuhes 067 zu bewirken.

Die Rolle(n) 033 wären hier im Verschleißnachstellhebel 084 befestigt bzw. gelagert bzw. geführt. Besonders vorteilhaft kann die Verschleißnachstellnocke 083 von z.B. mindestens einer Betätigungsnocke 032 gedreht werden, indem z.B. ein Mitnehmer in einem sonst zur Bremsung nicht benutzten Bereich, also z.B. ab gelöst-Stellung z.B. entgegengesetzt zur normalen Betätigungsrichtung dreht. Dabei kann auch eine Übertragung mit Richtwirkung (auch als nichtlinear bezeichenbar), z.B. eine Ratsche, mit jedem Stoß in die Nachstellrichtung die Verschleißnachstellnocke(n) 083 in Richtung mehr Verschleißnachstellung drehen oder es kann z.B. auch der Aktuator für jede zusätzliche Verschleißnachstellung eine größere Drehbewegung in Nachstellrichtung drehen, was z.B. diese Ratsche einsparen kann. Die Verschleißnachstellnocke(n) 083 sollen auch gegen ungewolltes Verdrehen geschützt werden, z.B. durch Reibung oder z.B. durch eine weitere Richtwirkung (z.B. Ratsche). Die Verschleißnachstellung kann auch über eine Feder für die Verschleißnachstellung 021 (bzw. Federwirkung) erfolgen, was z.B. genutzt werden kann, um das richtige Ausmaß an Nachstellung zu erhalten, indem mit einer bestimmten Verformung der Federwirkung eine bestimmte Federkraft entsteht, die ab einer bestimmten Gegenkraft aus der Verschleißnachstellung keine weitere Nachstellung bewirkt und darauf aufbauend einen bestimmten Luftspalt der Beläge an die Reibfläche einstellt. Das kann sowohl in die normalerweise zur Bremsbetätigung vorgesehenen Bewegungsrichtung geschehen als auch in die entgegengesetzte und es kann z.B. die bestimmte Verformung durch z.B. Steuerung des Aktuators entstehen oder andere Begrenzungen, wie z.B. mechanische Hubbegrenzung oder z.B. Moment- bzw. Kraftbegrenzung, wie z.B. Rutschkupplung(en). Auch in beide Betätigungsrichtungen kann eine Verschleißnachstellung erfolgen, so dass z.B. in Betätigungsrichtung bei z.B. jeder Bremsbetätigung ein Nachstellversuch (z.B. aus Sicherheitsgründen) entsteht und zusätzlich z.B. gesteuert ein zusätzlicher Nachstellversuch durch die normalerweise unbenutzte Richtung ausgeführt werden kann (z.B. zur Genauigkeitssteigerung bzw. auch größeren Nachstellung). Statt der Federwirkung kann die Kraft oder das Moment der Nachstellung natürlich auch anders begrenzt werden, z.B. über das Aktuatormoment bzw. z.B. über Reibungen wie z.B. Haftreibung in einer Rutschkupplung. Diese Möglichkeiten der Nachstellung können natürlich bei allen Bremsen genutzt werden, auch z.B. Scheibenbremsen. Die in Fig.6 radiale Nachstellrichtung kann dabei auch in eine andere Richtung gelenkt werden, z.B. über ein Gewinde in axiale Richtung bezüglich der Verschleißnachstellnocke 083, was z.B. bei einer Scheibenbremse eine Nachstellbewegung in Scheibenrichtung bewirken kann. Wenn eine Verschleißnachstellung in Schritten (z.B. einer Ratsche) erfolgt, ist es auch vorteilhaft, eine korrigierende Einstellung (z.B. Winkel) des Bremsaktuators anzuwenden, d.h. z.B. jene Belagsbewegung zu berücksichtigen, die dieser Nachstellschritt bewirkt, um Veränderungen in der Bremswirkung nicht stufig bei Nachstellschritten wirksam werden zu lassen.

In Fig.7 ist eine bezüglich obige Ausführung vorteilhafter Verschleißnachsteller in zwei (von vielen möglichen) Varianten gezeigt, links z.B. wie oben dargestellt für z.B. Trommelbremsen (wäre aber ähnlich z.B. für Kugelrampen-Scheibenbremsen möglich) und rechts nach gleichem Funktionsprinzip aber mit anders angeordneten Teilen für z.B. Scheibenbremsen.

Bekannte Verschleißnachsteller können eine Nachstellbewegung z.B. dann einleiten, wenn der geplante Luftspalt überschritten wurde und bis eine Gegenkraft oder ein Gegenmoment aus dem Nachstellvorgang größer wird als ein im Nachsteller übertragbares, wobei z.B. oft eine Rutschkupplung die Nachstellbewegung so begrenzt, dass sie im Idealfall bei genau der richtigen, meist kleinen, Anpresskraft (des Belages) zum Stillstand kommt. Reibungsbremsen sind aber bei kleiner Anpresskraft vergleichsweise "weich" und somit bewirkt eine bei falscher kleiner Anpresskraft zum Stillstand kommende Nachstellbewegung, dass die Bremse falsch eingestellt ist und z.B. zu wenig Vollbremswirkung entfalten kann. Rutschkupplungen o.ä. haben große Toleranzen (z.B. Vorspannkraft, deren Änderung, gewollte und ungewollte Reibungen und deren Änderung, wie z.B. Fett oder Rost) und damit Toleranzen der Nachstellung. Bei Bremsen, bei denen genügend Betätigungsbewegung vorhanden ist, wird daher ein anderes und genaueres Prinzip vorgeschlagen, das solche Rutschkupplungen vermeidet (die aber natürlich auch mitverwendet werden könnten). Es wird angewendet, dass eine Feder, wenn sie einen definierten Hub macht, eine gut definierte Kraft erzeugt (die auch relativ langzeit- und temperaturstabil sein kann). Daher wird hier mit einem definierten Hub eine definierte Federkraft erzeugt, die den Verschleißnachsteller so weit betätigt, bis die Gegenkraft oder das Gegenmoment aus der Anpressung die definierte Federkraft übersteigt. In Fig.7 links wird eine Bewegung zur Bremsung (hier Drehbewegung der Betätigungsnocke 032) über eine wegdefinierende Bewegung 085 (hier aus einer Nocke) ab einem bestimmten Maß der Bewegung (das den Luftspalt mit bestimmt) an eine kraftdefinierende Feder für Verschleißnachstellung 021 geleitet, die bis zum Aufbau genügender Gegenkraft (aus Belagsanpressung) eine Weiterdrehvorrichtung 086 weiterbewegt und diese Weiterbewegung z.B. an die Verschleißnachstellnocke(n) 083 weitergibt, wobei z.B. die Weiterdrehvorrichtung 086 auch in eine Richtung wirkend (z.B. ratschend) auf die Verschleißnachstellnocke 083 wirken kann, um weiter fortschreitendes Nachstellen in Nachstellrichtung zu bewirken. Die Federwirkung für Verschleißnachstellung 021 kann beliebig sein, z.B. eine Schraubenfeder oder wie in Fig.7 angedeutet ein federnder Streifen oder Draht. Bei einer Kugelrampen-Scheibenbremse würde man z.B. die Nachstelldrehbewegung auf z.B. ein Gewinde geben, das den Belag weiter an die Scheibe heranführt, statt auf die Verschleißnachstellnocke(n) 083.

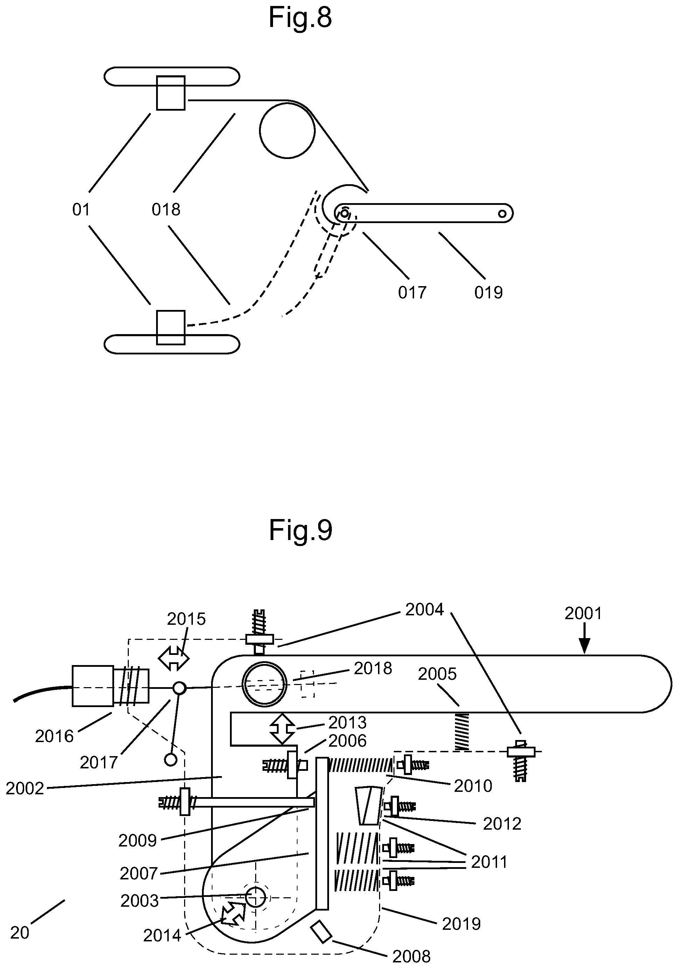

Eine andere Lösung mit einer umgelenkten Nachstellbewegung ist in Fig.7 rechts mit z.B. einer Scheibenbremse (könnte auch ein bei mech. Trommelbremsen übliches Teil zum auseinanderpressen der Schuhe sein sein) gezeigt, wobei die Kreise bei 011 einen Segmentteil der Reibfläche der Scheibe zeigen. Hier würde man auf die schmale Abrollfläche einer senkrecht zur Lage 032 rechts stehenden Betätigungsnocke 032 sehen, auf der z.B. eine kreisförmigen Rolle 033 rollt (die man wiederum als Rechteck sieht, weil die Achse hier waagrecht liegt) und z.B. einen Hebel zur Belagsanpressung betätigt (nicht gezeigt). Die wegdefinierende Bewegung 085 wäre z.B. seitlich auf der Betätigungsnocke 032. (Bei keiner der hier beschriebenen Nachstellungen muss die wegdefinierende Bewegung 085 auf einer Betätigungsnocke 032 sein, man kann jede andere vorhandene Bewegung oder Drehung nutzen, also z.B. auch Zahnräder eines Getriebes). Auch hier wird mit der wegdefinierenden Bewegung 085 eine kraftdefinierende Feder für Verschleißnachstellung 021 betätigt, die auch z.B. ein federnder Streifen oder Draht sein kann. Auch hier wird (wenn z.B. der gewünschte Luftspalt überschritten wurde) eine Weiterdrehvorrichtung 086 gedreht und diese Drehbewegung kann z.B. in einer Richtung (z.B. über eine Ratsche) ein Gewinde oder andere Zustelleinrichtung drehen, um den Belag näher zur Scheibe zu stellen. Bei genauer Betrachtung wird man die kraftdefinierende Feder für Verschleißnachstellung 021 sowie die wegdefinierende Bewegung 085 und auch die Geometrie (z.B. absichtliches Spiel, ab wann die Verschleißnachstellung gedreht wird) und die Federkraft, bei der die Gegenkraft (aus der Belagsanpressung) die Nachstellbewegung stoppt, aufeinander abstimmen (z.B. durch Versuche oder Berechnung), so dass der gewünschte Luftspalt eingestellt wird. In der Realität wird man die Verläufe also so wählen, dass sie bezüglich des Ergebnisses (z.B. des eingestellten Luftspaltes) korrekt verlaufen, also auch überlappend und ineinander übergehend und nicht notwendiger Weise hintereinander, wie zur Vereinfachung geschildert. Die wegdefinierende Bewegung 085 muss auch nicht genau einen bestimmten Hub machen, sie kann auch allgemein einen Hubverlauf haben, wie z.B. in Fig.7 links durch weitere Erhebung bei 085 gezeigt. Damit kann erreicht werden, dass steigender Gegenkraft aus steigender Belagsanpressung auch z.B. steigende Kraft aus der kraftdefinierende Feder für Verschleißnachstellung 021 gegenübersteht, was bewirken kann, dass nicht nur an einem Punkt der Bremsbetätigung der Luftspalt auf seine Richtigkeit korrigiert wird, sondern dass auch über einen weiteren Betätigungsverlauf durch das Zusammenwirken von Kraft aus der kraftdefinierende Feder für Verschleißnachstellung 021 und der Gegenkraft aus der Belagsanpressung ein weiterer Verlauf einer Nachstellbewegung möglich wird. Es sind also verschiedene Erhebungsverläufe wegdefinierende Bewegung 085 mit verschiedener Absicht und Wirkung möglich. Auch wenn die Erhebung (z.B. Nocke) scheinbar nur aus einer Erhebung besteht, wird der realistische Verlauf des Nachstellvorgangs oft so sein, dass im Ablauf der größer werdenden Erhebung bei richtig eingestelltem Verschleiß eine im Wesentlichen derart steigende Gegenkraft (aus Belagsanpressung) gegenüber steht, dass keine wesentliche Nachstellbewegung entsteht, aber bei zu großem Luftspalt (zwischen Bremsbelag und Reibfläche) über der Verlauf der Erhebung eine zu geringe oder teilweise bzw. örtlich zu geringe Gegenkraft, so dass über den Verlauf der Erhebung oder über Bereiche des Verlaufs Nachstellvorgänge entstehen, auch umso mehr und größere Nachstellvorgänge, je größer der Nachstellbedarf ist. Die beteiligten Bauteile können sich auch verändern, wie z.B. ein Bimetall, das z.B. bei heißer Bremse für mehr oder weniger Nachstellung sorgt. Natürlich können Nachstellvorgänge (auch in beide Richtungen mehr bzw. weniger Nachstellung) auch anders oder zusätzlich möglich sein, z.B. händisch oder durch Wirkung des Bremsaktuators oder dessen Motors. Auch eine Kombination von obiger Nachstellung mit kraftdefinierender Feder mit einer durch eine spezielle Aktuatorbetätigung vorgenommenen Nachstellung wird empfohlen, in dem z.B. die Nachstellung mit kraftdefinierender Feder bei jeder Luftspaltüberwindung z.B. so durchgeführt wird, dass die Bremse zumindest in einem akzeptabel starken Maß nachgestellt wird und zusätzlich durch eine bestimmte, gezielt zusätzlich herbeigeführte Aktuatorbetätigung (z.B. in einem sonst zur Bremsung ungenutzten Bereich) genauer nachgestellt wird, also z.B. mehr. Damit kann auch bei falscher absichtlicher Nachstellung (z.B. wenn der Nachstellbedarf zu gering eingeschätzt wird) eine akzeptabel eingestellte Bremse erreicht werden, weil dies durch die Nachstellung bei Luftspaltüberwindung auch ohne gezielt herbeigeführtem Vorgang rein durch die Mechanik der kraftdefinierenden Feder erfolgen kann. Sollte der gezielt herbeigeführte Vorgang z.B. fehlerhaft zu oft oder zu viel nachstellen, kann der Bremsaktuator und/oder die Nichtlinearität (z.B. durch Leistungs- oder Momentreserve des Motors, durch Nichtlinearität, die auch in diesem Zustand genug Anpresskraft aufbringt) so ausgelegt werden, dass selbst im Zustand schleifender Beläge (bei vollständig gelöster Bremse) immer noch eine geforderte Mindestbetätigung der Bremse möglich ist und somit ein (gegebenenfalls auch eingeschränktes) sicheres Bremsen möglich bleibt. Auch ein Parkbremsantrieb 047 (oder anderer Betätigungsantrieb, wie z.B. zusätzliche Handbremsfunktion, Notbremse usw.) kann bei jeder EMB jeder Bauform auf vielfache Art betätigen, z.B. wie üblich über Hebel und Nocke auf mindestens einen Schuh (mit Pfeilen angedeutet) oder z.B. durch Drehen am Verschleißnachsteller (was nach der Drehung natürlich wieder auf den richtigen Verschleißnachstellwert zurückgehen soll). Wie ein Parkbremsantrieb 047 oder anderer Betätigungsantrieb mit der elektrischen Betätigung zusammenwirken kann, ist auch bei dem Bremshebel in Fig.9 gezeigt. Die Bremse aus Fig.6 kann durch Betätigungsweiterleitung 058 statt einer Betätigungsnocke 032 und Rolle dazu 033 auch als Servobremse ausgebildet sein, wobei die sonst in der Belagsabstützung abgestützte Kraft zumindest als Komponente z.B. im Bereich der Rollenlagerung eingeleitet werden kann. Dabei kann man, ähnlich dem dargestellten, zwei Verschleißnachstellungen verwenden, auch mit verschiedenen Nachstelleigenschaften, günstiger Weise abgestimmt auf das unterschiedliche Verschleißverhalten von primärem und sekundärem Belag oder auch mit nur einer Nachstellung (also u.a. Verschleißnachstellnocke 083, Verschleißnachstellhebel 084). Fig.8 zeigt einen Anordnungsvorschlag, der neben der Betätigung der hier vorgestellten Bremsen auch die Betätigung anderer, auch üblicher, Bremsen und auch eine nichtelektrische Betätigung übernehmen kann. Der mindestens eine Aktuator soll bevorzugt ein, insgesamt auf die Belagsbewegung gesehen, nichtlineares Verhalten haben, aber auch lineare Antriebe können verwendet werden, wie z.B. mit Gewinde, oder weniger nichtlineare, wie z.B. Seile an Kurbeln (Hebeln). Dabei wirkt eine Bremsbetätigung 017 (z.B. bestehend aus Aktuator, also auch Elektromotor, auch mit Federn, bevorzugt nichtlinearem Antrieb, eventuell Verschleißnachstellung, gegebenenfalls Parkbremse, gegebenenfalls Steuerelektronik, eventuell auch mit Stromversorgung) über eine Betätigungsübertragung 018 (die z.B. mit Seil, Umlenkteilen wie Rollen oder Hebeln, Bowdenzug, Gestänge, Ketten, aber auch hydraulisch bzw. pneumatisch, also z.B. mit Kolben an der Bremsbetätigung und an den Bremsen) auf mindestens eine Bremse.

Dieser Aktuator könnte sogar auch ganz oder teilweise aus nichtelektrischer Kraft betätigt werden, so könnte z.B. eine Auflaufkraft einen nichtlinear wirkenden Aktuator betätigen und z.B. als Nichtlinearität einerseits die Bremsung betätigen, aber andererseits auch eine Verschleißnachstellvorrichtung, z.B. auch bei entgegengesetzten Bewegungen, wie z.B. beim Betätigen und Lösen, was natürlich auch bei anderen, z.B. elektrischen, Aktuatorantrieben möglich wäre. Möglich wäre natürlich auch, die Betätigungsübertragung so zu minimieren (z.B. durch ein Übertragungsglied für z.B. Drehbewegung), dass die Bremsbetätigung 017 direkt an der Bremse ist. Es wird vorgeschlagen, die Betätigungsübertragung 018 und die Bremse(n) 01 möglichst verlustarm zu gestalten, um Betätigungsenergie und eventuell nötige Rückzugsfederkräfte (die auch wieder Betätigungsenergie brauchen) möglichst gering zu halten. Dazu können z.B. in einer Trommel- bzw. Scheibenbremse möglichst abrollende Anpressteile verwendet werden, also solche, bei denen möglichst wenig Verluste durch (auch "kratzende") Ausgleichsbewegungen erfolgen. Seile können z.B. über Rollen gelenkt werden, Bowdenzüge mit möglichst wenigen störenden Kurven auch reibungsvermindert, z.B. mit Kunststoffbeschichtungen. Die obere Betätigung 018 ist z.B. ein Seil, gegebenenfalls mit Rolle(n). Die untere wäre z.B. ein Bowdenzug. Natürlich würde man verschiedene Varianten eher nicht paaren.

Nichtlinearitäten entstehen in Fig.8 z.B. bei der Bremsbetätigung 017 durch z.B. Seilaufrollungen mit nicht-konstantem Radius, hier sich mit der Betätigung verkleinerndem. Viele andere Nichtlinearitäten sind möglich, z.B. Anlenkung an Hebel mit sich über die Betätigung veränderlicher Hebelwirkung, Abtastern wie z.B. Rollen, die Erhebungen (z.B. Nocken) folgen usw. In Fig.8 ist für jede Betätigungsübertragung 018 (es können beliebig viele sein, also auch eine, zwei oder mehr) eine eigene Nichtlinearität gezeigt. Möglich ist jedoch auch, die Reaktionskraft zu nutzen, so dass z.B. die obere Betätigungsübertragung 018 auf eine Nichtlinearität geht und z.B. die untere Betätigungsübertragung 018 die von der oberen ausgelösten Reaktionskraft nützt die z.B. am schräg nach unten gezeichneten Zugteil abgegriffen werden könnte, d.h. hier könnte die untere Betätigung angeschlossen sein. Zur Reaktionskraftnutzung wäre die Bremsbetätigung 017 so gelagert, dass eine Ausgleichsbewegung erfolgen kann, also z.B. über ein Ausgleichsteil 019. Eine Ausgleichsbewegung (z.B. über Ausgleichsteil 019) sollte bevorzugt auch ohne Reaktionskraftnutzung vorhanden sein, um gut gleichmäßige Betätigungskrafteinleitung bei mehr als einer Bremse zu fördern. Natürlich kann die Bremsbetätigung 017 auch ohne Ausgleichsmöglichkeit der Betätigungskräfte angebracht sein oder eine Ausgleichsmöglichkeit der Betätigungskräfte kann auch wo anders erfolgen, z.B. indem die Betätigungsübertragungen 018 aus einer Ausgleichsvorrichtung kommen, z.B. einem Waagebalken, an dem die Bremsbetätigung 017 angreift.

Verschleißnachstellung wäre z.B. gemeinsam für die EMBs durch Ziehen am Ausgleichsteil 019 möglich, ebenso z.B. durch dessen Längenänderung bzw. an dessen Montage zur EMB oder in der EMB, die Verschleißnachstellung kann aber auch von der Bremsbetätigung übernommen werden, indem sie verschleißbedingt immer weiter betätigt. Natürlich kann auch jede andere Stelle zur Verschleißnachstellung genutzt werden, so z.B. bei den Bremsen 01. Bevorzugt würde man bereits vorhandene Antriebe zur Verschleißnachstellung verwenden, z.B. durch bestimmte Drehrichtung oder bestimmten Drehbereich. In das Ausgleichsteil 019 können auch andere Kräfte, Positionen oder Mischungen aus beidem bzw. andere Wirkungen eingeleitet werden, wie z.B. aus einer Parkbremsbetätigung, aus einer zusätzlichen Bremsbetätigung (z.B. Handbremse, Notbremse, Auflaufkraft, usw.). Das Maß der Einleitung bzw. der Zustände kann auch gemessen werden, um daraus Handlungen bzw. Schlüsse zu ziehen und es können auch Überlagerungen durchgeführt werden, so z.B. eine eingeleitete Position mittels des Bremsaktuators vermindert oder erhöht weitergegeben werden.

Bei selbstverstärkenden EMBs kann eine vorteilhafte Auslegung so sein, dass die Bremswirkung in Vorwärtsfahrtrichtung z.B. mindestens 1.5 mal höher ist als in Rückwärtsfahrtrichtung (insbesondere wenn Fahrzeuge dabei sind, bei denen man im Stillstand absteigt, also z.B. bei Fahrrädern bzw. Fahrradanhängern). Dabei kann die Bremswirkung für Stillstand bzw. für Zurückrollen (die z.B. auch aus mindestens einer Federwirkung stammen kann) auch so ausgelegt sein, dass in diesen Zuständen nur ein Halten gegen Wegrollen (auch unter ungünstigen Bedingungen, wie z.B. Steigung, Beladung) möglich ist. Auch kann bei Fahrzeugen, bei denen ein Rückwärtswegrollen unwahrscheinlich ist (es wäre z.B. unplausibel, dass ein Fahrrad mit Fahrer in Rückwärtsfahrt betrieben wird), die Bremswirkung in Vorwärtsfahrt z.B. mindestens doppelt so hoch sein wie bei Stillstand bzw. rückwärts. Es wird also z.B. für einen Fahrradanhänger gegebenenfalls eine Duplexbremse vorgeschlagen, um starke Bremsung vorwärts zu ermögliche und nur Halten gegen Wegrollen oder Rückwärtswegrollen und z.B. beim Fahrrad (oder Moped bzw. Motorrad) wird auch eine Servo- bzw. unidirektionale Servo-Ausführung vorgeschlagen, wenn z.B. Fahrräder nur vorwärts stark bremsen können.

Um Gewicht bzw. Kosten zu sparen (und auch aus anderen Gründen) können Bremsenteile bei seltener starker Bremsung höher belastet werden als bei üblichen Bremsungen bzw. auch die Nichtlinearität so ausgelegt sein, dass sie diese Belastung hervorruft.

Gegebenenfalls (z.B. bei Fahrradanhängern) wird vorgeschlagen, Laufräder (z.B. zum Transport) leicht abnehmbar zu machen. Bei einer Trommel-EMB wird dazu vorgeschlagen, dass die Trommel mit gegebenenfalls Radlager und gegebenenfalls Generator bzw. Motor leicht von einem Achszapfen abgezogen werden kann (z.B. nach Lösen einer Druckknopfverriegelung, einer Mutter, eines Bajonetts usw.) und dabei sich auch z.B. Federkontakte zu Motor bzw. Generator lösen. Bremsschuhe mit zugehörigen Teilen wie Antrieb, Verschleißnachstellung sollen am Achszapfen bleiben, bevorzugt auch mit einer Grundplatte bzw. Grundeinheit, die diese Teile trägt bzw. gekapselt trägt. Bevorzugt wird diese Trommelbremse so gestaltet, dass sie leicht für beidseitigen Achsausgang (wie z.B. für Fahrradgabeln üblich) verwendet werden kann, in dem zumindest der Achszapfen so umgestaltet wird, dass sich zwei Achsausgänge (z.B. in üblicher Montagebauweise mit Gewinde) ergeben.

Bei einer Scheiben-EMB wird eine Konstruktion mit abziehbarem Laufrad so vorgeschlagen, dass die Bremsscheibe mit dem Sattel am Fahrzeug bleibt, gegebenenfalls auch z.B. Generator bzw. Motor und sich das Laufrad (gegebenenfalls mit Radlager) durch eine drehübertragende Verbindung z.B. nach Lösen einer Druckknopfverriegelung, einer Mutter, eines Bajonetts usw. abziehen lässt.

In Fig.16 ist eine von vielen möglichen Ausführungen der Bremse 01 (hier Trommelbremse, Bremstrommel 012) vorgeschlagen, die sich z.B. auch für Speichenräder eignet, obige Vorschläge aufgreift und sowohl beidseitige Achse (z.B. wie für Schwingen bzw. Fahrradgabeln mit z.B. beidseitigen Muttern) haben kann oder wie dargestellt mit einseitiger Achse (ähnlich Achsstummel bei KFZ-Trommelbremsen), wobei dann die Befestigung z.B. mit einer Radmutter oder wie gezeigt mit einer einfachen Lösevorrichtung 2501 (jedenfalls so, dass sich nichts unerwünscht löst) erfolgen kann (wie z.B. einer Druckknopfverriegelung, die z.B. über einen Stift, auch gegen Federkraft, Verriegelungsteile freigeben kann): Es kann eine elektrische Maschine 2502 eingebaut sein (mit oder ohne Getriebe, z.B. Dynamo, Generator, Fahrtmotor) die auch Stromversorgung (z.B. der Bremse bzw. Steuerung usw., eventuell auch Beleuchtung usw.) geben kann bzw. auch Signale zur Drehzahl (z.B. für ABS Geschwindigkeit, Raddrehzahl usw.) geben kann. Auch zusätzliche oder alternative Geber können verwendet werden wie z.B. magnetische, Temperatur usw. Wenn elektrische Teile mit dem Rad entfernt werden können, ist eine leicht trennbare und herstellbare elektrische Verbindung vorteilhaft, z.B. über Federkontakte. In einem weiteren Bereich (z.B. durch 012 angezeigt) können die eigentlichen Bremsenteile wie Bremsbelag 063, Bremsschuh 067, Betätigungsnocke 032, Rolle dazu 033 z.B. usw. ähnlich wie in Fig.5 und Fig.7 sein, im gleichen oder einem anderen Bereich (bevorzug in der Nähe) können gegebenenfalls Teile wie z.B. Verschleißnachstellnocke 083, Verschleißnachstellhebel 084, Anpressauflage 087, wegdefinierende Bewegung 085, Weiterdrehvorrichtung 086 usw. sein. Ebenfalls im gleichen oder einem anderen Bereich (bevorzug in der Nähe) Bereich kann z.B. eine Betätigungsfeder 042 sein, mit z.B. schwenkbarer oder kippbarer Abstützung (oder fester Abstützung, welche die Geometrieveränderungen während der Bewegung in Federverformung leitet) sowie Anlenkung an die Bremsbetätigungsbewegung (z.B. Kurbelartig). Die Anordnung der Bauteile und Bereiche kann auch anders oder in anderer Reihenfolge erfolgen. Der Aktuator 2503 (z.B. Elektromotor mit oder ohne Getriebe, angedeutet durch mehrere Striche 2503, die auch mehrere Komponenten und Lagen andeuten) kann grundsätzlich auch von der Bremse 01 getrennt sein bzw. auch an oder in der Bremse (ganz oder teilweise), bevorzugt aber zumindest etwas abseits von Bremsstaubeinwirkung, z.B. räumlich oder z.B. geschützt wie z.B. ganz oder teilweise abgedeckt, gegebenenfalls auch wassergeschützt oder dicht, wobei sich Schutz vor Eindringen (z.B. Wasser, Schmutz, usw.) auch auf mehr Teile (bis hin zu allen Teilen) in der EMB beziehen kann. Ein Achse 2504 und Ankerbaugruppe 2505 kann als Befestigung nach außen (z.B. zu Fahrzeugteilen wie Radaufhängung, Fahrgestell usw.) bzw. auch als innere Befestigung dienen, so dass z.B. gegebenenfalls die bremskrafttragenden Bauteile an einer sich krafttragend ausgebildeten ins Innere der Bremse erstreckenden Ankerbaugruppe 2505 befestigt bzw. angelenkt sein können, ebenso z.B. auch Teile um die Betätigungsfeder 042 bzw. diese nach innen geführte Ankerbaugruppe 2505 auch über andere Teile kraftragend ragt, z.B. über Getriebeteile bzw. Federteile. Eine zusätzliche, auch nichtelektrische Betätigung (z.B. ähnlich wie in Fig.6 als Parkbremsantrieb 047 bezeichnet) kann nach außen geführt werden, die auch andere Aufgaben erfüllen kann wie z.B. aus Sicherheitsgründen als zusätzliche oder alternative Betätigung bzw. z.B. als Bremse in einem nichtelektrisch betätigten Betriebszustand wie z.B. Schieben oder ziehen.

Als besonders vorteilhaft wird vorgeschlagen, die EMB so auszulegen, dass möglichst viele Anwendungsfälle erschlossen bzw. möglich werden. D.h. als vorteilhafte Auslegung kann gegebenenfalls ein längeres Bremsen aus Federkraft empfohlen werden (das z.B. auch bei längerem Stillstand den elektrischen Energieverbrauch senkt) bzw. dass auch eine solche Parkbremsstellung vorgesehen wird, bei der z.B. ohne Zusatzmaßnahmen oder Bauteile (abgesehen von jenen, die für die mindestens eine Feder nötig sind), vor allem bevorzugt ohne Lösen einer Bremse in einen Parkbremszustand gebracht werden kann (oder selbsttätig geht), der keinen bzw. zulässig geringen Stromverbrauch bewirkt. Dieses längere Bremsen aus Federkraft bzw. Parkbremsen kann auch aus Sicherheitsgründen vorgesehen sein, damit die EMB z.B. bei Stromlosigkeit oder Fehler in einen deutlich, aber im Wesentlichen ungefährlich stark, bremsenden Zustand geht, also z.B. im Bereich 0,2 g bis 0,5 g. Dieser Zustand kann auch lösbar sein (z.B. durch eine Handlung), um z.B. stromlos eine Weiterfahrt zu ermöglichen. Insbesondere kann neben der elektrischen Bremsbetätigung auch eine andere (z.B. mechanische oder druckbetätigte) vorgesehen sein, die automatisch (z.B. ab einer gewissen Betätigung) oder ersatzweise angewendet wird oder greift. Als erschließbarer Anwendungsfall sei insbesondere auch ein Fahrzeug genannt, das auch besonders langsam betrieben wird, z.B. durch einen gehenden Menschen. In diesem Betrieb kann die verfügbare elektrische Energie besonders klein sein, also z.B. nur jene, die z.B. durch mindestens einen fahrtbetriebenen Stromerzeuger (oder andere Erzeugung wie z.B. Lichtwirkung, Wind usw.) entsteht und statt z.B. einer zusätzlichen (z.B. mechanischen oder druckbetätigten) Bremsbetätigung wird für diesen Fall vorgeschlagen, die EMB so auszulegen, dass sie z.B. bei Bremswunsch "gelöst" möglichst wenig Strom braucht und bei längerem Bremswunsch in eine stromsparende Stellung geht. Insbesondere wird empfohlen, die Nichtlinearitäten in der EMB dafür günstig auszulegen. Dazu kann z.B. eine Feder an einer Kurbel drehend die Betätigung unterstützen bzw. eine Nichtlinearität in der Belagsanpressung so wirken, dass die Feder einen gewünscht bremsenden Zustand erreichen kann und stärkeres Bremsen bis hin zur Vollbremsung z.B. mit zusätzlichem Stromverbrauch möglich werden kann. Für ein längeres Nicht-Bremsen kann z.B. die Feder an der Kurbel eine Totpunklage oder totpunktnahe Lage einnehmen. Ein betätigter Zustand im Stillstand kann auch aus Sicherheitsgründen empfohlen werden, wenn z.B. ein Fahrzeug oder Gegenstand gegen unbeabsichtigtes Wegrollen gesichert sein soll (z.B. mit einem Kind auf abschüssigem Grund, bei Wind usw.) wobei hier auch empfohlen werden kann, diese Bremswirkung so auszulegen, dass z.B. bei voller Beladung und denkbarem Gefälle bzw. Wind (z.B. eines vorbeifahrenden Zuges) kein Wegrollen stattfindet, diese damit erreichbare Bremswirkung aber auch so gestaltet sein kann, dass sie bei Fahrt keine gefährlich starke Bremswirkung entfaltet (die z.B. zu Blockieren, Überschlag oder Kontrollverlust führen könnte), wenn sie eintreten sollte, z.B. durch eine Störung oder z.B. eine Bedienung (auch Fehlbedienung, z.B. ungewollt während der Fahrt). Ein gute aus vielen möglichen Kombinationen kann aus einer ersten Einschaltung aus "völliger" Abschaltung (Restströme, die zu keiner Funktionsbeeinträchtigung führen, wären möglich) bestehen, also z.B. einem Schalter, der auch ein Einschalten weiterer Bremsfunktionen übernehmen kann (also auch z.B. ein Bremslicht schalten kann, auch aus z.B. Sicherheitsgründen nur in eingeschaltetem Zustand die Bremsung erlauben usw.) und einer Bremswunscherkennung (z.B. eine Seilkraft-, Druck- bzw. Positions-, Verzögerungs-, Auflaufkrafterfassung), wobei auch gegebenenfalls zusätzliche Kombinationen als vorteilhaft empfohlen werden, so z.B. dass die erste Einschaltung auch mit Unterstützung von Strom aus z.B. einem Generator möglich wird, also z.B. bei beginnender Raddrehung. Dies kann z.B. durch ein in den Seilzug (bevorzugt an einem Ende) einfügbares Gerät erfolgen, durch das z.B. das Seil durchgefädelt wird oder z.B. das Seil durch einen Schlitz gegeben wird bzw. das Seil daran befestigt wird. Auch mehrere obiger einschaltenden bzw. bremswunscherkennenden Funktionen sind möglich, z.B. mindestens eine am Zugfahrzeug und mindestens eine am Anhänger, die z.B. beim Schiebebetrieb des Anhängers genutzt werden kann.

### Maßnahmenliste

Aus obigem wird vor allem für Fahrzeuge mit wenig verfügbarer elektrischer Energie wie z.B. Fahrräder, Fahrradanhänger (bzw. Anhänger ohne besondere Stromversorgung, also auch z.B. PKW oder Nutzfahrzeuganhänger) folgende "Maßnahmenliste" (die oben erwähnt wurde, weil sie auch die Nichtlinearität, Federwirkung, Selbstverstärkung usw. betrifft) empfohlen, wobei Strombedarf für Elektronik, für Aktuator beim Positionshalten oder bewegtem Aktuator (mit Aktuatormotordrehbewegung), für kurzen Stillstand und für langen Stillstand, Stromerzeugung aus Generator, Stromspeicher in Batterie oder Akku (hier als Batterie zusammengefasst) einbezogen werden:
- Normaler Fahrbetrieb: Die Generatorenergieabgabe wir so ausgelegt, dass alle Bremsfunktionen möglich sind, auch ABS bzw. ESC über plausible Zeit. Bevorzugt wird ein (auch kleiner) Akku geladen. Eine nichtelektrische Zusatzbremsfunktion, wie z.B. mechanisch (auch z.B. ab gewisser Bremsbetätigungsstellung), kann verfügbar sein. Ein Wechsel in andere Betriebe soll möglich sein, z.B. in Parkbremsstellung.
- Langsamer Fahrbetrieb, auch gehend bewegt (z.B. "Jogging"): Die Generatorenergieabgabe wird bevorzugt ähnlich wie in "normaler Fahrbetrieb" ausgelegt, um zu einer vernünftigen Generatordimensionierung zu kommen. Er wird aber so ausgelegt, dass nur eine Minimalfunktion entsteht, also z.B. seltenes Aktuatorbewegen, aber längeres Aktuatorpositionshalten. Dazu wird die Federwirkung und Geometrie bevorzugt so ausgelegt, dass gelöst-Halten mit wenig bis keiner elektrischen Energie möglich ist und die bei langsamem Fahrbetrieb erwartbaren Bremsungen (z.B. übliche Gefälle mit üblicher Beladung) durch Federwirkung und Reibungsverluste in der Bremsbetätigung entweder ohne Aktuatorenergieaufnahme möglich sind oder die Generatorenergieabgabe so gestaltet wird, dass auch längeres Halten einer derartigen Aktuatorposition möglich ist, bevorzugt sehr lange möglich wäre. Ein geringer "Notbremsungsstrombedarf" bei langsamem Fahrbetrieb kann über Batterie bereitgestellt werden, da es sich ja nur z.B. um eine deutliche Bremsung bei Schiebebetrieb durch eine Person handelt. Zusätzliche Stromsparmaßnahmen werden empfohlen, wie z.B. dass die Bremsenelektronik nur dann überhaupt oder höheren Strom braucht, wenn eine Bremsbetätigung (z.B. durch einen Schalter) erkannt wird und der Prozessor bzw. die Elektronik z.B. in einem stromsparenden Zustand arbeitet. Der "langsame Fahrbetrieb" kann auch oder nur nichtelektrisch bremsen. Eine nichtelektrische Zusatzbremsfunktion, wie z.B. mechanisch (auch z.B. ab gewisser Bremsbetätigungsstellung), kann verfügbar sein. Wechsel in andere Betriebe soll möglich sein, z.B. in Parkbremsstellung.
- Kurzer Stillstand: Er wird ohne Generatorenergieabgabe abgedeckt (bzw. mit anderen als durch Fahrt betriebenen, wie z.B. Photovoltaik), aber mit möglichst geringer Batterieunterstützung. Bevorzugt nimmt die EMB nur stromlose Stellungen an, wie z.B. voll gelöst oder so gebremst, dass plausible Steigungen und Einflüsse wie Wind, Fahrtwind etc. gegen Wegrollen gesichert bleiben. Die Elektronik (auch der Prozessor) werden auch stark stromsparend betrieben und reagieren z.B. nur auf Änderungen (z.B. Bremswunsch, Fahrzeugbewegung usw.) bzw. reagieren nur langsam (ohne z.B. störend langsam). Dieser Zustand kann auch nichtelektrisch abgedeckt oder unterstützt werden. Wechsel in andere Betriebe soll möglich sein, z.B. in Parkbremsstellung, Fahrtaufnahme. Bei oder vor Batteriestromausfall kann der lange Stillstand (sh. unten) aktiviert werden.
- Langer Stillstand: Abdeckung ohne Generatorenergieabgabe, u.U. mit anderer Energiegewinnung wie Photovoltaik oder Aufnahme von Streufeldern (z.B. elektromagnetischen naher Stromleitungen). Bevorzugt wir vor Stromlosigkeit eine Aktuatorstellung eingestellt, dass plausible Steigungen und Einflüsse wie Wind oder Fahrtwind gegen Wegrollen gesichert bleiben. Auch eine Diebstahlfunktion kann mit dem Aktuator erreicht werden, so dass z.B. Bewegen des Fahrzeugs bzw. Abziehen von Rädern (durch die Belagsanpresskraft) erschwert werden und auch wieder eintreten, sollte eine unbefugte Inbetriebnahme doch erfolgen. Dieser Zustand kann auch nichtelektrisch abgedeckt oder unterstützt werden. Wechsel in andere Betriebe soll möglich sein, z.B. Fahrtaufnahme. Dazu kann z.B. eine Eingabe gemacht werden, z.B. ein Knopf gedrückt oder der Bremshebel kurz gezogen werden, um wieder Strom einzuschalten und mit der Elektronik zu reagieren. Damit kann von einer sofortigen Fahrtfreigabe bis zu Entsperrfunktionen Vieles möglich sein, z.B. eine Interaktion mit einem berechtigten Mobiltelefon zur Entsperrung.
- Langer Stillstand ohne Wiederinbetriebnahmemöglichkeit (durch z.B. defekte Batterie): Bevorzugt wird vorgesehen, dass Strom verfügbar gemacht werden kann, z.B. durch USB-Anschluss, Batterieladen, Entriegeln der Bremsen und Schieben bzw. Fahren für Stromerzeugung. **In** dieser Phase soll gegebenenfalls vorerst kein Diebstahlschutz verhindernd wirken.
- Andere Zustände: Können durch die vielfälligen Möglichkeiten der **EMB** hinzugefügt werden und wären (z.B. auch durch Eingriffe von außen) z.B. eine Bremsung, wenn z.B. ein Kind dies nicht macht, Beenden der Fahrmöglichkeit, ein ungebremstes Parken (wenn z.B. öfter an andere Stelle geschoben werden soll, auch durch Fernsteuerung ausgelöst bzw. auch zeitlich begrenzt, auch mit Übergang in Parkbremsfunktion und Diebstahlschutz unter bestimmten Bedingungen, wie z.B. weites Entfernen, längeres Bewegen usw.), auch absichtlich unkontrollierbares bis hin zu gefährlichem Fahrverhalten, z.B. bei Diebstahl usw., Gruppenverhalten (dass z.B. ganze Fahrzeuggruppen gesperrt, gebremst, entriegelt usw. werden können.), dass je nach Vorhandensein von Steuersignalen (z.B. Empfang von Funksignalen, Signal an Kabel oder Empfänger usw.) bestimmte Funktionen aktiviert sind bzw. auch zeitlich gesteuert ohne diese Signale auch in der Funktion geändert bzw. abgeschaltet werden können und so weiter. Auch die umgekehrte Datenrichtung kann möglich sein, indem z.B. Daten der Bremse(n), des mindestens eins Fahrzeugs bzw. andere, wie z.B. Position, Geschwindigkeit, Bilder, Filme, Umweltdaten wie Temperatur usw., an eine Ausgabe (z.B. für den Fahrer) und/oder Aufzeichnung gegeben werden, also z.B. mit Bluetooth auf z.B. einem Mobiltelefon angezeigt/aufgezeichnet werden. Auch eine gesteuerte Auslösung solcher Funktionen ist möglich, so z.B., dass bei bestimmter Bremswirkung (bzw. z.B. Verzögerung bzw. Schnelligkeit von Wertänderungen) Funktionen in der Funktion geändert werden, also z.B. Aufzeichnung(en) gestartet oder feinauflösender gemacht werden, auch mit Fahrtenschreiber-Funktion, also z.B. auch mit Weitergabe der Daten um z.B. einen Versicherungstarif zu erlangen oder z.B. eine Erlaubnis, wie z.B. Betrieb in Fußgängerzone. Es kann auch z.B. die Bremsensteuerung (oder Teile davon) von außen erfolgen, also z.B. von einem Mobiltelefon, auch mit Einbeziehung von Messwerten, wie z.B. Verzögerungsmessung des Mobiltelefons.

Auch weitere Merkmale können möglich sein, wie z.B. dass die Bremse (oder Teile davon) leicht vom Fahrzeug entfernbar sind (z.B. dass Räder eines Fahrradanhängers inklusive der Bremstrommel einfach, also z.B. durch Knopfdruck, abziehbar sind, dass Teile der Bremse bzw. des Aktuators abgedeckt sind, z.B. gegen Bremsstaub), dass z.B. ein Fahrtantriebsmotor mit der Bremse zusammenwirkt bzw. zusammen- oder eingebaut ist und auch ebenfalls mit der Trommel abziehbar sein kann, dass so ein Motor auch als Generator wirken kann, z.B. zum Batterieladen bzw. zum regenerativen Bremsen, dass bevorzugt regenerativ gebremst wird bzw. erst, wenn dies nicht ausreicht, die Reibungsbremse verwendet wird, dass ein Generator oder Motor auch Raddrehzahlsignale (z.B. Verwendung des Wechselstroms für ABS-Drehzahl) abgibt, dass der Generator oder Motor noch andere Information abgibt, wie z.B. Temperatur (z.B. über den Kupferwiderstand der Wicklung(en), wofür z.B. auch der Bremsaktuator dienen kann) bzw. z.B. radlastabhängige Veränderungen z.B. des Luftspaltes (und damit z.B. eine Radlastschätzung ermöglicht) und andere.

Insbesondere bei PKW Anhängern (bzw. auch schwereren, bzw. auch für anderen Einsatz wie z.B. Landwirtschaft, Baustellen usw.), aber natürlich auch generell als z.B. Sicherheitsaspekt kann (z.B. auch aus obiger Liste) eine sicher Stromversorgung empfohlen werden, z.B. als weiterer Listenpunkt "Laden bzw. Pufferung" einer sicheren Stromversorgung: diese wird z.B. bevorzugt möglichst ohne aufwendige Zusatzteile wie größere Generatoren (die z.B. bestimmte Bremsungen direkt speisen könnten, wie z.B. bis zu einem Teil des Vollbremsmoments) empfohlen, also z.B. bevorzugt nur einer Batterie oder Akkus (die z.B. auch bereits am Anhänger vorhanden sein können), auch in Kombination mit einer kleinen Stromerzeugung. So kann z.B. die Erzeugung des ABS-Raddrehzahlsignals so gestaltet werden, dass (z.B. durch Spule(n)) auch Ladestrom (für z.B. einen Akku, Kondensator usw.) erzeugt wird. Bevorzugt wird man eine Art Statistik zu Rate ziehen, z.B. wie lange mit mindestens welcher Geschwindigkeit gefahren werden muss, um wieder eine bestimmte Anzahl von Bremsungen einer bestimmten Stärke verfügbar zu bekommen, also z.B. dass ab z.B. 25 km/h in z.B. 5 Minuten wieder eine "normale" Bremsung mit z.B. g/3 möglich sein soll. Das wird sich vor allem an Sinnhaftigkeit und typischem Fahrverhalten orientieren, also z.B. dass eine gewisse Fahrdauer zwischen Bremsungen typischer Weise möglich ist, kann aber z.B. ausschließen, dass ständiges Anfahren und Abbremsen in z.B. einem Stau nicht oder unvollständig zur Ladung beiträgt. Auch eine kleine Photovoltaik kann, z.B. bei längerem Nicht-Gebrauch des Anhängers die Batterie in einem geforderten Zustand halten bzw. diese Möglichkeit bieten.

Obige "Maßnahmenliste" dient als vorteilhafte Sammlung von Punkten und deren Details und kann ganz oder teilweise (bzw. auch nicht wenn unzutreffend) erfüllt werden.

### Steuerung bzw. Regelung der EMB(s)

Für die Steuerung bzw. Regelung mindestens einer EMB wird (generell, also auch unabhängig von den hier genannten Ausführungen und Anwendungen) vorgeschlagen, dass auch ein Regelkreis gebildet wird, der den Sollwert einer Bremswirkungsvorgabe mit einem ermittelten Istwert einer Bremswirkung vergleicht und damit die Betätigung der Bremse regelt, also z.B. die Aktuatorposition so einstellt, dass die Abweichung von Soll und Ist wie gewünscht ausfällt, also z.B. gering wird, was z.B. mit den üblichen PID Regelungen (oder Anteilen davon) bezüglich Zeitverhalten bzw. Genauigkeit möglich ist. Als Wert für die erzielte Bremswirkung kann dabei vielerlei verwendet werden, wie z.B. Verzögerung, Bremsmoment, Auflaufkraft, Bremskraft, Belagsanpresskraft, Betätigungskraft. Insbesondere wird empfohlen, dass der Ist-Wert gemessen, ermittelt bzw. geschätzt wird bzw. z.B. aus einem Modellverhalten oder bremsenbeschreibendem Verhalten gewonnen wird bzw. aus Messungen innerhalb der Bremse und/oder Berechnungen, also z.B. vom Aktuatormoment, auf die Belagsanpresskraft geschlossen wird bzw. über aktuellen Reibbeiwert bzw. Reibradius eine Ist-Bremswirkung ermittelt wird. Vorteilhaft ist, dass mindestens einer dieser Werte von der Bremse ausgegeben wird, also z.B. analog oder digital. Die Sollbremswirkung kann im Anstieg (z.B. pro Zeit) begrenzt werden oder dazu z.B. gefiltert (z.B. Tiefpass) werden und damit können z.B. bei einem Sprung der Sollbremswirkung Zwischenwerte gebildet werden, wobei das Zeitverhalten des Anstieges bevorzugt so gewählt wird, dass die Bremse folgen kann, also keine bis tolerierbar kleine zusätzliche Verzögerung in der Ist-Bremswirkung entsteht. Die PID- oder ähnliche Regelparameter werden bevorzugt ebenso gewählt, dass keine bis tolerierbar kleine zusätzliche Verzögerung in der Ist-Bremswirkung entsteht, da ja auch der Motor eine Zeit zum Einstellen braucht und Zeitverhalten des Anstieges und der Regelung (PID) so gewählt werden, dass die Bremse nicht oder nur tolerierbar länger braucht als der Motor bzw. die gesamte Aktuierung (inkl. z.B. Feder(n), Nichtlinearität usw.) ermöglicht. Da zwischen Aktuatoransteuerung und Bremswirkungen nichtlineare Zusammenhänge vorliegen können, wird insbesondere vorgeschlagen, diese Regelung mit den bekannten Methoden der Regelungstechnik auf die bekannten vorteilhaften Eigenschaften einer Regelung zu untersuchen, also z.B. auf Stabilität gegen Schwingneigung. Zwischen Eingangs- und Ausgangsgrößen (z.B. Soll- und Ist-Bremswirkung) werden Zeitverhalten liegen und damit kann (abhängig von z.B. Verstärkung) durch z.B. Phasenlage Schwingneigung bzw. -bedingung entstehen. Daher wird empfohlen, dies gegebenenfalls auf Stabilität bzw. Stabilitätsreserve (für den Fall möglicher Einflüsse und Toleranzen) zu untersuchen, was innerhalb der Bremssteuerung erfolgen kann, aber auch außerhalb an einem Modell und z.B. durch verschiedene Parameterkombinationen (z.B. PID oder Anteilen davon) bzw. Variation möglicher Einflüsse bzw. Toleranzen geschehen kann und z.B. gutes Sprung- bzw. Zeitverhalten zum Ziel haben kann aber auch z.B. bei veränderlichen (also z.B. stetigen oder einer digitalen Repräsentation von stetigen) eine Schwingneigung erkennen bzw. ausschließen soll. Es können die bekannten Methoden der Regelungstechnik angewendet werden.

Besonders vorteilhaft ist es auch, wenn verschiedene bremswirksame Teile in der Steuerung bzw. Regelung individuell behandelt werden, also z.B. die beiden Beläge einer Scheiben- oder Trommelbremse oder die einzelnen Reibflächen z.B. einer Mehrscheibenbremse, wobei alle Reibflächen individuell behandelt werden können oder in Gruppen, also z.B. weiter außen liegende und weiter innen liegende. Als "individuell" wird vorgeschlagen, dass (z.B. auch iterativ bzw. in Näherungsschritten) der z.B. Beeinflussungszusammenhang gelöst bzw. angenähert wird, also wie z.B. eine bestimmte Betätigungskraft eine z.B. selbstverstärkungsabhängige (oder nicht selbstverstärkungsabhängige) Anpresskraft pro Belag oder Gruppe bewirkt, was wiederum einen bestimmten Reibbeiwert bewirkt und damit eine bestimmte Bremskraft pro Belag oder Gruppe und die jeweilige Reibkraft mit der jeweiligen Geschwindigkeit der Reibbewegung eine bestimmte Erwärmung des Belages oder der Gruppe bewirkt, welche wiederum den Reibbeiwert bzw. eine mögliche Selbstverstärkung bestimmt und dieser verbesserte bzw. genauere Zustand z.B. im nächsten Rechendurchgang (der wie oben beschrieben oder ähnlich ablaufen kann) verwendet wird. Im Wesentlichen dient dieser Vorschlag dazu, die sich gegenseitig beeinflussenden Größen bei Berechnung mit zwei oder mehreren Reibpaarungen schrittweise zu lösen. Die beiden oder mehrere Bremskräfte können natürlich zu einer Gesamtbremswirkung (z.B. Bremsmoment) zusammengefasst werden bzw. ist es natürlich auch möglich, mehrere Reibpaarungen zusammenzufassen und das Verfahren so oder ähnlich mit z.B. einer Reibpaarung repräsentativ für alle zu nutzen. Aktuatorseitig ist es natürlich denkbar, dass mehrere Aktuatoren für die Reibpaarungen verwendet werden, aber es wird auch vorgeschlagen, dass die Anpressungen z.B. von "einem Aktuator" erfolgen, wobei "ein Aktuator" aber z.B. aus einem Elektromotor, gegebenenfalls anderen Energiespeichern, wie mindestens einer Feder, bzw. zusätzlichen Betätigungen (z.B. aus Sicherheitsgründen und/oder z.B. als Parkbremse) bestehen kann. Wenn es für die Bremsensteuerung bzw. Regelung günstig ist, kann z.B. die Aktuatorposition bzw. das Aktuatormoment (oder ähnliche Ausdrücke mit ähnlicher Wirkung) für die Reibpaarungen individuell aufgeteilt werden. Insbesondere wird vorgeschlagen, dass das Aktuatormoment entsprechend den Betätigungskräften für die entsprechenden Reibpaarungen aufgeteilt werden kann, wozu jene Aufteilung als hilfreich herangezogen werden kann, welche bei oben geschilderter (z.B. auch iterativ bzw. in Näherungsschritten ermittelter) Aufteilung auf bremsende Teile entsteht. Wenn also z.B. obige Aufteilung ein bestimmtes Verhältnis der Betätigungskräfte ergibt, kann dieses wiederum als Maß (z.B. Verteilungsverhältnis) zur Aufteilung eines Aktuatormoments dienen.

Es wird vorgeschlagen, dass gegebenenfalls auch mindestens ein Rad etwas zeitverzögert bzw. mit einer etwas anderen Bremswirkung gebremst wird, um aus den möglicherweise entstehenden verschiedenen Radgeschwindigkeiten auf die Bodenhaftung zu schließen und gegebenenfalls daraus abzuleiten, wie weit eine Bremswirkung steigerbar ist bzw. wäre. Das kann sowohl im Betätigungsfall vorgeschlagen werden und/oder im Falle des Lösens und/oder im Falle eines Einsetzens einer Anti-Blockier bzw. Schlupfregelungsmaßnahme, indem z.B. aus dem Verhalten eines Rades geschlossen wird, wie sich auch mindestens ein anderes Rad bezüglich Schlupf- bzw. Blockiergrenze verhalten wird und die genannten Erkenntnisse für die Verhinderung von übermäßigem Schlupf, Blockieren oder auch zu geringem Bremsen angewendet werden. Zu geringes Bremsen kann hier bedeuten, dass (z.B. durch Änderung von Straßenbedingung, z.B. von schlecht auf besser) mehr bremsen möglich wäre und das hiermit unterstützt bzw. angewendet wird. Auch Ermittlung von Geschwindigkeit (z.B. über Grund) kann damit ermöglicht oder verbessert bzw. unterstützt werden, wobei natürlich auch andere Geschwindigkeitsermittlungen oder Schätzungen mitwirken können, wie z.B. durch Integrieren bzw. Aufsummieren aus Beschleunigung.

Es wird hier aus einem wie auch immer zustande kommenden "Bremswunsch" (aus z.B. Hebel, Pedal, Notbremsassistenten, automatischem Fahren, Sensor wie z.B. Kraft, Achs- oder Radlast, Auflaufkraft, Verzögerung, Geschwindigkeit, Ort wie z.B. mit GPS und beliebigen weiteren Größen und Schätzungen oder Ermittlungen wie z.B. Masse oder Fahrzeugmasse) in beliebigen Größen (z.B. Verzögerung, Prozent, "Bremsstärke", einheitenlos usw.) ein Zustand eines elektrischen Aktuators (Elektromotor, Magnet, usw.) hervorgerufen, also z.B. Motorwinkel, Strom usw.. Das kann hier über Software (z.B. C, Simulink usw.) oder eine Analogschaltung erfolgen, prinzipiell aber beliebig, also z.B. über Fuzzy-Logic, Neuronale Netzwerke, Tabellen, Schalter (z.B. Stufenschalter, Bremslichtschalter) oder in Kombination, so dass z.B. die EMB nur ab einer bestimmten Schalterstellung bremsen kann bzw. mit Strom versorgt wird. Auch die Kombination von Eingangsgrößen wird empfohlen, also z.B. Bremswunsch und Fahrzeugdaten wie z.B. aktuelle Achslast(en).

Besonders vorteilhaft ist, wenn die Steuerung bzw. Regelung auch die eingestellten Werte ausgeben kann, also z.B. aus Messung, Schätzung, Ermittlung usw. oder Kombinationen daraus. In Verbindung mit dieser Ausgabe oder auch generell wird als eine von vielen Möglichkeiten vorgeschlagen, dass z.B. eine Steuerung den Aktuatorzustand steuert, also z.B. seinen Motorwinkel. Die Bremswirkung kann gemessen werden oder geschätzt bzw. ermittelt werden, indem z.B. Bremsendaten wie z.B. augenblickliche Steifigkeit, augenblickliche Verformung (z.B. die von der Aktuatorbetätigung verursachte), augenblickliche Aktuatordaten (z.B. Strom), andere Einflussgrößen (z.B. augenblicklicher Reibbeiwert und/oder Reibradius) zu einer Bremswirkung (z.B. Bremsmoment) verarbeitet werden. Ein weiterer Vorschlag ist, die ermittelte oder gemessene Bremswirkung in einer Regelung für den Vergleich Ist-Bremswirkung und Soll-Bremswirkung zu verwenden und daraus neue bzw. verbesserte Aktuatoreinstelldaten (z.B. Aktuatorposition bzw. -winkel) zu abzuleiten. Dabei kann z.B. ein Potentiometer eine aktuelle Winkelstellung ermitteln und ein z.B. Gleichstrommotor kann so lange bewegt werden, bis Soll-Winkel (der z.B. aus der augenblicklich angeforderten Bremswirkung ermittelt wird) und Ist-Winkel gut genug angenähert sind oder ein z.B. Brushless DC Motor (BLDC) über eine z.B. Field-Oriented-Control (FOC) in einer Positionsregelschleife die verbesserte Position als SollWert bekommt und einregelt.

In einer vereinfachten Variante wird vorgeschlagen, die Soll-Ist-Vergleiche der Bremswirkug einerseits und der Aktuatorpositionsregelung andererseits als nur eine gemeinsame Regelung auszuführen, also z.B. die Aktuatorpositionsregelung direkt als Bremswirkungsregelung auszuführen bzw. so zu interpretieren, dass statt zwei hintereinander betriebenen Reglern nur einer verwendet wird, dessen abstrakte Aufgabe es ist, Zahlen aus Soll- und Ist-Wert anzunähern, wobei es keine Rolle spielen muss, was die Zahlen ausdrücken (z.B. Bremswirkung oder Aktuatorposition). Dies wird u.a. zur Vereinfachung vorgeschlagen, aber auch für mehr Stabilität gegen mögliches Schwingverhalten, da mehrere zusammenwirkende Regelungen diesbezüglich problematischer sein können als eine geringere Zahl von Regelungen. Das ließe sich natürlich auch auf andere vereinfachbare Regelungen beziehen, wie z.B. Anpresskraft bzw. Aktuatormoment oder Strom. Es wird auch empfohlen, ein denkbares sprunghaftes Verhalten (das z.B. durch Fehlen von Zwischenwerten die Regelung erschweren kann) durch geeignete Vorkehrungen (z.B. mit ausführbaren Anweisungen für jene Fälle, die sonst ohne eindeutige Lösungsanweisung verblieben) zu lösen. Beispielsweise können Zustände mit Bremswirkung 0 alle Zustände vor dem Kontakt des Bremsbelages mit der Reibfläche sein und ab beginnender Bremswirkung Zustände mit veränderlicher Anpresskraft sein und z.B. für "alle Zustände vor Berühren" nur eine dafür günstige Aktuatorposition angewendet wird, also z.B. 0.

Man kann z.B. den Betätigungszustand der Bremse (z.B. Aktuatorwerte wie z.B. Position oder Kraft) in einer Steuerung oder Regelung so verändern, dass z.B. eine bestimmte Auflaufkraft (wobei "bestimmt" schiebend, ziehend oder auch Auflaufkraftlos oder -arm sein kann) oder z.B. eine bestimmte Verzögerung oder eine andere Größe, die z.B. sogar mindestens eine Temperatur von Bremsenteilen sein kann (als z.B. Maß für die Bremswirkung), erreicht wird.

Bremswunscherfassung mittels Bremspedal- bzw. Bremshebelsimulator Wenn bei der Steuerung von Bremsen technologiebedingt kein bremskraftabhängiger Betätigungswiderstand im Betätigungselement (z.B. Bremspedal oder -hebel) entsteht, kann dem Benutzer mittels entsprechender Simulatoren (krafterzeugender Vorrichtung) ein vertrautes Gefühl für die erzeugte Kraft vermittelt werden.

Es wird hier vorgeschlagen, dass dabei Materialien und/oder Geometrien im Bremspedal- oder Bremshebelsimulator verwendet werden und/oder dass über den Betätigungsverlauf verschiedene Kombinationen davon zusammenwirken, so dass eine sich über den Betätigungsweg kontrolliert verändernde Betätigungskraft entsteht und dass diese insbesondere von einem proportionalen Kraft-Weg-Zusammenhang abweichen kann. Dieser Zusammenhang kann z.B. progressiver sein, d.h. bei mehr Betätigung wird überproportional mehr Kraft entwickelt, z.B. durch ein Material (fest, flüssig oder gelartig), das z.B. eine mit der Kraft steigende oder z.B. eine belastungsgeschwindigkeitsabhängige Steifigkeit bzw. Zähigkeit aufweist. Alternativ oder zusätzlich kann sich die Geometrie über die Betätigung ändern, z.B. veränderliche Hebelwirkungen, Dicke und/oder Fläche (indem z.B. bei Stauchung mehr Fläche entsteht bzw. wirksam wird) eines elastischen Materials. Verschiedene Teile können auch über den Betätigungsverlauf nacheinander zusammenwirken, so dass z.B. bei mehr Betätigung zunehmend mehr betätigungskrafterzeugende Teile wirksam werden, was stufig oder mit Übergang erfolgen kann.

Auch können in Bereichen der Betätigung andere Wirkungen hinzukommen bzw. fühlbar werden, z.B. die ab einer bestimmten Betätigung aus einem zusätzlich betätigten Bremssystem stammende Betätigungskraft. Es kann also z.B. aus Sicherheitsgründen (oder weil z.B. eine weitere Bremswirkung wünschenswert ist) ab z.B. größerem Hebel- bzw. Pedalweg eine mechanische oder hydraulische Bremse mit betätigt werden und auch zur Betätigungskraft bzw. zum Betätigungsgefühl beitragen. Wobei in, an oder in Verbindung mit Hebeln bzw. Pedalen, die (auch) als Simulator genutzt werden, Kraft, Weg oder auch beides und auch zusätzliche Werte, wie z.B. Zeitverläufe, also z.B. plötzliche Betätigung, ermittelt werden können.

Fig.9 zeigt eine prinzipielle, mögliche Ausführung eines Bremshebels oder eines Bremspedals 20 für z.B. Hand- oder Fußbetätigung. Hier wird vereinfachend immer das Wort Hebel verwendet, das demnach auch für ein Pedal gilt, d.h. die Teile sind der Funktion nach abgebildet und beschrieben, können aber auch beliebig anders angeordnet werden und es können auch Teile bzw. Funktionen weggelassen oder zusätzliche zur Ergänzung hinzugefügt werden. Eine rein elektrische Ausgabe einer Betätigungskraft 2001 ist möglich. Dabei ist ein Hebel 2002 (als Betätigungsteil des gesamten Bremshebels oder Bremspedals 20) geführt, also z.B. um eine Lagerstelle 2003 drehbar und ist in der Betätigungsbewegung durch Begrenzungen 2004 eingeschränkt (von denen z.B. mindestens eine einstellbar sein kann, die aber auch z.B. durch die real geformte Geometrie entstehen).

Die Art einer Einstellmöglichkeit ist hier für alle Einstellungen beliebig, also. z.B. durch Schrauben, Zurechtbiegen, Beilegen, Entfernen, aber es kann auch eine fixe Einstellung sein, ohne vorgesehene Verstellung.

Der Hebel kann im ersten Betätigungsbereich noch ohne Auslösung einer Bremswirkung sein und kann in diesem ersten Bereich mit einer Hebelspielfeder 2005 z.B. in eine größtmöglich betätigungsferne Lage gebracht werden oder bei Entfall der Hebelspielfeder 2005 ohne Federkraft. Bei weiterer Hebelbetätigung wird ein Andrücker 2006 (für Aufnehmer 2007) den Aufnehmer 2007 über beliebige Einstellmöglichkeit mitbewegen, also z.B. um eine Lagerstelle 2003 drehen. Dabei kann z.B. in einer Lagerstelle 2003 ein z.B. Drehaufnehmer sein, also z.B. mindestens ein durch Drehung oder Bewegung veränderlicher Widerstand (z.B. mindestens ein Potentiometer) oder es kann z.B. mindestens ein Sensor für Aufnehmer 2008 (z.B. Abstandssensor) sein, wobei alle solche Aufnehmer bzw. Sensoren ein vorerst elektrisches Signal (z.B. analog, digital, PWM usw.) ausgeben (das vielerlei Informationen beinhalten kann, wie z.B. Bremslicht, Bremswunsch, Zeitverhalten usw.), das dann (z.B. am Hebel, im Gehäuse des Hebels, anderswo) weiterverarbeitet werden kann und z.B. über Draht oder drahtlos (z.B. elektromagnetisch, Schall usw.) weitergegeben werden kann und final zum Steuern bzw. Regeln einer Bremswirkung einer EMB dient und auch anders als ein der Bremsstärke entsprechendes Signal verstanden werden kann, also z.B. als Verzögerungssignal (wobei der Unterschied darin bestehen kann, dass ein Bremssignal einen Zusammenhang mit der Bremswirkung haben kann, also z.B. eine Proportionalität zum Bremsmoment, womit je nach Masse eine unterschiedliche Verzögerung bei gleichem Bremssignal entsteht. Ein Verzögerungssignal wäre hingegen auf die gewünschte Verzögerung bezogen und z.B. masseunabhängig und würde durch Berücksichtigung von z.B. der Masse in ein Bremssignal gewandelt. Dabei kann die Masse aus z.B. Beschleunigungen, ABS-Verhalten usw. geschätzt werden oder sogar "unnotwendig" in dem Sinne sein, dass immer starke Bremsungen angefordert werden und diese z.B. bei geringerer Achs- bzw Radlast frühzeitig zu erhöhtem Radschlupf führen und damit bei wenig Achs- bzw Radlast durch einsetzende Radschlupfbegrenzung oder einsetzendes ABS auch weniger Bremswirkung erzeugen. Ein beliebig einstellbarer Aufnehmeranschlag 2009 kann den Beginn der Hebelbewegung mit Bremswirkungsausgabe definieren, d.h. bevorzugt entsteht ab hier ein erkennbar veränderliches Sensor- bzw. Aufnehmersignal, aber auch eine für den Betätigenden fühlbare Betätigungskraft, die hier z.B. mit einer ersten Betätigungskraftfederwirkung 2010 erzeugt wird (die auch beliebig einstellbar sein kann).

Eine vorteilhafte Ausführung hätte also am Anfang der Hebelbewegung eine sehr oder ganz federkraftarme Bewegung ohne Bremswirkung (ähnlich einer Hydraulikbremse bis zum Anliegen an den Hauptbremszylinder) und ab einer bestimmten Hebelstellung, am besten definiert durch Aufnehmeranschlag 2009, mit einer ersten Betätigungskraftfederwirkung 2010 ein ab Mitbewegung des Aufnehmers 2007 die Hebelbetätigung wiedergebendes Sensor- bzw. Aufnehmersignal, womit sowohl ab erkennbarem Sensor- bzw. Aufnehmersignal auch Betätigungskraftfederwirkung 2010 vorhanden ist und der Betätigende eine möglichst gutes Gefühl für die ab hier einsetzende Bremswirkung hat. Dieses Verhalten kann möglichst gut fühlbar gestaltet werden, um dem Bremsenden klar zu signalisieren, ab wann Bremswirkung eintritt. Bevorzugt wird der weitere Kennlinienverlauf (z.B. Betätigungskraft, Hebelweg, Bremswirkung, Verzögerung) mit gut dosierbarer leichter Bremsung in immer stärkere Bremsung mit dem entsprechenden Hebelgefühl übergehen, was sich mit der gezeigten Bauweise im Vergleich zu einfachen Federn gut realisieren lässt. Federwirkungen können mit Federn oder mit anderen sich federartig verhaltenden Lösungen bewirkt werden. Mit zunehmend mehr bremsender Hebelbewegung wird vorteilhaft immer mehr Betätigungskraft 2001 erzeugt, was für gewohntes Betätigungsgefühl auch überproportional erfolgen kann bzw. soll, wozu die weitere Betätigungskraftfederwirkung 2011 dient. Diese kann mit mindestens einer Federwirkung, aber auch durch Kombination mehrerer erzeugt werden, wozu auch die Geometrie mit verwendet werden kann, also z.B. dass verschiedene Lagen andere Momente und damit Hebelkräfte bewirken und es kann auch unterschiedlicher Einsatzbeginn durch z.B. unterschiedliche Berührungslagen verwendet werden, was bei 2011 durch verschiedene Federn und Längen angedeutet ist, die auch beliebige Einstellmöglichkeiten haben können. Das dient dazu, den Verlauf der Betätigungskraft 2001 über den Betätigungsweg vorteilhaft zu gestalten. Insbesondere kann auch mindestens eine Betätigungskraftfederwirkung 2011 durch ein elastisches Teil 2012 ausgeführt werden. Dabei kann ein Teil aus einem elastischen Material (z.B. Gummi, Schaumgummi, Silikon, Kunststoff usw.) auch verschiedene Querschnittsgeometrien über die Länge haben bzw. auch aus verschiedenen Materialien bestehen um gut gestaltbares elastisches Verhalten über den Betätigungsverlauf zu erzielen und auch um deutliche bis hohe Betätigungskräfte 2001 zu bewirken, wie sie z.B. auch gegen Vollbremsung günstig sein können.

### Bremsbetätigung und Kraftmessung

Auch mindestens eine Hebelkraftmessung 2013, Reaktionskraftmessung 2014 (die z.B. Kraft an einer Befestigung oder Lager misst, die mit der Hebelkraft in Zusammenhang steht) bzw. Weiterleitungskraftmessung 2015 wird gegebenenfalls vorgeschlagen, wobei eine Weiterleitungskraftmessung 2015 z.B. Kräfte misst, die an andere Funktionen, wie z.B. eine druck- oder kraftbetätigte Bremse, weitergegeben werden, um z.B. zusätzlich zu einer solchen ein elektrisches Bremssignal zu erzeugen oder eine solche als z.B. Notbremse zu verwenden, wenn z.B. der Hebel besonders weit gezogen wird.

Bei Fig.6 wurde gezeigt, dass ein zusätzlicher Parkbremsantrieb 047 oder anderer Betätigungsantrieb (z.B. als Notbremsfunktion) vorteilhaft an jeder der vorgeschlagenen EMBs vorhanden sein kann und in Fig.9 ist beim Seilanschluss 2016 gezeigt, wie eine nichtelektrische Bremsbetätigung zusätzlich zur elektrischen Signalgebung erfolgen kann. Wie elektrische und nichtelektrische Betätigung wirken können, wird hier an zwei verschiedenen Verfahren gezeigt. Erstens wird ein Fall gleichzeitiger elektrischer und nichtelektrischer Betätigung vermieden, weil es sich z.B. störend auswirken kann, wenn z.B. die die Bremse betätigende Person gleichzeitig das Seilverhalten spürt, also z.B. die Haftreibung, eine Seilbetätigungskraft (die sich mit der Krafterzeugung im Hebel auch störend überlagern kann) bzw. mehrere Einsatzpunkte der Bremsbetätigung spüren kann (wenn z.B. die Krafterzeugung im Hebel einen anderen Punkt einsetzender Bremswirkung spüren lässt als z.B. die Seilzugbetätigung). Daher wird bei Kombination von elektrischer und nichtelektrischer Betätigung empfohlen, dass besonders vorteilhaft auch eine deutliche Trennung der elektrischen und nichtelektrischen stattfinden soll, so dass nicht beide Betätigungen gleichzeitig erfolgen sollen, jedenfalls nicht in normalerweise verwendeten Betätigungsbereichen. Der Hebel aus Fig.9 würde dabei z.B. mit einem Zwischenhebel 2017 und z.B. absichtlichem Spiel so ausgestattet, dass das Seil erst ab einer bestimmten Hebelbetätigung zum Ziehen kommt, also z.B. erst dann, wenn der Hebel weit, z.B. in den Vollbremsbereich, betätigt wird (also ähnlich einer KFZ- Zweikreisbremse, die bei Ausfall eines Kreises mehr Pedalbetätigung benötigt). Natürlich könnte z.B. ein Seil auch spielbehaftet (z.B. in einem Langloch) am Hebel angelenkt werden (dabei kann es aber ungeordnet, z.B. durch Reibung, im Langloch am Hebel wirken). Günstiger ist also ein Zwischenglied ähnlich 2017, das ungeordnete nichtelektrische Betätigungseiflüsse durch seine Gestaltung vermeidet oder verringert. Ungeachtet dessen, ob die elektrische und nichtelektrische Eingabe der Betätigung an der gleichen Stelle erfolgen (z.B. am Bremshebel), ist es in diesem ersten Verfahren grundsätzlich vorteilhaft, wenn auch die elektronische Steuerung dieses aufteilende Verhalten (dass die elektrische und nichtelektrische Betätigung normalerweise nicht gleichzeitig wirken) unterstützt, also die EMB(s) so gesteuert werden, dass normalerweise (z.B. ohne Fehlerfall) die EMB die Bremsung übernimmt, also z.B. früher oder stärker als die nichtelektrische wirkt, insbesondere normalerweise ausschließlich bremst. Auch ein zweites, anderes, Verfahren wird vorgestellt. Statt bei EMB-Betätigung die Betätigungskraft in einem Hebel oder Pedal wie in Fig.9 zu simulieren, kann auch absichtliche eine nichtelektrische Betätigung gleichzeitig zur elektrischen vorgesehen werden, damit die fühlbare Betätigungskraft aus der nichtelektrischen Betätigung stammt, aber trotzdem die elektrische Betätigung der EMB unterstützend oder hauptsächlich wirkt und somit die Fahrerbetätigungskraft reduziert bzw. auch das von einer nichtelektrischen Betätigung stammende Betätigungsgefühl im Wesentlichen erhält, aber die Kraft reduziert. Trotzdem können natürlich krafterzeugende Teile auch weiterhin im oder am Hebel oder Pedal sein bzw. dort wirken.

Als Kraftsensoren sind neben der Umwandlung in eine Längenänderung (z.B. über eine Feder) hauptsächlich Dehnmesstreifen-basierende (z.B. DMS, Load-Cells) oder kapazitive bzw. piezobasierende bekannt. In diesem Sinne würde sich z.B. auch die minimale Längenänderung eines Bremsseils zur Zugkraftmessung anbieten. Hier wird aber davon ausgegangen, dass insbesondere Nullpunktfehler für die gezeigten Verfahren störend sind und z.B. Toleranzen unter Kraft auch weniger störend sein können, weil Nullpunktfehler z.B. ständiges Bremsen auslösen können. Toleranzen unter Kraft würden sich hauptsächlich bei starker Bremsung auswirken, die von Fahrern aber auch schnell und weniger gezielt ausgeübt werden, würden also auch u.U. weniger auffallen. Weitere Unstabilitäten und Kosten entstehen bei bekannten Verfahren durch z.B. Verstärker (die wiederum eine Nullpunktunstabilität haben können) oder prinzipiell, weil z.B. piezoelektrische Spannungen nahezu stromlos erfasst werden sollten, was insgesamt bei längerem Bremsen problematische Veränderung bewirken kann. Der Vorteil dieser Messungen wäre die meist gute Linearität. Hier wird aber vorgeschlagen, dass auch ein Verfahren vorteilhaft ist, das im Gegenteil auf starker Nichtlinearität des Sensors aufbaut und insbesondere solche Sensoren zu verwenden. Bei Reibungsbremsen existiert oft ein direkt proportionaler Zusammenhang zwischen Fahrerkraft und Bremswirkung, womit bei einer Kraftmessung (wie z.B. einer Seilzugkraft an einem Seilanschluss 2016 oder auch jeder andern, die EMB steuernden Kraft) für eine EMB-Betätigung der Vorschlag eines stark nichtlinearen Kraftsensorverhaltens erst der folgenden Erklärung bedarf. Ein derartiger vorgeschlagener Sensor kann z.B. einen (auch stark) logarithmischen Zusammenhang zwischen Kraft und Signal (z.B. Widerstand) haben. Das würde sich ursächlich genau gegenteilig zu einer geforderten Nullpunktstabilität auswirken, weil sich bei kleinen Kräften der z.B. Widerstand schon sehr stark ändern kann. Genau das wird hier aber zur Stabilisierung der Nullpunktoleranz genutzt, in dem jener Bereich des Sensors genutzt wird, in dem diese durch kleine Schwankungen verursachten Änderungen keine Rolle mehr spielen. Es kann also z.B. bei einem Force Sensing Resistor (FSR) absichtlich ein Bereich von z.B. Megaohm bis z.B. 10 kOhm als nicht-bremsend definiert werden, indem er so betrieben wird, dass die zu messende Kraft im nichtbremsenden Kraftbereich in einen derartigen Widerstandsbereich fällt. In diesem Ausschlussbereich hätte er natürlich einen (bis zu extrem) instabilen Nullpunkt, denn die allergeringste Änderung würde sofort eine Widerstandsänderung von z.B. einigen Megaohm bis einigen hundert Kiloohm bewirken und erst die Nutzung des bevorzugt nichtlinearen (hier z.B. logarithmischen) Verhaltens macht den Betrieb in einem als nullpunktstabil bezeichenbaren Bereich möglich. Weiters kann man einen bremsenden Bereich verwenden, der z.B. von 4 Kiloohm (z.B. beginnende Bremsung) bis 400 Ohm (z.B. Vollbremsung) reichen kann. Auch hier ist es vorteilhaft, den Signalbereich, die Kraft und die Bremswirkung so zu wählen, dass das nichtlineare Verhalten die Genauigkeitsanforderung unterstützt, also z.B. indem man den bremsenden Bereich so wählt, dass für schwache bis übliche Bremsungen (z.B. von g/10 bis g/3) eine größere Signal-(z.B. Widerstands-)Änderung stattfindet, um bei diesen Bremsungen eine gute Genauigkeit zu erreichen und gegen Vollbremsung eine geringere Widerstandsänderung verwendet. Die bisherige Erklärung von "nullpunktstabil" und "Nutzung in bestimmten Bereichen" kann auch erweitert werden, weil sie sich auf Stabilität bei jeder Kraft beziehen kann, wenn die Teile (z.B. auch Federn) und Bereiche in Fig.10 entsprechend ausgelegt werden und es wird für eine derart stabil betriebene Kraftmessung im Folgenden die Bezeichnung "stabilisierter Kraftmesser" verwendet. Wenn diese Sensoren die Eigenschaft einer nicht besonders hohen Genauigkeit haben (z.B. einige Prozent Ungenauigkeit), kann durch diese Wahl des Betriebsbereiches doch die Bremsensteuerung so gelöst werden, dass der Fahrer einen gut steuerbaren und genauen Eindruck hat. Dazu soll auch verwendet werden, dass im Falle von Sensorveränderungen der bremsensteuernde Signalbereich mit ungefähr gleichbleibender Betätigungskraft erfolgt, es also nicht spürbar wird, wie die tatsächliche Betätigungskraft sich ein wenig verändert, wenn die Bremsung hauptsächlich aufgrund des Fahrerempfindens (z.B. Verzögerung, Geräusche, optisch) vorgenommen wird. In Fig.10 ist eine von vielen möglichen Ausführungsformen dargestellt. Über Kraftverteiler 2101 werden Kräfte auf einen laut obiger Darstellung geeigneten Kraftsensor 2102 so geleitet, dass dessen kraftempfindliche Fläche so belastet wird, dass sich obige Zusammenhänge (insbesondere Bereiche) ergeben und durch die Gestaltung der Kraftverteiler 2101 eine günstige Kraftverteilung auf die Fläche erfolgt (also z.B. sie so dick gewählt werden, dass die Kraftverteilung auf der Fläche gleichmäßig genug ist). Die Vorrichtung aus Fig.10 kann also z.B. in einen Seilzug eingefügt werden, indem z.B. das Seil hindurchgeführt wird und ein Kraftverteiler 2101 z.B. am Seilmantel anliegt und der andere Kraftverteiler 2101 z.B. am Nippel, in den der Seilmantel davor eingeführt war. Eine Feder 2103 kann vorhanden sein, um die Nullpunktstabilität weiter zu erhöhen, also z.B. die Kraftverteiler 2101 definitiv auseinander zu drücken, wenn keine oder nur eine kleine Kraft eingeleitet wird, die z.B. aus einem Betätigungsseil 2104 (oder einer anderen Kraftübertragung wie z.B. einer Stange) stammen kann.

Einbauerleichternd kann z.B. ein Schlitz so durch den stabilisierten Kraftmesser gehen, dass ein Seil nicht durch die Teile hindurchgefädelt werden muss, sondern z.B. auch durch den Schlitz eingelegt werden kann. Statt einem Seil ist jede Zug- oder Druckkraftübertragung möglich, z.B. eine Stange. Mindestens eine Feder 2103 kann auch insbesondere dazu verwendet werden, den Kraftsensor 2102 im hier geforderten stabilisierten Betriebsbereich zu halten. Dazu kann z.B. eine Feder 2103 den Kraftsensor so weit von Kraft entlasten, dass der nullpunktstabile Bereich (z.B. bei darüber hinaussteigender Kraft) genutzt werden kann. Federn können auch parallel und/oder seriell zum Kraftsensor 2102 angebracht werden, z.B. um überlastend hohe Kraft so fernzuhalten, dass z.B. ein Kraftanteil parallel zum Kraftsensor liegt und somit nicht am Kraftsensor und z.B. eine zum Kraftsensor serielle Feder bei Einfederung der parallelen eine Teilkraft auf den Kraftsensor gibt. Damit kann der Kraftsensor 2102 so betrieben werden, dass die Seilzugkraft abhängig von der Federauslegung auch in von Null verschiedenen Kräften stabiles Verhalten zeigt und auch die Seilkraft höher sein kann, als die am Kraftsensor 2102.

Natürlich kann Fig.10 abgewandelt sein bzw. auch Zugkräfte oder Zug- und Druckkräfte erfassen und das Betätigungsseil 2104 kann durch den Kraftsensor 2102 hindurch verlaufen, aber die Kraft kann auf den Kraftsensor 2102 auch beliebig aufgebracht werden. Die Kennlinie des Kraftsensors 2102 kann natürlich auch linearisiert werden bzw. Bremswirkungen zugeordnet werden.

Natürlich lässt sich dieses Verfahren auch für andere Kraftmessungen nutzen wie z.B. Auflaufkraft, Achslast, Radlast, Erfassen einer Last, Nutzlast, Anwesenheit einer Person oder des Gewichts. Wenn z.B. eine Kraft innerhalb eines Verbundfahrzeuges bevorzugt auf einem bestimmten Wert gehalten oder eingeregelt werden soll, kann Instabilität (z.B. des Nullpunktes) sehr störend sein. Wenn z.B. eine Deichselkraft möglichst klein gehalten (z.B. eingeregelt) werden soll, könnte z.B. ein Antriebsmotor bei nullpunkfalscher Kraftmessung (z.B. Deichselkraft) einen Antriebsbedarf erkennen, obwohl z.B. an anderer Stelle bereits Bremskraft eingestellt wurde oder z.B. umgekehrt. Das gilt natürlich für beliebige Folgen und Fehleinstellungen aus Nullpunktverschiebung oder einer sich gleich bis ähnlich auswirkenden Unzulänglichkeit. Damit ließe sich z.B. ein relativ null-deichselkraft-naher Anhängerantrieb darstellen, der ohne obiges Problem der genau falschen Kraft z.B. in einem als "unerkennbar" bezeichenbaren Bereich möglichst neutral reagiert, also z.B. kein oder nur reibungsüberwindendes Moment abgibt, bei erkanntem Deichselzug anzutreiben beginnt und bei erkanntem Deichselaufschub ins regenerative Bremsen geht und z.B. auch bei höherer als regenerativ beherrschbarer Deichselkraft zusätzliche Bremsen betätigt. Es können natürlich beliebige Kombinationen gemacht werden, wie z.B. nur antreibend kombiniert mit bremsend, nur neutral kombiniert mit bremsend, nur neutral kombiniert mit antreibend.

Besonders vorteilhaft ist ein stabilisierter Kraftmesser auch zur Kombination von elektrisch steuerbaren Bremsen mit hand- oder fußkraftbetätigten, wenn dabei die Kraft der Hand- oder Fußkraftbetätigung gemessen und genutzt wird, u.a. um die Notwendigkeit einer Simulation oder der künstlichen Erzeugung einer Hand- oder Fußkraft gegebenenfalls vermeiden zu können. Dazu würde z.B. in den Seilzug der Hinterradbremse eines z.B. Fahrrades ein stabilisierter Kraftmesser eingefügt und damit z.B. die Vorderradbremse elektrisch gesteuert, wobei man natürlich nicht nur jenen Effekt erreichen kann, wie wenn nur ein zusätzlicher Seilzug auch auf die Vorderradbremse ginge, sondern demgegenüber auch Verbesserungen erreichen kann, wie z.B. dass die Vorderradbremse bei stärkerer Bremsung bedarfsgerecht auch überproportional mehr Bremswirkung einstellt. Mit bedarfsgerechter Bremseneinstellung kann natürlich auch erreicht werden, dass eine regenerative Bremsung angesteuert wird und z.B. zwar Fahrerbetätigungskraft spürbar wird, aber z.B. möglichst viel regenerative Bremsung erfolgt und möglichst wenig Energie durch Reibungsbremsung verloren geht. Wesentlich wäre also die Betätigung der Reibungsbremse und einer durch Kraftmessung steuerbaren Bremse (z.B. regenerative Bremse). Wie die Aufteilung auf die Bremsen genau erfolgt, kann verschieden optimiert werden. Auch wo sich die Bremsen befinden, ist innerhalb eines Verbundfahrzeuges beliebig, also z.B. auch auf Zugfahrzeug und Anhänger. Eine andere Kombination wäre, dass sowohl elektrisch als auch mechanisch (z.B. mit Seilzugkraft) dieselbe Bremse betätigt wird. Es entstünde eine Art "Servobremse", bei der die elektrische Betätigung die nichtelektrische erleichtert, sodass mit (auch deutlich) geringerer Fahrerkraft gebremst werden kann, als ohne diese Unterstützung, und auch die Sicherheitsfunktion bestehen kann, dass bei Ausfall der elektrischen Betätigung immer noch die nichtelektrische verfügbar bleibt. Es können auch mehrere Bremsen aus diesem stabilisierten Kraftmesser betrieben werden, auch an verschiedenen Stellen eines Verbundfahrzeuges.

Es können generell beliebige zusätzliche Sensoren oder Aufnehmer verwendet werden, wie z.B. auch ein Schalter, der z.B. ein Bremslicht schaltet oder z.B. ab einer gewissen Stellung die Stromversorgung eines Bremsaktuators einschaltet. Ein Bremsseil kann z.B. mit einem Seilanschluss 2016 (z.B. einem üblichen Nippel mit Nachstellgewinde) an den Hebel direkt oder auch über mindestens einen Zwischenhebel 2017 an den Hebel angeschlossen werden (gezeigt sind 3, wobei der nach unten verlaufende z.B. auch eine drehende Führung um den unteren Lagerpunkt übernehmen kann, um die Hebelkombination zu führen). Eine vorteilhafte Ausführung ist z.B. auch ein Bolzen mit Durchführungsspiel 2018, der anstelle der normalen auf das Seilende aufgepressten Bolzen verwendet werden kann: Hier geht ein Ende eines Hebels 2017 (z.B. eine Zugstange) oder ein Seil spielbehaftet durch den Bolzen, um erst ab einer bestimmten Hebelstellung Zugkraft aufzubauen und davor den Hebel von Seil- oder Zugstangenkraft freizuhalten und das hier erreichte vorgestellte Betätigungsgefühl von Mitnahmeeinfluss von Seil oder Zugstange freizuhalten. Das Seil oder der Hebel (z.B. Zugstange) kann auch verstellbar sein, angedeutet durch eine z.B. Mutter oder andere Verstellmöglichkeit bei 2018. Insbesondere bei einem Mehrfachhebel als Zwischenhebel 2017 kann durch gute Führung eine Beeinflussung des Bremshebels vor Mitnahme der Bremskraftweiterleitung möglichst gering ausfallen bis so gut wie gänzlich vermieden werden, was einem besonders guten Betätigungsgefühl entgegen kommt.

### Fahrerempfinden

Es wird empfohlen (bei einem eigenen Bremshebel aber auch bei Aufnahme von Betätigungskraft, Betätigungsweg, Druck usw. bei mindestens einer vorhandenen Bremse), das Zusammenwirken aus mehreren Verhalten einem angenehmen Fahrerempfinden anzupassen: Vorrangig will der Fahrer ein angenehmes Gefühl zwischen Hebelweg (alles bezieht sich auf ein Pedal), Hebelkraft und Bremswirkung. Dabei wird auch eine überproportional steigende Hebelkraft empfohlen, so dass also z.B. bei der Hälfte des Hebelweges weniger als die Halbe Maximalkraft auftritt. Gegen Vollbremsung wir empfohlen, dass die Betätigungskraft eventuell überproportional so weit anwächst, dass man selbst bei der schnellen, meist unvorbereiteten Vollbremsbetätigung entweder nicht ins Blockieren kommt, oder sogar absichtlich, wenn das ABS gut dafür geeignet ist, d.h. das ABS ein Blockieren verhindert. Die Bremswirkung kann z.B. proportional zum Kraftempfinden verlaufen, aber auch für den Zusammenhang zwischen Hebelkraft und Bremswirkung kann es empfehlenswert sein, bei noch niedriger Hebelkraft (bzw. Hebelweg) weniger als proportional Bremswirkung zu entwickeln, weil z.B. vorsichtiges Bremsen auf schlechter Fahrbahn damit angenehmer dosiert werden kann. Insbesondere bei Fahrzeugen mit großer Radlastschwankung wird auch überproportional vorsichtiges Bremsen im schwachen Bremsbereich empfohlen, weil z.B. bei einem Fahrrad auch ohne Fahrergewicht (oder nicht dem vollen) ebenfalls ein sensibles Bremsverhalten angenehm ist, und weniger jenes stärkere Bremsmoment, das man mit vollem Fahrergewicht bräuchte. Eine dazu passende Anhängerbremsung könnte aber stärker ausfallen, da der Anhänger ja auch beladen sein könnte bzw. ein Leergewicht hat. Man kann damit vermeiden, dass ein Anhänger ein gering belastetes Fahrrad schiebt oder zum Rückwärtsfahren bringt, wenn z.B. der Fahrer abgestiegen ist oder nicht das volle Gewicht am Rad hat. Besonders bei nichtlinearen EMBs kann der Aktuator sehr schnell den Luftspalt überwinden und ab dann anfangs stark steigend Bremswirkung aufbauen, weil der Aktuator einer nichtlinearen EMB bei geringer Anpresskraft eine schnelle Zustellbewegung machen kann. Dieses Verhalten wäre an sich dem Fahrer verborgen bzw. verbergbar, weil dieser nur Hebelbetätigung und Bremswirkung kennt, aber nicht die internen Bremszustände. Selbst wenn eine EMB mit guter Genauigkeit steuerbar ist, d.h. Sollbremswirkung und Istbremswirkung gut übereinstimmt, kann aber bereits ein kleiner Genauigkeitsfehler bei recht geringer Bremswirkung unangenehm auffallen:
Wenn z.B. ein unbelastetes Fahrrad bei Schieben empfunden viel zu stark auf schwache Bremsung reagiert, oder noch nicht obwohl schon Hebelkraft eintritt, kann das störend auffallen, bei normalen schwachen Bremsungen mit Last jedoch kaum bis nicht. Als Lösung wird empfohlen, in den Zusammenhang Hebelbetätigung zu Bremswirkung (Hebel- bzw. Pedalkennlinie) einen Anfangsbereich vorzusehen, der bei entsprechend schwachem Bremswunsch auch bei Toleranzen (zu viel bzw. zu wenig tatsächlicher Bremswirkung) das Betätigungsgefühl vermittelt, dass die leichte Bremsung dem Wunsch folgt, in dem z.B. bei noch geringer Hebelbewegung (bzw. Kraft) eine ganz besonders feinfühlige Bremswirkungskontrolle in der Hebelkennlinie vorgesehen ist.

### Vereinfachung

Natürlich kann der Bremshebel oder das Bremspedal 20 auch stark vereinfacht werden (z.B. aus Kostengründen) und es kann ein Seil z.B. direkt im Hebel 2002 gelagert sein und der Hebel z.B. ein gemeinsames Teil mit dem Aufnehmer 2007 sein und nur z.B. ein Sensor für Aufnehmer 2008 oder z.B. Hebelkraftmessung 2013 vorhanden sein und alle weiteren betätigungskrafterzeugenden Federwirkungen weggelassen werden, wenn die Betätigungskraft z.B. aus einer druck- oder kraftbetätigten Bremse stammt. Damit kann z.B. ein vorhandener Fahrradbremshebel gegen einen wie beschrieben stark vereinfachten ausgetauscht werden, um z.B. ein elektrisches Bremssignal für z.B. einen Fahrradanhänger zu gewinnen, gegebenenfalls auch mit einer zusätzlichen Bremslichtschaltfunktion (die z.B. auch aus dem Sensorsignal abgeleitet werden kann). Ein festes Teil 2019 (das z.B. das Gehäuse sein kann, welches am Fahrzeug befestigt werden kann bzw. gedanklich als mit dem Gehäuse verbunden vorstellbar ist) zeigt, dass daran z.B. Federwirkungen bzw. Einstellungen angreifen können. Bevorzugt werden die Sensoren bzw. Aufnehmer so betrieben, dass der Messwert im fehlerfreien Fall von einem Messwert in einem Fehlerfall unterschieden werden kann bzw. dass Fehler durch andere Werte feststellbar sind, wie z.B. Stromaufnahme. Es können auch mehrere Sensoren für gleiche oder ähnliche Messgrößen verwendet werden, z.B. aus Sicherheits- oder Verfügbarkeitsgründen. Auch andere Messwerte können die Einbaumöglichkeit in den Bremshebel nutzen, wie z.B. solche für z.B. Temperatur, Helligkeit, Kamera, Regen usw. Der Bremshebel kann auch als Einheit mit etwas anderem ausgebildet sein, wie z.B. als gemeinsames Lenkerteil, gemeinsamer Träger für z.B. Handgriff, Telefon, Tacho, Spiegel usw. und er kann auch zusätzliche Anschlussmöglichkeiten haben, wie z.B. USB, Strom oder drahtlose Kommunikation wie Bluetooth, Infrarot, Funk.

### Umsetzungsmöglichkeit

In Fig.11 ist eine Umsetzungsmöglichkeit der gezeigten Komponenten für ein Fahrzeug bzw. ein Verbundfahrzeug (z.B. Zugfahrzeug mit Anhänger) gezeigt.

Dabei wird allgemein mindestens ein steuerbares Moment 2201 (hier ist im weiteren Sinne eine steuerbare Bremswirkung zu verstehen), also z.B. eine EMB bzw. z.B. eine Kombination aus EMB mit auch regenerativem Bremsen (also z.B. ein Elektromotor im motorischen oder generatorischen Betrieb) von mindestens einer

Fahrdynamiksteuerung 10 (die das Verhalten z.B. des Fahrzeuges, eines Teiles, der Bremsen, einer regenerativen Bremsung, des Zusammenwirkens von Bremsen und Antrieb usw. kontrolliert) gesteuert oder geregelt. Die Fahrdynamiksteuerung 10 empfängt in der Elektronik Signale 101, z.B. aus mindestens einem Sensor 2202, z.B. Beschleunigungs- bzw. Verzögerungssensor, Kraftsensor, Drehsensor, Magnetfeldsensor mit beliebiger Achsenzahl, Gewichtsensor usw., der z.B. am Anhänger sein kann, auch aus mindestens einem Radsensor, also z.B. Raddrehzahl, sowie gegebenenfalls solche, die z.B. vom Fahrer stammen können, z.B. von einer Fahrereingabe 2203 (also z.B. mindestens einem Seilzugsensor wie Fig.10 bzw. einem Bremshebel wie Fig.9). Die Fahrdynamiksteuerung 10 sendet gegebenenfalls aus der Elektronik auch Signale 102, die z.B. an einer Ausgabe 2204 ausgegeben bzw. dargestellt werden können (z.B. kann ein Mobiltelefon Daten von Bremsen, wie z.B. Bremsmoment, Temperatur, anzeigen bzw. Warntöne ausgeben. Es können aber auch Eingaben an z.B. die Fahrdynamiksteuerung 10 erfolgen, wie z.B. die gewünschte Stärke der Bremsung bzw. z.B. den Korrekturwert k für eine einleitend erklärte "Bremsung aus Verzögerungsmessung").

Eine Anordnung wie Fig.11 oder mit gleicher Wirkung kann auch zu einer vorhandenen elektrisch betätigten Bremse hinzugefügt werden, indem zum vorhandene Bremssignal (Steuergrößen wie z.B. Strom, Spannung, PWM, Steuersignal) mittlere Steuergröße hinzugefügt oder abgezogen wird, also z.B. PWM Impuls hinzugefügt werden (für z.B. mehr Bremswirkung) oder z.B. PWM Impulse entfernt werden (für z.B. weniger Bremswirkung) um damit eine Verbesserung zu erwirken, wie z.B. ABS, ESC, sway-control zu ermöglichen oder zu verbessern oder z.B. die Genauigkeit der Bremswirkung zu verbessern.

### Signalübertragung

Es wird empfohlen, dass dem Grundprinzip aus Fig.11 bzw. Fig.12 Verbesserungen einzeln, gemeinsam oder teilweise hinzugefügt werden. Die Signale in die Elektronik 101 bzw. Signale aus der Elektronik 102 können sowohl bidirektional als auch unidirektional sein, sie können mittels des gleichen Mediums (z.B. CAN Bus, Funk) erfolgen oder eines anderen und sie können zusätzlich auch andere Informationen beinhalten, wie z.B. Bremslicht, Antriebsanforderung (z.B. Gasstellung), Temperaturen. Weiters wird auch empfohlen, dass gegebenenfalls auch mit Störungen bzw. Ausfällen geordnet umgegangen wird, also z.B. Erkennungen dafür vorgesehen sind bzw. Alternativen. Wenn also z.B. ein Fahrerbremssignal aus 2203 nicht oder nicht akzeptabel ankommt, wird z.B. eine Bremsung aus einem Verzögerungssensor 2202 betrieben oder z.B. eine nichtelektrische Betätigung verwendet.

Es wird auch empfohlen, gegebenenfalls auch teilweise Umsetzungen des Konzepts nach Fig.11 zuzulassen bzw. anzustreben. So könnte z.B. eine steuerbare Bremswirkung bzw. ein steuerbares Moment 2201 (z.B. EMB und/oder regeneratives Bremsen z.B. an einem Anhänger) lokal an einem Anhänger gebildet werden, ohne dass Einrichtungen am Zugfahrzeug nötig bzw. verfügbar sind, indem mit lokal am Anhänger verfügbaren Daten gearbeitet wird. Beispielsweise können Bremsungen mit einem Verzögerungssensor z.B. an einem Anhänger (Sensor 2202) im Sinne eingangs erwähnter "Bremsung aus Verzögerungsmessung" gesteuert werden bzw. gegebenenfalls mit anderen am Anhänger verfügbaren Daten, wie Kraftmessungen. In einer Verbesserung könnte z.B. ein Seilzugsensor funktionsähnlich zu Fig.10 hinzukommen, in einer weiteren Verbesserung ein zweiter solcher (um z.B. beide Bremshebel erfassen zu können) bzw. gegebenenfalls auch mindestens ein Bremshebel, funktionsähnlich zu Fig.9 und/oder gegebenenfalls eine nichtelektrische Betätigung.

Weiters wird empfohlen, gegebenenfalls auch die Fahrdynamiksteuerung 10 speziell auf die Eigenschaften der Sensoren 2202 auszulegen. Es kann z.B. berücksichtigt werden, dass ein Handkraftsignal aus Fahrereingabe 2203 z.B. ein Zeitverhalten und/oder ein Temperaturverhalten hat. Diese Verhalten können kompensiert werden und/oder auf Veränderung in dem Sinne reagiert werden, dass z.B. langsame Veränderungen aus dem Zeitverhalten des Sensors herausgefiltert bzw. unterdrückt werden, während man schnellere Veränderungen als Fahrerwunsch interpretiert. Das kann auch mit Anderem kombiniert werden, wie z.B. eingangs erwähnter "Bremsung aus Verzögerungsmessung", so dass ein schnell einsetzender Fahrerbremswunsch (z.B. an einer Fahrereingabe 2203), ein aktiviertes bzw. plötzlich aktiviertes Bremslicht, eine Änderung einer Gashebelstellung usw. eine schnelle Veränderung eines Bremsmomentes bewirkt, während z.B. "Bremsung aus Verzögerungsmessung" längerfristig, also z.B. ab grob einigen Sekunden bis mehreren Minuten, die genauere oder, wie auch immer, bessere Bremswirkungseinstellung übernimmt. Eine weitere derartig "bessere" Bremswirkungseinstellung kann zusätzlich aus anderen Messungen abgeleitet werden, auch wenn diese nicht kurzfristig zur Bremswirkungseinstellung geeignet sein sollten. So kann z.B. die Änderung der Raddrehzahl und die Verzögerungs- bzw. Kraftkomponente in Fahrtrichtung zur Ermittlung eines Gefälles und damit zur Verbesserung beitragen, ebenso z.B. die Lage des Erdmagnetfeldes. Weitere Daten können bzw. sollen einbezogen werden, wie z.B. Achslastschätzung. Als vorteilhafte Abwandlung des Prinzips nach Fig.11 kann eine Steuerung 10 inklusive der vorhandenen Eingangssignale 101 so genutzt werden, dass eine der Bremswirkungen (steuerbares Moment 2201) zugeführte (auch nichtelektrische) Betätigung (z.B. Steuersignal, Druck, Kraft, Weg aus einer nichtelektrischen Auflaufbremse) verstärkend (gegebenenfalls bis zu negativer Auflaufkraft) oder abschwächend (gegebenenfalls bis 0) so kontrolliert wird (z.B. über Druck, Kraft, Weg), dass sich eine "bessere" Bremsung ergibt, als bei unkontrollierter nichtelektrischer Betätigung. Die Kontrollwirkung kann durch unterschiedliche Verfahren, wie z.B. Reibung, Verrieglung, elektrischer Aktuator (auch in Kombination), erfolgen, wobei die verwendeten Verfahren direkt eine oder mehrere Bremsen betätigen und/oder indirekt über den nichtelektrischen Kraftfluss wirken können. Bei Störung der "Kontrolle" bzw. einer elektrischen Komponente (Steuerung 10, Aktuator etc.), kann eine geeignete Vorrichtung (z.B. mittels Federkraft) sicherstellen, dass die nichtelektrische Betätigung jedenfalls, zumindest genügend, wie unkontrolliert wirkt.

## Patentansprüche

1. Verfahren zur Bremsung eines Fahrzeugs, insbesondere eines Zugfahrzeugs und/oder eines Anhängers,
wobei das Fahrzeug
- mindestens ein Rad,
- eine erste Bremsvorrichtung (2612) zur Bremsung des mindestens einen Rades, insbesondere eine nichtlineare elektro-mechanische Reibungsbremse,eine Bremserkennungsvorrichtung (2601) zur Detektion einer Bremsung des Fahrzeugs
- und eine, insbesondere elektronische, Bremssteuerungsvorrichtung (2608) zur Steuerung der ersten Bremsvorrichtung (2612)
umfasst,
- wobei die Bremserkennungsvorrichtung (2601)
∘ aus einer Geschwindigkeitsmessvorrichtung zur Berechnung einer Verzögerung aus der sich ändernden Momentangeschwindigkeit des Fahrzeugs, bevorzugt aus einem Raddrehzahlsensor zur Messung der Drehzahl des mindestens einen Rades,
∘ und/oder aus einem Verzögerungssensor (2602) zur Messung einer Verzögerung, insbesondere zur Messung einer Verzögerungswirkung in mindestens eine Richtung, bevorzugt in Fahrtrichtung, bevorzugt einem mehrachsigen, mikro-elektro-mechanischen System,
gebildet ist,
**dadurch gekennzeichnet, dass**
- von der Bremserkennungsvorrichtung (2601) die detektierte Bremsung in ein Bremserkennung-Signal (2607) umgesetzt wird,
- wobei das Bremserkennung-Signal (2607) an die Bremssteuerungsvorrichtung (2608) übermittelt wird,
- wobei von der Bremssteuerungsvorrichtung (2608) auf Basis des Bremserkennung-Signals (2607) ein Bremsaktuierungssignal (2611) erzeugt wird, indem auf Basis des Bremserkennung-Signals (2607) mittels Interpolationstabellen, mittels Umrechnungsfunktionen und/oder mittels eines Simulationsmodells ein Bremsaktuierungssignal (2611) zur Aktuierung der ersten Bremsvorrichtung (2612) bestimmt wird,
- wobei von der Bremssteuerungsvorrichtung (2608) zur Steuerung der ersten Bremsvorrichtung (2612) das Bremsaktuierungssignal (2611) an die erste Bremsvorrichtung (2612) übermittelt wird, wodurch eine Steuerung, insbesondere eine Aktuierung, bevorzugt ein Anziehen und/oder ein Lösen, der ersten Bremsvorrichtung (2612) erwirkt und dadurch insbesondere eine Bremsung des mindestens einen Rades, insbesondere eine Bremsung des Fahrzeugs, erzielt wird
- **und wobei** die Bremserkennungsvorrichtung (2601) und das mindestens eine Rad, welches insbesondere von der Bremssteuerungsvorrichtung (2608) und/oder ersten Bremsvorrichtung (2612) bremsbar ist, am Fahrzeug, insbesondere am Anhänger, angeordnet sind.

2. Verfahren nach Anspruch 1, **dadurch gekennzeichnet,**
- **dass** am Fahrzeug, insbesondere am Zugfahrzeug, eine Betätigungsvorrichtung (2606) zur Betätigung einer Bremsvorrichtung (2612), insbesondere der ersten Bremsvorrichtung (2612), bevorzugt ein Bremshebel oder ein Bremspedal (20), angeordnet ist, wobei die Betätigungsmessvorrichtung (2605) gegebenenfalls zur Messung einer Betätigung der Betätigungsvorrichtung (2606) eingerichtet ist,
- **und/oder dass** die Bremssteuerungsvorrichtung (2608) und das mindestens eine Rad, welches insbesondere von der Bremssteuerungsvorrichtung (2608) und/oder der ersten Bremsvorrichtung (2612) bremsbar ist, am Fahrzeug, insbesondere am Anhänger, angeordnet sind,
- **und/oder dass** der Verzögerungssensor (2602) und das mindestens eine Rad, welches insbesondere von der Bremssteuerungsvorrichtung (2608) und/oder ersten Bremsvorrichtung (2612) bremsbar ist, am Fahrzeug, insbesondere am Anhänger, angeordnet sind,
- **und/oder dass** der Raddrehzahlsensor und das mindestens eine Rad, welches insbesondere von der Bremssteuerungsvorrichtung (2608) und/oder ersten Bremsvorrichtung (2612) bremsbar ist, am Fahrzeug, insbesondere am Anhänger, angeordnet sind.

3. Verfahren nach Anspruch 1 oder 2, **dadurch gekennzeichnet,**
- **dass** am Fahrzeug mindestens eine zweite Bremsvorrichtung, insbesondere eine nichtlineare elektro-mechanische Reibungsbremse, zur Bremsung des Fahrzeugs, insbesondere des mindestens einen Rades vorgesehen ist, wobei die mindesten eine zweite Bremsvorrichtung insbesondere unabhängig, bevorzugt unabhängig betätigbar, von der ersten Bremsvorrichtung (2612) ist,
- **und/oder dass** am Fahrzeug mindestens eine weitere Bremserkennungsvorrichtung zur Detektion einer Bremsung des Fahrzeugs, insbesondere eine weitere Geschwindigkeitsmessvorrichtung, ein weiterer Verzögerungssensor (2602) und/oder eine weitere Betätigungsmessvorrichtung (2605), vorgesehen ist, wobei die mindestens eine weitere Bremserkennungsvorrichtung gegebenenfalls unabhängig von der Bremserkennungsvorrichtung (2601) ist,
- **und/oder dass** von der weiteren Bremserkennungsvorrichtung die detektierte Bremsung in ein weiteres Bremserkennung-Signal (2607) umgesetzt und das weitere Bremserkennung-Signal (2607) an die Bremssteuerungsvorrichtung (2608) übermittelt wird,
- **und/oder dass** von der Bremssteuerungsvorrichtung (2608) erkannt wird, welche Bremserkennungsvorrichtungen (2601) am Fahrzeug vorhanden sind,
- **und/oder dass** bei der Erzeugung des Bremsaktuierungssignals (2611) von der Bremssteuerungsvorrichtung (2608) die übermittelten Bremserkennung-Signale (2607) berücksichtigt werden, indem gegebenenfalls die Bremserkennung-Signale (2607) nach vorab definierten Parametern, insbesondere dem Vorhandensein, der Zuverlässigkeit der Detektion und/oder der Aussagekraft der Daten, gewichtet werden.

4. Verfahren nach einem der vorangegangenen Ansprüche, **dadurch gekennzeichnet,**
- **dass** das Fahrzeug einen vorderen und einen hinteren Fahrzeugteil umfasst,
- **und/oder dass** das Fahrzeug ein Zugfahrzeug oder ein Anhänger ist,
- **und/oder dass** das Fahrzeug ein Zugfahrzeug und einen Anhänger umfasst,
- **und/oder dass** durch die Bremssteuerungsvorrichtung (2608) ein Bremsaktuierungssignal (2611) erzeugt wird, durch welches ein vorab definiertes Verhalten des Zugfahrzeugs und des Anhängers zueinander eingestellt wird, sodass der Anhänger an dem Zugfahrzeug eine schiebende oder ziehende Kraft erzeugt, wobei gegebenenfalls durch die Bremssteuerungsvorrichtung (2608) eine andere, insbesondere eine höhere oder niedrigere, Bremswirkung der am Anhänger angeordneten Bremsvorrichtung (2612) eingestellt wird als am Zugfahrzeug,
- **und/oder dass** durch die Bremssteuerungsvorrichtung (2608) ein Bremsaktuierungssignal (2611) erzeugt wird, durch welches ein vorab definiertes Verhalten der Fahrzeugteile zueinander eingestellt wird, sodass der hintere Fahrzeugteil an dem vorderen Fahrzeugteil eine schiebende oder ziehende Kraft erzeugt, wobei gegebenenfalls durch die Bremssteuerungsvorrichtung (2608) eine andere, insbesondere eine höhere oder niedrigere, Bremswirkung der am hinteren Fahrzeugteil angeordneten Bremsvorrichtung (2612) eingestellt wird als am vorderen Fahrzeugteil,
- **und/oder dass** durch einen Sensor (2202) die Kraft zwischen den Fahrzeugteilen und/oder dem Zugfahrzeug und dem Anhänger gemessen wird, wobei die gemessene Kraft von der Bremssteuerungsvorrichtung (2608) bei der Erzeugung des Bremsaktuierungssignals (2611) berücksichtigt wird.

5. Verfahren nach einem der vorangegangenen Ansprüche, **dadurch gekennzeichnet,**
- **dass** das Fahrzeug aus einem Zugfahrzeug und einem Anhänger besteht und der Anhänger mit dem einen Zugfahrzeug verbunden ist,
- **und/oder dass** das Fahrzeug für den lokalen bis regionalen Verkehr mit einem geplanten Aktionsradius von maximal 100 Kilometer ausgebildet ist,
- **und/oder dass** das Fahrzeug ein Elektropersonenfahrrad, ein Lastenfahrrad, ein elektrisches Kleinfahrzeug oder ein Logistikfahrzeug ist,
- **und/oder dass** die Bremssteuerungsvorrichtung (2608) dazu eingerichtet ist, das Fahrzeug, insbesondere normgemäß, vorschriftsgemäß und/oder bestimmungsgemäß, zu betreiben und insbesondere einen Antriebsmotor des Fahrzeugs und/oder die Bremsvorrichtung (2612) zu steuern, sodass eine vorab definierte Geschwindigkeit, insbesondere eine maximale Momentangeschwindigkeit, eingehalten wird,
- **und/oder dass** das Fahrzeug ein Mehrnormenfahrzeug und/oder ein Mehrnormenverbundfahrzeug ist, wodurch das Fahrzeug gegebenenfalls in der Stadt als Fahrrad und/oder E-Bike und außerhalb der Stadt als Kraftfahrzeug, Motorrad, Personenkraftwagen und/oder Lastkraftwagen betreibbar ist.

6. Verfahren nach einem der vorangegangenen Ansprüche, **dadurch gekennzeichnet,**
- **dass** von der Bremssteuerungsvorrichtung (2608) eine Unterbrechung der Verbindung zwischen dem Fahrzeug, insbesondere dem Zugfahrzeug und dem Anhänger, bevorzugt der Fahrzeugsteuerungsvorrichtung des Zugfahrzeugs, und der Bremssteuerungsvorrichtung (2608) erkannt wird, und wenn eine Unterbrechung erkannt wird, die Unterbrechung von der Bremssteuerungsvorrichtung (2608) bei der Erzeugung des Bremsaktuierungssignals (2611) berücksichtigt wird, indem das Bremsaktuierungssignal (2611), insbesondere ausschließlich, auf Basis der mit dem Verzögerungssensor (2602) gemessenen Verzögerung oder der mit dem Raddrehzahlsensor gemessenen Raddrehzahl erzeugt wird.

7. Verfahren nach einem der vorangegangenen Ansprüche, **dadurch gekennzeichnet,**
- **dass** das Bremserkennung-Signal, das weitere Bremserkennung-Signal, das Schwingungssensor-Signal, das Winkelsensor-Signal, das Lagesensor-Signal, das Sperrsignal, der Standort, das Tretschwingungssensor-Signal und/oder ein Auflaufkraftsignal eine Eingangsgröße eines Simulationsmodells ist, und dass als Ausgangsgröße des Simulationsmodells das Bremsaktuierungssignal (2611) und/oder mindestens eine Einstellgröße für die Bremsvorrichtung (2612) ausgegeben wird, wobei das Simulationsmodell, insbesondere die Simulationsrechnungen des Simulationsmodells, in der Bremssteuerungsvorrichtung (2608) durchgeführt wird,
- **und/oder dass** auf Basis des Bremserkennung-Signals, des weiteren Bremserkennung-Signals, des Schwingungssensor-Signals, des Winkelsensor-Signals, des Lagesensor-Signals, des Sperrsignals, des Standorts, des Tretschwingungssensor-Signals und/oder eines Auflaufkraftsignals Simulationsrechnungen in der Bremssteuerungsvorrichtung (2608) und/oder vorab außerhalb des Fahrzeugs durchgeführt werden, wobei die Ergebnisse der Simulationsrechnungen bei der Erzeugung des Bremsaktuierungssignals (2611) von der Bremssteuerungsvorrichtung (2608) berücksichtigt werden, sodass ein vorab definierter Zustand des Fahrzeugs, insbesondere eine sogenannte sich selbst steigernde, "eskalierende" Bremsung, reduziert und/oder vermieden wird.

8. Verfahren nach einem der vorangegangenen Ansprüche, **dadurch gekennzeichnet,**
- **dass** von der Bremssteuerungsvorrichtung (2608) zur Überschlagsabwendung des Fahrzeugs Simulationsrechnungen zur Berechnung der Überschlagswahrscheinlichkeit des Fahrzeugs durchgeführt werden, wobei bei diesen Simulationsrechnungen die Fahrzeugbeschleunigung, bevorzugt die Bremsverzögerung und/oder Kurvenbeschleunigung des Fahrzeugs, berechnet werden,
- wobei von der Bremssteuerungsvorrichtung (2608) bei diesen Simulationsrechnungen gegebenenfalls mindestens eine direkt oder indirekt, insbesondere über Einfederung und/oder Ausfederung, ermittelte Radauflagekraft des Fahrzeugs berücksichtigt wird,
- wobei von der Bremssteuerungsvorrichtung (2608) gegebenenfalls eine Bewegung, Drehung oder Veränderung der ermittelten Radauflagekraft als bereits beginnender oder in Gang befindlicher Überschlag erkannt und zur Überschlagsabwendung verwendet wird,
- **und/oder dass** auf Basis der Simulationsrechnungen zur Überschlagsabwendung die Bremsvorrichtung (2612) des Fahrzeugs, der Antrieb des Fahrzeugs, die Lenkung des Fahrzeugs und/oder die Steuerung des Fahrzeugs so betrieben werden, dass ein Überschlag des Fahrzeugs vermindert und/oder verhindert wird, insbesondere indem von der Bremssteuerungsvorrichtung (2608) das Bremsaktuierungssignal (2611) zum Anziehen der Bremsvorrichtung (2612) des mindestens einen Rads mit steigender Überschlagswahrscheinlichkeit reduziert wird, sodass sich insbesondere mit steigender Überschlagswahrscheinlichkeit die Bremswirkung der Bremsvorrichtung (2612) langsamer steigern lässt.

9. Verfahren nach einem der vorangegangenen Ansprüche, **dadurch gekennzeichnet,**
- **dass** bei der Erzeugung des Bremsaktuierungssignals (2611) von der Bremssteuerungsvorrichtung (2608) weitere Bremswirkungen, wie insbesondere der Fahrwiderstand, der Strömungswiderstand und/oder die Bremswirkung anderer Bremsvorrichtungen, insbesondere eine regenerative Bremswirkung eines gegebenenfalls vorhandenen Elektroantriebs, des Fahrzeugs berücksichtigt werden,
indem insbesondere diese weiteren Bremswirkungen von dem Bremsaktuierungssignal (2611), bevorzugt von dem Bremserkennung-Signal, abgezogen werden, sodass das Bremsaktuierungssignal (2611) reduziert wird.

10. Verfahren nach einem der vorangegangenen Ansprüche, **dadurch gekennzeichnet,**
- **dass** das Fahrzeug mindestens eine, insbesondere autonome, Stromerzeugungsvorrichtung umfasst,
- **dass** die Stromerzeugungsvorrichtung gegebenenfalls einen Akku, eine Batterie, ein Photovoltaik-Modul und/oder einen Radnabendynamo umfasst,
- **und dass** durch die mindestens eine Stromerzeugungsvorrichtung das Bremssystem des Fahrzeugs, insbesondere die erste Bremsvorrichtung, die Bremserkennungsvorrichtung (2601) und die Bremssteuerungsvorrichtung, betreibbar ist, insbesondere mit Energie versorgt wird, wodurch eine durch das Bremsaktuierungssignal (2611) der Bremssteuerungsvorrichtung (2608) vorgegebene Aktuierung, bevorzugt ein Anziehen und/oder ein Lösen, der ersten Bremsvorrichtung, insbesondere eine Bremsung des Fahrzeugs, erwirkt wird, insbesondere auch, wenn die Energieversorgung durch andere Fahrzeugteile, insbesondere durch ein Zugfahrzeug, ausfällt und/oder unterbrochen ist.

11. Verfahren nach einem der vorangegangenen Ansprüche, **dadurch gekennzeichnet,**
- **dass** das Fahrzeug mindestens einen Antriebsmotor, insbesondere einen Elektromotor, umfasst,
- **dass** gegebenenfalls der mindestens eine Antriebsmotor von der Bremssteuerungsvorrichtung (2608) geregelt und gesteuert wird,
- **und dass** von der Bremssteuerungsvorrichtung (2608) der Antriebsmotor unter Berücksichtigung des Bremsaktuierungssignals (2611) gesteuert und/oder geregelt wird,
- **wobei** gegebenenfalls von der Bremssteuerungsvorrichtung (2608) das Bremsaktuierungssignal (2611) an die Fahrbedingungen, wie insbesondere eine Steigung der Straße, eine Beladung des Fahrzeugs, eine Geschwindigkeit des Fahrzeugs und/oder der Energieverbrauch des Bremssystems, derart angepasst wird, dass eine Bremswirkung, insbesondere ausschließlich, durch regeneratives Bremsen mit der Antriebsvorrichtung erzeugt wird, sodass die Bremsenergie gespeichert und/oder eine Umwandlung von Energie in Wärme, insbesondere durch die Bremsvorrichtung, vermieden und/oder verhindert wird,
- **und/oder wobei** von der Bremssteuerungsvorrichtung (2608) das Bremsaktuierungssignal (2611) gegebenenfalls derart angepasst wird, dass Zustände der Bremsvorrichtung (2612) vermieden und/oder verhindert werden, bei denen gleichzeitig elektrische Antriebsenergie zugeführt und Reibungswärme durch Bremsung erzeugt wird.

12. **Fahrzeug,** insbesondere ein Zugfahrzeug und/oder einen Anhänger,
wobei das Fahrzeug
- mindestens ein Rad,
- eine erste Bremsvorrichtung (2612) zur Bremsung des mindestens einen Rads, insbesondere eine nichtlineare elektro-mechanische Reibungsbremse,
- eine Bremserkennungsvorrichtung (2601) zur Detektion einer Bremsung des Fahrzeugs, insbesondere einer Verzögerung,
- und eine, insbesondere elektronische, Bremssteuerungsvorrichtung (2608) zur Steuerung der ersten Bremsvorrichtung
umfasst,
- wobei die Bremserkennungsvorrichtung (2601)
o aus einer Geschwindigkeitsmessvorrichtung zur Berechnung einer Verzögerung aus der sich ändernden Momentangeschwindigkeit des Fahrzeugs, bevorzugt einem Raddrehzahlsensor zur Messung der Drehzahl des mindestens einen Rades,
und/oder aus einem Verzögerungssensor (2602) zur Messung einer Verzögerung, insbesondere zur Messung einer Verzögerungswirkung in mindestens eine Richtung, bevorzugt in Fahrtrichtung, bevorzugt einem mehrachsigen, mikro-elektro-mechanischen System,
gebildet ist,
**dadurch gekennzeichnet,**
- **dass** die Bremserkennungsvorrichtung (2601) und das mindestens eine Rad, welches insbesondere von der Bremssteuerungsvorrichtung (2608) und/oder ersten Bremsvorrichtung (2612) bremsbar ist, am Fahrzeug, insbesondere am Anhänger, angeordnet sind,
- **und dass** die Bremssteuerungsvorrichtung (2608) zur Ausführung des Verfahrens nach einem der Ansprüche 1 bis 11 eingerichtet und/oder ausgebildet ist.

13. Fahrzeug nach Anspruch 12, **dadurch gekennzeichnet,**
- **dass** die Bremserkennungsvorrichtung (2601) die detektierte Bremsung, insbesondere die detektierte Verzögerung, in ein Bremserkennung-Signal (2607) umsetzt und an die Bremssteuerungsvorrichtung (2608) über eine Verbindungsvorrichtung, insbesondere kabelgebunden oder drahtlos, übermittelt,
- **dass** die Bremssteuerungsvorrichtung (2608) auf Basis des Bremserkennung-Signals ein Bremsaktuierungssignal (2611) erzeugt, indem auf Basis des Bremserkennung-Signals mittels Interpolationstabellen, mittels Umrechnungsfunktionen und/oder mittels eines Simulationsmodells ein Bremsaktuierungssignal (2611)zur Aktuierung der mindestens einen ersten Bremsvorrichtung (2612) bestimmbar ist,
- und **dass** die Bremssteuerungsvorrichtung (2608) zur Steuerung der ersten Bremsvorrichtung (2612) das Bremsaktuierungssignal (2611) an die erste Bremsvorrichtung (2612) übermittelt, wodurch eine Steuerung, insbesondere eine Aktuierung, bevorzugt ein Anziehen und/oder ein Lösen, der ersten Bremsvorrichtung (2612) erwirkt und dadurch insbesondere eine Bremsung des mindestens einen Rads, insbesondere eine Bremsung des Fahrzeugs, erzielbar ist.

## Claims

1. Method for braking a vehicle, in particular a towing vehicle and/or a trailer, the vehicle comprising
- at least one wheel,
- a first braking device (2612) for braking the at least one wheel, in particular a non-linear electro-mechanical friction brake, a brake detection device (2601) for detecting braking of the vehicle
- and a, in particular electronic, brake control device (2608) for controlling the first braking device (2612)
- the brake detection device (2601) being formed of
o a speed measuring device for calculating a deceleration from the changing instantaneous speed of the vehicle, preferably from a wheel rotational speed sensor for measuring the rotational speed of the at least one wheel,
o and/or a deceleration sensor (2602) for measuring a deceleration, in particular for measuring a deceleration effect in at least one direction, preferably in the direction of travel, preferably a multi-axis, micro-electro-mechanical system,
**characterised in that**
- the detected braking is converted into a brake detection signal (2607) by the brake detection device (2601),
- wherein the brake detection signal (2607) is transmitted to the brake control device (2608),
- wherein a brake actuation signal (2611) is generated by the brake control device (2608) on the basis of the brake detection signal (2607) by determining a brake actuation signal (2611) for actuating the first braking device (2612) on the basis of the brake detection signal (2607) by means of interpolation tables, by means of conversion functions and/or by means of a simulation model,
- wherein for controlling the first braking device (2612) the brake actuation signal (2611) is transmitted by the brake control device (2608) to the first braking device (2612), whereby controlling, in particular actuating, preferably applying and/or releasing, the first braking device (2612) is performed and thereby in particular braking of the at least one wheel, in particular braking of the vehicle, is achieved
- **and wherein** the brake detection device (2601) and the at least one wheel, which is brakeable in particular by the brake control device (2608) and/or first braking device (2612), are arranged on the vehicle, in particular on the trailer.

2. Method according to claim 1, **characterised**
- **in that** an operation device (2606) for operating a braking device (2612), in particular the first braking device (2612), preferably a brake lever or a brake pedal (20), is arranged on the vehicle, in particular on the towing vehicle, the operation measuring device (2605) optionally being configured to measure an operation of the operation device (2606),
- **and/or in that** the brake control device (2608) and the at least one wheel, which is brakeble in particular by the brake control device (2608) and/or the first braking device (2612), are arranged on the vehicle, in particular on the trailer,
- **and/or in that** the deceleration sensor (2602) and the at least one wheel, which is brakeable in particular by the brake control device (2608) and/or first braking device (2612), are arranged on the vehicle, in particular on the trailer,
- **and/or in that** the wheel rotational speed sensor and the at least one wheel, which is brakeable in particular by the brake control device (2608) and/or first braking device (2612), are arranged on the vehicle, in particular on the trailer.

3. Method according to claim 1 or 2, **characterised,**
- **in that** at least one second braking device, in particular a non-linear electro-mechanical friction brake, is provided on the vehicle for braking the vehicle, in particular the at least one wheel, the at least one second braking device being in particular independent, preferably independently operable, of the first braking device (2612),
- **and/or in that** at least one further brake detection device is provided on the vehicle for detecting braking of the vehicle, in particular a further speed measuring device, a further deceleration sensor (2602) and/or a further operation measuring device (2605), the at least one further brake detection device being optionally independent of the brake detection device (2601),
- **and/or in that** the detected braking is converted by the further brake detection device into a further brake detection signal (2607) and the further brake detection signal (2607) is transmitted to the brake control device (2608),
- **and/or in that** the brake control device (2608) detects which brake detection devices (2601) are present on the vehicle,
- **and/or in that,** upon generation of the brake actuation signal (2611), the transmitted brake detection signals (2607) are taken into account by the brake control device (2608) by weighting optionally the brake detection signals (2607) in accordance with predefined parameters, in particular the presence, the reliability of the detection and/or the informative value of the data.

4. Method according to one of the preceding claims, **characterised**
- **in that** the vehicle comprises a front and a rear vehicle part,
- **and/or in that** the vehicle is a towing vehicle or a trailer,
- **and/or in that** the vehicle comprises a towing vehicle and a trailer,
- **and/or in that** a brake actuation signal (2611) is generated by the brake control device (2608), by means of which a predefined behaviour of the towing vehicle and the trailer in relation to one another is set, so that the trailer generates a pushing or pulling force on the towing vehicle, the brake control device (2608) optionally setting a different, in particular a higher or lower, braking effect of the braking device (2612) arranged on the trailer than on the towing vehicle,
- **and/or in that** a brake actuation signal (2611) is generated by the brake control device (2608), by means of which a predefined behaviour of the vehicle parts in relation to one another is set, so that the rear vehicle part generates a pushing or pulling force on the front vehicle part, the brake control device (2608) optionally setting a different, in particular a higher or lower, braking effect of the braking device (2612) arranged on the rear vehicle part than on the front vehicle part,
- **and/or in that** the force between the vehicle parts and/or the towing vehicle and the trailer is measured by a sensor (2202), the measured force being taken into account by the brake control device (2608) when generating the brake actuation signal (2611).

5. Method according to one of the preceding claims, **characterised**
- **in that** the vehicle consists of one towing vehicle and one trailer and in that the trailer is connected to the one towing vehicle,
- **and/or in that** the vehicle is designed for local to regional transport with a planned maximum vehicle range of 100 kilometres,
- **and/or in that** the vehicle is an electric passenger bike, a cargo bike, a small electric vehicle or a logistics vehicle,
- **and/or in that** the brake control device (2608) is configured to operate the vehicle, in particular in accordance with standards, regulations and/or intended use, and in particular to control a drive motor of the vehicle and/or the braking device (2612) so that a predefined speed, in particular a maximum instantaneous speed, is maintained,
- **and/or in that** the vehicle is a multi-standard vehicle and/or a multi-standard composite vehicle, whereby the vehicle is optionally operable as a bicycle and/or e-bike in the city and as a motor vehicle, motorbike, passenger car and/or lorry outside the city.

6. Method according to one of the preceding claims, **characterised**
- **in that** disruption in the connection between the vehicle, in particular the towing vehicle and the trailer, preferably the vehicle control device of the towing vehicle, and the brake control device (2608) is detected by the brake control device (2608), and when an interruption is recognised, the interruption is taken into account by the brake control device (2608) upon generation of the brake actuation signal (2611), by generating the brake actuation signal (2611) , in particular exclusively, on the basis of the deceleration measured by the deceleration sensor (2602) or the rotational speed by the rotational speed sensor.

7. Method according to one of the preceding claims, **characterised**
- **in that** the brake detection signal, the further brake detection signal, the vibration sensor signal, the angle sensor signal, the position sensor signal, the blocking signal, the location, the pedalling vibration sensor signal and/or a thrust force signal are input variables of a simulation model, and in that the brake actuation signal (2611) and/or at least one setting variable for the braking device (2612) is output as the output variable of the simulation model, the simulation model, in particular the simulation calculations of the simulation model, being carried out in the brake control device (2608),
- **and/or in that** simulation calculations are carried out in the brake control device (2608) and/or outside the vehicle in advance on the basis of the brake detection signal, the further brake detection signal, the vibration sensor signal, the angle sensor signal, the position sensor signal, the blocking signal, the location, the pedalling vibration sensor signal and/or a thrust force signal, wherein the results of the simulation calculations are taken into account by the brake control device (2608) when generating the brake actuation signal (2611), so that a predefined state of the vehicle, in particular a so-called self-increasing, "escalating" braking, is reduced and/or avoided.

8. Method according to one of the preceding claims, **characterised**
- **in that** simulation calculations for calculating vehicle overturning probability are performed by the brake control device (2608) to prevent the vehicle from overturning, the vehicle acceleration, preferably the braking deceleration and/or lateral acceleration of the vehicle, being calculated in these simulation calculations,
- wherein the brake control device (2608) takes into account optionally at least one wheel contact force of the vehicle determined directly or indirectly, in particular via compression and/or rebound, in these simulation calculations,
- wherein the brake control device (2608) optionally detects any movement, rotation or change in the determined wheel contact force as a overturning that is already beginning or is in progress and uses it to prevent overturning,
- **and/or in that,** on the basis of the simulation calculations for preventing overturning, the braking device (2612) of the vehicle, the drive of the vehicle, the steering of the vehicle and/or the control of the vehicle are operated in such a way that overturning of the vehicle is reduced and/or prevented, in particular by the brake control device (2608) reducing the brake actuation signal (2611) for applying the braking device (2612) of the at least one wheel as the probability of overturning increases, so that the braking effect of the braking device (2612) can be increased more slowly, in particular as the probability of overturning increases.

9. Method according to one of the preceding claims, **characterised**
- **in that** when the brake actuation signal (2611) is generated by the brake control device (2608), further braking effects, such as in particular the driving resistance, the flow resistance and/or the braking effect of other braking devices, in particular a regenerative braking effect of an optional electric drive, of the vehicle are taken into account,
in particular by subtracting these further braking effects from the brake actuation signal (2611), preferably from the brake detection signal, so that the brake actuation signal (2611) is reduced.

10. Method according to one of the preceding claims, **characterised**
- **in that** the vehicle comprises at least one, in particular autonomous, power generation device,
- **in that** the power generation device optionally comprises a rechargeable battery, a battery, a photovoltaic module and/or a wheel hub dynamo,
- **and in that** the braking system of the vehicle, in particular the first braking device, the brake detection device (2601) and the brake control device, is operable by the at least one power generation device, in particular is supplied with energy, whereby actuation, which is predetermined by the brake actuation signal (2611) of the brake control device (2608), preferably applying and/or releasing, of the first braking device, in particular a braking of the vehicle, is performed, in particular also if the energy supply from other vehicle parts, in particular by a towing vehicle, fails and/or is interrupted.

11. Method according to one of the preceding claims, **characterised**
- **in that** the vehicle comprises at least one drive motor, in particular an electric motor,
- **in that** optionally the at least one drive motor is regulated and controlled by the brake control device (2608),
- **and in that** the drive motor is controlled and/or regulated by the brake control device (2608), taking into account the brake actuation signal (2611),
- **wherein** the brake control device (2608) optionally adapts the brake actuation signal (2611) to the driving conditions, such as in particular a gradient of the road, load of the vehicle, velocity of the vehicle and/or the energy consumption of the brake system, in such a way that a braking effect is generated, in particular exclusively, by regenerative braking by means of the drive device, so that the braking energy is stored and/or conversion of energy into heat, in particular by the braking device, is avoided and/or prevented,
- **and/or wherein** the brake actuation signal (2611) is optionally adapted by the brake control device (2608) in such a way that states of the braking device (2612) are avoided and/or prevented in which electrical drive energy is supplied and frictional heat is generated by braking at the same time.

12. **Vehicle,** in particular a towing vehicle and/or a trailer,
the vehicle comprising
- at least one wheel,
- a first braking device (2612) for braking the at least one wheel, in particular a non-linear electro-mechanical friction brake,
- a brake detection device (2601) for detecting braking of the vehicle, in particular deceleration,
- and a, in particular electronic, brake control device (2608) for controlling the first braking device
- wherein the brake detection device (2601) is formed of
o a speed measuring device for calculating a deceleration from the changing instantaneous speed of the vehicle, preferably a wheel rotational speed sensor for measuring the speed of the at least one wheel,
and/or a deceleration sensor (2602) for measuring a deceleration, in particular for measuring a deceleration effect in at least one direction, preferably in the direction of travel, preferably a multi-axis, micro-electro-mechanical system,
**characterised**
- **in that** the brake detection device (2601) and the at least one wheel, which is brakeable in particular by the brake control device (2608) and/or first braking device (2612), are arranged on the vehicle, in particular on the trailer,
- **and in that** the brake control device (2608) is configured and/or designed to execute the method according to one of claims 1 to 11.

13. Vehicle according to claim 12, **characterised**
- **in that** the brake detection device (2601) converts the detected braking, in particular the detected deceleration, into a brake detection signal (2607) and transmits it to the brake control device (2608) via a connection device, in particular wired or wireless,
- **in that** the brake control device (2608) generates a brake actuation signal (2611) on the basis of the brake detection signal, by determining a brake actuation signal (2611) for actuating the at least one first braking device (2612) on the basis of the brake detection signal by means of interpolation tables, by means of conversion functions and/or by means of a simulation model,
- and **in that** the brake control device (2608) for controlling the first braking device (2612) transmits the brake actuation signal (2611) to the first braking device (2612), whereby a control, in particular an actuation, preferably applying and/or releasing, of the first braking device (2612) is performed and thereby in particular a braking of the at least one wheel, in particular a braking of the vehicle, is achievable.

## Revendications

1. Procédé de freinage d'un véhicule, en particulier d'un véhicule tracteur et/ou d'une remorque, le véhicule comprenant
- au moins une roue,
- un premier dispositif de freinage (2612) pour freiner au moins ladite roue, en particulier un frein à friction électromécanique non linéaire, un dispositif de détection de freinage (2601) pour détecter un freinage du véhicule
- et un dispositif de commande de freinage (2608), en particulier électronique, pour commander le premier dispositif de freinage
(2612),
- le dispositif de détection de freinage (2601)
o est formé d'un dispositif de mesure de vitesse pour calculer une décélération à partir de la vitesse instantanée variable du véhicule, de préférence d'un capteur de vitesse de rotation de roue pour mesurer la vitesse de rotation d'au moins une roue,
o et/ou à partir d'un capteur de décélération (2602) pour mesurer une décélération, notamment pour mesurer un effet de décélération dans au moins une direction, de préférence dans la direction de déplacement, de préférence un système micro-électromécanique à plusieurs axes,
**caractérisé en ce que**
- le dispositif de détection de freinage (2601) convertit le freinage détecté en un signal de détection de freinage (2607),
- un signal de détection de freinage (2607) étant transmis au dispositif de commande de freinage (2608),
- le dispositif de commande de freinage (2608) générant, sur la base du signal de détection de freinage (2607), un signal d'actionnement de freinage (2611), ce signal étant déterminé, sur la base du signal de détection de freinage (2607), au moyen de tables d'interpolation, de fonctions de conversion et/ou d'un modèle de simulation, pour l'actionnement du premier dispositif de freinage (2612)
- le signal d'actionnement de freinage (2611) étant transmis au premier dispositif de freinage (2612) par le dispositif de commande de freinage (2608) pour la commande du premier dispositif de freinage (2612), ce qui permet une commande, en particulier une action, de préférence un serrage et/ou un desserrage, du premier dispositif de freinage (2612) et on obtient ainsi en particulier un freinage de la roue, en particulier un freinage du véhicule,
- **et dans lequel** le dispositif de détection de freinage (2601) et la roue ou les roues, qui peuvent être freinées en particulier par le dispositif de commande de freinage (2608) et/ou le premier dispositif de freinage (2612), sont disposés sur le véhicule, en particulier sur la remorque.

2. Procédé selon la revendication 1, **caractérisé en**
- **ce qu'un** dispositif d'actionnement (2606) est disposé sur le véhicule, notamment sur le véhicule tracteur, pour actionner un dispositif de freinage (2612), notamment le premier dispositif de freinage (2612), de préférence un levier de frein ou une pédale de frein (20), le dispositif de mesure d'actionnement (2605) étant éventuellement conçu pour mesurer un actionnement du dispositif d'actionnement (2606),
- **et/ou en ce que** le dispositif de commande de freinage (2608) et la roue ou les roues, qui peuvent être freinées notamment par le dispositif de commande de freinage (2608) et/ou le premier dispositif de freinage (2612), sont disposés sur le véhicule, en particulier sur la remorque,
- **et/ou en ce que** le capteur de décélération (2602) et la roue ou les roues qui peuvent être freinées en particulier par le dispositif de commande de freinage (2608) et/ou le premier dispositif de freinage (2612), sont disposés sur le véhicule, en particulier sur la remorque,
- **et/ou en ce que** le capteur de vitesse de roue et la roue ou les roues qui peuvent être freinées en particulier par le dispositif de commande de freinage (2608) et/ou le premier dispositif de freinage (2612), sont disposés sur le véhicule, en particulier sur la remorque.

3. Procédé selon la revendication 1 ou 2, **caractérisé**
- **en ce qu'il** est prévu sur le véhicule au moins un deuxième dispositif de freinage, en particulier un frein à friction électromécanique non linéaire, pour freiner le véhicule, en particulier la roue, au moins un deuxième dispositif de freinage étant en particulier indépendant, de préférence pouvant être actionné indépendamment, du premier dispositif de freinage (2612),
- **et/ou en ce qu'il** est prévu sur le véhicule au moins un autre dispositif de détection de freinage pour détecter un freinage du véhicule, en particulier un autre dispositif de mesure de vitesse, un autre capteur de décélération (2602) et/ou un autre dispositif de mesure d'actionnement (2605), le ou les autres dispositifs de détection de freinage étant éventuellement indépendants du dispositif de détection de freinage (2601),
- **et/ou en ce que** l'autre dispositif de détection de freinage convertit le freinage détecté en un autre signal de détection de freinage (2607) et transmet l'autre signal de détection de freinage (2607) au dispositif de commande de freinage (2608),
- **et/ou en ce que** le dispositif de commande de freinage (2608) reconnaît quels dispositifs de détection de freinage (2601) sont présents sur le véhicule,
- **et/ou en ce que,** lors de la génération du signal d'actionnement de freinage (2611), le dispositif de commande de freinage (2608) tient compte des signaux de détection de freinage (2607) en fonction de paramètres définis au préalable, notamment la présence, la fiabilité de la détection et/ou la pertinence des données.

4. Procédé selon l'une des revendications précédentes, **caractérisé**
- **en ce que** le véhicule comprend une partie de véhicule avant et une partie de véhicule arrière,
- **et/ou en ce que** le véhicule est un véhicule tracteur ou une remorque,
- **et/ou en ce que** le véhicule comprend un véhicule tracteur et une remorque,
- **et/ou en ce qu'un** signal d'actionnement de freinage (2611) est généré par le dispositif de commande de freinage (2608), par lequel un comportement prédéfini du véhicule tracteur et de la remorque est réglé l'un par rapport à l'autre, de sorte que la remorque génère une force de poussée ou de traction sur le véhicule tracteur, un autre comportement étant éventuellement généré par le dispositif de commande de freinage (2608), en particulier un effet de freinage plus élevé ou plus faible du dispositif de freinage (2612) disposé sur la remorque que sur le véhicule tracteur,
- **et/ou en ce que** le dispositif de commande de freinage (2608) génère un signal d'actionnement de freinage (2611) par lequel un comportement prédéfini des parties du véhicule est réglé l'une par rapport à l'autre, de sorte que la partie arrière du véhicule génère une force de poussée ou de traction sur la partie avant du véhicule, le cas échéant, le dispositif de commande de freinage (2608) règle un effet de freinage différent, en particulier plus élevé ou plus faible, du dispositif de freinage (2612) disposé sur la partie arrière du véhicule que sur la partie avant du véhicule,
- **et/ou en ce que** la force entre les parties du véhicule et/ou le véhicule tracteur et la remorque est mesurée par un capteur (2202), la force mesurée étant prise en compte par le dispositif de commande de freinage (2608) lors de la production du signal d'actionnement de freinage (2611).

5. Procédé selon l'une des revendications précédentes, **caractérisé**
- **en ce que** le véhicule est constitué d'un véhicule tracteur et d'une remorque et que la remorque est reliée au véhicule tracteur,
- **et/ou en ce que** le véhicule est conçu pour le transport local à régional avec un rayon d'action prévu de 100 kilomètres au maximum,
- **et/ou en ce que** le véhicule est un vélo personnel électrique, un vélo-cargo, un petit véhicule électrique ou un véhicule logistique,
- **et/ou en ce que** le dispositif de commande de freinage (2608) est conçu pour commander le véhicule, notamment à fonctionner conformément aux normes, aux prescriptions et/ou à la destination, et notamment à commander un moteur d'entraînement du véhicule et/ou le dispositif de freinage (2612) de manière à respecter une vitesse prédéfinie, notamment une vitesse instantanée maximale,
- **et/ou en ce que** le véhicule est un véhicule multi-normes et/ou un véhicule composite multi-normes, ce qui permet le cas échéant de faire fonctionner le véhicule en ville comme un vélo et/ou un vélo électrique et en dehors de la ville comme un véhicule automobile, une moto, une voiture particulière et/ou un camion.

6. Procédé selon l'une des revendications précédentes, **caractérisé**
- **en ce qu'une** interruption de la liaison entre le véhicule, en particulier le véhicule tracteur et la remorque, de préférence le dispositif de commande du véhicule du véhicule tracteur, et le dispositif de commande de freinage (2608) est détectée par le dispositif de commande de freinage (2608), et lorsqu'une interruption est détectée, l'interruption est prise en compte par le dispositif de commande de freinage (2608) lors de la génération du signal d'actionnement de freinage (2611) en générant le signal d'actionnement de freinage (2611), en particulier exclusivement, sur la base de la décélération mesurée par le capteur de décélération (2602) ou de la vitesse de rotation des roues mesurée par le capteur de vitesse de rotation des roues.

7. Procédé selon l'une des revendications précédentes, **caractérisé**
- **en ce que** le signal de détection de freinage, l'autre signal de détection de freinage, le signal de capteur de vibrations, le signal de capteur d'angle, le signal de capteur de position, le signal de blocage, l'emplacement, le signal de capteur de vibrations de pédalage et/ou un signal de force d'inertie est une grandeur d'entrée d'un modèle de simulation, et en ce que le signal d'actionnement de freinage (2611) et/ou au moins une grandeur de réglage pour le dispositif de freinage (2612) sont émis comme grandeur de sortie du modèle de simulation, le modèle de simulation, en particulier les calculs de simulation du modèle de simulation, étant effectués dans le dispositif de commande de freinage (2608),
- **et/ou en ce que,** sur la base du signal de détection de freinage, de l'autre signal de détection de freinage, du signal de capteur de vibrations, du signal de capteur d'angle, du signal de capteur de position, du signal de blocage, de la position, du signal de capteur de vibrations de pédalage et/ou d'un signal de force d'inertie, des calculs de simulation sont effectués dans le dispositif de commande de freinage (2608) et/ou préalablement à l'extérieur du véhicule, les résultats des calculs de simulation étant pris en compte lors de la génération du signal d'actionnement de freinage (2611) par le dispositif de commande de freinage (2608), de sorte qu'un état prédéfini du véhicule, en particulier un freinage dit « s'intensifiant » et « escaladant », est réduit et/ou évité.

8. Procédé selon l'une des revendications précédentes, **caractérisé**
- **en ce que** des calculs de simulation sont effectués par le dispositif de commande de freinage (2608) pour éviter le retournement du véhicule, afin de calculer la probabilité de retournement du véhicule, l'accélération du véhicule, de préférence la décélération de freinage et/ou l'accélération en virage du véhicule, étant prises en compte lors de ces calculs de simulation, le dispositif de commande de freinage (2608) tenant compte, le cas échéant,
- lors de ces calculs de simulation, d'au moins une force d'appui de roue du véhicule déterminée directement ou indirectement, en particulier par le biais de la suspension et/ou du débattement, le dispositif de commande de freinage (2608) effectuant,
- le cas échéant, un mouvement, rotation ou modification de la force d'appui des roues déterminée est reconnu comme un retournement déjà amorcé ou en cours et est utilisé pour éviter le retournement,
- **et/ou en ce que,** sur la base des calculs de simulation pour éviter le retournement, le dispositif de freinage (2612) du véhicule, l'entraînement du véhicule, la direction du véhicule et/ou la commande du véhicule sont actionnés de telle sorte, de telle sorte qu'un retournement du véhicule soit réduit et/ou empêché, notamment en ce que le signal d'actionnement de freinage (2611) destiné à serrer le dispositif de freinage (2612) de la roue est réduit par le dispositif de commande de freinage (2608) lorsque la probabilité de retournement augmente, de telle sorte que, notamment lorsque la probabilité de retournement augmente, le signal d'actionnement de freinage (2611) est réduit.

9. Procédé selon l'une des revendications précédentes, **caractérisé**
- **en ce que** lors de la génération du signal d'actionnement de freinage (2611) par le dispositif de commande de freinage (2608), d'autres effets de freinage, comme en particulier la résistance à l'avancement, la résistance à l'écoulement et/ou l'effet de freinage d'autres dispositifs de freinage, en particulier un effet de freinage régénératif d'une propulsion électrique éventuellement présente, du véhicule sont pris en compte,
en particulier en ce que ces autres effets de freinage sont déduits du signal d'actionnement de freinage (2611), de préférence du signal de détection de freinage, de sorte que le signal d'actionnement de freinage (2611) est réduit.

10. Procédé selon l'une des revendications précédentes, **caractérisé**
- **en ce que** le véhicule comprend au moins un dispositif de production d'électricité, en particulier autonome,
- **en ce que** le dispositif de production d'électricité comprend le cas échéant un accumulateur, une batterie, un module photovoltaïque et/ou une dynamo de moyeu de roue,
- **et en ce que** le système de freinage du véhicule, en particulier le premier dispositif de freinage, le dispositif de détection de freinage (2601) et le dispositif de commande de freinage, peut fonctionner, en particulier est alimenté en énergie par le ou les dispositifs de production d'électricité, ce qui provoque une action prédéterminée par le signal d'actionnement de freinage (2611) du dispositif de commande de freinage (2608), de préférence un serrage et/ou un desserrage, du premier dispositif de freinage, en particulier un freinage du véhicule, en particulier également lorsque l'alimentation en énergie par d'autres parties du véhicule, en particulier par un véhicule tracteur, est défaillante et/ou interrompue.

11. Procédé selon l'une des revendications précédentes, **caractérisé**
- **en ce que** le véhicule comprend au moins un moteur d'entraînement, en particulier un moteur électrique,
- **en ce que,** le cas échéant, ledit moteur d'entraînement est régulé et commandé par le dispositif de commande de freinage (2608),
- **et en ce que** le moteur d'entraînement est commandé et/ou régulé par le dispositif de commande de freinage (2608) en tenant compte du signal d'actionnement de freinage (2611),
- le signal d'actionnement de freinage (2611) **étant,** le cas échéant, adapté par le dispositif de commande de freinage (2608) aux conditions de conduite, comme en particulier une pente de la route, une charge du véhicule, une vitesse du véhicule et/ou la consommation d'énergie du système de freinage, de telle sorte qu'un effet de freinage est généré, en particulier exclusivement, par un freinage régénératif avec le dispositif d'entraînement, de sorte que l'énergie de freinage est stockée et/ou une conversion d'énergie en chaleur, en particulier par le dispositif de freinage, est évitée et/ou empêchée,
- **et/ou** le signal d'actionnement de freinage (2611) étant éventuellement adapté par le dispositif de commande de freinage (2608) de telle sorte que des états du dispositif de freinage (2612) sont évités et/ou empêchés, dans lesquels de l'énergie d'entraînement électrique est simultanément amenée et de la chaleur de frottement est générée par freinage.

12. **Véhicule,** en particulier un véhicule tracteur et/ou une remorque, le véhicule comprenant
- au moins une roue,
- un premier dispositif de freinage (2612) pour freiner ladite roue, en particulier un frein à friction électromécanique non linéaire,
- un dispositif de détection de freinage (2601) pour détecter un freinage du véhicule, en particulier une décélération,
- et un dispositif de commande de freinage (2608), en particulier électronique, pour commander le premier dispositif de freinage,
- le dispositif de détection de freinage (2601) étant formé de
o un dispositif de mesure de vitesse pour calculer une décélération à partir de la vitesse instantanée variable du véhicule, de préférence un capteur de vitesse de roue pour mesurer la vitesse de rotation de la roue,
et/ou un capteur de décélération (2602) pour mesurer une décélération, en particulier pour mesurer un effet de décélération dans au moins une direction, de préférence dans la direction de déplacement, de préférence un système micro-électromécanique à plusieurs axes,
**caractérisé**
- **en ce que** le dispositif de détection de freinage (2601) et la roue ou les roues, qui peuvent être freinées notamment par le dispositif de commande de freinage (2608) et/ou le premier dispositif de freinage (2612), sont disposés sur le véhicule, en particulier sur la remorque,
- **et en ce que** le dispositif de commande de freinage (2608) est agencé et/ou configuré pour mettre en œuvre le procédé selon l'une des revendications 1 à 11.

13. Véhicule selon la revendication 12, **caractérisé**
- **en ce que** le dispositif de détection de freinage (2601) convertit le freinage détecté, en particulier la décélération détectée, en un signal de détection de freinage (2607) et le transmet au dispositif de commande de freinage (2608) par l'intermédiaire d'un dispositif de liaison,
- en particulier par câble ou sans fil, en ce que le dispositif de commande de freinage (2608) génère un signal d'actionnement de freinage (2611) sur la base du signal de détection de freinage, en ce que, sur la base du signal de détection de freinage, des tables d'interpolation, au moyen de fonctions de conversion et/ou au moyen d'un modèle de simulation, un signal d'actionnement de freinage (2611) peut être déterminé pour l'actionnement du premier dispositif de freinage (2612),
- et **en ce que** le dispositif de commande de freinage (2608) transmet le signal d'actionnement de freinage (2611) au premier dispositif de freinage (2612) pour la commande du premier dispositif de freinage (2612), ce qui permet d'obtenir une commande, en particulier une action, de préférence un serrage et/ou un desserrage, du premier dispositif de freinage (2612) et ainsi d'obtenir en particulier le freinage de la roue, en particulier un freinage du véhicule.
